# EUROPEAN PATENT APPLICATION

(11) **EP 4 738 524 A1**
(43) Date of publication of application: **06.05.2026**
(21) Application number: 24830417.2
(22) Date of filing: 04.06.2024
(51) Int. Cl.: H01M 10/0587, H01M 4/04, H01M 10/058, H01M 10/0525, H01M 4/13

(54) **COMPOSITE ELECTRODE SHEET AND PREPARATION METHOD AND PREPARATION DEVICE THEREFOR, AND LITHIUM ION BATTERY**

(30) Priority: 27.06.2023 CN 202310761042; 05.07.2023 CN 202310817712; 12.07.2023 CN 202310847662; 13.07.2023 CN 202321841019 U; 13.07.2023 CN 202310859647; 13.07.2023 CN 202321843129 U; 27.07.2023 CN 202310931878; 27.07.2023 CN 202310931636; 01.08.2023 CN 202310959367; 01.08.2023 CN 202310959678
(71) Applicant: Suzhou Qingtao New Energy S&T Co., Ltd., Suzhou, Jiangsu 215335 (CN)
(72) Inventor: SHI, Zhan, Suzhou, Jiangsu 215335 (CN); FENG, Yuchuan, Suzhou, Jiangsu 215335 (CN); LI, Zheng, Suzhou, Jiangsu 215335 (CN)
(74) Representative: Kohler Schmid Möbus Patentanwälte
(86) International application number: PCT/CN2024/097259
(87) International publication number: WO 2025/001770

(57) **Abstract**

Disclosed are a preparation method for a composite electrode sheet, a composite electrode sheet preparation apparatus, used for preparing the composite electrode sheet, and a lithium-ion battery comprising the composite electrode sheet. In a dry rolling process, an electrode sheet is conveyed by means of an electrode sheet unwinding mechanism, a solid electrolyte membrane is conveyed by means of a solid electrolyte membrane unwinding mechanism, and then an elastic member provided between a shaping roller and the solid electrolyte membrane is used to roll the solid electrolyte membrane located at a side of the electrode sheet onto the electrode sheet, to obtain a composite electrode sheet.

## Description

### RELATED APPLICATIONS

The present application claims the priority of Chinese Patent Application No. 2023107610426, entitled "PREPARATION METHOD AND PREPARATION APPARATUS FOR COMPOSITE ELECTRODE SHEET, AND LITHIUM-ION BATTERY," filed on June 27, 2023; the priority of Chinese Patent Application No. 202321841019X, entitled "PREPARATION APPARATUS FOR COMPOSITE ELECTRODE SHEET, AND COMPOSITE ELECTRODE SHEET," filed on July 13, 2023; the priority of Chinese Patent Application No. 2023108476621, entitled "COMPOSITE ELECTRODE SHEET AND PREPARATION METHOD THEREFOR, AND LITHIUM-ION BATTERY," filed on July 12, 2023; the priority of Chinese Patent Application No. 2023108596479, entitled "COMPOSITE ELECTRODE SHEET AND PREPARATION METHOD THEREFOR, AND LITHIUM-ION BATTERY," filed on July 13, 2023; the priority of Chinese Patent Application No. 202321843129X, entitled "COMPOSITE ELECTRODE SHEET AND PREPARATION APPARATUS THEREFOR, AND LITHIUM-ION BATTERY," filed on July 13, 2023; the priority of Chinese Patent Application No. 2023109593675, entitled "COMPOSITE ELECTRODE SHEET AND PREPARATION METHOD THEREFOR, AND LITHIUM-ION BATTERY," filed on August 1, 2023; the priority of Chinese Patent Application No. 2023109318786, entitled "COMPOSITE ELECTRODE SHEET AND PREPARATION METHOD THEREFOR, AND LITHIUM-ION BATTERY," filed on July 27, 2023; the priority of Chinese Patent Application No. 2023109596781, entitled "COMPOSITE ELECTRODE SHEET AND PREPARATION METHOD THEREFOR, AND LITHIUM-ION BATTERY," filed on August 1, 2023; the priority of Chinese Patent Application No. 2023109316367, entitled "PREPARATION METHOD FOR COMPOSITE ELECTRODE SHEET, COMPOSITE ELECTRODE SHEET, AND SOLID-STATE BATTERY," filed on July 27, 2023; and the priority of Chinese Patent Application No. 2023108177121, entitled "COMPOSITE ELECTRODE SHEET AND PREPARATION METHOD THEREFOR, AND LITHIUM-ION BATTERY," filed on July 5, 2023, which are incorporated herein for reference in their entireties.

### TECHNICAL FIELD

The present application relates to the technical field of batteries, and in particular to a composite electrode sheet and a preparation method therefor, an apparatus for preparing the composite electrode sheet, and a lithium-ion battery including the composite electrode sheet.

### BACKGROUND

Lithium-ion batteries are now mainstream energy storage devices on the market with broad application prospects. As new technologies continue to emerge, requirements for battery performance are also increasing. Conventional liquid batteries that use non-aqueous electrolytes as electrolyte systems have many safety concerns. For example, conventional electrolyte materials are flammable and explosive, and positive electrode materials, especially high-energy-density high-nickel ternary materials, are prone to undesirable side reactions with electrolytes, causing safety issues for batteries, etc.

To improve the safety performance of batteries, providing a solid electrolyte layer on an electrode is generally considered to have positive effects. At present, a main method of compositing a solid electrolyte on an electrode surface is to apply a solid electrolyte slurry to the electrode sheet surface by means of coating. This method can be directly embedded into a current mature coating process, but also faces many problems. For example, (1) due to rapid drying and evaporation of a solvent in a drying process after coating, surface tension of an electrode sheet changes rapidly, and the electrode sheet is prone to curling and lifting, and in addition, the rapid evaporation of the solvent causes a crystalline binder to segregate on the electrode sheet surface; (2) some electrolyte materials, such as sulfide solid electrolytes, are extremely sensitive to moisture, and small amounts of moisture present in wet processes can easily corrode the electrolyte materials; (3) some novel binders have compatibility issues with solvents, and new solvents need to be developed to adapt to the novel binders; and (4) wet processes consume a large amount of solvents, resulting in excessively high environmental remediation costs.

Therefore, researchers and developers have gradually turned their attention to preparation of composite electrode sheets from an electrode sheet and a solid electrolyte membrane by dry processes, to improve the safety performance of batteries. Currently, methods for preparing electrode sheets by dry processes have been reported, and the proportion of dry-process electrodes in the battery field is increasing year by year.

Compared with a dry-process electrode, the difficulty in preparing a composite electrode sheet containing a solid electrolyte membrane by a dry process lies in weak interlayer bonding between a solid electrolyte layer and an electrode layer, and weak mechanical strength of a composite electrode. Dry roll compositing of a multi-layer structure has different technical characteristics from rolling of a single-layer structure. In another aspect, bonding strength between two dry-process membranes still needs to be improved. Therefore, it is quite important to research a universally applicable method for preparing a dry-process composite electrode.

In a rolling step of preparation of a composite electrode sheet by a dry process, due to thinning treatment on edges of an electrode sheet during production, when a solid electrolyte membrane is composited with the electrode sheet, it is easy to cause the issues of poor compositing effects between the electrode sheet and the solid electrolyte membrane, non-uniformity of lateral compaction density of the composite electrode sheet, and poor uniformity of lateral thickness, which can have a huge impact on the safety performance and quality of a lithium-ion battery.

Furthermore, in the rolling step of preparation of the composite electrode sheet by a dry process, due to limitations of the rigidity of roller press equipment and the deformation resistance of rollers, the rollers are prone to flexural deformation under stress during rolling, which can lead to a phenomenon that a positive/negative electrode sheet is thick in the middle and thin at two ends after rolling. Consequently, when the positive/negative electrode sheet is roll composited with a solid electrolyte membrane, it is prone to causing issues of poor compositing effects between the electrode sheet and the solid electrolyte membrane, non-uniformity of lateral compaction density of the composite electrode sheet, and poor uniformity of lateral thickness, which can produce a huge impact on the safety performance and quality of a lithium-ion battery.

In addition, preparing lithium-ion batteries with an electrode sheet and a solid electrolyte membrane by utilizing similar stacking techniques in laboratory pilot-scale tests is known. However, continuous production of composite electrodes before cutting is still not possible. Therefore, how to design and improve existing devices to prepare composite electrodes is a quite intractable technical problem.

### SUMMARY

On that basis, one aspect of the present application relates to a preparation method for a composite electrode sheet, comprising: conveying an electrode sheet by means of an electrode sheet unwinding mechanism, so that the electrode sheet passes through a gap in the middle of a shaping roller assembly; conveying a solid electrolyte membrane by means of a solid electrolyte membrane unwinding mechanism located at a side of the electrode sheet unwinding mechanism, so that the solid electrolyte membrane passes through a gap between the shaping roller assembly and the electrode sheet; and compositing the electrode sheet and the solid electrolyte membrane by means of the shaping roller assembly, to obtain the composite electrode sheet, wherein an elastic member is provided between the shaping roller assembly and the solid electrolyte membrane rolled on the electrode sheet.

In some implementations, the preparation method of the present application further comprises: heating the electrode sheet, or the solid electrolyte membrane, or the electrode sheet and the solid electrolyte membrane by means of a heating mechanism, wherein the heating mechanism is located between the electrode sheet unwinding mechanism and the shaping roller assembly, and/or the heating mechanism is located inside the shaping roller assembly. In some implementations, the solid electrolyte membrane comprises a first solid electrolyte membrane and a second solid electrolyte membrane, and the first solid electrolyte membrane and the second solid electrolyte membrane are roll composited on two sides of the electrode sheet by means of the shaping roller assembly. In some implementations, the elastic member is a protective film or an adhesive layer, and the protective film is transported through a gap between the shaping roller assembly and the solid electrolyte membrane; the adhesive layer covers around the outside of the shaping roller assembly. In some implementations, the adhesive layer is a plastic, a rubber, or silicone; the protective film is a polymer film or a non-woven fabric. In some implementations, the shaping roller assembly comprises a first shaping roller assembly and a second shaping roller assembly, and the elastic member is disposed between at least one of the first shaping roller assembly and the second shaping roller assembly, and the solid electrolyte membrane rolled on the electrode sheet. In some implementations, the shaping roller assembly comprises a first shaping roller assembly and a second shaping roller assembly, and at least one of the first shaping roller assembly and the second shaping roller assembly constitutes an elastic rolling assembly with the elastic member. In some implementations, the elastic rolling assembly comprises an elastic roller, the elastic roller is used to contact and roll the solid electrolyte membrane, the elastic roller comprises a rigid roller and an elastic member, and the elastic member is wrapped on the outside of the rigid roller. In some implementations, the elastic rolling assembly comprises a shaping rigid roller, and an elastic roller having a lower hardness than that of the shaping rigid roller.

In some implementations, the preparation method of the present application comprises: conveying the electrode sheet by means of the electrode sheet unwinding mechanism, so that the electrode sheet passes through a gap between the heating mechanism and the shaping roller assembly; preheating the electrode sheet by means of the heating mechanism, to obtain a preheated sheet; and performing roll compositing on the preheated sheet and the solid electrolyte membrane by means of the shaping roller assembly, to prepare the composite electrode sheet. In some implementations, the heating mechanism comprises a first heating mechanism and a second heating mechanism; the shaping roller assembly comprises a first shaping roller assembly and a second shaping roller assembly; the first heating mechanism is located between the electrode sheet unwinding mechanism and the first shaping roller assembly, and the second heating mechanism is located between the first shaping roller assembly and the second shaping roller assembly. In some implementations, the preparation method of the present application comprises: conveying the electrode sheet by means of the electrode sheet unwinding mechanism, so that the electrode sheet passes through the first heating mechanism; conveying a first solid electrolyte membrane by means of a first solid electrolyte membrane unwinding mechanism located at one side of the electrode sheet unwinding mechanism, so that the first solid electrolyte membrane passes through the first heating mechanism; heating the electrode sheet and the first solid electrolyte membrane by means of the first heating mechanism; compositing the heated electrode sheet and first solid electrolyte membrane by means of the first shaping roller assembly, to obtain a composite membrane sheet; conveying a second solid electrolyte membrane by means of a second solid electrolyte membrane unwinding mechanism located at the other side of the electrode sheet unwinding mechanism, so that the second solid electrolyte membrane passes through the second heating mechanism; heating the composite membrane sheet and the second solid electrolyte membrane by means of the second heating mechanism; and compositing the heated composite membrane sheet and second solid electrolyte membrane by means of the second shaping roller assembly, to obtain the composite electrode sheet. In some implementations, the heating mechanism comprises a first heating mechanism and a second heating mechanism; the preparation method comprises: conveying the electrode sheet by means of the electrode sheet unwinding mechanism, so that the electrode sheet passes through a gap between the first heating mechanism and the shaping roller assembly; conveying the solid electrolyte membrane by means of the solid electrolyte membrane unwinding mechanism located at the side of the electrode sheet unwinding mechanism, so that the solid electrolyte membrane passes through the second heating mechanism and the gap between the shaping roller assembly and the electrode sheet; preheating the electrode sheet by means of the first heating mechanism; preheating the solid electrolyte membrane by means of the second heating mechanism; and performing roll compositing on the preheated electrode sheet and solid electrolyte membrane by means of the shaping roller assembly, to prepare the composite electrode sheet. In some implementations, the first heating mechanism and the second heating mechanism are separately selected from a heater and/or a heating roller assembly. In some implementations, the heating roller assembly comprises one or more sets of heating rollers, and each set of heating rollers comprises at least one heating roller. In some implementations, heating temperatures of the plurality of heating rollers are the same or different, and/or heating times of the plurality of heating rollers are the same or different. In some implementations, the heating time of the plurality of heating rollers is 2 seconds or more. In some implementations, heating temperatures of the first heating mechanism and the second heating mechanism are the same or different, and/or heating times of the first heating mechanism and the second heating mechanism are the same or different. In some implementations, the heating time of the first heating mechanism and the second heating mechanism is 2 seconds or more. In some implementations, the heating mechanism is located between the electrode sheet unwinding mechanism and the shaping roller assembly, and is used to preheat the electrode sheet, the solid electrolyte membrane and the elastic member, wherein the elastic member is a protective film, and the protective film is transported through a gap between the shaping roller assembly and the solid electrolyte membrane.

In some implementations, the preparation method of the present application comprises: conveying the electrode sheet by means of the electrode sheet unwinding mechanism, so that the electrode sheet passes through a guide roller, the heating mechanism, and the gap in the middle of the shaping roller assembly; conveying the solid electrolyte membrane by means of the solid electrolyte membrane unwinding mechanism located at the side of the electrode sheet unwinding mechanism, so that the solid electrolyte membrane passes through the guide roller, the heating mechanism, and the gap between the shaping roller assembly and the electrode sheet; controlling the electrode sheet and the solid electrolyte membrane to adhere on the guide roller, to prepare a laminated sheet; preheating the laminated sheet by means of the heating mechanism; performing roll compositing on the preheated laminated sheet by means of the shaping roller assembly, to prepare the composite electrode sheet. In some implementations, the preparation method of the present application comprises: preheating the solid electrolyte membrane by means of the shaping roller assembly, wherein the heating mechanism is disposed inside the shaping roller assembly, for preheating the solid electrolyte membrane; and performing heating and roll compositing on the electrode sheet and the preheated solid electrolyte membrane by means of the shaping roller assembly, to obtain the composite electrode sheet. In some implementations, the preparation method of the present application comprises: conveying an electrode sheet by means of an electrode sheet unwinding mechanism, so that the electrode sheet passes through a gap in the middle of a shaping roller assembly; conveying the solid electrolyte membrane by means of the solid electrolyte membrane unwinding mechanism located at the side of the electrode sheet unwinding mechanism, so that the solid electrolyte membrane reaches the shaping roller assembly to undergo preheating, and passes through the gap between the shaping roller assembly and the electrode sheet; and performing heating and roll compositing on the electrode sheet and the preheated solid electrolyte membrane by means of the shaping roller assembly, to obtain the composite electrode sheet, wherein a temperature of the solid electrolyte membrane is higher than that of the electrode sheet during rolling. In some implementations, a temperature of the solid electrolyte membrane is higher than that of the electrode sheet during rolling. In some implementations, the preparation method of the present application further comprises: guiding the electrode sheet, or the solid electrolyte membrane, or the electrode sheet and the solid electrolyte membrane by means of a guide roller assembly, so as to adjust preheating time, wherein the guide roller assembly is located between the electrode sheet unwinding mechanism and/or the solid electrolyte unwinding mechanism, and the shaping roller assembly. In some implementations, the preparation method of the present application further comprises: cooling the composite electrode sheet by means of a cooling roller, wherein the cooling roller is located downstream of the shaping roller assembly. In some implementations, the preparation method of the present application further comprises: downstream of the shaping roller assembly, receiving the composite electrode sheet by means of a composite electrode sheet winding mechanism. In some implementations, the preparation method of the present application further comprises: cooling the composite electrode sheet by means of a cooling roller between the shaping roller assembly and the composite electrode sheet winding mechanism.

In some implementations, the preparation method of the present application further comprises: separating a substrate covering the solid electrolyte membrane from the composite electrode sheet. In some implementations, the preparation method of the present application further comprises: receiving the substrate by means of a substrate winding mechanism between the shaping roller assembly and the composite electrode sheet winding mechanism, wherein the substrate winding mechanism and the solid electrolyte membrane unwinding mechanism are located at the same side of the electrode sheet unwinding mechanism. In some implementations, the shaping roller assembly comprises a first shaping roller assembly and a second shaping roller assembly; the solid electrolyte membrane comprises a first solid electrolyte membrane and a second solid electrolyte membrane, and the first solid electrolyte membrane and the second solid electrolyte membrane are located at two sides of the electrode sheet, respectively; between the first shaping roller assembly and the second shaping roller assembly, a first substrate located at a side of the first solid electrolyte membrane distant from the electrode sheet is received by means of a first substrate winding mechanism; downstream of the second shaping roller assembly, a second substrate located at the side of the second solid electrolyte membrane distant from the electrode sheet is received by means of a second substrate winding mechanism. In some implementations, after the first substrate is separated from the composite membrane sheet, the second solid electrolyte membrane is adhered on the composite membrane sheet, and passes through a gap in the middle of the second shaping roller assembly. In some implementations, the composite electrode sheet is cooled after the second substrate is separated from the composite electrode sheet. In some implementations, a yield limit of the elastic member satisfies: when the solid electrolyte membrane and the electrode sheet pass through the gap in the middle of the shaping roller assembly, the solid electrolyte membrane and the electrode sheet undergo plastic deformation, and the elastic member undergoes elastic deformation; the electrode sheet comprises a positive electrode sheet and a negative electrode sheet. In some implementations, the electrode sheet has a structure that is thick in the middle and thin at two sides, and during the rolling process, a middle region of the electrode sheet is subjected to a greater force than an edge region. In some implementations, the electrode sheet is prepared by means of a dry process. In some implementations, the width of the elastic member is greater than or equal to a minimum value of the width of the solid electrolyte membrane or the electrode sheet. In some implementations, the elastic member is conveyed by means of a protective film unwinding mechanism; the protective film unwinding mechanism is located between the solid electrolyte membrane unwinding mechanism and the shaping roller assembly; and the elastic member is received by means of the protective film winding mechanism between the shaping roller assembly and the substrate winding mechanism. In some implementations, within the gap, a protective film is adhered on a surface of the solid electrolyte membrane. In some implementations, the electrode sheet is preheated several times, and temperatures of the several preheatings progressively increase. In some implementations, the shaping roller assembly comprises a first shaping roller assembly and a second shaping roller assembly, and both of the first shaping roller assembly and the second shaping roller assembly are provided with a heating mechanism.

In some implementations, the solid electrolyte membrane comprises a first solid electrolyte membrane and a second solid electrolyte membrane, and the first solid electrolyte membrane and the second solid electrolyte membrane are located at two sides of the electrode sheet, respectively; the first shaping roller assembly comprises a first shaping rigid roller and a first elastic roller, wherein the first elastic roller is used to contact and roll the first solid electrolyte membrane; and/or the second shaping roller assembly comprises a second shaping rigid roller and a second elastic roller, wherein the second elastic roller is used to contact and roll the second solid electrolyte membrane. In some implementations, a ninth guide roller is provided between the shaping roller assembly and the second heating mechanism, wherein the ninth guide roller is used to adjust the preheating time of the solid electrolyte membrane. In some implementations, a third guide roller is provided between the shaping roller assembly and the ninth guide roller, wherein the third guide roller is used to adjust the preheated electrode sheet and solid electrolyte membrane to enter the shaping roller assembly along a horizontal direction.

Another aspect of the present application sets forth a composite electrode sheet prepared using the foregoing preparation method.

Another aspect of the present application sets forth a lithium-ion battery, comprising a composite electrode sheet prepared by the foregoing preparation method.

Another aspect of the present application sets forth a preparation apparatus for a composite electrode sheet, configured to execute the foregoing preparation method, the preparation apparatus comprising: a shaping roller assembly, comprising a first shaping roller and a second shaping roller; an electrode sheet unwinding mechanism located upstream of the shaping roller assembly, used to convey an electrode sheet so that the electrode sheet passes through a gap between the first shaping roller and the second shaping roller; and a solid electrolyte membrane unwinding mechanism located at a side of the electrode sheet unwinding mechanism, used to convey a solid electrolyte membrane so that the solid electrolyte membrane passes through the gap between the first shaping roller and the second shaping roller, wherein an elastic member is provided between the shaping roller assembly and the solid electrolyte membrane. In some implementations, the preparation apparatus of the present application further comprises: a composite electrode sheet winding mechanism located downstream of the shaping roller assembly, used to receive the composite electrode sheet; and a substrate winding mechanism located between the shaping roller assembly and the composite electrode sheet winding mechanism, used to receive a substrate covering the solid electrolyte membrane, wherein the substrate winding mechanism and the solid electrolyte membrane unwinding mechanism are located at the same side of the electrode sheet unwinding mechanism. In some implementations, the preparation apparatus of the present application further comprises: a protective film unwinding mechanism located between the solid electrolyte membrane unwinding mechanism and the shaping roller assembly, used to convey the elastic member; and a protective film winding mechanism located between the shaping roller assembly and the substrate winding mechanism, used to receive the elastic member, wherein the elastic member is a protective film. In some implementations, the elastic member is an adhesive layer that covers around the outside of the shaping roller assembly. In some implementations, the preparation apparatus of the present application further comprises: a heating mechanism located between the electrode sheet unwinding mechanism and the shaping roller assembly, used to preheat the electrode sheet, or the solid electrolyte membrane, or the electrode sheet and the solid electrolyte membrane. In some implementations, the preparation apparatus of the present application further comprises: a guide roller located between the electrode sheet unwinding mechanism and the shaping roller assembly, used to guide the electrode sheet, or the solid electrolyte membrane, or the electrode sheet and the solid electrolyte membrane, so as to adjust preheating time.

One aspect of the present application provides a preparation method for a composite electrode sheet, which improves uniformity of lateral thickness of the composite electrode sheet by means of adjusting stress on an electrode sheet and a solid electrolyte membrane during a rolling process.

The preparation method for a composite electrode sheet comprises: conveying an electrode sheet by means of an electrode sheet unwinding mechanism, so that the electrode sheet passes through a gap between shaping rollers; conveying a solid electrolyte membrane by means of a solid electrolyte membrane unwinding mechanism located at a side of the electrode sheet unwinding mechanism, so that the solid electrolyte membrane passes through a gap between the shaping roller and the electrode sheet; and rolling the solid electrolyte membrane located at a side of the electrode sheet on the electrode sheet by means of a shaping roller, to obtain the composite electrode sheet, wherein an elastic member is provided between the shaping roller and the solid electrolyte membrane rolled on the electrode sheet. A yield limit of the elastic member satisfies: when the solid electrolyte membrane and the electrode sheet pass through the gap between the shaping rollers, the solid electrolyte membrane and the electrode sheet undergo plastic deformation, and the elastic member undergoes elastic deformation; the width of the elastic member is greater than or equal to a minimum value of the width of the solid electrolyte membrane or the electrode sheet. The electrode sheet comprises a positive electrode sheet and/or a negative electrode sheet.

In some implementations, the elastic member is a protective film, which is transported through a gap between the shaping roller and the solid electrolyte membrane. In some implementations, the elastic member is an adhesive layer that covers around the outside of the shaping roller. In some implementations, solid electrolyte membranes located on two sides of the electrode sheet, respectively, are rolled on the electrode sheet by means of the shaping rollers, to obtain the composite electrode sheet. In some implementations, the method further comprises separating a substrate covering the solid electrolyte membrane from the composite electrode sheet. In some implementations, the protective film is a polymer film or a non-woven fabric. In some implementations, the adhesive layer is a plastic, a rubber, or silicone. In some implementations, the preparation method further comprises: downstream of the shaping roller, receiving the composite electrode sheet by means of a composite electrode sheet winding mechanism; between the shaping roller and the composite electrode sheet winding mechanism, receiving the substrate by means of a substrate winding mechanism, wherein the substrate winding mechanism and the solid electrolyte membrane unwinding mechanism are located at the same side of the electrode sheet unwinding mechanism. In some implementations, the preparation method further comprises: conveying the elastic member by means of a protective film unwinding mechanism, wherein the protective film unwinding mechanism is located between the solid electrolyte membrane unwinding mechanism and the shaping roller; and, between the shaping roller and the substrate winding mechanism, receiving the elastic member by means of the protective film winding mechanism.

Another aspect of the present application provides a composite electrode sheet that is obtained by means of the foregoing preparation method for a composite electrode sheet.

Another aspect of the present application further provides a lithium-ion battery, including a composite electrode sheet prepared by means of the foregoing preparation method for a composite electrode sheet.

Another aspect of the present application provides a preparation apparatus for a composite electrode sheet, the apparatus comprising: shaping rollers, comprising a first shaping roller and a second shaping roller; an electrode sheet unwinding mechanism located upstream of the shaping rollers, used to convey an electrode sheet so that the electrode sheet passes through a gap between the first shaping roller and the second shaping roller; and a solid electrolyte membrane unwinding mechanism located at a side of the electrode sheet unwinding mechanism, used to convey a solid electrolyte membrane so that the solid electrolyte membrane passes through the gap between the first shaping roller and the second shaping roller, wherein an elastic member is provided between the shaping rollers and the solid electrolyte membrane. In some implementations, the apparatus further comprises: a composite electrode sheet winding mechanism located downstream of the shaping roller, used to receive the composite electrode sheet; and a substrate winding mechanism located between the shaping roller and the composite electrode sheet winding mechanism, used to receive a substrate covering the solid electrolyte membrane, wherein the substrate winding mechanism and the solid electrolyte membrane unwinding mechanism are located at the same side of the electrode sheet unwinding mechanism. In some implementations, the apparatus further comprises: a protective film unwinding mechanism located between the solid electrolyte membrane unwinding mechanism and the shaping rollers, used to convey the elastic member; and a protective film winding mechanism located between the shaping rollers and the substrate winding mechanism, used to receive the elastic member, wherein the elastic member is a protective film. In some implementations, the elastic member may also be an adhesive layer that covers around the outside of the shaping roller.

In the preparation method for a composite electrode sheet in the present application, cushioning provided by the elastic member during the rolling process of the shaping roller enables the solid electrolyte membrane to better coat the electrode sheet. Furthermore, during the rolling process of the shaping roller, the electrode sheet is thick in the middle, resulting in greater stress in a middle region than in an edge region. The lateral thickness of the electrode sheet tends to be uniform after rolling. This avoids adverse effects on the roll compositing process caused by the phenomenon of an electrode sheet being thick in the middle and thin at two ends. While protecting the electrode sheet from being crushed, this further enables an active material layer in the electrode sheet to better bond to the solid electrolyte membrane. Additionally, the composite electrode sheet prepared using the preparation method of the present application, when applied to a battery, helps to improve overall safety performance of the battery. Furthermore, the present application performs rolling during the compositing process of the solid electrolyte membrane and the electrode sheet, eliminating the phenomenon of bulging in the rolling process that needs to be handled when the electrode sheet is thinned at edges, and avoiding an impact of edge thinning on interlayer compositing.

Another aspect of the present application provides a preparation apparatus for a composite electrode sheet, which adjusts preheating time of an electrode sheet and/or a solid electrolyte membrane by means of a guide roller, to improve compositing effects between the electrode sheet and the solid electrolyte membrane, and improve uniformity of the composite electrode sheet.

One aspect of the present application provides a preparation apparatus for a composite electrode sheet, comprising: a shaping roller assembly, comprising a first shaping roller and a second shaping roller; an electrode sheet unwinding mechanism located upstream of the shaping roller assembly, used to convey an electrode sheet so that the electrode sheet passes through a gap between the first shaping roller and the second shaping roller; a solid electrolyte membrane unwinding mechanism located at a side of the electrode sheet unwinding mechanism, used to convey a solid electrolyte membrane so that the solid electrolyte membrane passes through a gap between the electrode sheet and the shaping roller assembly; a heating roller located between the electrode sheet unwinding mechanism and the shaping roller assembly, used to preheat the electrode sheet and/or the solid electrolyte membrane; and a guide roller located between the electrode sheet unwinding mechanism and the shaping roller assembly, used to adjust preheating time of the electrode sheet or the solid electrolyte membrane. In some implementations, the heating roller is used to preheat the electrode sheet. In some implementations, the heating roller is used to preheat the solid electrolyte membrane. In some implementations, the heating roller is used to preheat the electrode sheet and the solid electrolyte membrane. In some implementations, the preparation apparatus for a composite electrode sheet further comprises: a composite electrode sheet winding mechanism located downstream of the shaping roller assembly, used to receive the composite electrode sheet. In some implementations, the preparation apparatus for a composite electrode sheet further comprises: a substrate winding mechanism located between the shaping roller assembly and the composite electrode sheet winding mechanism, used to receive a substrate covering the solid electrolyte membrane, wherein the substrate winding mechanism and the solid electrolyte membrane unwinding mechanism are located at the same side of the electrode sheet unwinding mechanism. In some implementations, the preparation apparatus for a composite electrode sheet further comprises an elastic member located between the shaping roller assembly and the solid electrolyte membrane, used to provide a cushioning function during the rolling of the shaping roller assembly. In some implementations, the preparation apparatus for a composite electrode sheet further comprises: a protective film unwinding mechanism located between the electrode sheet unwinding mechanism and the shaping roller assembly, used to convey a protective film so that the protective film passes through a gap between the solid electrolyte membrane and the shaping roller assembly; and a protective film winding mechanism located between the shaping roller assembly and the substrate winding mechanism, used to receive the protective film. In some implementations, a guide roller is further located downstream of the shaping roller assembly, and is used to adjust cooling time of the composite electrode sheet. In some implementations, there are two solid electrolyte membrane unwinding mechanisms, symmetrically disposed at two sides of the electrode sheet unwinding mechanism.

Another aspect of the present application provides a composite electrode sheet that is prepared by the apparatus provided above. The preparation apparatus for a composite electrode sheet of the present application is provided with a heating roller, which preheats the electrode sheet and/or the solid electrolyte membrane, improving the flexibility of the electrode sheet and/or the solid electrolyte membrane, and makes tight compositing between the electrode sheet and the solid electrolyte membrane easier. The present application provides a plurality of guide rollers, so that the preheating time of the electrode sheet and/or the solid electrolyte membrane can be adjusted as needed during the preheating process to reach an expected preheating temperature, and the electrode sheet and/or the solid electrolyte membrane can be fully preheated, to adjust the flexibility of the electrode sheet and/or the solid electrolyte membrane, enhancing the bonding strength between the electrode sheet and the solid electrolyte membrane, and improving the tight compositing degree of the composite electrode sheet. The preparation apparatus for a composite electrode sheet of the present application utilizes cushioning provided by the elastic member during rolling to enable the solid electrolyte membrane to better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling.

Another aspect of the present application provides a preparation method for a composite electrode sheet, the preparation method comprising: conveying an electrode sheet by means of an electrode sheet unwinding mechanism, so that the electrode sheet passes through a first heater; conveying a first solid electrolyte membrane by means of a first solid electrolyte membrane unwinding mechanism located at one side of the electrode sheet unwinding mechanism, so that the first solid electrolyte membrane passes through the first heater; heating the electrode sheet and the first solid electrolyte membrane by means of the first heater; compositing the heated electrode sheet and first solid electrolyte membrane by means of the first shaping roller assembly, to obtain a composite membrane sheet; conveying a second solid electrolyte membrane by means of a second solid electrolyte membrane unwinding mechanism located at the other side of the electrode sheet unwinding mechanism, so that the second solid electrolyte membrane passes through the second heater; heating the composite membrane and the second solid electrolyte membrane by means of the second heater; and compositing the heated composite membrane sheet and second solid electrolyte membrane by means of a second shaping roller assembly, to obtain the composite electrode sheet.

In some implementations, at least one of the first shaping roller assembly and the second shaping roller assembly is configured as an elastic rolling assembly. In some implementations, between the first shaping roller assembly and the second shaping roller assembly, a first substrate located at a side of the first solid electrolyte membrane distant from the electrode sheet is received by means of a first substrate winding mechanism. In some implementations, downstream of the second shaping roller assembly, a second substrate located on the side of the second solid electrolyte membrane away from the electrode sheet is received by means of a second substrate winding mechanism. In some implementations, after the first substrate is separated from the composite membrane sheet, the second solid electrolyte membrane is laminated on the composite membrane sheet and passes through a gap in the middle of the second shaping roller assembly. In some implementations, the composite electrode sheet is cooled after the second substrate is separated from the composite electrode sheet. In some implementations, downstream of the second shaping roller assembly, the composite electrode sheet is received by means of a composite electrode sheet winding mechanism. In some implementations, between the second shaping roller assembly and the composite electrode sheet winding mechanism, the composite electrode sheet is cooled by a cooling roller. In some implementations, the first shaping roller assembly comprises a first rigid roller, and a first elastic roller arranged opposite to the first rigid roller, the first elastic roller being located at a side of the first solid electrolyte membrane distant from the electrode sheet; the second shaping roller assembly comprises a second rigid roller, and a second elastic roller arranged opposite to the second rigid roller, the second elastic roller being located at a side of the second solid electrolyte membrane distant from the electrode sheet. In some implementations, the elastic rolling assembly comprises a rigid roller, and an elastic roller having a lower hardness than that of the rigid roller, the rigid roller and the elastic roller being symmetrically distributed on two sides of the electrode sheet. In some implementations, the elastic roller comprises a rigid roller and an elastic member, the elastic member covering the outside of the rigid roller.

Another aspect of the present application provides a composite electrode sheet, which is prepared using the foregoing preparation method for a composite electrode sheet.

Another aspect of the present application further provides a lithium-ion battery, including a composite electrode sheet prepared by means of the foregoing preparation method for a composite electrode sheet.

In the foregoing preparation method for a composite electrode sheet, the heating process before the roll compositing improves compositing effects between the solid electrolyte membrane and the electrode sheet. During the rolling process of the first shaping roller assembly and the second shaping roller assembly, cushioning provided by the elastic member in the elastic roller is utilized to enable the solid electrolyte membrane to better coat the positive electrode sheet. In another aspect, during the rolling process, the electrode sheet is thick in the middle, resulting in greater stress in a middle region than in an edge region. The lateral thickness of the electrode sheet tends to be uniform after rolling, avoiding an adverse impact on the roll compositing process due to the phenomenon of the electrode sheet being thick in the middle and thin at two ends. The combined effect of the heating process and the elastic member in the elastic roller can protect the electrode sheet from being crushed, and can further cause an active material layer in the electrode sheet to better bond to the solid electrolyte membrane. Additionally, the composite electrode sheet prepared using the preparation method of the present application, when applied to a battery, helps to improve overall safety performance of the battery.

The present application further provides a preparation method for a composite electrode sheet, to overcome an adverse impact on a roll compositing process due to the phenomenon of an electrode sheet being thick in the middle and thin at two ends, and improve uniformity of the lateral thickness of the composite electrode sheet.

Another aspect of the present application provides a preparation method for a composite electrode sheet, the preparation method comprising: conveying an electrode sheet by means of an electrode sheet unwinding mechanism, so that the electrode sheet passes through a first heating roller assembly; conveying a first solid electrolyte membrane by means of a first solid electrolyte membrane unwinding mechanism located at one side of the electrode sheet unwinding mechanism, so that the first solid electrolyte membrane passes through the first heating roller assembly; heating the electrode sheet and the first solid electrolyte membrane by means of the first heating roller assembly; compositing the heated electrode sheet and first solid electrolyte membrane by means of the first shaping roller assembly, to obtain a composite membrane sheet; conveying a second solid electrolyte membrane by means of a second solid electrolyte membrane unwinding mechanism located at the other side of the electrode sheet unwinding mechanism, so that the second solid electrolyte membrane passes through a second heating roller assembly; heating the composite membrane sheet and the second solid electrolyte membrane by means of the second heating roller assembly; and compositing the heated composite membrane sheet and second solid electrolyte membrane by means of a second shaping roller assembly, to obtain the composite electrode sheet.

In some implementations, at least one of the first shaping roller assembly and the second shaping roller assembly is configured as an elastic rolling assembly. In some implementations, the elastic rolling assembly comprises a rigid roller, and an elastic roller having a lower hardness than that of the rigid roller, the rigid roller and the elastic roller being symmetrically distributed on two sides of the electrode sheet. In some implementations, the elastic roller comprises a rigid roller and an elastic member, the elastic member covering the outside of the rigid roller. In some implementations, the material of the elastic member is a plastic, a rubber, or silicone. In some implementations, the first shaping roller assembly comprises a first rigid roller, and a first elastic roller arranged opposite to the first rigid roller, the first elastic roller being located at a side of the first solid electrolyte membrane distant from the electrode sheet; the second shaping roller assembly comprises a second rigid roller, and a second elastic roller arranged opposite to the second rigid roller, the second elastic roller being located at a side of the second solid electrolyte membrane distant from the electrode sheet. In some implementations, heating time of the first heating roller assembly is 2 seconds or more. In some implementations, heating temperatures of heating rollers in the first heating roller assembly and the second heating roller assembly are the same or different, and/or heating times are the same or different. In some implementations, both the first heating roller assembly and the second heating roller assembly comprise at least one heating roller. In some implementations, the first heating roller assembly comprised a first heating roller and a second heating roller in sequence in a traveling direction of the electrode sheet; both the first heating roller and the second heating roller are used to heat the electrode sheet and the first solid electrolyte membrane, a temperature of the second heating roller being higher than that of the first heating roller. In some implementations, the second heating roller assembly comprises a third heating roller and a fourth heating roller in sequence in a traveling direction of the composite membrane sheet; both the third heating roller and the fourth heating roller are used to heat the composite membrane sheet and the second solid electrolyte membrane, a temperature of the fourth heating roller being higher than that of the third heating roller. In some implementations, between the first shaping roller assembly and the second shaping roller assembly, a first substrate located at the side of the first solid electrolyte membrane distant from the electrode sheet is received by means of a first substrate winding mechanism; downstream of the second shaping roller assembly, a second substrate located at the side of the second solid electrolyte membrane distant from the electrode sheet is received by means of a second substrate winding mechanism. In some implementations, after the first substrate is separated from the composite membrane sheet, the second solid electrolyte membrane is laminated on the composite membrane sheet and passes through a gap in the middle of the second shaping roller assembly.

Another aspect of the present application provides a composite electrode sheet, which is prepared using the foregoing preparation method for a composite electrode sheet.

Another aspect of the present application further provides a lithium-ion battery, including a composite electrode sheet prepared by means of the foregoing preparation method for a composite electrode sheet.

In the foregoing preparation method for a composite electrode sheet, the heating process before roll compositing improves compositing effects between the solid electrolyte membrane and the electrode sheet, and improves preheating effects of the electrode sheet and the solid electrolyte membrane. Furthermore, the use of the heating roller assembly allows for control of residence time of the electrode sheet and the solid electrolyte membrane, which can further improve the compositing effects between the solid electrolyte membrane and the electrode sheet, and enable application to production of different composite electrode sheets. During the rolling process of the first shaping roller assembly and the second shaping roller assembly, cushioning provided by the elastic member in the elastic rolling assembly is utilized to enable the solid electrolyte membrane to better coat the positive electrode sheet. Furthermore, during the rolling process, the electrode sheet is thick in the middle, resulting in greater stress in a middle region than in an edge region. The lateral thickness of the electrode sheet tends to be uniform after rolling, avoiding an adverse impact on the roll compositing process due to a phenomenon that the electrode sheet is thick in the middle and thin at two ends. The combined effect of the heating process and the elastic member in the elastic roller can protect the electrode sheet from being crushed, and can further cause an active material layer in the electrode sheet to better bond to the solid electrolyte membrane. Additionally, the composite electrode sheet prepared using the preparation method of the present application, when applied to a battery, helps to improve overall safety performance of the battery. Furthermore, the present application uses a two-step process to successively composite the solid electrolyte membranes on both sides of the electrode sheet onto the electrode sheet. This process can better adapt to situations in which active material layers on two sides of a current collector have different compositions, or the compositions and structures of the solid electrolyte membranes are different, allowing for better compatibility and adaptability to different formulation systems.

Another aspect of the present application provides a preparation apparatus for a composite electrode sheet, the apparatus comprising: a shaping roller assembly, comprising a first shaping roller and a second shaping roller, used to perform roll compositing on an electrode sheet, a solid electrolyte membrane and a protective film, to form a composite electrode sheet; an electrode sheet unwinding mechanism located upstream of the shaping roller assembly, used to convey an electrode sheet so that the electrode sheet passes through a gap between the first shaping roller and the second shaping roller; a solid electrolyte membrane unwinding mechanism located at a side of the electrode sheet unwinding mechanism, used to convey a solid electrolyte membrane so that the solid electrolyte membrane passes through a gap between the electrode sheet and the shaping roller assembly; a protective film unwinding mechanism located between the solid electrolyte membrane unwinding mechanism and the shaping roller assembly, used to convey a protective film so that the protective film passes through a gap between the solid electrolyte membrane and the shaping roller assembly; a heating mechanism located between the electrode sheet unwinding mechanism and the shaping roller assembly, used to preheat the electrode sheet, the solid electrolyte membrane and the protective film; and a cooling roller located downstream of the shaping roller assembly, used to cool the composite electrode sheet. In some implementations, the preparation apparatus for a composite electrode sheet further comprises a composite electrode sheet winding mechanism located downstream of the shaping roller assembly, used to receive the composite electrode sheet. In some implementations, the preparation apparatus for a composite electrode sheet further comprises a substrate winding mechanism located between the shaping roller assembly and the composite electrode sheet winding mechanism, used to receive a substrate covering the solid electrolyte membrane, wherein the substrate winding mechanism and the solid electrolyte membrane unwinding mechanism are located at the same side of the electrode sheet unwinding mechanism.

In some implementations, the preparation apparatus for a composite electrode sheet further comprises a protective film winding mechanism located between the shaping roller assembly and the substrate winding mechanism, used to receive the protective film. In some implementations, the protective film is a polymer film or a non-woven fabric. In some implementations, time for the heating mechanism to preheat the electrode sheet, the solid electrolyte membrane and the protective film is greater than or equal to 2 seconds. In some implementations, there are a plurality of heating mechanisms used to simultaneously preheat the electrode sheet, the solid electrolyte membrane and the protective film a plurality of times, with preheating temperatures gradually increasing. In some implementations, there are two solid electrolyte membrane unwinding mechanisms, symmetrically disposed at two sides of the electrode sheet unwinding mechanism.

Another aspect of the present application provides a composite electrode sheet, which is prepared by the foregoing preparation apparatus for a composite electrode sheet.

Another aspect of the present application provides a lithium-ion battery comprising the foregoing composite electrode sheet.

The preparation apparatus for a composite electrode sheet of the present application is provided with a heating mechanism. The heating mechanism simultaneously preheats the electrode sheet, the solid electrolyte membrane and the protective film, improving the overall flexibility of the electrode sheet, the solid electrolyte membrane and the protective film. This improves the extensibility and plasticity of the three, so that adjacent membranes are interlocked more tightly during the process of roll compositing the electrode sheet, the solid electrolyte membrane and the protective film by the shaping roller assembly, improving bonding strength between the membranes, and increasing the degree of compositing between the electrode sheet, the solid electrolyte membrane and the protective film. In the preparation apparatus for a composite electrode sheet of the present application, before the roll compositing process, the protective films are already laminated on both sides of the electrode sheet and the solid electrolyte membrane, providing a protective function. During the roll compositing process, cushioning provided by the protective films is utilized to adjust the stress on the electrode sheet and the solid electrolyte membrane during the rolling process, so that the solid electrolyte membrane can better coat the electrode sheet. Furthermore, this ensures uniform stress on the electrode sheet and the solid electrolyte membrane during the rolling process, so that the lateral thickness of the electrode sheet tends to be uniform after rolling, avoiding an adverse impact on the roll compositing process due to the phenomenon of an electrode sheet being thick in the middle and thin at two ends, preventing the electrode sheet from being crushed, improving the degree of compositing between the electrode sheet, the solid electrolyte membrane and the protective film, and improving the uniformity of the lateral thickness of the composite electrode sheet. The preparation apparatus for a composite electrode sheet of the present application is provided with a cooling roller, which can quickly reduce the temperature of the composite electrode sheet exiting the gap of the shaping roller assembly, so that the composite electrode sheet can be continuously wound, improving production efficiency. Furthermore, the cooling roller further provides shaping treatment for the composite electrode sheet.

One aspect of the present application provides a preparation method for a composite electrode sheet, which overcomes an adverse impact on a roll compositing process due to the phenomenon of an electrode sheet being "thick in the middle and thin at two ends", and prevents an electrode sheet from being crushed. Furthermore, stress on an electrode sheet and a solid electrolyte membrane during a rolling process is uniform, improving uniformity of the lateral thickness of the composite electrode sheet. The preparation method for a composite electrode sheet comprises the following steps: conveying the electrode sheet by means of the electrode sheet unwinding mechanism, so that the electrode sheet passes through a gap between the heating mechanism and the shaping roller assembly; conveying a solid electrolyte membrane by means of a solid electrolyte membrane unwinding mechanism located at a side of the electrode sheet unwinding mechanism, so that the solid electrolyte membrane passes through a gap between the shaping roller assembly and the electrode sheet; preheating the electrode sheet by means of the heating mechanism, to obtain a preheated sheet; and performing roll compositing on the preheated sheet and the solid electrolyte membrane by means of the shaping roller assembly, to prepare the composite electrode sheet.

In some implementations, solid electrolyte membranes located at two sides of the electrode sheet, respectively, are roll composited on the electrode sheet by the shaping roller assembly, to obtain the composite electrode sheet. In some implementations, the electrode sheet is preheated several times, and temperatures of the several preheatings progressively increase. In some implementations, preheating time is greater than or equal to 2 s. In some implementations, an elastic member is provided between the shaping roller assembly and the solid electrolyte membrane. In some implementations, the elastic member is a protective film that is transported through a gap between the shaping roller assembly and the solid electrolyte membrane. In some implementations, the elastic member is an adhesive layer that covers around the outside of the shaping roller assembly. In some implementations, the solid electrolyte membrane is covered by a substrate, and the preparation method for a composite electrode sheet further comprises the following step: separating a substrate covering the solid electrolyte membrane from the composite electrode sheet. In some implementations, the preparation method for a composite electrode sheet further comprises performing cooling treatment on the composite electrode sheet. In some implementations, the preparation method for a composite electrode sheet further comprises: downstream of the shaping roller assembly, receiving the composite electrode sheet by means of a composite electrode sheet winding mechanism; receiving the substrate by means of a substrate winding mechanism between the shaping roller assembly and the composite electrode sheet winding mechanism, wherein the substrate winding mechanism and the solid electrolyte membrane unwinding mechanism are located at the same side of the electrode sheet unwinding mechanism. In some implementations, the preparation method for a composite electrode sheet further comprises: conveying the elastic member by means of a protective film unwinding mechanism, wherein the protective film unwinding mechanism is located between the solid electrolyte membrane unwinding mechanism and the shaping roller assembly; and, between the shaping roller assembly and the substrate winding mechanism, receiving the elastic member by means of a protective film winding mechanism.

Another aspect of the present application provides a composite electrode sheet, which is prepared according to the foregoing preparation method.

Another aspect of the present application provides a lithium-ion battery comprising the foregoing composite electrode sheet.

In the preparation method for a composite electrode sheet of the present application, the electrode sheet is preheated before the roll compositing step. The preheating and temperature raising increase the flexibility of the electrode sheet, so that the ductility of the electrode sheet is improved, and the plasticity of the electrode sheet is increased. Thus, when the shaping roller assembly rolls the electrode sheet and the solid electrolyte membrane, the electrode sheet and the solid electrolyte membrane are more tightly interlocked, improving the adhesion strength between two membranes and more easily achieving a tight compositing effect. In the preparation method for a composite electrode sheet of the present application, compared with overall preheating of the electrode sheet and the solid electrolyte membrane, the structure of a rolling apparatus for separately preheating the electrode sheet is simpler, and the preheating of the electrode sheet is more thorough, without having to consider factors such as a slower preheating rate for the composite membrane and a different preheating temperature for the solid electrolyte membrane. In the preparation method for a composite electrode sheet of the present application, the stress on the electrode sheet and the solid electrolyte membrane during the rolling process is adjusted by means of cushioning provided by the elastic member, so that the solid electrolyte membrane can better coat the electrode sheet. Furthermore, the stress on the electrode sheet and the solid electrolyte membrane is uniform during the rolling process, so that the lateral thickness of the electrode sheet tends to be uniform after rolling, avoiding an adverse impact on the roll compositing process due to the phenomenon of an electrode sheet being thick in the middle and thin at two ends, and preventing the electrode sheet from being crushed. The combined effect of the heating process and the elastic member improves the degree of compositing between the electrode sheet and the solid electrolyte membrane, and improves the uniformity of the lateral thickness of the composite electrode sheet. Additionally, the composite electrode sheet prepared using the preparation method of the present application, when applied to a battery, helps to improve overall safety performance of the battery.

The present application provides a preparation method for a composite electrode sheet, comprising the following steps: conveying an electrode sheet by means of the electrode sheet unwinding mechanism, so that the electrode sheet passes through a gap between the first heating mechanism and the shaping roller assembly; conveying a solid electrolyte membrane by means of the solid electrolyte membrane unwinding mechanism located at the side of the electrode sheet unwinding mechanism, so that the solid electrolyte membrane passes through the second heating mechanism and the gap between the shaping roller assembly and the electrode sheet; preheating the electrode sheet by means of the first heating mechanism; preheating the solid electrolyte membrane by means of the second heating mechanism; and performing roll compositing on the preheated electrode sheet and solid electrolyte membrane by means of the shaping roller assembly, to prepare the composite electrode sheet. The preparation method involves independently preheating the electrode sheet and the solid electrolyte membrane separately before roll compositing, enhancing a bonding force between the electrode sheet and the solid electrolyte membrane, and improving the degree of tight compositing of the composite electrode sheet.

In some implementations, an elastic member is provided between the shaping roller assembly and the solid electrolyte membrane. In some implementations, the elastic member is a protective film that is transported through a gap between the shaping roller assembly and the solid electrolyte membrane, and the protective film is laminated on a surface of the composite electrode sheet. In some implementations, the preparation method for a composite electrode sheet further comprises the following step: separating the protective film from the composite electrode sheet. In some implementations, the elastic member is an adhesive layer that covers around the outside of the shaping roller assembly. In some implementations, a ninth guide roller is provided between the shaping roller assembly and the second heating mechanism, and the ninth guide roller is used to adjust preheating time of the solid electrolyte membrane. In some implementations, a third guide roller is provided between the shaping roller assembly and the ninth guide roller, and the third guide roller is used to adjust the preheated electrode sheet and solid electrolyte membrane to enter the shaping roller assembly in a horizontal direction. In some implementations, solid electrolyte membranes located at two sides of the electrode sheet, respectively, are roll composited on the electrode sheet by the shaping roller assembly, to obtain the composite electrode sheet. In some implementations, preheating time is greater than or equal to 2 s. In some implementations, the solid electrolyte membrane is covered by a substrate, and the preparation method for a composite electrode sheet further comprises the following step: separating the substrate covering the solid electrolyte membrane from the composite electrode sheet. In some implementations, the preparation method for a composite electrode sheet further comprises performing cooling treatment on the composite electrode sheet. In some implementations, the preparation method for a composite electrode sheet further comprises: downstream of the shaping roller assembly, receiving the composite electrode sheet by means of a composite electrode sheet winding mechanism; receiving the substrate by means of a substrate winding mechanism between the shaping roller assembly and the composite electrode sheet winding mechanism, wherein the substrate winding mechanism and the solid electrolyte membrane unwinding mechanism are located at the same side of the electrode sheet unwinding mechanism. In some implementations, the preparation method for a composite electrode sheet further comprises: conveying the elastic member by means of a protective film unwinding mechanism, wherein the protective film unwinding mechanism is located between the solid electrolyte membrane unwinding mechanism and the shaping roller assembly; and, between the shaping roller assembly and the substrate winding mechanism, receiving the elastic member by means of a protective film winding mechanism. Another aspect of the present application provides a composite electrode sheet, which is prepared according to the foregoing preparation method.

Another aspect of the present application provides a lithium-ion battery comprising the foregoing composite electrode sheet.

In the preparation method for a composite electrode sheet of the present application, considering that the electrode sheet and the solid electrolyte membrane are made of different materials and have different suitable heating temperatures, before the roll compositing step, the electrode sheet and the solid electrolyte membrane are separately subjected to preheating treatment by means of the first heating mechanism and the second heating mechanism, respectively, to ensure that the electrode sheet and the solid electrolyte membrane are fully preheated and do not affect each other during the preheating treatment process, ensuring preheating effects. The preheated electrode sheet and solid electrolyte membrane will soften compared to before preheating, which improves the flexibility of the electrode sheet and the solid electrolyte membrane, so that the extensibility of the electrode sheet and the solid electrolyte membrane is increased. This causes the electrode sheet to be quickly composited with the solid electrolyte membrane during the roll compositing step, and the electrode sheet and the solid electrolyte membrane to be more tightly interlocked, increasing the bonding strength between the two membranes and more easily achieving a tight compositing effect.

In the preparation method for a composite electrode sheet of the present application, the stress on the electrode sheet and the solid electrolyte membrane during the rolling process is adjusted by means of cushioning provided by the elastic member, so that the solid electrolyte membrane can better coat the electrode sheet. Furthermore, the stress on the electrode sheet and the solid electrolyte membrane is uniform during the rolling process, so that the lateral thickness of the electrode sheet tends to be uniform after rolling, avoiding an adverse impact on the roll compositing process due to the phenomenon of an electrode sheet being thick in the middle and thin at two ends, and preventing the electrode sheet from being crushed. This improves the degree of compositing between the electrode sheet and the solid electrolyte membrane, and improves the uniformity of the lateral thickness of the composite electrode sheet. Additionally, the composite electrode sheet prepared using the preparation method of the present application, when applied to a battery, helps to improve overall safety performance of the battery.

One aspect of the present application provides a preparation method for a composite electrode sheet, which includes preheating an electrode sheet and a solid electrolyte membrane to adjust flexibility of the electrode sheet and the solid electrolyte membrane, enhance bonding strength between the electrode sheet and the solid electrolyte membrane, and increase a degree of tight compositing of the composite electrode sheet.

The preparation method for a composite electrode sheet comprises the following steps: conveying an electrode sheet by means of the electrode sheet unwinding mechanism, so that the electrode sheet passes through a guide roller, the heating mechanism, and the gap in the middle of the shaping roller assembly; conveying a solid electrolyte membrane by means of the solid electrolyte membrane unwinding mechanism located at the side of the electrode sheet unwinding mechanism, so that the solid electrolyte membrane passes through the guide roller, the heating mechanism, and the gap between the shaping roller assembly and the electrode sheet; controlling the electrode sheet and the solid electrolyte membrane to adhere on the guide roller, to prepare a laminated sheet; preheating the laminated sheet by means of the heating mechanism; performing roll compositing on the preheated laminated sheet by means of the shaping roller assembly, to prepare the composite electrode sheet.

In some implementations, the preparation method for a composite electrode sheet further comprises: downstream of the shaping roller assembly, receiving the composite electrode sheet by means of a composite electrode sheet winding mechanism; receiving the substrate by means of a substrate winding mechanism between the shaping roller assembly and the composite electrode sheet winding mechanism, wherein the substrate winding mechanism and the solid electrolyte membrane unwinding mechanism are located at the same side of the electrode sheet unwinding mechanism. In some implementations, an elastic member is provided between the shaping roller assembly and the solid electrolyte membrane. In some implementations, the preparation method for a composite electrode sheet further comprises: conveying the elastic member by means of a protective film unwinding mechanism, wherein the protective film unwinding mechanism is located between the solid electrolyte membrane unwinding mechanism and the shaping roller assembly; and, between the shaping roller assembly and the substrate winding mechanism, receiving the elastic member by means of a protective film winding mechanism. In some implementations, the elastic member is a protective film that is transported through a gap between the shaping roller assembly and the solid electrolyte membrane, within which the protective film is laminated on a surface of the solid electrolyte membrane. In some implementations, the preparation method for a composite electrode sheet further comprises the following step: after the composite electrode sheet is prepared, separating the protective film from the surface of the solid electrolyte membrane. In some implementations, the elastic member is an adhesive layer that covers around the outside of the shaping roller assembly. In some implementations, solid electrolyte membranes located at two sides of the electrode sheet, respectively, are roll composited on the electrode sheet by the shaping roller assembly, to obtain the composite electrode sheet. In some implementations, the electrode sheet is preheated several times, and temperatures of the several preheatings progressively increase. In some implementations, preheating time is greater than or equal to 2 s. In some implementations, the preparation method for a composite electrode sheet further comprises the following step: separating the substrate covering the solid electrolyte membrane from the composite electrode sheet. In some implementations, the preparation method for a composite electrode sheet further comprises performing cooling treatment on the composite electrode sheet. Another aspect of the present application provides a composite electrode sheet, which is prepared according to the preparation method provided above.

Another aspect of the present application provides a lithium-ion battery comprising the foregoing composite electrode sheet.

In the preparation method for a composite electrode sheet of the present application, the electrode sheet and the solid electrolyte membrane are first laminated before the roll compositing step, followed by preheating. The laminating step is equivalent to having completed a pre-roll compositing in the whole process, reducing rebound of the electrode sheet; the laminated sheet is then preheated. The preheating ensures that the laminated sheet is heated evenly throughout, and that the preheating temperature is consistent. As the temperature of the laminated sheet increases, the flexibility of the electrode sheet and the solid electrolyte membrane is enhanced, and the bonding strength between the electrode sheet and the solid electrolyte membrane is increased, thereby helping to achieve tight compositing effects during the roll compositing process.

In the preparation method for a composite electrode sheet of the present application, the stress on the electrode sheet and the solid electrolyte membrane during the rolling process is adjusted by means of cushioning provided by the elastic member, so that the solid electrolyte membrane can better coat the electrode sheet. Furthermore, the stress on the electrode sheet and the solid electrolyte membrane is uniform during the rolling process, so that the lateral thickness of the electrode sheet tends to be uniform after rolling, avoiding an adverse impact on the roll compositing process due to the phenomenon of an electrode sheet being thick in the middle and thin at two ends, and preventing the electrode sheet from being crushed. This improves the degree of compositing between the electrode sheet and the solid electrolyte membrane, and improves the uniformity of the lateral thickness of the composite electrode sheet. Additionally, the composite electrode sheet prepared using the preparation method of the present application, when applied to a battery, helps to improve overall safety performance of the battery.

Another aspect of the present application provides a preparation method for a composite electrode sheet, which overcomes the problem of poor compositing effects of a solid electrolyte membrane caused by edge thinning of an electrode sheet, and improves the uniformity of the lateral thickness of a composite electrode sheet formed by the electrode sheet and the solid electrolyte membrane.

The preparation method for a composite electrode sheet comprises: preheating the solid electrolyte membrane by means of a shaping roller assembly, wherein the heating mechanism is disposed inside the shaping roller assembly, for preheating the solid electrolyte membrane; and
performing heating and roll compositing on an electrode sheet and the preheated solid electrolyte membrane by means of the shaping roller assembly, to obtain the composite electrode sheet,
wherein the electrode sheet comprises a positive electrode sheet and a negative electrode sheet.

In some implementations, the shaping roller assembly comprises a first shaping roller and a second shaping roller; at least one of the first shaping roller and the second shaping roller is provided with a heating mechanism, and solid electrolyte membranes located on two sides of the electrode sheet, respectively, are rolled on the electrode sheet by means of the first shaping roller and the second shaping roller, to obtain the composite electrode sheet. In some implementations, both the first shaping roller and the second shaping roller are provided with heating mechanisms. In some implementations, an elastic member is provided between the shaping roller assembly and the solid electrolyte membrane rolled on the electrode sheet; optionally, the elastic member is a protective film that is transported through a gap between the shaping roller assembly and the solid electrolyte membrane. In some implementations, the protective film is a polymer film or a non-woven fabric. In some implementations, the elastic member is an adhesive layer that covers around the outside of the shaping roller assembly. In some implementations, the material of the adhesive layer is a plastic, a rubber, or silicone. In some implementations, the preparation method of the present application further comprises: separating the substrate covering the solid electrolyte membrane from the composite electrode sheet.

The preparation method for a composite electrode sheet provided in the present application comprises, in conjunction with the structure, the following steps: conveying an electrode sheet by means of an electrode sheet unwinding mechanism, so that the electrode sheet passes through a gap in the middle of a shaping roller assembly; conveying the solid electrolyte membrane by means of the solid electrolyte membrane unwinding mechanism located at the side of the electrode sheet unwinding mechanism, so that the solid electrolyte membrane reaches the shaping roller assembly to undergo preheating, and passes through the gap between the shaping roller assembly and the electrode sheet; and performing heating and roll compositing on the electrode sheet and the preheated solid electrolyte membrane by means of the shaping roller assembly, to obtain the composite electrode sheet, wherein a temperature of the solid electrolyte membrane is higher than that of the electrode sheet during rolling; the electrode sheet comprises a positive electrode sheet and a negative electrode sheet.

In some implementations, the preparation method further comprises: downstream of the shaping roller assembly, receiving the composite electrode sheet by means of a composite electrode sheet winding mechanism; receiving the substrate by means of a substrate winding mechanism between the shaping roller assembly and the composite electrode sheet winding mechanism, wherein the substrate winding mechanism and the solid electrolyte membrane unwinding mechanism are located at the same side of the electrode sheet unwinding mechanism. In some implementations, the elastic member is a protective film, and the preparation method further comprises: conveying the protective film by means of a protective film unwinding mechanism, so that the protective film passes through a gap between the solid electrolyte membrane and the shaping roller assembly; and, between the shaping roller assembly and the substrate winding mechanism, receiving the elastic member by means of a protective film winding mechanism.

Another aspect of the present application provides a composite electrode sheet that is obtained by the foregoing preparation method for a composite electrode sheet.

Another aspect of the present application further provides a solid-state battery comprising a composite electrode sheet prepared by the foregoing preparation method for a composite electrode sheet.

The preparation method for a composite electrode sheet utilizes the elastic member to provide cushioning for the rolling process during the compositing process. This, in one aspect, avoids a problem of low compositing efficiency caused by poor deformation resistance of rigid rollers, and in another aspect, avoids an adverse impact on the roll compositing process due to the phenomenon of an electrode sheet being thick in the middle and thin at two ends. When the composite electrode sheet is prepared by means of the preparation method of the present application, both the solid electrolyte membrane and the electrode sheet are heated, so that the ductility of both the solid electrolyte membrane and the electrode sheet is improved. Heating time of the solid electrolyte membrane by the shaping roller assembly is longer than heating time of the electrode sheet by the shaping roller assembly, further causing the ductility of the solid electrolyte membrane to be better than that of the electrode sheet. In addition, due to the phenomenon of the thickness of the middle region of the electrode sheet being greater than that of the edge region, the middle region of the electrode sheet is subjected to a greater force than the edge region. Due to a combination of factors, the solid electrolyte membrane can better coat the surface of the electrode sheet after rolling, and an active material layer in the electrode sheet is better bonded to the solid electrolyte membrane, which can also effectively improve the uniformity of the lateral thickness of the composite electrode sheet. Additionally, the composite electrode sheet prepared using the preparation method of the present application, when applied to a battery, helps to improve overall safety performance of the battery.

One aspect of the present application provides a preparation method for a composite electrode sheet, the preparation method comprising: unwinding and conveying an electrode sheet; unwinding a first solid electrolyte membrane located at one side of the electrode sheet, and compositing the electrode sheet and the first solid electrolyte membrane by means of a first shaping roller assembly, to obtain a composite membrane sheet; and unwinding a second solid electrolyte membrane located at the other side of the electrode sheet, and compositing the composite membrane sheet and the second solid electrolyte membrane by means of a second shaping roller assembly, to obtain the composite electrode sheet, wherein at least one of the first shaping roller assembly and the second shaping roller assembly is configured as an elastic rolling assembly.

**In** some implementations, the elastic rolling assembly comprises an elastic roller, the elastic rolling assembly comprises the elastic roller, and the elastic roller is used to contact and roll the first solid electrolyte membrane, and/or the elastic roller is used to contact and roll the first solid electrolyte membrane. **In** some implementations, the elastic rolling assembly comprises a shaping rigid roller, and an elastic roller having a lower hardness than that of the shaping rigid roller. **In** some implementations, the elastic roller comprises a rigid roller and an elastic member, the elastic member covering the outside of the rigid roller. **In** some implementations, the material of the elastic member is a plastic, a rubber, or silicone. In some implementations, the elastic roller comprises a rigid roller and a protective film, wherein the rigid roller acts on the protective film during rolling of the elastic roller, so that the protective film provides a cushioning function. In some implementations, the first shaping roller assembly comprises a first shaping rigid roller and a first elastic roller, wherein the first elastic roller is used to contact and roll the first solid electrolyte membrane. In some implementations, the second shaping roller assembly comprises a second shaping rigid roller and a second elastic roller, wherein the second elastic roller is used to contact and roll the second solid electrolyte membrane. In some implementations, the step of compositing the electrode sheet and the first solid electrolyte membrane by means of the first shaping roller assembly further comprises: heating the first shaping roller assembly. In some implementations, the step of laminating the composite membrane sheet and the second solid electrolyte membrane by means of the second shaping roller assembly further comprises: heating the second shaping roller assembly. In some implementations, between the first shaping roller assembly and the second shaping roller assembly, a first substrate located at the side of the first solid electrolyte membrane distant from the electrode sheet is received by means of a first substrate winding mechanism. In some implementations, downstream of the second shaping roller assembly, a second substrate located on the side of the second solid electrolyte membrane away from the electrode sheet is received by means of a second substrate winding mechanism. In some implementations, after the first substrate is separated from the composite membrane sheet, the second solid electrolyte membrane is laminated on the composite membrane sheet and passes through a gap in the middle of the second shaping roller assembly. In some implementations, the composite electrode sheet is cooled after the second substrate is separated from the composite electrode sheet. In some implementations, downstream of the second shaping roller assembly, the composite electrode sheet is received by means of a composite electrode sheet winding mechanism. In some implementations, between the second shaping roller assembly and the composite electrode sheet winding mechanism, the composite electrode sheet is cooled by means of a cooling roller.

Another aspect of the present application provides a composite electrode sheet, which is prepared using the foregoing preparation method for a composite electrode sheet.

Another aspect of the present application further provides a lithium-ion battery including a composite electrode sheet prepared by the foregoing preparation method for a composite electrode sheet.

In the foregoing preparation method for a composite electrode sheet, during the rolling process of the first shaping roller assembly and the second shaping roller assembly, cushioning provided by the elastic member in the elastic roller is utilized to enable the solid electrolyte membrane to better coat the positive electrode sheet, achieving excellent compositing effects. Furthermore, during the rolling process, the electrode sheet is thick in the middle, resulting in greater stress in a middle region than in an edge region. The lateral thickness of the electrode sheet tends to be uniform after rolling, avoiding an adverse impact on the roll compositing process due to the phenomenon of an electrode sheet being thick in the middle and thin at two ends. In another aspect, the rigidity of the shaping roller can provide better inter-membrane bonding and shaping effects for the composite membrane sheet or the composite electrode sheet. The combined use of the rigid roller and the elastic roller protects the electrode sheet from being crushed while also causing better bonding between an active material layer in the electrode sheet and the solid electrolyte membrane. Additionally, the composite electrode sheet prepared using the preparation method of the present application, when applied to a battery, helps to improve overall safety performance of the battery.

### BRIEF DESCRIPTION OF THE DRAWINGS

To more clearly illustrate the technical solutions in the embodiments of the present application or conventional technologies, the drawings used in the description of the embodiments or the conventional technologies will be briefly introduced below. Obviously, the drawings described below are only embodiments of the present application. For those skilled in the art, other drawings may be obtained based on the disclosed drawings without the exercise of creative effort.
FIG. 1 is a flowchart of a preparation method for a composite electrode sheet according to an embodiment of the present application.
FIG. 2 is a schematic structural diagram of a composite electrode sheet before rolling according to an embodiment of the present application.
FIG. 3 is a schematic structural diagram of a composite electrode sheet after rolling according to an embodiment of the present application.
FIG. 4 is a schematic structural diagram of a preparation apparatus for a composite electrode sheet according to an embodiment of the present application.
FIG. 5 is a schematic structural diagram of a preparation apparatus for a composite electrode sheet according to an embodiment of the present application.
FIG. 6 is a schematic structural diagram of a preparation apparatus for a composite electrode sheet according to a comparative embodiment of the present application.
FIG. 7 is a schematic structural diagram of a preparation apparatus for a composite electrode sheet according to an embodiment of the present application.
FIG. 8 is a schematic structural diagram of a preparation apparatus for a composite electrode sheet according to an embodiment of the present application.
FIG. 9 is a schematic structural diagram of a preparation apparatus for a composite electrode sheet according to an embodiment of the present application.
FIG. 10 is a schematic structural diagram of a preparation apparatus for a composite electrode sheet according to an embodiment of the present application.
FIG. 11 is a schematic structural diagram of a preparation apparatus for a composite electrode sheet according to an embodiment of the present application.
FIG. 12 is a schematic structural diagram of a preparation apparatus for a composite electrode sheet according to an embodiment of the present application.
FIG. 13 is a schematic structural diagram of a preparation apparatus for a composite electrode sheet according to an embodiment of the present application.
FIG. 14 is a flowchart of a preparation method for a composite electrode sheet according to an embodiment of the present application.
FIG. 15 is a schematic structural diagram of a preparation apparatus for a composite electrode sheet according to an embodiment of the present application.
FIG. 16 is a schematic structural diagram of a preparation apparatus for a composite electrode sheet according to an embodiment of the present application.
FIG. 17 is a flowchart of a preparation method for a composite electrode sheet according to an embodiment of the present application.
FIG. 18 is a schematic structural diagram of a preparation apparatus for a composite electrode sheet according to an embodiment of the present application.
FIG. 19 is a schematic structural diagram of a preparation apparatus for a composite electrode sheet according to an embodiment of the present application.
FIG. 20 is a schematic structural diagram of a preparation apparatus for a composite electrode sheet according to an embodiment of the present application.
FIG. 21 is a schematic structural diagram of a preparation apparatus for a composite electrode sheet according to an embodiment of the present application.
FIG. 22 is a schematic structural diagram of a preparation apparatus for a composite electrode sheet according to an embodiment of the present application.
FIG. 23 is a flowchart of a preparation method for a composite electrode sheet according to an embodiment of the present application.
FIG. 24 is a schematic structural diagram of a preparation apparatus for a composite electrode sheet according to an embodiment of the present application.
FIG. 25 is a schematic structural diagram of a preparation apparatus for a composite electrode sheet according to an embodiment of the present application.
FIG. 26 is a schematic structural diagram of a preparation apparatus for a composite electrode sheet according to an embodiment of the present application.
FIG. 27 is a schematic structural diagram of a preparation apparatus for a composite electrode sheet according to an embodiment of the present application.
FIG. 28 is a schematic structural diagram of a preparation apparatus for a composite electrode sheet according to a comparative embodiment of the present application.
FIG. 29 is a schematic structural diagram of a preparation apparatus for a composite electrode sheet according to a comparative embodiment of the present application.
FIG. 30 is a schematic structural diagram of a preparation apparatus for a composite electrode sheet according to a comparative embodiment of the present application.
FIG. 31 is a flowchart of a preparation method for a composite electrode sheet according to an embodiment of the present application.
FIG. 32 is a schematic structural diagram of a preparation apparatus for a composite electrode sheet according to an embodiment of the present application.
FIG. 33 is a schematic structural diagram of a preparation apparatus for a composite electrode sheet according to an embodiment of the present application.
FIG. 34 is a schematic structural diagram of a preparation apparatus for a composite electrode sheet according to an embodiment of the present application.
FIG. 35 is a schematic structural diagram of a preparation apparatus for a composite electrode sheet according to an embodiment of the present application.
FIG. 36 is a schematic structural diagram of a preparation apparatus for a composite electrode sheet according to a comparative embodiment of the present application.
FIG. 37 is a flowchart of a preparation method for a composite electrode sheet according to an embodiment of the present application.
FIG. 38 is a schematic structural diagram of a preparation apparatus for a composite electrode sheet according to an embodiment of the present application.
FIG. 39 is a schematic structural diagram of a preparation apparatus for a composite electrode sheet according to an embodiment of the present application.
FIG. 40 is a schematic structural diagram of a preparation apparatus for a composite electrode sheet according to an embodiment of the present application.
FIG. 41 is a schematic structural diagram of a preparation apparatus for a composite electrode sheet according to an embodiment of the present application.
FIG. 42 is a flowchart of a preparation method for a composite electrode sheet according to an embodiment of the present application.
FIG. 43 is a schematic structural diagram of a preparation apparatus for a composite electrode sheet according to an embodiment of the present application.
FIG. 44 is a schematic structural diagram of a preparation apparatus for a composite electrode sheet according to an embodiment of the present application.

### Explanation of Reference Numerals

1. Electrode sheet; 2. Solid electrolyte membrane;
11. Electrode sheet unwinding mechanism; 12. Composite electrode sheet winding mechanism;
21. Solid electrolyte membrane unwinding mechanism; 22. Substrate winding mechanism; 23. Second solid electrolyte membrane unwinding mechanism; 24. Second substrate winding mechanism; 25. First solid electrolyte membrane unwinding mechanism; 26. First substrate winding mechanism;
31. First shaping roller; 32. Second shaping roller; 33. Second rigid roller; 34. Second elastic roller; 35. First elastic roller; 36. First rigid roller;
41. Protective film unwinding mechanism; 42. Protective film winding mechanism;
51. First guide roller; 52. Second guide roller; 53. Third guide roller; 54. Fourth guide roller; 55. Fifth guide roller; 56. Sixth guide roller; 57. Seventh guide roller; 58. Eighth guide roller; 59. Ninth guide roller; 60. Tenth guide roller; 61. Eleventh guide roller; 62. Twelfth guide roller; 63. Thirteenth guide roller;
71. First heating roller; 72. Second heating roller; 73. Third heating roller; 74. Cooling roller; 75. First cooling roller; 76. Second cooling roller; 77. First heater; 78. Second heater; 79. Fourth heating roller;
81. Adhesive layer.

### DETAILED DESCRIPTION

Technical solutions in embodiments of the present application will be clearly and completely described below with reference to accompanying drawings in the embodiments of the present application. Obviously, the described embodiments are only some embodiments of the present application, rather than all of the embodiments. Based on the embodiments in the present application, all other embodiments obtained by those skilled in the art without the exercise of creative effort are within the scope of protection of the present application.

In the description of the present application, it should be appreciated that if terms such as "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," and "circumferential" appear, orientational or positional relationships indicated by these terms are orientational or positional relationships shown in the accompanying drawings, and are only for the convenience of describing the present application and simplifying the description, rather than to indicate or imply that a device or element referred to necessarily have a specific orientation, or be constructed and operated in a specific orientation, and therefore should not be construed as a limitation to the present application.

Additionally, if the terms "first" or "second" appear, these terms are used for descriptive purposes only and should not be construed as indicating or implying relative importance or implicitly specifying the number of technical features indicated. Therefore, features defined by "first" or "second" may explicitly or implicitly include at least one of those features. In the description of the present application, the term "plural" means at least two, such as two, three, etc., unless otherwise expressly and specifically defined.

In the present application, unless otherwise expressly specified and limited, the terms "mount," "connect" "attach," "fix," etc., shall be interpreted in a broad sense. For example, the connection may be a fixed connection, a detachable connection, or integral; or may be a mechanical connection or an electrical connection; or may be a direct connection or an indirect connection via an intermediate medium; or may be internal communication between two elements or interaction between two elements, unless otherwise explicitly defined. Those skilled in the art can understand specific meanings of the above terms in the present application according to specific circumstances.

In the present application, unless otherwise expressly specified and defined, if a description such as a first feature being "above" or "below" a second feature or the like appears, the description may mean that the first and second features are in direct contact, or that the first and second features are in indirect contact via an intermediate medium. Moreover, a first feature being "over," "above," or "on" a second feature may mean that the first feature is directly above or diagonally above the second feature, or simply mean that the first feature is at a higher horizontal level than the second feature. The first feature being "under," "below," or "beneath" the second feature may mean that the first feature is directly below or diagonally below the second feature, or simply mean that the first feature is at a lower horizontal level than the second feature.

It should be noted that if an element is referred to as "fixed to" or "arranged on" another element, the element may be directly on the other element or there may be an intermediate element. If an element is considered to be "connected" to another element, the element may be directly connected to the other element or there may be an intermediate element. If present, the terms "vertical," "horizontal," "upper," "lower," "left," "right," and similar expressions used in the present application are for illustrative purposes only and do not represent the only possible implementation.

A direction parallel to a running direction of an electrode sheet is defined as a longitudinal direction, and a direction perpendicular to the running direction of the electrode sheet is defined as a lateral direction.

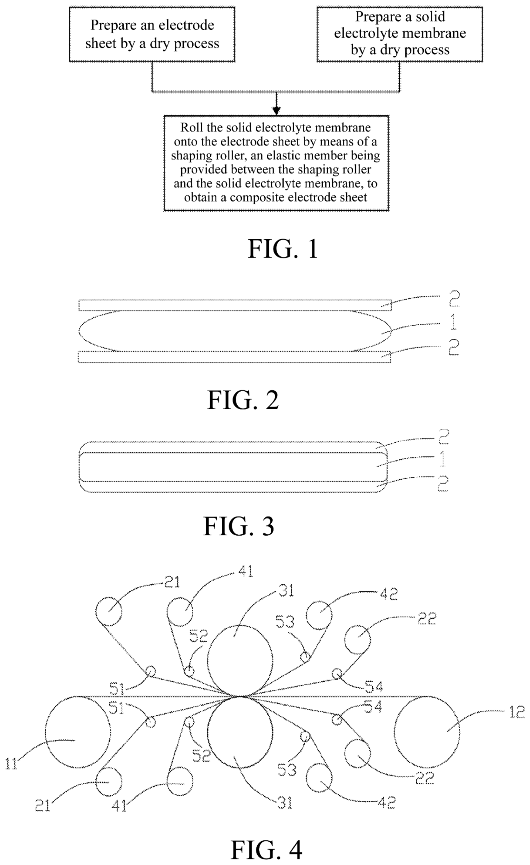

Referring to FIGs. 4-5, a preparation apparatus for a composite electrode sheet of the present application comprises a shaping roller, an electrode sheet unwinding mechanism, a solid electrolyte membrane unwinding mechanism, and a composite electrode sheet winding mechanism. The shaping roller comprises a first shaping roller and a second shaping roller symmetrically disposed at two sides of an electrode sheet. It can be appreciated that each pair of first shaping roller and second shaping roller constitutes a shaping roller assembly. As a preferred configuration, a connecting line between axes of the first shaping roller and the second shaping roller is perpendicular to a conveying direction of the electrode sheet, that is, the conveying direction of the electrode sheet is perpendicular to a plane where the axes of the first shaping roller and the second shaping roller are located. However, this is not a limitation, and the conveying direction of the electrode sheet may be adaptively adjusted according to actual production needs.

The electrode sheet unwinding mechanism is located upstream of the shaping roller, and is used to unwind the electrode sheet and then convey the electrode sheet, so that the electrode sheet passes through a gap between the first shaping roller and the second shaping roller.

The solid electrolyte membrane unwinding mechanism is located upstream of the shaping roller, and more specifically between the electrode sheet unwinding mechanism and the shaping roller. The solid electrolyte membrane unwinding mechanism is used to unwind a solid electrolyte membrane and then convey the solid electrolyte membrane so that the solid electrolyte membrane passes through the gap between the first shaping roller and the second shaping roller. More specifically, the solid electrolyte membrane unwinding mechanism causes the solid electrolyte membrane to pass between the electrode sheet and the shaping roller.

The composite electrode sheet winding mechanism is located downstream of the shaping roller, and is used to provide tension to the electrode sheet in the movement direction of the electrode sheet, and to receive a composite electrode sheet obtained after rolling by the shaping roller to complete a winding action.

In some implementations, there is one solid electrolyte membrane unwinding mechanism disposed at one side of the electrode sheet unwinding mechanism. The solid electrolyte membrane unwinding mechanism unwinds and then conveys a solid electrolyte membrane, to cause the solid electrolyte membrane to pass through the gap between the first shaping roller and the second shaping roller, so that the solid electrolyte membrane is composited on one side of the electrode sheet. In some implementations, there are two solid electrolyte membrane unwinding mechanisms located at two sides of the electrode sheet unwinding mechanism, respectively. The solid electrolyte membrane unwinding mechanisms unwind and then convey solid electrolyte membranes to cause the two solid electrolyte membranes to separately pass through the gap between the first shaping roller and the second shaping roller, and the electrode sheet is located between the two solid electrolyte membranes.

Optionally, the two solid electrolyte membrane unwinding mechanisms are symmetrically disposed at two sides of the electrode sheet unwinding mechanism.

In some implementations, the preparation apparatus for a composite electrode sheet further comprises a substrate winding mechanism.

When a substrate is provided on the solid electrolyte membrane, the substrate covers the side of the solid electrolyte membrane distant from the electrode sheet. After the electrode sheet and the solid electrolyte membrane are rolled by means of the shaping rollers, to obtain the composite electrode sheet, the substrate needs to be separated. The substrate and the composite electrode sheet are separated by means of disposing the substrate winding mechanism downstream of the shaping roller. During the separation process, the substrate winding mechanism applies tension to the substrate of the solid electrolyte membrane, so that the substrate is separated from the composite electrode sheet, and performs a substrate winding action when necessary.

The number of substrate winding mechanisms corresponds to the number of solid electrolyte membrane unwinding mechanisms.

In some implementations, an elastic member is provided between the first shaping roller and the second shaping roller.

A yield limit of the elastic member satisfies: when the solid electrolyte membrane and the electrode sheet pass through the gap between the shaping rollers, the solid electrolyte membrane and the electrode sheet undergo plastic deformation, and the elastic member undergoes elastic deformation.

Elastic deformation refers to a change in relative positions of points in a solid caused by an external force. When the external force is removed, the solid returns to an original shape, which is called elastic deformation.

When an object is subjected to a large force beyond an elastic limit, the object may break or deform, and fail to return to an original shape. This phenomenon is called plastic deformation.

The width of the elastic member is greater than or equal to a minimum value of the thickness of the solid electrolyte membrane or the electrode sheet.

The present application improves an interlayer bonding force between the solid electrolyte membrane and the electrode sheet membrane by plastic deformation formed therebetween.

It can be appreciated that the present application does not have particular requirements for a rolling pressure, provided that the aforementioned conditions are satisfied. The selection of corresponding rolling pressures according to different material systems should still be regarded as within the scope of protection of the present application. As an illustrative example only, rather than a limitation on the scope of protection, the rolling pressure is 10-1000 MPa.

In an electrode sheet production process, edges of the electrode sheet are usually thinned in order to ensure smooth progress of a subsequent rolling process. However, the existence of a thinned region in the electrode sheet will affect lamination between the solid electrolyte membrane and the electrode sheet.

Surprisingly, the preparation apparatus for a composite electrode sheet of the present application utilizes cushioning provided by the elastic member during rolling, to enable the solid electrolyte membrane to better coat the electrode sheet. Furthermore, during the rolling process of the shaping roller, the electrode sheet is thick in the middle, resulting in greater stress in a middle region than in an edge region. The lateral thickness of the electrode sheet tends to be uniform after rolling.

In some implementations, the thickness of the solid electrolyte membrane is 1-30 µm, preferably 3-20 µm, and more preferably, 3-15 µm.

Applying a solid electrolyte coating to a surface of an electrode, especially a surface of a high-capacity positive electrode, can effectively improve the safety performance of a battery. However, due to limitations in energy density, the thickness of a solid electrolyte membrane is usually quite small. Compared to an electrode sheet prepared by a dry process, the thickness of the solid electrolyte membrane is an order of magnitude smaller, which renders the solid electrolyte membrane prone to cracking during preparation a composite conductive electrode sheet by a dry process.

The elastic member is made of a flexible material. Under pressure, the flexible material undergoes elastic deformation. The slight elastic deformation makes the thicknesses of the middle region and the thinned region of the electrode sheet tend to be consistent under pressure, allowing better lamination with the solid electrolyte membrane.

In some implementations of the present application, the flexible material is a polymer.

The present application does not impose special limitations on the material of the polymer. Exemplarily, the polymer may be a plastic such as polytetrafluoroethylene, polyethylene terephthalate, polypropylene or polyacrylonitrile, or a rubber such as Hypalon rubber, silicone rubber or fluororubber, or an elastic material such as silicone, that can undergo a certain degree of deformation.

The present application does not impose particular limitations on the thickness of the elastic member. Any necessary adjustments to the thickness of the elastic member without departing from the inventive concept of the present application can be construed as being within the scope of protection of the present application.

In some implementations, the elastic member is disposed corresponding to the solid electrolyte membrane. For example, when a solid electrolyte membrane is composited on one side of the electrode sheet, an elastic member is disposed in a gap between the shaping roller and the solid electrolyte membrane on the side close to the solid electrolyte membrane. When solid electrolyte membranes are composited on both sides of the electrode sheet, elastic members are disposed in gaps between the two shaping rollers and the solid electrolyte membranes on the corresponding sides.

In some implementations, the elastic member is an adhesive layer that covers around the outside of the two shaping rollers.

In some implementations, the elastic member is a protective film, which is transported through the gap between the shaping roller and the solid electrolyte membrane.

Accordingly, the preparation apparatus for a composite electrode sheet of the present application further comprises a protective film unwinding mechanism for unwinding the protective film. The protective film unwinding mechanism is located upstream of the shaping roller, and is disposed between the solid electrolyte membrane unwinding roller and the shaping roller. During the roll compositing process of the electrode sheet and the solid electrolyte membrane, the protective film is located in the gap between the shaping rollers, and between the shaping roller and the solid electrolyte membrane.

The present application does not have particular requirements for the structure of the protective film. Without departing from the inventive concept of the present application, any known film layer that can undergo a certain degree of elastic deformation under a certain pressure can be used in the present application. An illustrative example only, rather than a limitation on the scope of protection, the protective film may be selected from a polymer film or a non-woven fabric. The non-woven fabric comprises, but is not limited to, a PP-based non-woven fabric, a PE-based non-woven fabric, a PET-based non-woven fabric, a PAN-based non-woven fabric, a PTFE-based non-woven fabric, a Celgard non-woven fabric, etc. The polymer film may be selected from a PVDF film, a PE film, a PP film, a PE/PP film, a PE/PP/PE film, a PP/PE/PP film, a PTFE film, a silicone release film, a fluorine release film, a PET film, a non-silicone release film, etc. It can be appreciated that the protective film may also be a multilayer structure consisting of two or more polymer films and/or non-woven fabrics.

The present application does not impose particular limitations on the thickness of the protective film. Without departing from the inventive concept of the present application, any conventional adjustments to the thickness of the protective film to adjust rolling effects should be regarded as within the scope of protection of the present application. It can be appreciated that when the protective film is a multilayer structure, the thickness of the protective film should be the sum of a plurality of layers.

In some implementations, the preparation apparatus for a composite electrode sheet further comprises a protective film winding mechanism. The protective film winding mechanism is located downstream of the shaping roller and is disposed between the shaping roller and the composite electrode sheet winding mechanism, and is used to provide tension to the protective film and to receive the protective film.

In some implementations, the preparation apparatus for a composite electrode sheet further comprises a guide roller.

Optionally, the guide roller is located between the solid electrolyte membrane unwinding mechanism and the shaping roller, and is used to provide guidance for the solid electrolyte membrane. A guide roller may also be provided between the shaping roller and the substrate winding mechanism. This guide roller is used to provide guidance for the substrate of the solid electrolyte membrane separated from the composite electrode sheet.

Optionally, the guide roller is located between the protective film unwinding mechanism and the shaping roller, and is used to provide guidance for the protective film. A guide roller may be provided between the shaping roller and the protective film winding mechanism. This guide roller is used to provide guidance for recovery of the protective film.

In some implementations, the preparation apparatus for a composite electrode sheet further comprises an unwinding correction assembly, an electrode sheet static elimination assembly, etc. arranged in sequence along an unwinding path of the preparation apparatus. The unwinding correction assembly can correct unwinding and running paths of the electrode sheet, the solid electrolyte membrane, etc., so that initial feed lines are kept at the same level. A winding and unwinding mechanism for a main material employs single-station correction, and winding and unwinding mechanisms for the remaining materials employ a cantilever type, all of which are provided with correction. The static elimination assembly performs static elimination treatment on both sides of the electrode sheet, and can reduce friction between the electrode sheet and the conveyor roller. It can be appreciated that, without departing from the inventive concept of the present application, known functional assemblies or structures may be used in the present application throughout the entire process from winding, to rolling, and unwinding.

In some implementations, the width of the shaping roller is 500-800 mm, including but not limited to 500 mm, 550 mm, 600 mm, 650 mm, 700 mm, 750 mm, or 800 mm, preferably 550-650 mm.

In some implementations, the diameter of the shaping roller is 300-500 mm, including but not limited to 300 mm, 350 mm, 400 mm, 450 mm, or 500 mm, preferably 350-450 mm.

Referring to FIGs. 4-5, in conjunction with the structure of the preparation apparatus for a composite electrode sheet, the preparation method for a composite electrode sheet of the present application comprises the following steps: unwinding an electrode sheet by means of the electrode sheet unwinding mechanism 11 and conveying the electrode sheet to the composite electrode sheet winding mechanism 12, so that the electrode sheet passes through the gap between the first shaping roller 31 and the second shaping roller 32; conveying a solid electrolyte membrane by means of the solid electrolyte membrane unwinding mechanism 21 located at a side of the electrode sheet unwinding mechanism 11, so that the solid electrolyte membrane passes through a gap between the shaping roller and the electrode sheet; then performing roll compositing on the electrode sheet and the solid electrolyte membrane by means of the first shaping roller 31 and the second shaping roller 32, wherein during roll compositing, an elastic member is provided between the shaping roller and the solid electrolyte membrane; finally, downstream of the shaping roller, receiving the composite electrode sheet by means of the composite electrode sheet winding mechanism 12.

In some implementations, the composite electrode sheet comprises the electrode sheet, and solid electrolyte membranes located at two sides of the electrode sheet, respectively. After the electrode sheet is transported, the solid electrolyte membranes are unwound by means of two solid electrolyte membrane unwinding mechanisms 21 located at two sides of the electrode sheet unwinding mechanism 11, respectively, and conveyed to the shaping rollers, so that the two solid electrolyte membranes separately pass through the gap between the first shaping roller 31 and the second shaping roller 32. In the gap between the first shaping roller 31 and the second shaping roller 32, the two solid electrolyte membranes, the electrode sheet located between the two solid electrolyte membranes, and the elastic members located at outer sides of the two solid electrolyte membranes are laminated to one another, and the solid electrolyte membranes are composited on two sides of the electrode sheet under the rolling action of the shaping rollers, so as to obtain the composite electrode sheet.

In some implementations, the solid electrolyte membrane is formed independently, that is, the solid electrolyte membrane can be formed without the aid of a substrate and maintain integrity of the membrane. In this case, after the electrode sheet and the solid electrolyte membrane enter the gap between the shaping rollers, the composite electrode sheet is obtained under the pressure of the shaping rollers. The composite electrode sheet may then be wound by means of the electrode sheet winding mechanism.

In some implementations, the solid electrolyte membrane is covered by a substrate, to provide support for the solid electrolyte membrane. When the solid electrolyte membrane unwinding mechanism 21 conveys the solid electrolyte membrane, the substrate is located at the side of the solid electrolyte membrane distant from the electrode sheet. After compositing of the solid electrolyte membrane and the electrode sheet is completed, the substrate is separated from the composite electrode sheet. Specifically, substrates may be separately received by means of substrate winding mechanisms 22 located at two sides of the composite electrode sheet winding mechanism 12, wherein the substrate winding mechanisms 22 are located between the shaping roller and the composite electrode sheet winding mechanism 12.

In some implementations, the elastic member is an adhesive layer that covers around the outside of the first shaping roller 31 and the second shaping roller 32. When the shaping roller rotates, the adhesive layer rotates with the shaping roller. Furthermore, when the shaping roller rolls the solid electrolyte membrane and/or the electrode sheet, the adhesive layer provides a cushioning function for the solid electrolyte membrane and/or the electrode sheet, enabling the solid electrolyte membrane to better coat one or two sides of the electrode sheet, and improving uniformity of the lateral thickness of the electrode sheet after rolling.

In some implementations, the elastic member is a protective film. Protective films may be unwound by means of two protective film unwinding mechanisms 41 located at the side of the solid electrolyte membrane unwinding mechanisms 21 distant from the electrode sheet, and the protective film unwinding mechanisms 41 convey the protective films to the shaping rollers so that the two protective films separately pass through the gap between the first shaping roller 31 and the second shaping roller 32. In the gap between the first shaping roller 31 and the second shaping roller 32, the sequentially distributed protective film, solid electrolyte membrane, electrode sheet, solid electrolyte membrane and protective film are laminated to one another, and the solid electrolyte membranes are composited on two sides of the electrode sheet under the rolling action of the shaping rollers, so as to obtain the composite electrode sheet.

Optionally, as shown in FIG. 4, the solid electrolyte membrane and the protective film are guided by a guide roller 51 and a guide roller 52, respectively, and then reach between the first shaping roller 31 and the second shaping roller 32. The first guide roller 51 was located at the side of the second guide roller 52 distant from the shaping roller. The protective film and the solid electrolyte membrane rotate together toward the shaping roller and make contact with the electrode sheet, then pass through the gap between the first shaping roller 31 and the second shaping roller 32, or more specifically through the gap between the shaping roller and the electrode sheet. Subsequently, under the rolling of the first shaping roller 31 and the second shaping roller 32, compositing of the electrode sheet and the two solid electrolyte membranes is completed.

Optionally, the solid electrolyte membrane and the protective film are first laminated upstream of the shaping roller, and then make contact with the electrode sheet after rotating with the shaping roller. For example, at the second guide roller 52, the protective film is laminated on the side of the solid electrolyte membrane distant from the electrode sheet. Then, the solid electrolyte membrane and the protective film rotate together with the first shaping roller 31 or the second shaping roller 32 to the gap between the first shaping roller 31 or the second shaping roller 32. The side of the solid electrolyte membrane distant from the protective film then makes contact with and is laminated on the electrode sheet.

During rolling, the shaping roller applies tension to the electrode sheet and the solid electrolyte membrane, and the two protective films are located between the shaping roller and the solid electrolyte membrane, achieving a cushioning function. This ensures that forces received at points of the electrode sheet and the solid electrolyte membrane are uniform, and the solid electrolyte membrane in the finally resulting composite electrode sheet almost completely coats the electrode sheet. Bonding between the electrode sheet and the solid electrolyte membrane is better, the uniformity of the lateral thickness of the composite electrode sheet is improved, and compaction density is also increased.

In some implementations, the protective film and the substrate may be separated from the composite electrode sheet simultaneously.

When there is only one guide roller 53 downstream of the shaping roller, after rolling by the shaping roller, the composite electrode sheet continues to be conveyed downstream of the shaping roller 32. The protective film and the substrate are rotated together with the shaping roller under the action of the protective film winding mechanism 42 and the substrate winding mechanism 22, respectively, and then reach the third guide roller 53. After rotating around the third guide roller 53 by a specific angle, the protective film and the substrate begin to separate. The protective film advances toward the protective film winding mechanism 42 and completes a winding action, and the substrate advances toward the substrate winding mechanism 22 and completes a winding action.

When there are two guide rollers 53 and 54 downstream of the shaping roller, after rolling by the shaping roller, the composite electrode sheet continues to be conveyed downstream of the shaping roller 32. Under the action of the protective film winding mechanism 42 and the substrate winding mechanism 22, the protective film and the substrate are rotated together with the shaping roller and reach the third guide roller 53 and the fourth guide roller 54 respectively. Then the protective film advances toward the protective film winding mechanism 42 and completes a winding action, and the substrate advances toward the substrate winding mechanism 22 and completes a winding action.

Optionally, the guide roller 53 may be replaced by two or more guide rollers; the guide roller 54 may be replaced by two or more guide rollers.

In some implementations, the protective film may also be separated from the composite electrode sheet before the substrate. After being rolled by the shaping roller, the composite electrode sheet continues to be conveyed downstream of the shaping roller 32. Under the action of the protective film winding mechanism 42, the protective film rotates together with the shaping roller and reaches the third guide roller 53. After rotating around the third guide roller 53 by a specific angle, the protective film continues to advance toward the protective film winding mechanism 42 and completes a winding action. After leaving the shaping roller, the substrate is conveyed a specific distance together with the composite electrode sheet. Under the action of the substrate winding mechanism 22, the substrate is separated from the composite electrode sheet and reaches the fourth guide roller 54. After rotating around the fourth guide roller 54 by a specific angle, the substrate continues to advance toward the protective film winding mechanism 42 and completes a winding action.

In some implementations, the solid electrolyte membrane departs from the solid electrolyte membrane unwinding mechanism and may be guided and transferred to the shaping roller by means of a guide roller. The number of guide rollers includes, but is not limited to, 1, 2, 3, 4, 5, or more. A specific number may be increased or decreased according to actual situations, preferably 1 or 2 guide rollers.

When the substrate of the solid electrolyte membrane is recovered, the substrate may be guided and transferred to the substrate winding mechanism by means of a guide roller. The number of guide rollers includes, but is not limited to, 1, 2, 3, 4, 5, or more, preferably 1 guide roller.

The protective film departs from the protective film winding mechanism and may be guided and transferred to the shaping roller by means of a guide roller. The number of guide rollers includes, but is not limited to, 1, 2, 3, 4, 5, or more, preferably 1 or 2 guide rollers.

When the protective film is recycled, the protective film may be guided and transferred to the protective film winding mechanism by means of a guide roller. The number of guide rollers includes, but is not limited to, 1, 2, 3, 4, 5, or more, preferably 1 or 2 guide rollers.

Optionally, some or all of the guide rollers may be shared in the process of conveying the solid electrolyte membrane and the protective film to the shaping roller.

In some implementations, a mechanical speed of the shaping roller is 5-60 m/min, including but not limited to 5 m/min, 10 m/min, 20 m/min, 30 m/min, 40 m/min, 45 m/min, 50 m/min, or 60 m/min.

It can be appreciated that the higher the belt speed of the entire preparation apparatus for a composite electrode sheet, the higher production efficiency is. However, excessively high speeds can easily cause problems such as breakage in the belt-carried electrode sheet and solid electrolyte membrane. The present application does not have particular requirements for residence time of the electrode sheet and the solid electrolyte membrane in the gap of the shaping rollers. Without departing from the inventive concept of the present application, any adjustments to the residence time that do not require the exercise of creative effort should be construed as falling within the scope of protection of the present application.

In some implementations, linear speeds of the first shaping roller and the second shaping roller are kept consistent, and an unwinding linear speed of the electrode sheet unwinding mechanism and a winding linear speed of the composite electrode sheet winding mechanism are also kept consistent, thereby improving action consistency of the entire rolling preparation process of the composite electrode sheet and enhancing uniformity of the composite electrode sheet.

In some implementations, the linear speeds of the first shaping roller and the second shaping roller are not consistent. Rolling effects are adjusted by means of the first shaping roller and the second shaping roller with different speed settings.

In some implementations, a heating unit is provided inside the shaping roller, and a temperature range for heating the shaping roller is 100-300°C, including but not limited to 100°C, 150°C, 200°C, 250°C, or 300°C, preferably 150-200°C.

Referring to FIG. 1, FIG. 1 shows a flowchart of a preparation method for a composite electrode sheet using the preparation apparatus for a composite electrode sheet described above. A solid electrolyte membrane is first positioned at one or two sides of an electrode sheet. The electrode sheet and the solid electrolyte membrane are then continuously passed through the gap between the shaping rollers under dry conditions, and are rolled under the action of the elastic member, to obtain a composite electrode sheet. The elastic member is used to adjust stress on the electrode sheet and the solid electrolyte membrane during the rolling process, so that the solid electrolyte membrane can better coat the electrode sheet. Furthermore, the lateral thickness of the electrode sheet tends to be uniform after rolling.

It can be appreciated that in the rolled composite electrode sheet, solid electrolyte layers are composited on the electrode sheet. The solid electrolyte membranes being located at two sides of the electrode sheet means that solid electrolyte membranes are composited on both sides of the electrode sheet by rollers.

In some implementations, the elastic member is a protective film. During roll compositing, the protective film is disposed in a gap between the shaping roller and the solid electrolyte membrane. As shown in FIGs. 4-5, the protective film, the solid electrolyte membrane, the electrode sheet, the solid electrolyte membrane and the protective film are sequentially distributed between the shaping rollers. The protective film departs upstream of the shaping roller and is transported to reach the shaping roller, passes through the gap between the shaping roller and the solid electrolyte membrane and is rolled, and then continues to run downstream of the shaping roller until being recovered. Therefore, the protective film of the present application can be reused repeatedly, reducing production and manufacturing costs while reducing harm to the environment, and facilitating improved production efficiency.

In some implementations, the protective film may be recovered downstream of the shaping roller by means of separating the protective film from the composite electrode sheet.

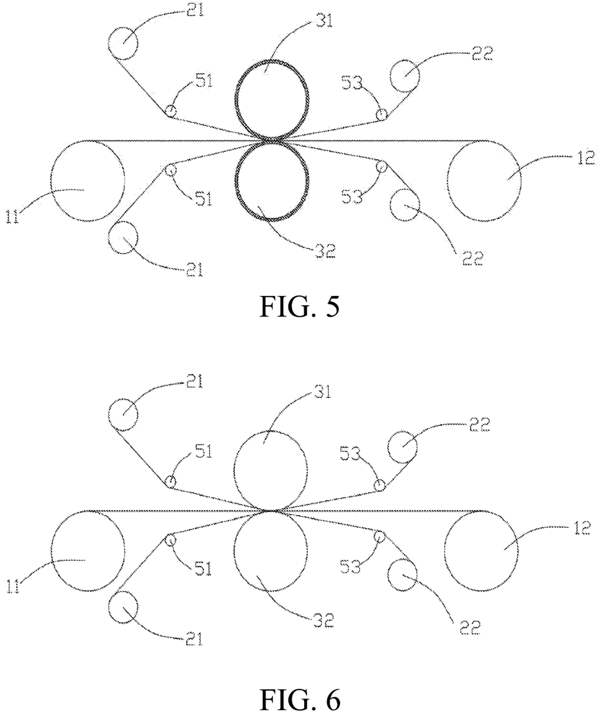

In some implementations, the elastic member is an adhesive layer that covers around the outside of the shaping roller. As shown in FIG. 5, the adhesive layer, the solid electrolyte membrane, the electrode sheet, the solid electrolyte membrane and the adhesive layer are sequentially distributed between the shaping rollers. The length of the adhesive layer in an axial direction of the shaping roller may be slightly greater than an axial length of the shaping roller, and the adhesive layer rotates together with the shaping roller during rolling.

The compositing process of the present application is carried out under dry conditions. The dry conditions in the present application are different from those of a conventional wet electrode preparation method. Conventional wet preparation of composite electrodes involves first preparing a solid electrolyte slurry and then coating the solid electrolyte slurry onto an electrode sheet, or vice versa, preparing an electrode slurry and then coating the electrode slurry onto a solid electrolyte membrane. The preparation process of the present application does not use solvents, eliminating the need for cumbersome subsequent drying steps, and effectively reducing production costs.

It can be appreciated that the dry process refers to preparation of related electrode sheets and electrolyte membranes without the addition of solvents. Technical solutions involving trace amounts of liquid lubricants or other liquid additives that may be used during a rolling process should still be within the scope of protection of the present application.

In some implementations, both the electrode sheet and the solid electrolyte membrane are prepared by means of a dry process.

In some implementations, at least one of the electrode sheet and the solid electrolyte membrane is prepared by means of a dry process.

In some implementations, both the electrode sheet and the solid electrolyte membrane are prepared by means of a wet process.

It can be appreciated that electrode sheet and the solid electrolyte membrane are preferably prepared under dry conditions, so that solvents are no longer needed in the entire electrode preparation process.

It can be appreciated that the preparation processes of the electrode sheet and the solid electrolyte membrane are independent of the preparation process of the composite electrode. That is, if a wet process is used, the electrode sheet undergoes coating, drying, and rolling processes.

In some implementations, the electrode sheet is a positive electrode sheet. Positive electrode materials, especially high-nickel ternary materials with high energy density, are prone to undesirable side reactions with electrolytes, especially non-aqueous electrolytes. These side reactions cause a decline in battery performance, and may pose potential safety hazards. Compositing a solid electrolyte layer on a positive electrode surface helps to improve battery safety.

The positive electrode sheet includes an active material layer and a current collector layer. During preparation of the positive electrode sheet by a dry process, an active material, an electric conductive agent and a binder are first stirred to obtain a positive electrode mixture. After the mixture is subjected to fiberization treatment, a fiberized positive electrode mixture is obtained. The fiberized positive electrode mixture and the current collector layer then undergo roll compositing, to obtain the positive electrode sheet. In some implementations, methods for fiberization comprise, but are not limited to, air jet milling, high-speed stirring, mechanical fusion, twin-screw extrusion, etc.

The positive electrode active material layer is formed of a positive electrode active material including one or more transition metal cations, such as manganese (Mn), nickel (Ni), cobalt (Co), chromium (Cr), iron (Fe), vanadium (V), and combinations thereof. The positive electrode active material layer has a thickness of greater than or equal to about 1 µm to less than or equal to about 1,000 µm.

The positive electrode active material is one of a layered oxide, a spinel, and a polyanion. For example, a layered oxide (e.g., a rock salt layered oxide) includes one or more lithium-based cathode active materials selected from: LiCoO₂(LCO), LiNiₓMn_{y}Co_{1-x-y}O₂ (0 ≤ x≤1 and 0 ≤ y ≤ 1), LiNi_{1-x-y}CoₓAl_{y}O₂ (0 ≤ x ≤ 1 and 0 ≤ y ≤ 1), LiNiₓMn₁₋ₓO₂ (0 ≤ x ≤ 1), and Li₁₊ₓMO₂ (M being one of Mn, Ni, Co, and Al, where 0 ≤ x ≤ 1). A spinel comprises one or more lithium-based cathode active materials selected from: LiMn₂O₄(LMO) and LiNiₓMn_{1.5}O₄. An olivine type includes one or more lithium-based cathode active materials LiMPO₄ (M being at least one of Fe, Ni, Co, and Mn). A polyanionic cation comprises, for example, a phosphate such as LiV₂(PO₄)₃ and/or a silicate such as LiFeSiO₄.

In some implementations, the one or more lithium-based positive electrode active materials may optionally be coated (e.g., by LiNbO₃ and/or Al₂O₃) and/or may be doped (e.g., by magnesium (Mg)). In addition, in some embodiments, the one or more lithium-based positive electrode active materials may optionally be mixed with one or more electrically conductive materials that provide an electronic conduction path and/or at least one polymer adhesive material that improves the structural integrity of the positive electrode. For example, the positive electrode active material layer may include one or more lithium-based positive electrode active materials greater than or equal to about 30% by weight and less than or equal to about 99% by weight; an electrically conductive material greater than or equal to about 0% by weight and less than or equal to about 30% by weight; and an adhesive greater than or equal to about 0% by weight and less than or equal to about 20% by weight.

In some implementations, adhesives include polytetrafluoroethylene (PTFE), sodium carboxymethyl cellulose (CMC), styrene-butadiene rubber (SBR), polyvinylidene fluoride (PVDF), nitrile rubber (NBR), styrene-ethylene-butene-styrene copolymer (SEBS), styrene-butadiene-styrene copolymer (SBS), lithium polyacrylate (LiPAA), sodium polyacrylate (NaPAA), sodium alginate, lithium alginate, and combinations thereof.

In some implementations, the electrically conductive material may include a carbon-based material, powdered nickel or other metal particles, or an electrically conductive polymer. The carbon-based material may include particles such as carbon black, graphite, acetylene black (e.g., KETCHEN^{™} black or DENKA^{™} black), carbon fibers and nanotubes, graphene, etc. Examples of the electrically conductive polymer include polyaniline, polythiophene, polyacetylene, polypyrrole, etc.

It can be appreciated that the examples of the positive electrode active material, the binder, and the electrically conductive material mentioned above are merely illustrative. Without departing from the inventive concept of the present application, any known positive electrode active materials, binders, and electrically conductive materials can be used in the present application. Furthermore, the addition of known additives based on actual usage needs should also be regarded as within the scope of protection of the present application.

In some implementations, the current collector layer comprises active material layers on both front and rear sides.

In some implementations, the current collector layer may be a metal foil or a composite current collector.

For example, the metal foil may be an aluminum foil.

The composite current collector may comprise a polymer material base layer, and a metal layer formed on at least one surface of the polymer material base layer.

Studies have shown that wet coating is often used in conventional technologies. However, because a positive electrode active slurry is a water-based slurry, protrusions often occur at edges of an active material layer during a drying process, due to the fluidity and surface tension of the slurry. Furthermore, during rolling, the protrusions can directly cause cracks at edges of the active material layer under a rolling force, which in turn lead to cracking of the positive electrode active material layer and ultimately affect the performance of a battery. In addition, wet coating may also cause problems such as expansion and rapid performance degradation during long-term battery cycling, due to excessive moisture content.

In some implementations, the electrode sheet is a negative electrode sheet.

The negative electrode sheet is formed from a lithium host material (e.g., a negative electrode active material) that can be used as a negative terminal of a lithium-ion battery. In various aspects, the negative electrode sheet may be defined by a variety of negative electrode active material particles. Such negative electrode active material particles may be placed in one or more layers to define a three-dimensional structure of a negative electrode. In some implementations, the negative electrode may further comprise an electrolyte 50, such as various electrolyte particles (not shown).

In some implementations, the negative electrode sheet may be a lithium-based negative electrode active material, which includes, for example, a lithium metal and/or a lithium alloy.

The negative electrode sheet may be a silicon-based negative electrode active material, which includes, for example, a silicon alloy, silicon oxide, or a combination thereof, and in some cases, may also be mixed with graphite.

The negative electrode sheet may be a carbon-based negative electrode active material, which includes one or more of graphite, graphene, carbon nanotubes (CNTs), and combinations thereof.

The negative electrode sheet may further comprise one or more negative electrode active materials that accept lithium, such as a lithium titanium oxide (Li₄Ti₅O₁₂), one or more transition metals (e.g., tin (Sn)), one or more metal oxides (e.g., vanadium oxide (V₂O₅), tin oxide (SnO), titanium dioxide (TiO₂)), titanium niobium oxide (TixNbyOz, 0 ≤ x ≤ 2, 0 ≤ y ≤ 24 and 0 ≤ z ≤ 64), metal alloys (e.g., copper-tin alloy (Cu₆Sn₅), and one or more metal sulfides (e.g., iron sulfide (FeS)).

Optionally, the negative electrode active material in the negative electrode sheet may be doped with one or more electrically conductive materials that provide an electron conduction path and/or at least one polymer binder material that improves the structural integrity of the negative electrode. For example, the negative electrode active material may be doped with a binder such as: poly(tetrafluoroethylene) (PTFE), sodium carboxymethyl cellulose (CMC), styrene-butadiene rubber (SBR), polyvinylidene fluoride (PVDF), nitrile rubber (NBR), styrene-ethylene-butene-styrene copolymer (SEBS), styrene-butadiene-styrene copolymer (SBS), lithium polyacrylate (LiPAA), sodium polyacrylate (NaPAA), sodium alginate, lithium alginate, and combinations thereof. The electrically conductive material may comprise a carbon-based material, powdered nickel or other metal particles, or an electrically conductive polymer. The carbon-based material may include particles such as carbon black, graphite, superP, acetylene black (such as KETCHEN^{™} black or DENKA^{™} black), carbon fibers and nanotubes, graphene, etc. Examples of electrically conductive polymers include polyaniline, polythiophene, polyacetylene, polypyrrole, poly(3,4-ethylenedioxythiophene)polysulfonated styrene, etc.

The negative electrode sheet may comprise greater than or equal to about 50% by weight and less than or equal to about 99% by weight of the negative electrode active material, optionally greater than or equal to about 0% by weight and less than or equal to about 60% by weight of the solid electrolyte, optionally greater than or equal to about 0% by weight and less than or equal to about 15% by weight of the electrically conductive material, and optionally greater than or equal to about 0% by weight and less than or equal to about 10% by weight of the binder.

As mentioned in the Background section, during dry preparation, due to issues of high strength and poor deformation resistance of traditional shaping rollers, in order to facilitate smoothness of a rolling process, an electrode sheet is thinned at the edges, to form a structure that is thick in the middle and thin at two ends. As shown in FIG. 2, due to a non-uniform lateral thickness of the electrode sheet 1, when the solid electrolyte membrane 2 is laminated on the electrode sheet 1, an edge region of the electrode sheet 1 remains separated from the solid electrolyte membrane. When a rolling apparatus performs roll compositing on the electrode sheet 1 and the solid electrolyte membrane 2, rolling forces of a steel roller are different in a middle region and the edge region of the electrode sheet 1, making it difficult for the electrode sheet 1 and the solid electrolyte membrane 2 to be tightly composited, i.e., ineffective compositing, which will cause the lateral compaction density of the composite electrode sheet to be non-uniform, and the uniformity of the composite electrode sheet is poor. In severe cases, the electrode sheet may crush, consequently producing a huge impact on the safety performance and quality of a lithium-ion battery.

The preparation method of the present application utilizes cushioning provided by the elastic member during rolling of the shaping roller, so that the solid electrolyte membrane can better coat the electrode sheet. Furthermore, during the rolling process of the shaping roller, the electrode sheet is thick in the middle, resulting in greater stress in the middle region than in the edge region. The lateral thickness of the electrode sheet tends to be uniform after rolling, as shown in FIG. 3, which is effective compositing. This, to a certain extent, avoids an adverse impact on the roll compositing process due to the phenomenon that the electrode sheet 1 is thick in the middle and thin at two ends, protects the electrode sheet 1 from being crushed, and can further cause the active material layer in the electrode sheet 1 to better bond to the solid electrolyte membrane 2. In addition, during the rolling process of the shaping roller, the electrode sheet 1 and the solid electrolyte membrane 2 can be pressed evenly, improving the compaction density of the composite electrode sheet, ensuring the thickness uniformity of the composite electrode sheet, easing the phenomenon of the electrode sheet 1 being thick in the middle and thin at two ends, improving the quality of continuous rolling, and allowing large-scale production.

In some implementations, the solid electrolyte membrane comprises a solid electrolyte and a binder.

During preparation of the solid electrolyte membrane, the solid electrolyte and the binder are first stirred and mixed. The mixture is then subjected to a fiberization treatment, to obtain a fiberized solid electrolyte mixture, and the fiberized solid electrolyte mixture is then rolled to obtain the solid electrolyte membrane.

In some implementations, the solid electrolyte is an inorganic solid electrolyte, comprising one or more of an oxide solid electrolyte, a sulfide solid electrolyte, a halide solid electrolyte, a hydride solid electrolyte, a boride solid electrolyte and a nitride solid electrolyte.

The oxide solid electrolyte includes one or more of garnet ceramics, LISICON-type oxides, NASICON-type oxides and perovskite-type ceramics. For example, the one or more garnet ceramics comprise, but are not limited to, Li_{6.5}La₃Zr_{1.75}Te_{0.25}O₁₂, Li₇La₃Zr₂O₁₂, Li_{6.2}Ga_{0.3}La_{2.95}Rb_{0.05}Zr₂O₁₂, Li_{6.85}La_{2.9}Ca_{0.1}Zr_{1.75}Nb_{0.25}O₁₂, Li_{6.25}Al_{0.25}La₃Zr₂O₁₂, and Li_{6.75}La₃Zr_{1.75}Nb_{0.25}O₁₂. The one or more LISICON-type oxides comprise, but are not limited to, Li₁₄Zn(GeO₄)₄, Li₃₊ₓ(P₁₋ₓSiₓ)O₄ (wherein 0 < x < 1), and Li₃₊ₓGeₓV₁₋ₓO₄ (wherein 0 < x < 1). The one or more NASICON-type oxides may be defined by LiMM'(PO₄)₃, wherein M and M' are independently selected from Al, Ge, Ti, Sn, Hf, Zr and La. The one or more perovskite-type ceramics comprise, but are not limited to, one or more of Li₁₊ₓAlₓGe₂₋ₓ(PO₄)₃ (LAGP) (wherein 0 ≤ x ≤ 2), Li₁₊ₓAlₓTi₂₋ₓ(PO₄)₃ (LATP) (wherein 0 ≤ x ≤ 2), Li₁₊ₓYₓZr₂₋ₓ(PO₄)₃ (LYZP) (wherein 0 ≤ x ≤ 2), Li_{1.3}Al_{0.3}Ti_{1.7}(PO₄)₃, LiTi₂(PO₄)₃, LiGeTi(PO₄)₃, LiGe₂(PO₄)₃, and LiHf₂(PO₄)₃. The one or more perovskite-type ceramics comprise, but are not limited to, one or more of Li_{3.3}La_{0.53}TiO₃, LiSr_{1.65}Zr_{1.3}Ta_{1.7}O₉, Li_{2x-y}Sr₁₋ₓTa_{y}Zr_{1-y}O₃ (wherein x = 0.75y and 0.60 < y < 0.75), Li_{3/8}Sr_{7/16}Nb_{3/4}Zr_{1/4}O₃, and Li₃ₓLa_{(2/3-x)}TiO₃ (wherein 0 < x < 0.25).

Sulfide solid-state electrolytes comprise, but are not limited to, one or more of Li₂S-P₂S₅, Li₂S-P₂S₅-MSₓ(where M is Si, Ge, and Sn, and 0 ≤ x ≤ 2), Li_{3.4}Si_{0.4}P_{0.6}S₄, Li₁₀GeP₂S_{11.7}O_{0.3}, Li_{9.6}P₃S₁₂, Li₇P₃S₁₁, Li₉P₃S₉O₃, Li_{10.35}Si_{1.35}P_{1.65}S₁₂, Li_{9.81}Sn_{0.81}P_{2.19}S₁₂, Li₁₀(Si_{0.5}Ge_{0.5})P₂S₁₂, Li(Ge_{0.5}Sn_{0.5})P₂S₁₂, Li(Si_{0.5}Sn_{0.5})PsS₁₂, Li₁₀GeP₂S₁₂ (LGPS), Li₆PS₅X (wherein X is Cl, Br, or I), Li₇P₂S₈I, Li_{10.35}Ge_{1.35}P_{1.65}S₁₂, Li_{3.25}Ge_{0.25}P_{0.75}S₄, Li₁₀SnP₂S₁₂, Li₁₀SiP₂S₁₂, Li_{9.54}Si_{1.74}P_{1.44}S_{11.7}C_{l0.3}, and ₍₁₋ₓ₎P₂S₅₋ₓLi₂S (wherein 0.5 ≤ x ≤ 0.7).

Halogenated solid electrolytes comprise, but are not limited to, Li₂CdCₗ₄, Li₂MgCₗ₄, Li₂Cd_{I4}, Li₂ZnI₄, Li₃OCl, LiI, Li₅ZnI₄, and Li₃OCl₁₋ₓBrₓ (wherein 0 < x < 1).

Boride solid electrolytes comprise, but are not limited to, one or more of Li₂B₄O₇ and Li₂O-(B₂O₃)-(P₂O₅).

Nitride solid electrolytes comprise, but are not limited to, one or more of Li₃N, Li₇PN₄, LiSi₂N₃, and LiPON.

Hydride solid electrolytes comprise, but are not limited to, one or more of Li₃AlH₆, LiBH₄, LiBH₄-LiX (wherein X is one of Cl, Br, and I), LiNH₂, Li₂NH, and LiBH₄-LiNH₂.

In some implementations, the inorganic solid electrolyte may be one or more metal oxide particles or lithium-containing compounds, comprising, but not limited to, one or more of Al₂O₃, SiO₂, TiO₂, LiNbO₃, Li₄Ti₅O₄ and Li₃PO₄.

In some implementations, the solid electrolyte further comprises a partial polymer solid electrolyte,
or a composite solid electrolyte consisting of a polymer solid electrolyte and an inorganic solid electrolyte. In the embodiments of the present application, there are no particular requirements for the mass ratio of the inorganic solid electrolyte and the polymer solid electrolyte in the composite solid electrolyte, which may be designed by a user according to actual needs. The polymer solid electrolyte may be at least one of polyvinyl chloride (PVC), polyacrylonitrile (PAN), polymethyl methacrylate (PMMA), and polyethylene oxide (PEO).

In some implementations, the polymer solid electrolyte includes a lithium salt.

In some implementations, the lithium salt comprises, but is not limited to, lithium hexafluorophosphate (LiPF6), lithium perchlorate (LiClO₄), lithium tetrachloroaluminate (LiAlCl₄), lithium iodide (LiI), lithium bromide (LiBr), lithium thiocyanate (LiSCN), lithium tetrafluoroborate (LiBF₄), lithium oxalydifluoroborate (LiBF₂(C₂O₄)) (LiODFB), lithium tetraphenylborate (LiB(C₆H₅)₄), lithium bis(oxalato)borate (LiB(C₂O₄)₂) (LiBOB), lithium tetrafluorooxalatophosphate (LiPF₄(C₂O₄)) (LiFOP), lithium nitrate (LiNO₃), lithium hexafluoroarsenate (LiAsF₆), lithium trifluoromethanesulfonate (LiCF₃SO₃), lithium bis(trifluoromethanesulfonyl)imide (LiTFSI) (LiN(CF₃SO₂)₂), lithium bis(fluorosulfonyl)imide (LiN(FSO₂)₂) (LiFSI), and combinations thereof. In some variations, the lithium salt is selected from one or more of lithium hexafluorophosphate (LiPF₆), lithium bis(trifluoromethanesulfonyl)imide (LiTFSI) (LiN(CF₃SO₂)₂, lithium bis(fluorosulfonyl)imide (LiN(FSO₂)₂) (LiFSI), lithium fluoroalkylphosphate (LiFAP), and lithium phosphate (Li₃PO₄).

It can be appreciated that the terms mentioned above, comprising oxide solid electrolyte, sulfide solid electrolyte, halide solid electrolyte, hydride solid electrolyte, nitride solid electrolyte, polymer solid electrolyte, etc., are all known in the art. The details of the above materials are merely illustrative examples, and not limitations on the scope of protection. Without departing from the inventive concept of the present application, any known type of solid electrolyte may be used in the present application.

In some implementations, the solid electrolyte membrane is formed independently, meaning that the solid electrolyte membrane may be formed without the aid of a substrate and maintain the integrity of the membrane.

In some implementations, the side of the solid electrolyte membrane distant from the electrode sheet is covered by a substrate, and a bonding force between the substrate and the solid electrolyte membrane is less than a bonding force between the solid electrolyte membrane and the electrode sheet. After rolling, at least part of the solid electrolyte is transferred to the electrode sheet and separated from the substrate.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

The present application further provides a composite electrode sheet, which is prepared according to the preparation method for a composite electrode sheet provided above.

The present application further provides a lithium-ion battery, which comprises the composite electrode sheet provided above.

In some implementations, an electrode sheet and a solid electrolyte membrane may also be procured.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

LATP was selected as a solid electrolyte, and polytetrafluoroethylene was selected as a binder. The substances were mixed and then stirred using a high-speed stirrer, to obtain a solid electrolyte mixture. The mixture was then subjected to fiberization treatment by means of air jet milling to obtain a fiberized solid electrolyte mixture, and the fiberized solid electrolyte mixture was then rolled to obtain a solid electrolyte membrane.

### 3. Preparation of composite positive electrode sheet

Using the preparation apparatus for a composite electrode sheet provided with a protective film as shown in FIG. 4, the positive electrode sheet was composited with two solid electrolyte membranes, so that the solid electrolyte membranes were simultaneously composited on the positive electrode active material layers on both sides of the positive electrode. A protective film was a PE-based non-woven fabric.

The solid electrolyte membrane departed from the solid electrolyte membrane unwinding mechanism 21, passed through the first guide roller 51, and reached the shaping roller. The protective film departed from the protective film unwinding mechanism, passed through the second guide roller 52, and reached the shaping roller. The first guide roller 51 was located at the side of the second guide roller 52 distant from the shaping roller. After rotating with the shaping roller, the solid electrolyte membrane and the protective film made contact with the positive electrode sheet, and passed through the gap between the first shaping roller and the second shaping roller, more specifically through a gap between the shaping roller and the positive electrode sheet. Subsequently, under the rolling of the first shaping roller and the second shaping roller, compositing of the positive electrode sheet with the two solid electrolyte membranes was completed. The composite electrode sheet advanced toward the composite electrode sheet winding mechanism 12 under the action of the composite electrode sheet winding mechanism 12, and was received and wound by the composite electrode sheet winding mechanism 12, to obtain a composite electrode sheet having solid electrolyte membranes composited on both sides of the positive electrode sheet.

After the protective film and the substrate left the gap between the first shaping roller 31 and the second shaping roller 32, the protective film and the substrate separated from the composite electrode sheet and rotated with the first shaping roller 31 or the second shaping roller 32 by a specific angle. The protective film was then received and wound by the protective film winding mechanism via the third guide roller 53. The substrate was received and wound by the solid electrolyte membrane winding mechanism via the fourth guide roller 54. The third guide roller 53 was located at the side of the fourth guide roller 52 close to the shaping roller.

The thickness of the composite electrode sheet in a middle region was 160 µm, and the thickness in an edge region was 160 µm. No cracks were observed on the surface of the composite electrode sheet under the naked eye, which met standards for use of the composite electrode sheet. No significant deformation occurred in the protective film.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

LGPS was selected as a solid electrolyte, polytetrafluoroethylene was selected as a binder, and LiPF6 was selected as a lithium salt. The substances were mixed and then stirred using a high-speed stirrer, to obtain a solid electrolyte mixture. The mixture was then subjected to fiberization treatment by means of air jet milling to obtain a fiberized solid electrolyte mixture, and the fiberized solid electrolyte mixture was then rolled to obtain a solid electrolyte membrane.

### 3. Preparation of composite positive electrode sheet

Using the preparation apparatus for a composite electrode sheet provided with a protective film, the positive electrode sheet was composited with two solid electrolyte membranes, so that the solid electrolyte membranes were simultaneously composited on the positive electrode active material layers on both sides of the positive electrode sheet. The protective film was a PE-based non-woven fabric.

The solid electrolyte membrane departed from the solid electrolyte membrane unwinding mechanism, passed through the first guide roller and the second guide roller, and then reached the shaping roller. The protective film departed from the protective film unwinding mechanism, passed through the second guide roller 52, and reached the shaping roller. The first guide roller 51 was located at the side of the second guide roller 52 distant from the shaping roller. After rotating with the shaping roller, the solid electrolyte membrane and the protective film made contact with the positive electrode sheet, and passed through the gap between the first shaping roller and the second shaping roller, more specifically through a gap between the shaping roller and the positive electrode sheet. Subsequently, under the rolling of the first shaping roller and the second shaping roller, compositing of the positive electrode sheet with the two solid electrolyte membranes was completed. The composite electrode sheet advanced toward the composite electrode sheet winding mechanism under the action of the composite electrode sheet winding mechanism, and was received and wound by the composite electrode sheet winding mechanism, to obtain a composite electrode sheet having solid electrolyte membranes composited on both sides of the positive electrode sheet.

After the protective film and the substrate left the gap between the first shaping roller and the second shaping roller, the protective film and the substrate separated from the composite electrode sheet and rotated with the first shaping roller or the second shaping roller by a specific angle. Subsequently, the protective film and the substrate were conveyed to the third guide roller under the action of the protective film winding mechanism and the substrate winding mechanism 22, respectively. After rotating around the third guide roller by a specific angle, the protective film and the substrate separated. The protective film was received and wound by the protective film winding mechanism 42, and the substrate was received and wound by the substrate winding mechanism 22.

The thickness of the composite electrode sheet in a middle region was 190 µm, and the thickness in an edge region was 190 µm. No cracks were observed on the surface of the composite electrode sheet under the naked eye, which met standards for use of the composite electrode sheet. No significant deformation occurred in the protective film.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

LATP was selected as a solid electrolyte, and polytetrafluoroethylene was selected as a binder. The substances were mixed and then stirred using a high-speed stirrer, to obtain a solid electrolyte mixture. The mixture was then subjected to fiberization treatment by means of air jet milling to obtain a fiberized solid electrolyte mixture, and the fiberized solid electrolyte mixture was then rolled to obtain a solid electrolyte membrane.

### 3. Preparation of composite positive electrode sheet

Using the roller press having an adhesive layer as shown in FIG. 5, the positive electrode sheet was composited with two solid electrolyte membranes, so that the solid electrolyte membranes were simultaneously composited on the positive electrode active material layers on both sides of the positive electrode sheet.

The solid electrolyte membrane departed from the solid electrolyte membrane unwinding mechanism, passed through the first guide roller, and then reached the shaping roller. After rotating with the shaping roller, the solid electrolyte membrane made contact with the positive electrode sheet, and passed through the gap between the first shaping roller and the second shaping roller. The composite electrode sheet advanced toward the composite electrode sheet winding mechanism 12 under the action of the composite electrode sheet winding mechanism 12, and was received and wound by the composite electrode sheet winding mechanism 12, to obtain a composite electrode sheet having solid electrolyte membranes composited on both sides of the positive electrode sheet. After the substrate left the gap between the first shaping roller 31 and the second shaping roller 32, the substrate rotated with the first shaping roller 31 or the second shaping roller 32 by a specific angle, and then the substrate was conveyed to the third guide roller 53 under the action of the substrate winding mechanism 22, and was received and wound by the substrate winding mechanism 22 located downstream of the third guide roller 53.

The thickness of the composite electrode sheet in a middle region was 160 µm, and the thickness in an edge region was 160 µm. No cracks were observed on the surface of the composite electrode sheet under the naked eye, which met standards for use of the composite electrode sheet. The shape of the adhesive layer remained good.

In a comparative example, a roller press as shown in FIG. 6 was used to composite the positive electrode sheet with two solid electrolyte membranes, so that the solid electrolyte membranes were simultaneously composited on the positive electrode active material layers on both sides of the positive electrode sheet. A difference between the roller press shown in FIG. 6 and the roller press shown in FIG. 5 is that the shaping roller does not have an adhesive layer on the outside. Methods for preparing the positive electrode sheet, preparing the solid electrolyte membrane, and preparing the composite positive electrode sheet were all the same as in the above embodiments.

There was an interlayer separation phenomenon at edges of the composite electrode sheet, and there were fine cracks at the edges.

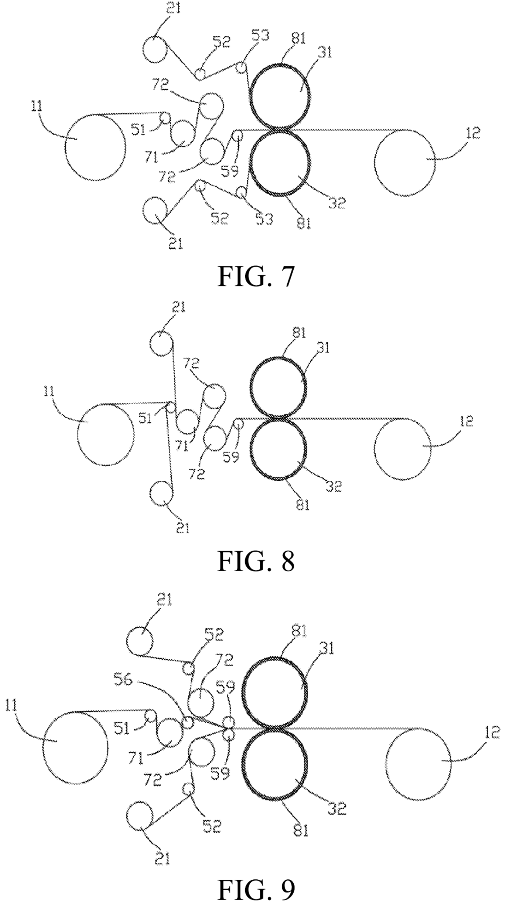

One aspect of the present application provides a preparation apparatus for a composite electrode sheet. As shown in FIGs. 7-13, the apparatus comprises a shaping roller assembly, an electrode sheet unwinding mechanism 11, a solid electrolyte membrane unwinding mechanism 21, and a heating roller. The shaping roller assembly comprises a first shaping roller 31 and a second shaping roller 32, symmetrically disposed at two sides of an electrode sheet. A connecting line between axes of the first shaping roller 31 and the second shaping roller 32 is perpendicular to a conveying direction of the electrode sheet.

The electrode sheet unwinding mechanism 11 is located upstream of the shaping roller assembly, and is used to unwind the electrode sheet and then convey the electrode sheet, so that the electrode sheet passes through a gap between the first shaping roller 31 and the second shaping roller 32.

It can be appreciated that the electrode sheet in the present application is a positive electrode sheet or a negative electrode sheet.

The solid electrolyte membrane unwinding mechanism 21 is located upstream of the shaping roller assembly, and more specifically between the electrode sheet unwinding mechanism 11 and the shaping roller assembly. The solid electrolyte membrane unwinding mechanism 21 is used to unwind a solid electrolyte membrane, and then convey the solid electrolyte membrane so that the solid electrolyte membrane passes through the gap between the first shaping roller 31 and the second shaping roller 32. More specifically, the solid electrolyte membrane unwinding mechanism 21 causes the solid electrolyte membrane to pass through a gap between the electrode sheet and the shaping roller assembly.

In some implementations, there are two solid electrolyte membrane unwinding mechanisms 21 located at two sides of the electrode sheet unwinding mechanism 11, respectively, and solid electrolyte membranes are then conveyed so that the two solid electrolyte membranes pass through the gap between the first shaping roller 31 and the second shaping roller 32, and the electrode sheet is located between the two solid electrolyte membranes. Optionally, the two solid electrolyte membrane unwinding mechanisms 21 are symmetrically disposed at two sides of the electrode sheet unwinding mechanism 11. However, this is not a limitation. In some implementations, there is one solid electrolyte membrane unwinding mechanism disposed at one side of the electrode sheet unwinding mechanism, and the solid electrolyte membrane unwinding mechanism unwinds and then conveys a solid electrolyte membrane, to cause the solid electrolyte membrane to pass through the gap between the first shaping roller and the second shaping roller, so that the solid electrolyte membrane is composited on one side of the electrode sheet.

The heating roller is located between the electrode sheet unwinding mechanism 11 and the shaping roller assembly, and is used to preheat the electrode sheet and/or the solid electrolyte membrane.

In some implementations, the preparation apparatus for a composite electrode sheet further comprises a guide roller, the guide roller being located between the electrode sheet unwinding mechanism 11 and the shaping roller assembly, and used to adjust preheating time of the electrode sheet and/or the solid electrolyte membrane.

In some implementations, the numbers of guide rollers and heating rollers in the preparation device for a composite electrode sheet are not particularly limited, and specific numbers may be increased or decreased according to actual situations.

In some implementations, there may be one heating roller, i.e., a first heating roller 71.

In some implementations, there are a plurality of heating rollers, and temperatures of the heating rollers gradually increase along a running direction of the electrode sheet. Specifically, the heating rollers may be, in sequence along the running direction of the electrode sheet, a first heating roller 71, a second heating roller 72 and a third heating roller 73. The numbers of the first heating roller 71, the second heating roller 72, and the third heating roller 73 may also be one, two or more, and are not particularly limited herein.

In some implementations, the heating roller is used to preheat the electrode sheet separately, without preheating the solid electrolyte membrane.

In some implementations, the heating roller is used to preheat the solid electrolyte membrane separately, without preheating the electrode sheet.

In some implementations, the heating roller is used to preheat the electrode sheet and the solid electrolyte membrane. It can be appreciated that the electrode sheet and the solid electrolyte membrane may be preheated using the same heating roller, or may be preheated using different heating rollers.

In some implementations, a guide roller is provided between the electrode sheet unwinding mechanism 11 and the heating roller, to provide guidance for the electrode sheet and/or. In some implementations, a guide roller is provided between the solid electrolyte membrane unwinding mechanism 21 and the heating roller, to provide guidance for the solid electrolyte membrane.

Preheating time of the electrode sheet and/or the solid electrolyte membrane may be adjusted by means of adjusting relative positions between the guide roller and the heating roller.

An elastic member is located between the first shaping roller 31 and the second shaping roller 32.

In an electrode sheet production process, edges of the electrode sheet are usually thinned in order to ensure smooth progress of a subsequent rolling process. However, the existence of a thinned region in the electrode sheet will affect lamination between the solid electrolyte membrane and the electrode sheet.

In some implementations, the preparation apparatus for a composite electrode sheet of the present application utilizes cushioning provided by the elastic member during rolling to enable the solid electrolyte membrane to better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling.

In some implementations, the elastic member is made of a flexible material that undergoes elastic deformation under pressure. The slight elastic deformation causes the thickness of the middle region of the electrode sheet to become consistent with that of the thinned region under pressure, enabling the electrode sheet to laminate better on the solid electrolyte membrane.

In some implementations, the flexible material is a polymer. The present application does not impose special limitations on the material of the polymer. Exemplarily, the material of the polymer may be a plastic such as polytetrafluoroethylene, polyethylene terephthalate, polypropylene or polyacrylonitrile, a rubber such as Hypalon rubber, silicone rubber or fluororubber, or an elastic material such as silicone, that can undergo a certain degree of deformation.

The present application does not impose particular limitations on the thickness of the elastic member. Any necessary adjustments to the thickness of the elastic member without departing from the inventive concept of the present application can be construed as being within the scope of protection of the present application.

In some implementations, the elastic member is disposed corresponding to the solid electrolyte membrane. For example, when a solid electrolyte membrane is composited on one side of the electrode sheet, an elastic member is disposed in a gap between the shaping roller and the solid electrolyte membrane on the side close to the solid electrolyte membrane. When solid electrolyte membranes are composited on both sides of the electrode sheet, elastic members are disposed in gaps between the two shaping rollers and the solid electrolyte membranes on the corresponding sides.

In some implementations, the elastic member is an adhesive layer 81 that covers around the outside of the first shaping roller 31 and/or the second shaping roller 32.

In some implementations, the elastic member is a protective film that is transported through a gap between the shaping roller assembly and the solid electrolyte membrane.

Accordingly, the preparation apparatus for a composite electrode sheet of the present application further comprises a protective film unwinding mechanism 41 for unwinding the protective film. The protective film unwinding mechanism 41 is located upstream of the shaping roller assembly, and is disposed between the solid electrolyte membrane unwinding mechanism 21 and the shaping roller assembly. During the roll compositing process of the electrode sheet and the solid electrolyte membrane, the protective film is located in the gap between the first shaping roller 31 and the second shaping roller 32, and between the shaping roller assembly and the solid electrolyte membrane.

The present application does not have particular requirements for the structure of the protective film. Without departing from the inventive concept of the present application, any known film layer that can undergo a certain degree of elastic deformation under a certain pressure can be used in the present application. An illustrative example only, rather than a limitation on the scope of protection, the protective film may be selected from a polymer film or a non-woven fabric. The non-woven fabric comprises, but is not limited to, a PP-based non-woven fabric, a PE-based non-woven fabric, a PET-based non-woven fabric, a PAN-based non-woven fabric, a PTFE-based non-woven fabric, a Celgard non-woven fabric, etc. The polymer film may be selected from a PVDF film, a PE film, a PP film, a PE/PP film, a PE/PP/PE film, a PP/PE/PP film, a PTFE film, a silicone release film, a fluorine release film, a PET film, a non-silicone release film, etc. It can be appreciated that the protective film may also be a multilayer structure consisting of two or more polymer films and/or non-woven fabrics.

The present application does not impose particular limitations on the thickness of the protective film. Without departing from the inventive concept of the present application, any conventional adjustments to the thickness of the protective film to adjust rolling effects should be regarded as within the scope of protection of the present application. It can be appreciated that when the protective film is a multilayer structure, the thickness of the protective film should be the sum of the thicknesses of a plurality of layers.

In some implementations, the preparation apparatus for a composite electrode sheet further comprises a composite electrode sheet winding mechanism 12. The composite electrode sheet winding mechanism 12 is located downstream of the shaping roller assembly, and is used to provide tension to the electrode sheet along the movement direction of the electrode sheet, and to receive the composite electrode sheet obtained after rolling by the shaping roller assembly, to complete a winding action.

In some implementations, the preparation apparatus for a composite electrode sheet further comprises a substrate winding mechanism 22.

When a substrate is provided on the solid electrolyte membrane, the substrate covers the side of the solid electrolyte membrane distant from the electrode sheet. After the electrode sheet and the solid electrolyte membrane are rolled by means of the shaping roller assembly to obtain the composite electrode sheet, the substrate needs to be separated. The substrate winding mechanism 22 is disposed downstream of the shaping roller assembly, and used to separate the substrate from the composite electrode sheet. During the separation process, the substrate winding mechanism 22 provides tension to the substrate covering the solid electrolyte membrane, so that the substrate is separated from the composite electrode sheet, and performs a substrate winding action when necessary.

The number of the substrate winding mechanism 22 corresponds to the number of the solid electrolyte membrane unwinding mechanism 21, and the substrate winding mechanism 22 and the solid electrolyte membrane unwinding mechanism 21 are located at the same side of the electrode sheet unwinding mechanism 11.

In some implementations, a guide roller may further be provided between the shaping roller assembly and the substrate winding mechanism 22, the guide roller being used to provide guidance for the substrate separated from the composite electrode sheet.

In some implementations, the preparation apparatus for a composite electrode sheet further comprises a protective film winding mechanism 42. The protective film winding mechanism 42 is located downstream of the shaping roller assembly, is disposed between the shaping roller assembly and the composite electrode sheet winding mechanism 12, and is used to provide tension to the protective film and to wind and receive the protective film.

In some implementations, a guide roller is provided between the protective film unwinding mechanism 41 and the shaping roller assembly, to provide guidance for the solid electrolyte membrane and/or the protective film. A guide roller may also be provided between the shaping roller assembly and the protective film winding mechanism 42, the guide roller being used to provide guidance for recovery of the protective film.

In some implementations, the heating roller is used to preheat the electrode sheet, the solid electrolyte membrane and the protective film. It can be appreciated that the electrode sheet, the solid electrolyte membrane and the protective film may be preheated using the same heating roller; or may be preheated using different heating rollers.

In some implementations, the heating roller is used to preheat the electrode sheet and the solid electrolyte membrane, without preheating the protective film.

In some implementations, the preparation apparatus for a composite electrode sheet further comprises an unwinding correction assembly, an electrode sheet static elimination assembly, etc. arranged in sequence along an unwinding path of the preparation apparatus. The unwinding correction assembly can correct unwinding and running paths of the electrode sheet, the solid electrolyte membrane, etc., so that initial feed lines are kept at the same level. A winding and unwinding mechanism for a main material employs single-station correction, and winding and unwinding mechanisms for the remaining materials employ a cantilever type, all of which are provided with correction. The static elimination assembly performs static elimination treatment on both sides of the electrode sheet, and can reduce friction between the electrode sheet and the conveyor roller. It can be appreciated that, without departing from the inventive concept of the present application, known functional assemblies or structures may be used in the present application throughout the entire process from winding, to rolling, and unwinding.

In some implementations, the width of the shaping roller assembly is 500-800 mm, including but not limited to 500 mm, 550 mm, 600 mm, 650 mm, 700 mm, 750 mm, or 800 mm, preferably 550-650 mm.

In some implementations, a roller diameter of the shaping roller assembly is 300-500 mm, including but not limited to 300 mm, 350 mm, 400 mm, 450 mm, or 500 mm, preferably 350-450 mm.

In some implementations, the tonnage of the shaping roller assembly is 10-15 tons, including but not limited to 11 tons, 12 tons, 13 tons, 14 tons, or 15 tons, preferably 11-13 tons.

In some implementations, a mechanical speed of the shaping roller assembly is 10-60 m/min, including but not limited to 10 m/min, 20 m/min, 30 m/min, 40 m/min, 45 m/min, 50 m/min, or 60 m/min.

It can be appreciated that the higher the belt speed of the entire preparation apparatus for a composite electrode sheet, the higher production efficiency is. However, excessively high speeds can easily cause problems such as breakage in the belt-carried electrode sheet and solid electrolyte membrane. The present application does not have particular requirements for residence time of the electrode sheet and the solid electrolyte membrane in the gap of the shaping roller assembly. Without departing from the inventive concept of the present application, any adjustments to the residence time that do not require the exercise of creative effort should be construed as falling within the scope of protection of the present application.

In some implementations, linear speeds of the first shaping roller 31 and the second shaping roller 32 are kept consistent, and an unwinding linear speed of the electrode sheet unwinding mechanism 11 and a winding linear speed of the composite electrode sheet winding mechanism 12 are also kept consistent, thereby improving action consistency of the entire rolling preparation process of the composite electrode sheet and enhancing uniformity of the composite electrode sheet.

In some implementations, a heating unit is provided inside the shaping roller assembly, and a temperature range for heating the shaping roller is 100-300°C, including but not limited to 100°C, 150°C, 200°C, 250°C, or 300°C, preferably 150-200°C.

In some implementations, the elastic member in the preparation apparatus for a composite electrode sheet is an adhesive layer 81, and the solid electrolyte membrane is not covered by a substrate. Referring to FIGs. 7-9, the same or different heating rollers are used to preheat the electrode sheet and/or the solid electrolyte membrane. Specifically, the heating roller in FIG. 7 is used to preheat only the electrode sheet. FIG. 8 shows the use of the same heating roller to preheat the electrode sheet and the solid electrolyte membrane simultaneously. FIG. 9 shows the use of different heating rollers to separately preheat the electrode sheet and the solid electrolyte membrane. Exemplarily:
FIG. 7 is a schematic structural diagram of a preparation apparatus separately preheating an electrode sheet using a heating roller. A specific usage process is as follows: The electrode sheet is unwound by means of the electrode sheet unwinding mechanism 11 and conveyed to the composite electrode sheet winding mechanism 12, and the electrode sheet sequentially passes through the first guide roller 51, the first heating roller 71, the second heating roller 72, a ninth guide roller 59, and the gap between the first shaping roller 31 and the second shaping roller 32. Solid electrolyte membranes are conveyed by means of the solid electrolyte membrane unwinding mechanisms 21 located at upper and lower sides of the electrode sheet unwinding mechanism 11, respectively, the solid electrolyte membranes sequentially passing through the second guide roller 52, the third guide roller 53, and a gap between the shaping roller assembly and the electrode sheet, and the solid electrolyte being located between the shaping roller assembly and the electrode sheet. The electrode sheet and the solid electrolyte membranes are roll composited by means of the first shaping roller 31 covered by an adhesive layer 81 on the outside, and the second shaping roller 32 covered by an adhesive layer 81 on the outside, to obtain a composite electrode sheet. The composite electrode sheet reaches the composite electrode sheet winding mechanism 12, and is received by means of the composite electrode sheet winding mechanism 12.

FIG. 8 is a schematic structural diagram of a preparation apparatus that uses the same heating roller to preheat an electrode sheet and a solid electrolyte membrane. A specific usage process is as follows: The electrode sheet is unwound by the electrode sheet unwinding mechanism 11 and conveyed to the composite electrode sheet winding mechanism 12. Solid electrolyte membranes are conveyed by means of the solid electrolyte membrane unwinding mechanisms 21 located at upper and lower sides of electrode sheet unwinding mechanism 11, respectively. The electrode sheet and the solid electrolyte membranes are first laminated on the first guide roller 51, and then sequentially pass through the first heating roller 71, the second heating roller 72, the ninth guide roller 59, and the gap between the first shaping roller 31 and the second shaping roller 32, the solid electrolyte being located between the shaping roller assembly and the electrode sheet. The electrode sheet and the solid electrolyte membranes laminated together are roll composited by means of the first shaping roller 31 covered by an adhesive layer 81 on the outside, and the second shaping roller 32 covered by an adhesive layer 81 on the outside, to obtain a composite electrode sheet. The composite electrode sheet reaches the composite electrode sheet winding mechanism 12, and is received by means of the composite electrode sheet winding mechanism 12.

FIG. 9 is a schematic structural diagram of a preparation device that uses different heating rollers to preheat an electrode sheet and a solid electrolyte membrane. A specific usage process is as follows: The electrode sheet is unwound by means of the electrode sheet unwinding mechanism 11 and conveyed to the composite electrode sheet winding mechanism 12, and the electrode sheet sequentially passes through the first guide roller 51, the first heating roller 71, a sixth guide roller 56, a ninth guide roller 59, and the gap between the first shaping roller 31 and the second shaping roller 32. Solid electrolyte membranes are conveyed by the solid electrolyte membrane unwinding mechanisms 21 located at upper and lower sides of the electrode sheet unwinding mechanism 11, respectively. The solid electrolyte membranes sequentially pass through the second guide roller 52, the second heating roller 72, the ninth guide roller 59, and the gap between the shaping roller assembly and the electrode sheet, the solid electrolyte being located between the shaping roller assembly and the electrode sheet. The electrode sheet and the solid electrolyte membranes are roll composited by means of the first shaping roller 31 covered by an adhesive layer 81 on the outside, and the second shaping roller 32 covered by an adhesive layer 81 on the outside, to obtain a composite electrode sheet. The composite electrode sheet then reaches the composite electrode sheet winding mechanism 12, and is received by the composite electrode sheet winding mechanism 12.

In the example shown in FIGs. 7-9 above, the adhesive layer 81 covers the outside of the first shaping roller and the second shaping roller. When the shaping roller assembly rotates, the adhesive layer 81 rotates with the shaping roller assembly. Furthermore, when the shaping roller assembly rolls the solid electrolyte membrane and/or the electrode sheet, the adhesive layer 81 provides a cushioning function for the solid electrolyte membrane and/or the electrode sheet, enabling the solid electrolyte membrane to better coat one or two sides of the electrode sheet, and improving uniformity of the lateral thickness of the electrode sheet after rolling.

In some implementations, the elastic member in the preparation apparatus for a composite electrode sheet is a protective film. The protective film may be unwound by means of two protective film unwinding mechanisms 41 located at the side of the solid electrolyte membrane unwinding mechanism 21 distant from the electrode sheet. The two protective film unwinding mechanisms 41 each convey a protective film to the shaping roller assembly, so that the two protective films pass through the gap between the first shaping roller 31 and the second shaping roller 32. In the gap between the first shaping roller 31 and the second shaping roller 32, the sequentially distributed protective film, solid electrolyte membrane, electrode sheet, solid electrolyte membrane and protective film are laminated on one another, and the solid electrolyte membranes are composited on two sides of the electrode sheet under the rolling action of the shaping roller assembly, thereby obtaining the composite electrode sheet.

During rolling, the shaping roller assembly applies tension to the electrode sheet and the solid electrolyte membrane, and the two protective films are located between the shaping roller assembly and the solid electrolyte membrane, achieving a cushioning function. This ensures that forces received at points of the electrode sheet and the solid electrolyte membrane are uniform, and the solid electrolyte membrane in the finally resulting composite electrode sheet almost completely coats the electrode sheet. The bonding between the electrode sheet and the solid electrolyte membrane is better, the uniformity of the lateral thickness of the composite electrode sheet is improved, and the compaction density is also increased.

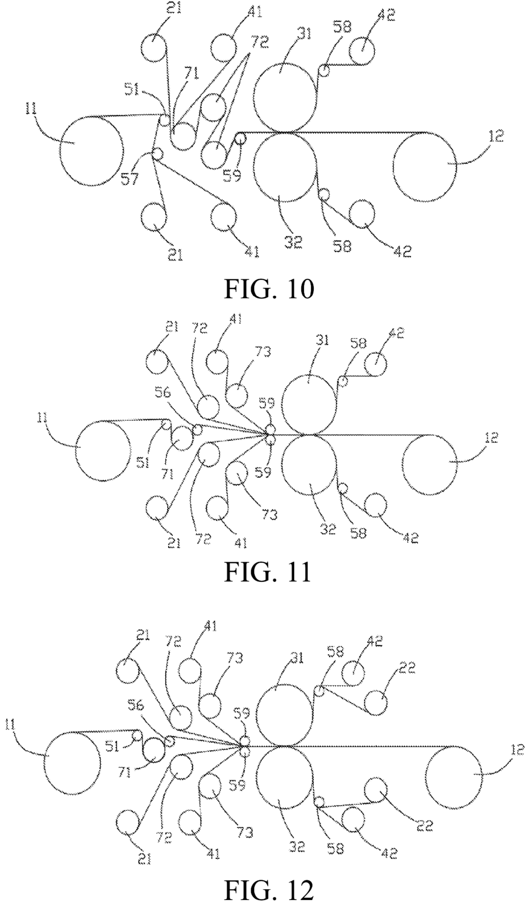

In some implementations, the elastic member in the preparation apparatus for a composite electrode sheet is a protective film, and the solid electrolyte membrane is not covered by a substrate. Referring to FIGs. 10-11, the same or different heating rollers are used to preheat the electrode sheet, the solid electrolyte membrane, and the protective film. Specifically, in FIG. 10, the same heating roller is used to preheat the electrode sheet, the solid electrolyte membrane, and the protective film; in FIG. 11, different heating rollers are used to preheat the electrode sheet, the solid electrolyte membrane, and the protective film. Exemplarily:
FIG. 10 is a schematic structural diagram of a preparation apparatus that uses the same heating roller to preheat the electrode sheet, the solid electrolyte membrane, and the protective film. A specific usage process is as follows: The electrode sheet is unwound by means of the electrode sheet unwinding mechanism 11 and conveyed to the composite electrode sheet winding mechanism 12, and the electrode sheet directly reaches the first guide roller 51. Solid electrolyte membranes are conveyed by the solid electrolyte membrane unwinding mechanisms 21 located at upper and lower sides of the electrode sheet unwinding mechanism 11, respectively. Protective films are conveyed by the protective film unwinding mechanisms 41 located at the upper and lower sides of the electrode sheet unwinding mechanism 11, respectively. The solid electrolyte membrane and the protective film located in the upper region of the electrode sheet unwinding mechanism 11 directly reach the first guide roller 51. The solid electrolyte membrane and the protective film located in the lower region of the electrode sheet first pass through the seventh guide roller 57 and then reach the first guide roller 51. The electrode sheet, the two solid electrolyte membranes, and the two protective films are laminated on the first guide roller 51, and then sequentially pass through the first heating roller 71, the second heating roller 72, the ninth guide roller 59, and the gap between the first shaping roller 31 and the second shaping roller 32. The solid electrolyte is located between the shaping roller assembly and the electrode sheet, and the protective film is located between the shaping roller assembly and the solid electrolyte membrane. The electrode sheet, the solid electrolyte membranes, and the protective films laminated together are roll composited by means of the first shaping roller 31 and the second shaping roller 32, to obtain a composite electrode sheet covered by the protective films. Next, the two protective film winding mechanisms 42 complete an action of winding action the two protective films, so that the protective films are separated from the composite electrode sheet. The composite electrode sheet reaches the composite electrode sheet winding mechanism 12, and is received by means of the composite electrode sheet winding mechanism 12.

FIG. 11 is a schematic diagram of a preparation device that uses different heating rollers to preheat an electrode sheet, a solid electrolyte membrane, and a protective film. A specific usage process is as follows: The electrode sheet is unwound by means of the electrode sheet unwinding mechanism 11 and conveyed to the composite electrode sheet winding mechanism 12, and the electrode sheet sequentially passes through the first guide roller 51, the first heating roller 71, a sixth guide roller 56, a ninth guide roller 59, and the gap between the first shaping roller 31 and the second shaping roller 32. Solid electrolyte membranes are conveyed by the solid electrolyte membrane unwinding mechanisms 21 located at the upper and lower sides of the electrode sheet unwinding mechanism 11, respectively. The solid electrolyte membranes sequentially pass through the second heating roller 72, the ninth guide roller 59, and the gap between the shaping roller assembly and the electrode sheet, the solid electrolyte being located between the shaping roller assembly and the electrode sheet. Protective films are conveyed by the protective film unwinding mechanisms 41 located at the upper and lower sides of the electrode sheet unwinding mechanism 11, respectively. The protective films sequentially pass through the third heating roller 73, the ninth guide roller 59, and the gap between the shaping roller assembly and the electrode sheet, the protective film being located between the shaping roller assembly and the solid electrolyte membrane. The electrode sheet, the solid electrolyte membranes, and the protective films laminated together are roll composited by means of the first shaping roller 31 and the second shaping roller 32, to obtain a composite electrode sheet covered by the protective films. Next, the protective films depart from the shaping roller assembly, pass through an eighth guide roller 58, and reach the protective film winding mechanisms 42. The two protective film winding mechanisms 42 complete an action of winding the two protective films, so that the protective films are separated from the composite electrode sheet. The composite electrode sheet reaches the composite electrode sheet winding mechanism 12, and is received by means of the composite electrode sheet winding mechanism 12.

In some implementations, the solid electrolyte membrane is covered by a substrate, to provide support for the solid electrolyte membrane. When the solid electrolyte membrane unwinding mechanism 21 conveys the solid electrolyte membrane, the substrate is located at the side of the solid electrolyte membrane distant from the electrode sheet. After compositing of the solid electrolyte membrane and the electrode sheet is completed, the substrate is separated from the composite electrode sheet.

When the solid electrolyte membrane is covered by the substrate, the preparation apparatus further comprises substrate winding mechanisms 22, the substrate winding mechanisms 22 being located at upper and lower sides of a region between the shaping roller assembly and the composite electrode sheet winding mechanism 12. A bonding force between the substrate and the solid electrolyte membrane is less than a bonding force between the solid electrolyte membrane and the electrode sheet. After roll compositing, at least part of the solid electrolyte is transferred to the electrode sheet and separated from the substrate.

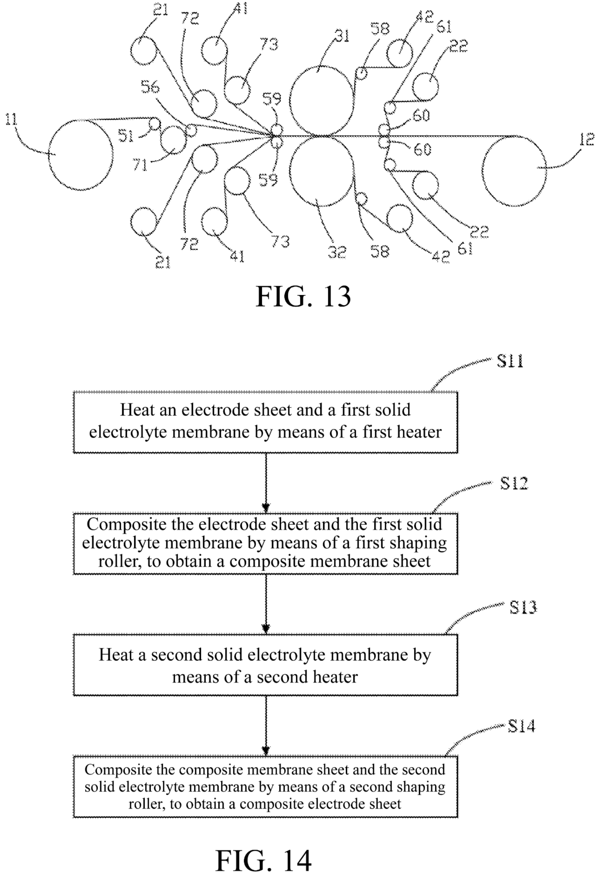

Based on FIG. 11, the solid electrolyte membrane is covered by a substrate. Referring to FIGs. 12-13, in FIG. 12, the protective film and the substrate are simultaneously separated from the composite electrode sheet; in FIG. 13, the protective film and the substrate are separated from the composite electrode sheet one after another. That is, routes by which the substrate departs from the shaping roller assembly to the substrate winding mechanism 22 are different. Exemplarily:
Referring to FIGs. 12-13, different heating rollers are used to preheat the electrode sheet, the solid electrolyte membrane, and the protective film. In FIG. 12, the substrate and the protective film are separated from the composite electrode sheet simultaneously, and reach the substrate winding mechanism 22 through the same guide roller. In FIG. 13, the substrate and the protective film are separated from the composite electrode sheet one after another, and reach the substrate winding mechanism 22 through different guide rollers. A specific usage process is as follows: The electrode sheet is unwound by means of the electrode sheet unwinding mechanism 11 and conveyed to the composite electrode sheet winding mechanism 12, and the electrode sheet sequentially passes through the first guide roller 51, the first heating roller 71, a sixth guide roller 56, a ninth guide roller 59, and the gap between the first shaping roller 31 and the second shaping roller 32. Solid electrolyte membranes are conveyed by the solid electrolyte membrane unwinding mechanisms 21 located at the upper and lower sides of the electrode sheet unwinding mechanism 11, respectively. The solid electrolyte membranes sequentially pass through the second heating roller 72, the ninth guide roller 59, and the gap between the shaping roller assembly and the electrode sheet, the solid electrolyte being located between the shaping roller assembly and the electrode sheet. Protective films are conveyed by the protective film unwinding mechanisms 41 located at the upper and lower sides of the electrode sheet unwinding mechanism 11, respectively. The protective films sequentially pass through the third heating roller 73, the ninth guide roller 59, and the gap between the shaping roller assembly and the electrode sheet, the protective film being located between the shaping roller assembly and the solid electrolyte membrane. The electrode sheet, the solid electrolyte membranes, and the protective films laminated together are roll composited by means of the first shaping roller 31 and the second shaping roller 32, to obtain a composite electrode sheet covered by the protective films and the substrates. In FIG. 12, the protective film and the substrate depart from the shaping roller assembly, pass through the eighth guide roller 58, and reach the protective film winding mechanism 42 and the substrate winding mechanism 22, respectively. The protective film winding mechanism 42 completes an action of winding the protective film, so that the protective film is separated from the composite electrode sheet. The substrate winding mechanism 22 completes an action of winding the substrate, so that the substrate is separated from the surface of the solid electrolyte membranes. In FIG. 13, the protective films depart from the shaping roller assembly, pass through the eighth guide rollers 58 and reach the protective film winding mechanisms 42, and the substrates depart from the shaping roller assembly, pass through tenth guide rollers 60 and eleventh guide rollers 61 and reach the substrate winding mechanisms 22. The composited electrode sheet reaches the composite electrode sheet winding mechanism 12, and is received by means of the composite electrode sheet winding mechanism 12.

In the above examples, optionally, the number of the first heating roller 71 or the second heating roller 72 may be one, two, or more. There are no particular limitations herein on the numbers of the first heating roller 71 and the second heating roller 72, which may be selected and replaced according to actual needs.

In the above examples, the number of the ninth guide roller 59 may be one or two, or may be replaced by two or more guide rollers. There are no particular limitations herein on the number of the ninth guide roller 59, which may be selected and replaced according to actual needs, or may be replaced by an unwinding correction assembly. Similarly, the numbers of other guide rollers, such as the first guide roller 51 and the second guide roller 52, are also not specifically limited and may be selected according to actual needs.

In the examples above, optionally, the number of the solid electrolyte membrane unwinding mechanism 21 may also be one.

The distribution of a plurality of guide rollers in the preparation apparatus for a composite electrode sheet in the present application is not merely limited to the cases enumerated above. The present application does not impose particular limitations on the distribution of the guide rollers. Without departing from the inventive concept of the present application, any distribution means that enables adjustment of preheating time should be included within the scope of protection of the present application.

Another aspect of the present application provides a composite electrode sheet prepared using the foregoing preparation apparatus.

In the present application, the plurality of guide rollers guide the electrode sheet and/or the solid electrolyte membrane and/or the protective film, to control different contact conditions of the electrode sheet and/or the solid electrolyte membrane with the heating roller, so that travel distances of the electrode sheet and/or the solid electrolyte membrane on the heating roller are different, which in turn allows for adjustment of the preheating time. The preheating temperature is adjusted by means of controlling configuration of the temperatures and number of heating rollers that each membrane sheet passes through. By means of properly arranging the number and positions of the guide rollers, the preheating processes of different membrane sheets do not affect each other, achieving strong operability, high controllability and easy maintenance, and ensuring uniformity of preheating, improving the bonding force of the composite positive electrode sheet, and preventing powder from shedding during a charge and discharge cycle of a battery.

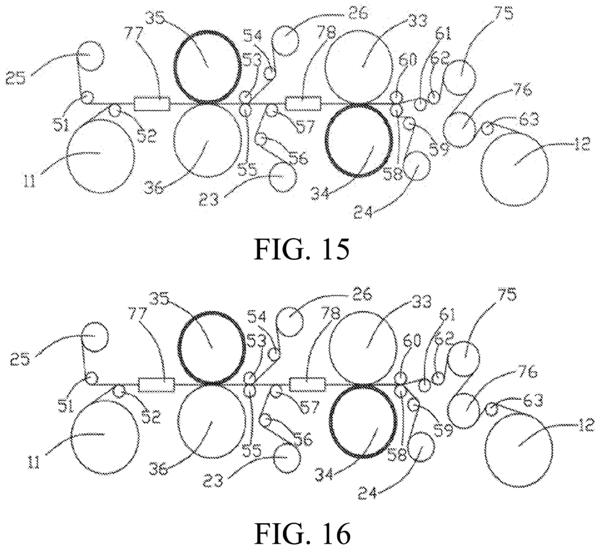

Another aspect of the present application provides a preparation method for a composite electrode sheet, so as to improve compositing effects of a composite electrode sheet and a solid electrolyte membrane by a dry process. Referring to FIGs. 15-16, a preparation apparatus for a composite electrode sheet for preparing the composite electrode sheet of the present application comprises an electrode sheet unwinding mechanism, a first solid electrolyte membrane unwinding mechanism, a second solid electrolyte membrane unwinding mechanism, a first heater, a second heater, a first shaping roller assembly, a second shaping roller assembly, and a composite electrode sheet winding mechanism. The first shaping roller assembly is located upstream of the second shaping roller assembly, and at least one of the first shaping roller assembly and the second shaping roller assembly is configured as an elastic rolling assembly. The elastic rolling assembly comprises a rigid roller, and an elastic roller having a lower hardness than that of the rigid roller. A connecting line between axes of the rigid roller and the elastic roller is perpendicular to a conveying direction of an electrode sheet. That is, the conveying direction of the electrode sheet is perpendicular to a plane in which the axes of the rigid roller and the elastic roller are located. However, this is not a limitation, and the conveying direction of the electrode sheet may be adaptively adjusted according to actual production needs.

In some implementations, both the first shaping roller assembly and the second shaping roller assembly include two rollers symmetrically disposed at two sides of the electrode sheet. A connecting line between axes of these two rollers is perpendicular to the conveying direction of the electrode sheet, that is, a plane in which the axes of the two rollers of each shaping roller assembly are located is perpendicular to the conveying direction of the electrode sheet.

Optionally, the first shaping roller assembly comprises a rigid roller and a flexible roller; the second shaping roller assembly comprises two rigid rollers.

Or, both the first shaping roller assembly and the second shaping roller assembly comprise a rigid roller and an elastic roller.

Or, the first shaping roller assembly comprises two rigid rollers; the second shaping roller assembly comprises a rigid roller and an elastic roller.

Preferably, both the first shaping roller assembly and the second shaping roller assembly comprise a rigid roller and an elastic roller. A solid electrolyte membrane and the electrode sheet are separately unwound and conveyed, and pass through a gap between the rigid roller and the elastic roller of the first shaping roller assembly, and a gap between the rigid roller and the elastic roller of the second shaping roller assembly. For example, as shown in FIG. 15, the first shaping roller assembly comprises a first rigid roller 36, and a first elastic roller 35 disposed opposite to the first rigid roller 36, the first elastic roller 35 being located at the side of a first solid electrolyte membrane distant from the electrode sheet; the second shaping roller assembly comprises a second rigid roller 33, and a second elastic roller 34 disposed opposite to the second rigid roller 33, the second elastic roller 34 being located at the side of a second solid electrolyte membrane distant from the electrode sheet.

The first solid electrolyte membrane and the electrode sheet are preheated before entering the first shaping roller assembly. The first solid electrolyte membrane and the electrode sheet will soften after preheating compared to before preheating, so that the ductility of both the first solid electrolyte membrane and the electrode sheet is increased. Thus, when the first shaping roller assembly rolls the first solid electrolyte membrane and the electrode sheet, the first solid electrolyte membrane and the electrode sheet are more tightly interlocked, improving bonding strength therebetween and further improving compositing effects thereof. Similarly, the second solid electrolyte membrane and the composite membrane sheet are heated before entering the second shaping roller assembly, which can also improve compositing effects between the second solid electrolyte membrane and the composite membrane sheet, thereby obtaining a composite electrode sheet having better compositing effects.

Preferably, when a substrate is provided on the solid electrolyte membrane, the substrate covers the side of the solid electrolyte membrane distant from the electrode sheet.

As one implementation, a first substrate is separated after the electrode sheet and the first solid electrolyte membrane are rolled by means of the first shaping roller assembly, to obtain the composite membrane sheet.

Preferably, a first substrate winding mechanism is provided between the first shaping roller assembly and the second shaping roller assembly to separate the first substrate from the composite membrane sheet, so as to improve heating effects of the second solid electrolyte membrane in the subsequent second heater, and to improve compositing effects between the composite membrane sheet and the second solid electrolyte membrane. The first substrate winding mechanism is located at the same side of the electrode sheet unwinding mechanism as the first solid electrolyte membrane unwinding mechanism, and is used to receive the substrate covering the side of the first solid electrolyte distant from the electrode sheet.

After the first solid electrolyte membrane is composited with the electrode sheet, the substrate is preferably separated from the composite membrane sheet by means of a substrate separation apparatus. In this way, the composite membrane sheet is protected from an impact of the substrate upon entering the second heater.

When a second substrate needs to be separated after the composite membrane sheet and the second solid electrolyte membrane are rolled by means of the second shaping roller assembly to obtain the composite electrode sheet, the second substrate is separated from the composite electrode sheet by means of a second substrate winding mechanism disposed downstream of the second shaping roller assembly. The second substrate winding mechanism and the first substrate winding mechanism are located at two sides of the electrode sheet unwinding mechanism. More specifically, the second substrate winding mechanism and the first substrate winding mechanism are located at two sides of a transfer surface of the electrode sheet, and the second substrate winding mechanism is used to receive the substrate covering the side of the second solid electrolyte distant from the electrode sheet. During the separation process, the first substrate winding mechanism and the second substrate winding mechanism will provide tension to the first substrate and the second substrate, respectively, so that the first substrate and the second substrate are separated from the composite membrane sheet or the composite electrode sheet, and complete an action of winding a substrate when necessary.

Optionally, the first substrate winding mechanism is located between the first shaping roller assembly and the second shaping roller assembly.

Or, both the first substrate winding mechanism and the second substrate winding mechanism are located downstream of the second shaping roller assembly, and are symmetrically disposed at two sides of the composite electrode sheet winding mechanism.

In some implementations, a heating apparatus may be provided inside the rigid rollers of the first shaping roller assembly and the second shaping roller assembly, so as to improve compositing effects. The elastic roller may be optionally provided with a heating apparatus inside.

The electrode sheet unwinding mechanism is located upstream of the first shaping roller assembly and the first heater, and is used to unwind the electrode sheet, then convey the electrode sheet so that the electrode sheet reaches the first heater and is heated, and continue to convey the heated electrode sheet to the gap in the middle of the first shaping roller assembly.

The first solid electrolyte membrane unwinding mechanism is located upstream of the first shaping roller assembly and the first heater, and more specifically between the electrode sheet unwinding mechanism and the first heater. The first solid electrolyte membrane unwinding mechanism is used to unwind the first solid electrolyte membrane, then convey the first solid electrolyte membrane so that the first solid electrolyte membrane reaches the first heater and is heated, and continue to convey the heated first solid electrolyte membrane to the gap in the middle of the first shaping roller assembly.

The second solid electrolyte membrane unwinding mechanism is located downstream of the first shaping roller assembly, and more specifically between the first shaping roller assembly and the second heater. The second solid electrolyte membrane unwinding mechanism is used to unwind the second solid electrolyte membrane, then convey the second solid electrolyte membrane so that the second solid electrolyte membrane reaches the second heater and is heated, and continue to convey the heated second solid electrolyte membrane to the gap in the middle of the second shaping roller assembly.

The first heater is located between the electrode sheet unwinding mechanism and the first shaping roller assembly, and more specifically between the first solid electrolyte membrane unwinding mechanism and the first shaping roller assembly, and is used to heat the electrode sheet and/or the first solid electrolyte membrane.

Internal channels of the first heater and the second heater are parallel to a travel direction of the electrode sheet. In other words, movement directions of the electrode sheet and/or the first solid electrolyte membrane and/or the second solid electrolyte membrane remain consistent throughout the entire process, from entering the first heater/second heater to leaving the first heater/second heater. This heating method reduces relative displacement of the electrode sheet, the first solid electrolyte membrane and the second solid electrolyte membrane during movement, and to a certain extent ensures compositing effects of the electrode sheet, the first solid electrolyte membrane and the second solid electrolyte membrane.

It can be appreciated that the present application preheats the electrode sheet and the solid electrolyte membrane by means of providing the first heater and the second heater. The present application does not impose particular limitations on the types and structures of the first heater and the second heater. As one illustrative example, a path in which the first heater heats the electrode sheet and the first solid electrolyte membrane is the same as the travel direction of the electrode sheet, so as to reduce unnecessary relative displacement between the electrode sheet and the first solid electrolyte membrane during the heating process.

In some implementations, the first heater and the second heater employ forced-air heating, radiant heating, and contact heating. One or more support rollers may be provided inside the first heater and the second heater to provide support for the electrode sheet and/or the first solid electrolyte membrane, so that the electrode sheet and/or the first solid electrolyte membrane can pass through the first heater and the second heater more smoothly, and be heated more evenly.

Preferably, channels of the first heater and the second heater are provided with a heat-insulating material, to prevent heat loss and further improve heating effects.

In some implementations, temperatures of the first heater and the second heater may be adjusted as needed. Preferably, the temperatures of the first heater and the second heater are higher than the softening temperatures of the electrode sheet and the solid electrolyte membrane.

It can be appreciated that the aforementioned softening temperatures of the electrode sheet and the solid electrolyte membrane refer to temperatures above which a surface hardness of the electrode sheet or the solid electrolyte changes, and the electrode sheet and the solid electrolyte membrane form a complete composite structure under the action of a rolling pressure.

The second heater is located between the first shaping roller assembly and the second shaping roller assembly, and is used to heat the second solid electrolyte membrane.

In some implementations, one or more support rollers may be provided inside the first heater and the second heater, to provide support for the composite membrane sheet and/or the second solid electrolyte membrane.

It can be appreciated that longitudinal lengths of the first heater and the second heater in the travel direction of the electrode sheet are adjustable, thereby meeting requirements of different heating times.

In some implementations, the first heater and the second heater further comprise a sensor for measuring an internal temperature.

The composite electrode sheet winding mechanism is located downstream of the second shaping roller assembly, and is used to provide tension to the electrode sheet in the movement direction of the electrode sheet and to receive the composite electrode sheet obtained after rolling by the second shaping roller assembly to complete a winding action.

In some implementations, the preparation apparatus for a composite electrode sheet further comprises a first substrate winding mechanism and a second substrate winding mechanism.

In some implementations, the preparation apparatus for a composite electrode sheet further comprises a cooling roller located downstream of the second shaping roller assembly, which is used to cool the composite electrode sheet. The present application provides the cooling roller to reduce the temperature of the composite electrode sheet, so that the composite electrode sheet can be continuously wound, improving production efficiency. Furthermore, the cooling roller also provides a shaping effect for the composite electrode sheet.

The number of cooling rollers may be one or more, preferably two.

Preferably, the cooling roller of the present application is a contact cooling roller, which has a better cooling effect.

In some implementations, the cooling roller further comprises a sensor for measuring a surface temperature of the composite electrode sheet.

In some implementations, the preparation apparatus for a composite electrode sheet further comprises a guide roller.

Optionally, the guide roller is located between the first solid electrolyte membrane unwinding mechanism and the first shaping roller assembly, to provide guidance for the first solid electrolyte membrane and/or the electrode sheet. As shown in FIG. 15, the first solid electrolyte membrane departs from the first solid electrolyte membrane unwinding mechanism 25, passes through a first guide roller 51, and then at a second guide roller 52 meets and is laminated on the electrode sheet departing from the electrode sheet unwinding mechanism 11. The electrode sheet and the first solid electrolyte membrane together pass through the first heater 77 and then reach the first shaping roller assembly, to undergo first compositing.

By means of adjusting relative positions between the guide roller and the first heater, in one aspect, this can ensure that the electrode sheet and the first solid electrolyte membrane are laminated before being heated together, and further ensure that temperatures of the electrode sheet and the first solid electrolyte membrane are consistent during roll compositing, avoiding a phenomenon of high defect rates due to issues such as cracking caused by temperature differences during rolling. In another aspect, this can ensure that the travel direction of the electrode sheet and/or the first solid electrolyte membrane is always parallel to the first heater. In this case, the movement process of the electrode sheet and/or the first solid electrolyte membrane is more stable, and the possibility of relative displacement is also reduced.

Optionally, the guide roller is located between the first shaping roller assembly and the first substrate winding mechanism 26, to provide guidance for the first substrate of the first solid electrolyte membrane separated from the composite electrode sheet. As shown in FIG. 15, after the electrode sheet and the first solid electrolyte membrane are composited at the first shaping roller assembly to form the composite membrane sheet, the composite membrane sheet continues to move toward the second shaping roller assembly. The first substrate is subjected to a force transmitted by the first substrate winding mechanism 26 via a third guide roller 53 and a fourth guide roller 54, causing the first substrate to separate from the composite membrane sheet at the third guide roller 53, and the first substrate winding mechanism 26 completes a winding action.

Optionally, the guide roller is located between the second solid electrolyte membrane unwinding mechanism 23 and the second shaping roller assembly, and is used to provide guidance for the second solid electrolyte membrane and/or the composite membrane sheet. As shown in FIG. 15, the second solid electrolyte membrane departs from the second solid electrolyte membrane unwinding mechanism 23, passes through a sixth guide roller 56, and then at a seventh guide roller 57, meets and is laminated on the composite membrane. After passing through a fifth guide roller 55, the sixth guide roller 56, and the seventh guide roller 57, the composite membrane sheet and the second solid electrolyte membrane reach the second heater 78 together. The composite membrane sheet and the second solid electrolyte membrane pass through the second heater 78 together and then reach the second shaping roller assembly, to undergo second compositing.

Optionally, the guide roller is located between the second shaping roller assembly and the second substrate winding mechanism 24, to provide guidance for the second substrate of the second solid electrolyte membrane separated from the composite electrode sheet. As shown in FIG. 15, after the composite membrane sheet and the second solid electrolyte membrane are composited at the second shaping roller assembly to form the composite electrode sheet, the composite electrode sheet continues to move toward the composite electrode sheet winding mechanism 12. The second substrate is separated from the composite electrode sheet at a roller pair formed by an eighth guide roller 58 and a tenth guide roller 60. The second substrate is moved toward the second substrate winding mechanism 24 by a force transmitted by the second substrate winding mechanism 24 via a ninth guide roller 59, and the second substrate winding mechanism completes a winding action.

Optionally, the guide roller is located between the second shaping roller assembly and the composite electrode sheet winding mechanism 12, to provide guidance for the composite electrode sheet. As shown in FIG. 15, after the composite membrane sheet and the second solid electrolyte membrane are composited at the second shaping roller assembly to form the composite electrode sheet, the composite electrode sheet continues to move toward the composite electrode sheet winding mechanism 12. The composite electrode sheet is separated from the second substrate at the roller pair formed by the eighth guide roller 58 and the tenth guide roller 60, and reaches a first cooling roller 75 after direction adjustment by an eleventh guide roller 61 and a twelfth guide roller 62. After rotating around the first cooling roller 75 by a specific angle, the composite electrode sheet reaches a second cooling roller 76, and rotates around the second cooling roller 76 by a specific angle and then advances to the composite electrode sheet winding mechanism 12, to complete an action of winding the composite electrode sheet. If necessary, a thirteenth guide roller 63 may further be provided between the second cooling roller 76 and the composite electrode sheet winding mechanism 12, to adjust the moving direction of the composite electrode sheet.

In some implementations, the preparation apparatus for a composite electrode sheet further comprises a tension control apparatus, an unwinding correction assembly and an electrode sheet static elimination assembly, arranged in sequence along an unwinding path of the preparation device. The tension control apparatus comprises a plurality of tension control elements disposed upstream of the rolling device, which are used to separately control unwinding tension of the positive electrode sheet and the solid electrolyte membrane. Optionally, the tension control apparatus comprises a plurality of tension control elements disposed downstream of the rolling apparatus, which are used to separately control winding tension of the composite positive electrode sheet and the substrate. The unwinding correction assembly can correct unwinding and running paths of the electrode sheet, the solid electrolyte membrane, etc., so that initial feed lines are kept at the same level. A winding and unwinding mechanism for a main material employs single-station correction, and winding and unwinding mechanisms for the remaining materials employ a cantilever type, all of which are provided with correction. The static elimination assembly performs static elimination treatment on both sides of the electrode sheet, and can reduce friction between the electrode sheet and the conveyor roller. It can be appreciated that, without departing from the inventive concept of the present application, known functional assemblies or structures may be used in the present application throughout the entire process from winding, to rolling, and unwinding.

In some implementations, the width of the first shaping roller assembly and the second shaping roller assembly is 500-800 mm, including but not limited to 500 mm, 550 mm, 600 mm, 650 mm, 700 mm, 750 mm, or 800 mm, preferably 550-650 mm.

In some implementations, the diameter of the first shaping roller assembly and the second shaping roller assembly is 300-500 mm, including but not limited to 300 mm, 350 mm, 400 mm, 450 mm, or 500 mm, preferably 350-450 mm.

In some implementations, a mechanical speed of the shaping roller assembly is 5-60 m/min, including but not limited to 5 m/min, 10 m/min, 20 m/min, 30 m/min, 40 m/min, 45 m/min, 50 m/min, or 60 m/min.

It can be appreciated that the higher the belt speed of the entire preparation apparatus for a composite electrode sheet, the higher production efficiency is. However, excessively high speeds can easily cause problems such as breakage in the belt-carried electrode sheet and solid electrolyte membrane. The present application does not have particular requirements for residence time of the electrode sheet and the solid electrolyte membrane in the gap of the shaping roller assembly. Without departing from the inventive concept of the present application, any adjustments to the residence time that do not require the exercise of creative effort should be construed as falling within the scope of protection of the present application.

In some implementations, linear speeds of the first shaping roller assembly and the second shaping roller assembly are kept consistent, and an unwinding linear speed of the electrode sheet unwinding mechanism 11 and a winding linear speed of the composite electrode sheet winding mechanism 12 are also kept consistent, thereby improving action consistency of the entire rolling preparation process of the composite electrode sheet and enhancing uniformity of the composite electrode sheet.

Referring to FIGs. 15-16, in conjunction with the structure of the preparation apparatus for a composite electrode sheet, the preparation method for a composite electrode sheet of the present application comprises the following steps: An electrode sheet is unwound by means of the electrode sheet unwinding mechanism 11 and conveyed to the composite electrode sheet winding mechanism 12, and at the same time, a first solid electrolyte membrane is unwound by means of the first solid electrolyte membrane unwinding mechanism 25. The electrode sheet and the first solid electrolyte membrane first reach the first heater and are heated, and then the electrode sheet and the first solid electrolyte membrane continue to advance to the first shaping roller assembly, and form a composite membrane sheet under a rolling action of the first shaping roller assembly. The composite membrane sheet moves toward the second shaping roller assembly, and at the same time, the second solid electrolyte membrane unwinding mechanism unwinds a second solid electrolyte membrane. The composite membrane sheet and the second solid electrolyte membrane reach the second heater, where the second solid electrolyte membrane is heated before reaching the second shaping roller assembly. Under the action of the second shaping roller assembly, a composite electrode sheet is formed, which is wound by the composite electrode sheet winding mechanism.

The present application divides a process of laminating solid electrolyte membranes on both sides of the electrode sheet into two steps by means of the first shaping roller assembly and the second shaping roller assembly. Different process temperatures may be configured according to characteristics of the solid electrolyte membranes on both sides of the electrode sheet, improving lamination effects of the electrode sheet with the solid electrolyte membranes.

In some implementations, at least one of the first shaping roller assembly and the second shaping roller assembly is configured as an elastic rolling assembly. The elastic rolling assembly comprises a rigid roller, and an elastic roller having a lower hardness than that of the rigid roller. A connecting line between axes of the rigid roller and the elastic roller is perpendicular to the conveying direction of the electrode sheet.

In some implementations, the solid electrolyte membrane is formed independently, that is, the solid electrolyte membrane can be formed without the aid of a substrate and maintain integrity of the membrane. In this case, after the electrode sheet and the first solid electrolyte membrane enter the gap of the first shaping roller assembly, a composite membrane sheet is obtained under the pressure of the first shaping roller assembly. After the composite membrane sheet and the second solid electrolyte membrane advance into the gap of the second shaping roller assembly, a composite electrode sheet is obtained under the rolling action of the second shaping roller assembly. Finally, the composite electrode sheet is wound by the electrode sheet winding mechanism 12.

In some implementations, the solid electrolyte membrane is covered by a substrate, to provide support for the solid electrolyte membrane. When the first solid electrolyte membrane unwinding mechanism 25 conveys the first solid electrolyte membrane, a first substrate is located at the side of the first solid electrolyte membrane distant from the electrode sheet. When the second solid electrolyte membrane unwinding mechanism 23 conveys the second solid electrolyte membrane, a second substrate is located at the side of the second solid electrolyte membrane distant from the electrode sheet. After lamination of the first solid electrolyte membrane and the electrode sheet is completed, the first substrate is separated from the composite membrane sheet. After lamination of the second solid electrolyte membrane and the composite membrane sheet is completed, the second substrate is separated from the composite electrode sheet. Specifically, the first substrate may be received by means of the first substrate winding mechanism 26 located at the same side of the electrode sheet as the first solid electrolyte membrane unwinding mechanism 25, the first substrate winding mechanism 26 being located between the first shaping roller assembly and the second shaping roller assembly. The second substrate is received by means of the second substrate winding mechanism 24 located at the same side of the electrode sheet as the second solid electrolyte membrane unwinding mechanism 23, the second substrate winding mechanism 24 being located between the second shaping roller assembly and the composite electrode sheet winding mechanism 12.

In some implementations, after the second shaping roller assembly has finished rolling and before the composite electrode sheet winding mechanism has started winding, a thickness measuring mechanism is used to inspect the composite electrode sheet, which, after passing the inspection, is then wound by the composite electrode sheet winding mechanism.

Referring to FIG. 14, FIG. 14 shows a flowchart of a method for preparing a composite electrode sheet using the foregoing preparation apparatus for a composite electrode sheet, comprising:
S11: Heat the electrode sheet and the first solid electrolyte membrane by means of the first heater;
S12: Composite the heated electrode sheet and first solid electrolyte membrane by means of the first shaping roller assembly, to obtain a composite membrane sheet;
S13: Heat a second solid electrolyte membrane by means of the second heater;
S14: Composite the heated second solid electrolyte membrane and the composite membrane sheet by means of the second shaping roller assembly, to obtain the composite electrode sheet.

At least one of the first shaping roller assembly and the second shaping roller assembly is configured as an elastic rolling assembly. The elastic rolling assembly comprises a rigid roller, and an elastic roller having a lower hardness than that of the rigid roller, the elastic roller facing the first solid electrolyte membrane or the second solid electrolyte membrane to perform compositing. During the rolling process, the elastic roller can adjust stress on the electrode sheet and the solid electrolyte membrane, so that the solid electrolyte membrane can better cover the electrode sheet in the composite electrode sheet after rolling. Furthermore, the lateral thickness of the electrode sheet tends to be uniform after rolling.

It can be appreciated that, in step S13, while the second solid electrolyte membrane is being heated by the second heater, the second heater can also heat the composite membrane sheet formed by rolling the electrode sheet and the first solid electrolyte membrane. It can be appreciated that in the rolled composite electrode sheet, solid electrolyte layers are composited on the electrode sheet. The solid electrolyte membranes being located at two sides of the electrode sheet means that solid electrolyte membranes are composited on both sides of the electrode sheet by rollers.

The compositing process of the present application is carried out under dry conditions. The dry conditions in the present application are different from those of a conventional wet electrode preparation method. Conventional wet preparation of composite electrodes involves first preparing a solid electrolyte slurry and then coating the solid electrolyte slurry onto an electrode sheet, or vice versa, preparing an electrode slurry and then coating the electrode slurry onto a solid electrolyte membrane. The preparation process of the present application does not use solvents, eliminating the need for cumbersome subsequent drying steps, and effectively reducing production costs.

It can be appreciated that the dry process refers to preparation of related electrode sheets and electrolyte membranes without the addition of solvents. Technical solutions involving trace amounts of liquid lubricants or other liquid additives that may be used during a rolling process should still be within the scope of protection of the present application.

In some implementations, both the electrode sheet and the solid electrolyte membrane are prepared by means of a dry process.

In some implementations, at least one of the electrode sheet and the solid electrolyte membrane is prepared by means of a dry process.

In some implementations, both the electrode sheet and the solid electrolyte membrane are prepared by means of a wet process.

It can be appreciated that electrode sheet and the solid electrolyte membrane are preferably prepared under dry conditions, so that solvents are no longer needed in the entire electrode preparation process.

It can be appreciated that the preparation processes of the electrode sheet and the solid electrolyte membrane are independent of the preparation process of the composite electrode. That is, if a wet process is used, the electrode sheet undergoes coating, drying, and rolling processes.

In some implementations, the electrode sheet is a positive electrode sheet. In some implementations, the electrode sheet is a negative electrode sheet. In some implementations, the solid electrolyte membrane is composited on one or both sides of the positive electrode sheet or the negative electrode sheet. Material compositions, preparation methods and related performance parameters of the positive electrode sheet, the negative electrode sheet and the solid electrolyte membrane have been described in detail in the above embodiments of the present application, and will not be repeated here.

As mentioned in the Background section, during dry preparation, due to issues of high strength and poor deformation resistance of traditional shaping roller assemblies, in order to facilitate smoothness of a rolling process, an electrode sheet is thinned at the edges, to form a structure that is thick in the middle and thin at two ends. As shown in FIG. 2, due to a non-uniform lateral thickness of the electrode sheet 1, when the solid electrolyte membrane 2 is laminated on the electrode sheet 1, an edge region of the electrode sheet 1 remains separated from the solid electrolyte membrane. When a rolling apparatus performs roll compositing on the electrode sheet 1 and the solid electrolyte membrane 2, rolling forces of a steel roller are different in a middle region and the edge region of the electrode sheet 1, making it difficult for the electrode sheet 1 and the solid electrolyte membrane 2 to be tightly composited, i.e., ineffective compositing, which will cause the lateral compaction density of the composite electrode sheet to be non-uniform, and the uniformity of the composite electrode sheet is poor. In severe cases, the electrode sheet may crush, consequently producing a huge impact on the safety performance and quality of a lithium-ion battery.

The preparation method of the present application utilizes cushioning provided by the elastic roller in the elastic rolling assembly during rolling of the shaping roller assembly, so that the solid electrolyte membrane can better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling, as shown in FIG. 3. This, to a certain extent, avoids an adverse impact on the roll compositing process due to the phenomenon that the electrode sheet 1 is thick in the middle and thin at two ends, protects the electrode sheet 1 from being crushed, and can further cause the active material layer in the electrode sheet 1 to better bond to the solid electrolyte membrane 2. In addition, during the rolling process of the shaping roller assembly, the electrode sheet 1 and the solid electrolyte membrane 2 can be pressed evenly, improving the compaction density of the composite electrode sheet, ensuring the thickness uniformity of the composite electrode sheet, easing the phenomenon of the electrode sheet 1 being thick in the middle and thin at two ends, improving the quality of continuous rolling, and allowing large-scale production.

Applying a solid electrolyte coating to a surface of an electrode, especially a surface of a high-capacity positive electrode, can effectively improve the safety performance of a battery. However, due to limitations in energy density, the thickness of a solid electrolyte membrane is usually quite small. Compared to an electrode sheet prepared by a dry process, the thickness of the solid electrolyte membrane is an order of magnitude smaller, which renders the solid electrolyte membrane prone to cracking during preparation a composite conductive electrode sheet by a dry process.

In some implementations, the solid electrolyte membrane is formed independently, meaning that the solid electrolyte membrane may be formed without the aid of a substrate and maintain the integrity of the membrane.

In some implementations, the side of the solid electrolyte membrane distant from the electrode sheet is covered by a substrate, and a bonding force between the substrate and the solid electrolyte membrane is less than a bonding force between the solid electrolyte membrane and the electrode sheet. After rolling, at least part of the solid electrolyte is transferred to the electrode sheet and separated from the substrate.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film. The present application further provides a composite electrode sheet, which is prepared according to the preparation method for a composite electrode sheet provided above.

As one implementation, the first solid electrolyte membrane and the second solid electrolyte membrane have different compositions.

Furthermore, the temperature of the first heater and the temperature of the second heater are different, and/or the pressures of the first shaping roller and the second shaping roller are different.

It can be appreciated that the compositions of the first solid electrolyte membrane and the second solid electrolyte membrane being different may be understood as the material systems or structural compositions of the solid electrolyte membranes being different. This difference leads to different compositing processes for the first solid electrolyte membrane and the second solid electrolyte membrane. By means of using two compositing processes one after another, the present application can configure different compositing processes for different compositing performances of the first solid electrolyte membrane and the second solid electrolyte membrane with the positive electrode sheet.

In some implementations, the elastic roller is configured to cover the elastic member around the outside the rigid roller. When the elastic roller rotates, the elastic member rotates together with the elastic roller. Furthermore, when the shaping roller assembly rolls the first solid electrolyte membrane, the electrode sheet and the second solid electrolyte membrane, the elastic member provides a cushioning function, so that the first electrolyte membrane and the second solid electrolyte membrane can better coat both sides of the electrode sheet, and uniformity of the lateral thickness of the electrode sheet after rolling is improved.

It can be appreciated that, during the production process of the electrode sheet, edges of the electrode sheet are usually thinned in order to ensure smooth progress of a subsequent rolling process. However, the existence of a thinned region in the electrode sheet can affect lamination between the solid electrolyte membrane and the electrode sheet. If the electrode sheet and the solid electrolyte membrane cannot form effective compositing in the thinned region, the resulting composite electrode sheet is prone to cracking at the edge region.

Surprisingly, the preparation apparatus for a composite electrode sheet of the present application utilizes cushioning provided by the elastic member during rolling, to enable the solid electrolyte membrane to better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling.

The elastic member is made of a flexible material. Under pressure, the flexible material undergoes elastic deformation. The slight elastic deformation makes the thicknesses of the middle region and the thinned region of the electrode sheet tend to be consistent under pressure, allowing better lamination with the solid electrolyte membrane.

A yield limit of the elastic member satisfies: when the solid electrolyte membrane and the electrode sheet pass through the gap between the shaping rollers, the solid electrolyte membrane and the electrode sheet undergo plastic deformation, and the elastic member undergoes elastic deformation.

Elastic deformation refers to a change in relative positions of points in a solid caused by an external force. When the external force is removed, the solid returns to an original shape, which is called elastic deformation.

When an object is subjected to a large force beyond an elastic limit, the object may break or deform, and fail to return to an original shape. This phenomenon is called plastic deformation.

In some implementations, the width of the elastic member is greater than or equal to a minimum value of the width of the solid electrolyte membrane or the electrode sheet.

In some implementations of the present application, the flexible material is a polymer. The present application does not impose special limitations on the material of the polymer. Exemplarily, the polymer may be a plastic such as polytetrafluoroethylene, polyethylene terephthalate, polypropylene or polyacrylonitrile, or a rubber such as Hypalon rubber, silicone rubber or fluororubber, or an elastic material such as silicone, that can undergo a certain degree of deformation. Highly thermally resistant hard plastics are preferred.

The present application does not impose particular limitations on the thickness of the elastic member. Any necessary adjustments to the thickness of the elastic member without departing from the inventive concept of the present application can be construed as being within the scope of protection of the present application.

In some implementations, the elastic roller may also be configured to partially cover the elastic member around the outside of the rigid roller, so that the elastic member is located between the first or second solid electrolyte membrane and the shaping roller assembly during roll compositing by the shaping roller assembly. Exemplarily, the first elastic roller 35 may be replaced by a rigid roller in combination with a protective film made of a flexible material. Specifically, the protective film may be unwound by means of a protective film unwinding mechanism located between the first heater 77 and the first elastic roller 35, to pass through the gap in the middle of the first shaping roller assembly. In the first shaping roller assembly, the rigid roller, the protective film, the first solid electrolyte membrane, the electrode sheet and the rigid roller are distributed in sequence from top to bottom. During rolling, the protective film, rather than the elastic member in the first elastic roller, provides a cushioning function.

The present application further provides a lithium-ion battery, which comprises the composite electrode sheet provided above.

In some implementations, an electrode sheet and a solid electrolyte membrane may also be procured.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

LLZO was selected as a solid electrolyte, polytetrafluoroethylene was selected as a binder, and LiPF₆ was selected as a lithium salt. The substances were mixed and then stirred using a high-speed stirrer, to obtain a solid electrolyte mixture. The mixture was then subjected to fiberization treatment by means of air jet milling to obtain a fiberized solid electrolyte mixture, and the fiberized solid electrolyte mixture was then rolled to obtain a solid electrolyte membrane.

### 3. Preparation of composite positive electrode sheet

Using the preparation apparatus for a composite electrode sheet having a protective film as shown in FIG. 15, the positive electrode sheet was composited with the first and second solid electrolyte membranes. The elastic member was Hypalon rubber, and the first heater in a flat plate heater was a radiant heater.

The first solid electrolyte membrane departed from the first solid electrolyte membrane unwinding mechanism 25, passed through the first guide roller 51, and then at the second guide roller 52 met and was laminated on the electrode sheet departing from the electrode sheet unwinding mechanism 11. The electrode sheet and the first solid electrolyte membrane together passed through the first heater 77 and reached the first shaping roller assembly to undergo first compositing, the electrode sheet being farther away from the first elastic roller 35 than the first solid electrolyte membrane. After completion of compositing, a first substrate was subjected to a force transmitted by the first substrate winding mechanism 26 via the third guide roller 53 and the fourth guide roller 54, causing the first substrate to separate from the composite membrane sheet between the third guide roller 53 and the fifth guide roller 55, and the first substrate winding mechanism 26 completed a winding action.

The second solid electrolyte membrane departed from the second solid electrolyte membrane unwinding mechanism 23, passed through the sixth guide roller 56, and then, at the seventh guide roller 57, met and was laminated on the composite membrane sheet. The composite membrane sheet departed from the first shaping roller assembly, separated from the first substrate, and was then laminated on the second solid electrolyte membrane at the seventh guide roller 57. The electrode sheet and the second solid electrolyte membrane passed through the second heater 78 together and then reached the second shaping roller assembly to undergo second compositing, the composite membrane sheet being farther away from the second elastic roller 34 than the second solid electrolyte membrane. After completion of compositing, a second substrate was subjected to a force transmitted by the second substrate winding mechanism 24 via the ninth guide roller 59 and the eighth guide roller 58, separated from the composite electrode sheet at the eighth guide roller 58, and finally wound by the second substrate winding mechanism 24. As shown in FIG. 15, the eighth guide roller 58 was located close to a traveling route of the composite electrode sheet, and the second substrate had an S-shaped path between the eighth guide roller 58 and the ninth guide roller 59. The composite electrode sheet was adjusted in direction by the eleventh guide roller 61 and the twelfth guide roller 62, then cooled by the first cooling roller 75 and the second cooling roller 76, and finally wound by the composite electrode sheet winding mechanism 12.

The temperatures of the first shaping roller and the first heater were 160°C, and the temperatures of the second shaping roller and the second heater were 180°C.

The prepared composite electrode sheet had no cracks on the surface, and the overall thickness of the composite electrode sheet was 160 µm.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

A pre-selected solid electrolyte material was selected, and polytetrafluoroethylene was used as a binder. The substances were mixed and then stirred using a high-speed stirrer, to obtain a solid electrolyte mixture. The mixture was then subjected to fiberization treatment by means of mechanical stirring to obtain a fiberized solid electrolyte mixture, and the fiberized solid electrolyte mixture was then rolled to obtain a solid electrolyte membrane.

Raw materials for a first solid electrolyte membrane were LLZO and PTFE particles, a stirring speed in the fiberization process was 12000 rpm, and a preset thickness was 15 µm. Raw materials for a second solid electrolyte membrane were LLZO and PTFE fiber membranes, a stirring speed in the fiberization process was 8000 rpm, and a preset thickness was 17 µm.

### 3. Preparation of composite positive electrode sheet

Using the preparation apparatus for a composite electrode sheet having a protective film as shown in FIG. 16, the positive electrode sheet was composited with the first and second solid electrolyte membranes. The elastic member was Hypalon rubber. Differences from the previous embodiment lie in a separation angle not being controlled when the first substrate was separated from the composite membrane sheet and when the second substrate was separated from the composite electrode sheet.

The first solid electrolyte membrane departed from the first solid electrolyte membrane unwinding mechanism 25, passed through the first guide roller 51, and then at the second guide roller 52 met and was laminated on the electrode sheet departing from the electrode sheet unwinding mechanism 11. The electrode sheet and the first solid electrolyte membrane together passed through the first heater 77 and reached the first shaping roller assembly to undergo first compositing, the electrode sheet being farther away from the first elastic roller 35 than the first solid electrolyte membrane. After completion of compositing, the first substrate was subjected to a force transmitted by the first substrate winding mechanism 26 via the third guide roller 53 and the fourth guide roller 54, causing the first substrate to separate from the composite membrane sheet between the third guide roller 53 and the fifth guide roller 55, and the first substrate winding mechanism 26 completed a winding action.

The second solid electrolyte membrane departed from the second solid electrolyte membrane unwinding mechanism 23, passed through the sixth guide roller 56, and then, at the seventh guide roller 57, met and was laminated on the composite membrane sheet. The composite membrane sheet departed from the first shaping roller assembly, separated from the first substrate, and was then laminated on the second solid electrolyte membrane at the seventh guide roller 57. The electrode sheet and the second solid electrolyte membrane passed through the second heater 78 together and then reached the second shaping roller assembly to undergo second compositing, the composite membrane sheet being farther away from the second elastic roller 34 than the second solid electrolyte membrane. The temperatures of the first shaping roller and the first heater were 160°C, and the temperatures of the second shaping roller and the second heater were 180°C.

After completion of compositing, the second substrate moved together with the composite electrode sheet toward the composite electrode sheet winding mechanism 12. At the same time, the second substrate was subjected to a force transmitted by the second substrate winding mechanism 24 via the ninth guide roller 59 and the eighth guide roller 58, and was separated from the composite electrode sheet at the eighth guide roller 58. After the second substrate passed around the same side of the eighth guide roller 58 and the ninth guide roller 59, the second substrate was finally wound by the second substrate winding mechanism 24. The eighth guide roller 58 was located close to the traveling route of the composite electrode sheet. The composite electrode sheet was cooled by the first cooling roller 75 and the second cooling roller 76, and then wound by the composite electrode sheet winding mechanism 12.

The prepared composite electrode sheet had no cracks on the surface, and the overall thickness of the electrode sheet was 165 µm.

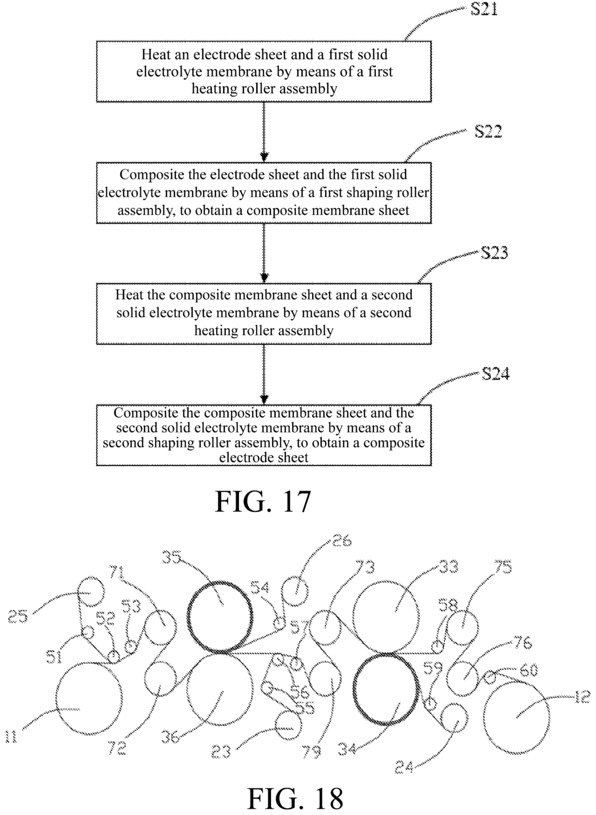

Another aspect of the present application provides a preparation method for a composite electrode sheet so as to improve compositing effects of a composite electrode sheet and a solid electrolyte membrane by a dry process. Referring to FIGs. 18-19, a preparation apparatus for a composite electrode sheet for preparing the composite electrode sheet of the present application comprises an electrode sheet unwinding mechanism, a first solid electrolyte membrane unwinding mechanism, a second solid electrolyte membrane unwinding mechanism, a first heating roller assembly, a second heating roller assembly, a first shaping roller assembly, a second shaping roller assembly, and a composite electrode sheet winding mechanism. The first shaping roller assembly is located upstream of the second shaping roller assembly, and at least one of the first shaping roller assembly and the second shaping roller assembly is configured as an elastic rolling assembly. The elastic rolling assembly comprises a rigid roller, and an elastic roller having a lower hardness than that of the rigid roller. A connecting line between axes of the rigid roller and the elastic roller is perpendicular to a conveying direction of an electrode sheet. That is, the conveying direction of the electrode sheet is perpendicular to a plane in which the axes of the rigid roller and the elastic roller are located. However, this is not a limitation, and the conveying direction of the electrode sheet may be adaptively adjusted according to actual production needs.

In some implementations, both the first shaping roller assembly and the second shaping roller assembly include two rollers symmetrically disposed at two sides of the electrode sheet, and a connecting line between axes of the two rollers is perpendicular to the conveying direction of the electrode sheet.

Optionally, the first shaping roller assembly comprises a rigid roller and a flexible roller; the second shaping roller assembly comprises two rigid rollers.

Or, both the first shaping roller assembly and the second shaping roller assembly comprise a rigid roller and an elastic roller.

Or, the first shaping roller assembly comprises two rigid rollers; the second shaping roller assembly comprises a rigid roller and an elastic roller.

Preferably, both the first shaping roller assembly and the second shaping roller assembly comprise a rigid roller and an elastic roller. For example, as shown in FIG. 18, the first shaping roller assembly comprises a first rigid roller 36, and a first elastic roller 35 disposed opposite to the first rigid roller 36, the first elastic roller 35 being located at the side of a first solid electrolyte membrane distant from the electrode sheet; the second shaping roller assembly comprises a second rigid roller 33, and a second elastic roller 34 disposed opposite to the second rigid roller 33, the second elastic roller 34 being located at the side of a second solid electrolyte membrane distant from the electrode sheet.

The first solid electrolyte membrane and the electrode sheet are preheated before entering the first shaping roller assembly. The first solid electrolyte membrane and the electrode sheet will soften after preheating compared to before preheating, so that the ductility of both the first solid electrolyte membrane and the electrode sheet is increased. Thus, when the first shaping roller assembly rolls the first solid electrolyte membrane and the electrode sheet, the first solid electrolyte membrane and the electrode sheet are more tightly interlocked, improving bonding strength therebetween and further improving compositing effects thereof. Similarly, the second solid electrolyte membrane and the composite membrane sheet are heated before entering the second shaping roller assembly, which can also improve compositing effects between the second solid electrolyte membrane and the composite membrane sheet, thereby obtaining a composite electrode sheet having better compositing effects.

Preferably, when a substrate is provided on the solid electrolyte membrane, the substrate covers the side of the solid electrolyte membrane distant from the electrode sheet.

In some implementations, a first substrate is separated after the electrode sheet and the first solid electrolyte membrane are rolled by the first shaping roller assembly, to obtain the composite membrane sheet.

Preferably, a first substrate winding mechanism is provided downstream between the first shaping roller assembly and the second shaping roller assembly to separate the first substrate from the composite membrane sheet, so as to improve heating effects of the second solid electrolyte membrane in the subsequent second heating roller assembly, and to improve compositing effects between the composite membrane sheet and the second solid electrolyte membrane. The first substrate winding mechanism is located at the same side of the electrode sheet unwinding mechanism as the first solid electrolyte membrane unwinding mechanism, and is used to receive the substrate covering the side of the first solid electrolyte distant from the electrode sheet.

After the first solid electrolyte membrane is composited with the electrode sheet, the substrate is first separated from the composite membrane sheet by means of a substrate separation device. Then, the composite membrane sheet passes through the second heating roller assembly, avoiding an impact of the substrate on the composite membrane sheet when the composite membrane sheet enters the second heating roller assembly.

When a second substrate needs to be separated after the composite membrane sheet and the second solid electrolyte membrane are rolled by means of the second shaping roller assembly to obtain the composite electrode sheet, the second substrate is separated from the composite electrode sheet by means of a second substrate winding mechanism disposed downstream of the second shaping roller assembly. The second substrate winding mechanism and the first substrate winding mechanism are located at two sides of the electrode sheet unwinding mechanism, and the second substrate winding mechanism is used to receive the substrate covering the side of the second solid electrolyte distant from the electrode sheet. During the separation process, the first substrate winding mechanism and the second substrate winding mechanism will provide tension to the first substrate and the second substrate, respectively, so that the first substrate and the second substrate are separated from the composite membrane sheet or the composite electrode sheet, and complete an action of winding a substrate when necessary.

Optionally, the first substrate winding mechanism is located between the first shaping roller assembly and the second shaping roller assembly.

Or, both the first substrate winding mechanism and the second substrate winding mechanism are located downstream of the second shaping roller assembly, and are symmetrically disposed at two sides of the composite electrode sheet winding mechanism.

In some implementations, the elastic roller comprises a rigid roller and an elastic member, the elastic member covering the outside of the rigid roller. When the elastic roller rotates, the elastic member rotates together with the elastic roller. Furthermore, when the shaping roller assembly rolls the first solid electrolyte membrane, the electrode sheet and the second solid electrolyte membrane, the elastic member provides a cushioning function, so that the first electrolyte membrane and the second solid electrolyte membrane can better coat both sides of the electrode sheet, and uniformity of the lateral thickness of the electrode sheet after rolling is improved.

The present application does not impose particular limitations on the thickness of the elastic member. Any necessary adjustments to the thickness of the elastic member without departing from the inventive concept of the present application can be construed as being within the scope of protection of the present application.

In some implementations, the elastic roller may also be configured to comprise a rigid roller and an elastic member, the elastic member covering around the outside of a portion of the rigid roller, so that the elastic member is located between the first or second solid electrolyte membrane and the shaping roller assembly during roll compositing by the shaping roller assembly.

In some implementations, a heating apparatus may be provided inside the rigid rollers of the first shaping roller assembly and the second shaping roller assembly, so as to improve compositing effects. The elastic roller may be optionally provided with a heating apparatus inside.

The electrode sheet unwinding mechanism is located upstream of the first shaping roller assembly and the first heating roller assembly, and is used to unwind the electrode sheet, then convey the electrode sheet so that the electrode sheet reaches the first heating roller assembly and is heated, and continue to convey the heated electrode sheet to a gap in the middle of the first shaping roller assembly.

The first solid electrolyte membrane unwinding mechanism is located upstream of the first shaping roller assembly and the first heating roller assembly, and more specifically between the electrode sheet unwinding mechanism and the first heating roller assembly. The first solid electrolyte membrane unwinding mechanism is used to unwind the first solid electrolyte membrane, then convey the first solid electrolyte membrane so that the first solid electrolyte membrane reaches the first heating roller assembly and is heated, and continue to convey the heated first solid electrolyte membrane to the gap in the middle of the first shaping roller assembly.

The second solid electrolyte membrane unwinding mechanism is located downstream of the first shaping roller assembly, and more specifically between the first shaping roller assembly and the second heating roller assembly. The second solid electrolyte membrane unwinding mechanism is used to unwind the second solid electrolyte membrane, then convey the second solid electrolyte membrane so that the second solid electrolyte membrane reaches the second heating roller assembly and is heated, and continue to convey the heated second solid electrolyte membrane to a gap in the middle of the second shaping roller assembly.

In some implementations, the first heating roller assembly and/or the second heating roller assembly may include a plurality of sets of heating rollers for heating at least one of the electrode sheet, the first solid electrolyte membrane, the second solid electrolyte membrane, and the composite membrane sheet. As appropriate, a set of heating rollers may be located between the electrode sheet unwinding mechanism and the first shaping roller assembly to heat the electrode sheet. A set of heating rollers may be located between the first solid electrolyte membrane unwinding mechanism and the first shaping roller assembly, to heat the electrode sheet and/or the first solid electrolyte membrane. A set of heating rollers may also be located between the first shaping roller assembly and the second shaping roller assembly, to heat the composite membrane sheet. A set of heating rollers may further be located between the second solid electrolyte membrane unwinding mechanism and the second shaping roller assembly, to heat the composite membrane sheet and/or the second solid electrolyte membrane.

It can be appreciated that each set of heating rollers may consist of one or more rollers. A heating action may be performed by a single set of heating rollers, or by a combination of two or more sets of heating rollers. The number of heating rollers in each set of heating rollers, relative positions therebetween, and relative positions between a plurality of sets of heating rollers may all be adaptively adjusted according to requirements. For example, when heating time of the electrode sheet needs to be adjusted, a specific number of heating rollers may be provided between the electrode sheet unwinding mechanism and the first shaping roller assembly, and the number of heating rollers may be increased or decreased according to required heating time. In another aspect, the heating time of the electrode sheet may also be adjusted by means of changing a wrap angle between the electrode sheet and the heating roller by adjusting the position of the heating roller. Or, the two methods above may be combined to adjust the heating time of the electrode sheet.

In some implementations, heating time of heating rollers in each set of heating rollers may be the same or different, and the heating time of each heating roller depends on actual production needs and is not specifically limited.

In the present application, the process of compositing solid electrolyte membranes on both sides of the electrode sheet is carried out in two steps. The corresponding solid electrolyte membranes and process characteristics are different in the two steps, and the heating time of the heating roller is also adjusted accordingly, improving the bonding strength and compositing effects between the electrode sheet and the solid electrolyte membranes.

In some implementations, the heating roller may be an electric heating roller or a fluid heating roller.

The plurality of heating rollers in each set of heating rollers may be configured as upper and lower opposing rollers, so that the electrode sheet advances in an S-shaped path between the two heating rollers. As shown in FIG. 18, the electrode sheet first reaches the left side of the first heating roller 71, rotates around the first heating roller 71 by a specific angle, then separates from the first heating roller 71 from the right side of the first heating roller 71, and after advancing to the left side of the second heating roller 72, continues to rotate around the second heating roller 72 by a specific angle and then separates from the second heating roller 72 from the right side of the second heating roller 72. This increases contact area between the electrode sheet and the heating roller, and improves heating effects without increasing space occupied by the apparatus.

In some implementations, heating temperatures of the heating rollers in the first heating roller assembly are the same or different. A specific temperature of each heating roller may be determined according to material properties and process requirements of the electrode sheet or the solid electrolyte membrane contacting same. For example, as shown in FIG. 18, because the process of compositing the solid electrolyte membranes on both sides of the electrode sheet is carried out in two steps, for the composite membrane sheet, a contact surface when the composite membrane sheet passes through the fourth heating roller 79 is the first solid electrolyte membrane, which has been laminated with the electrode sheet. When the composite membrane sheet passes through the third heating roller 73, the contact surface is the second solid electrolyte membrane, the second solid electrolyte membrane not yet having been laminated with the composite membrane sheet. Material properties and process nodes corresponding to the third heating roller 73 and the fourth heating roller 79 are different. Therefore, the heating temperatures corresponding thereto need to be set adaptively to obtain better compositing effects between the electrode sheet and the different solid electrolyte membranes.

In some implementations, heating temperatures of the heating rollers in the second heating roller assembly are the same or different. It can be appreciated that, similar to the first heating roller assembly, a specific temperature of each heating roller in the second heating roller assembly may be determined according to material properties and process requirements of the electrode sheet or the solid electrolyte membrane contacting same.

In a preferred embodiment, the temperature of each heating roller is higher than the softening temperatures of the electrode sheet and the solid electrolyte membrane.

It can be appreciated that the aforementioned softening temperatures of the electrode sheet and the solid electrolyte membrane refer to temperatures above which a surface hardness of the electrode sheet or the solid electrolyte membrane changes, and the electrode sheet and the solid electrolyte membrane form a complete composite structure under the action of a rolling pressure.

As can be seen, in the preparation method for a composite electrode sheet of the present application, the heating temperature and heating time of the relevant heating rollers are characteristically controlled according to factors such as the process characteristics of different processes and the material characteristics of the process nodes, to obtain better bonding strength and compositing processes between the electrode sheet and the first solid electrolyte membrane and the second solid electrolyte membrane, which are suitable for production needs of different composite electrode sheets.

In some implementations, the heating roller further comprises a sensor for measuring a surface temperature of a roller body, to obtain a temperature of the composite membrane sheet or the composite electrode sheet.

The composite electrode sheet winding mechanism is located downstream of the second shaping roller assembly, and is used to provide tension to the electrode sheet in the movement direction of the electrode sheet and to receive the composite electrode sheet obtained after rolling by the second shaping roller assembly to complete a winding action.

In some implementations, the preparation apparatus for a composite electrode sheet further comprises a substrate winding mechanism.

In some implementations, the preparation apparatus for a composite electrode sheet further comprises a cooling roller located downstream of the second shaping roller assembly, which is used to cool the composite electrode sheet. The present application improves production efficiency by means of providing the cooling roller to reduce the temperature of the composite electrode sheet. Furthermore, the cooling roller also provides a shaping effect for the composite electrode sheet.

The number of cooling rollers may be one or more, preferably two.

Preferably, the cooling roller of the present application is a contact cooling roller, which has a better cooling effect.

The relative positions between the cooling rollers may be determined according to requirements, and are not limited.

In some implementations, the cooling roller further comprises a sensor for measuring a surface temperature of a roller body, to obtain a temperature of the composite electrode sheet.

In some implementations, the preparation apparatus for a composite electrode sheet further comprises a guide roller.

Optionally, the guide roller is located between the first solid electrolyte membrane unwinding mechanism and the first shaping roller assembly to provide guidance for the first solid electrolyte membrane and/or the electrode sheet. As shown in FIG. 18, the first solid electrolyte membrane departs from the first solid electrolyte membrane unwinding mechanism 25, passes through a first guide roller 51, and then at a second guide roller 52 meets and is laminated on the electrode sheet departing from the electrode sheet unwinding mechanism 11. The electrode sheet and the first solid electrolyte membrane reach the first heating roller 71 after passing through the second guide roller 52 and a third guide roller 53. After rotating around the first heating roller 71 by a specific angle, the electrode sheet and the first solid electrolyte membrane reach the second heating roller 72, and after rotating around the second heating roller 72 by a specific angle, advance to the first shaping roller assembly to undergo first compositing.

Preheating time of the electrode sheet and/or the first solid electrolyte membrane may be adjusted auxiliarily by means of adjusting relative positions between the guide roller and the heating roller. For example, the heating time of the electrode sheet and the first solid electrolyte membrane may be shortened by means of adjusting the third guide roller 53 in FIG. 18 to remain unchanged longitudinally while moving upward, or the heating time of the electrode sheet and the first solid electrolyte membrane may be lengthened by means of adjusting the third guide roller 53 to remain unchanged longitudinally while moving downward. Preferably, the electrode sheet and the first solid electrolyte membrane rotate around the heating roller at a large angle, so that heating efficiency is higher within the same space.

In some implementations, the heating time of the first heating roller assembly and/or the second heating roller assembly is greater than or equal to 2 s.

Optionally, the guide roller is located between the first shaping roller assembly and the first substrate winding mechanism 26, to provide guidance for the first substrate of the first solid electrolyte membrane separated from the composite electrode sheet. As shown in FIG. 18, after the electrode sheet and the first solid electrolyte membrane are composited at the first shaping roller assembly to form the composite membrane sheet, the composite membrane sheet continues to move toward the second shaping roller assembly. After rotating by a specific angle with the first elastic roller 35 in the first shaping roller assembly under the action of the first substrate winding mechanism 26, the first substrate advances to the fourth guide roller 54, and the first substrate winding mechanism 26 completes a winding action.

Optionally, the guide roller is located between the second solid electrolyte membrane unwinding mechanism 23 and the second shaping roller assembly, and is used to provide guidance for the second solid electrolyte membrane and/or the composite membrane sheet. As shown in FIG. 18, the second solid electrolyte membrane departs from the second solid electrolyte membrane unwinding mechanism 23, passes through a fifth guide roller 55, and then at a sixth guide roller 56, meets and laminates on the composite membrane sheet. The composite membrane sheet and the second solid electrolyte membrane reach the third heating roller 73 after passing through the sixth guide roller 56 and a seventh guide roller 57. After rotating around the third heating roller 73 by a specific angle, the composite membrane sheet and the second solid electrolyte membrane reach the fourth heating roller 79, and after rotating around the fourth heating roller 79 by a specific angle, advance to the second shaping roller assembly to undergo a second compositing.

Optionally, the guide roller is located between the second shaping roller assembly and the second substrate winding mechanism 24, to provide guidance for the second substrate of the second solid electrolyte membrane separated from the composite electrode sheet. As shown in FIG. 18, after the composite membrane sheet and the second solid electrolyte membrane are composited at the second shaping roller assembly to form the composite electrode sheet, the composite electrode sheet continues to move toward the composite electrode sheet winding mechanism 12. After rotating by a specific angle with the second elastic roller 34 in the second shaping roller assembly under the action of the second substrate winding mechanism 24, the second substrate advances to a ninth guide roller 59 and the second substrate winding mechanism 24 completes a winding action.

Optionally, the guide roller is located between the second shaping roller assembly and the composite electrode sheet winding mechanism 12 to provide guidance for the composite electrode sheet. As shown in FIG. 18, after the composite membrane sheet and the second solid electrolyte membrane are composited at the second shaping roller assembly to form the composite electrode sheet, the composite electrode sheet continues to move toward the composite electrode sheet winding mechanism 12. The composite electrode sheet first reaches an eighth guide roller 58 and rotates around the eighth guide roller by a specific angle and then reaches the first cooling roller 75. After rotating around the first cooling roller 75 by a specific angle, the composite electrode sheet reaches the second cooling roller 76, and rotates around the second cooling roller 76 by a specific angle and then advances to the composite electrode sheet winding mechanism 12 to complete a winding action of the composite electrode sheet. If necessary, a tenth guide roller 60 may further be provided between the second cooling roller 76 and the composite electrode sheet winding mechanism 12, to adjust the moving direction of the composite electrode sheet.

In some implementations, the preparation apparatus for a composite electrode sheet further comprises a tension control apparatus, an unwinding correction assembly and an electrode sheet static elimination assembly, arranged in sequence along an unwinding path of the preparation device. The tension control apparatus comprises a plurality of tension control elements disposed upstream of the rolling device, which are used to separately control unwinding tension of the positive electrode sheet and the solid electrolyte membrane. Optionally, the tension control apparatus comprises a plurality of tension control elements disposed downstream of the rolling apparatus, which are used to separately control winding tension of the composite positive electrode sheet and the substrate. The unwinding correction assembly can correct unwinding and running paths of the electrode sheet, the solid electrolyte membrane, etc., so that initial feed lines are kept at the same level. A winding and unwinding mechanism for a main material employs single-station correction, and winding and unwinding mechanisms for the remaining materials employ a cantilever type, all of which are provided with correction. The static elimination assembly performs static elimination treatment on both sides of the electrode sheet, and can reduce friction between the electrode sheet and the conveyor roller. It can be appreciated that, without departing from the inventive concept of the present application, known functional assemblies or structures may be used in the present application throughout the entire process from winding, to rolling, and unwinding.

In some implementations, the width of the first shaping roller assembly and the second shaping roller assembly is 500-800 mm, including but not limited to 500 mm, 550 mm, 600 mm, 650 mm, 700 mm, 750 mm, or 800 mm, preferably 550-650 mm.

In some implementations, the diameter of the first shaping roller assembly and the second shaping roller assembly is 300-500 mm, including but not limited to 300 mm, 350 mm, 400 mm, 450 mm, or 500 mm, preferably 350-450 mm.

In some implementations, a mechanical speed of the shaping roller assembly is 5-60 m/min, including but not limited to 5 m/min, 10 m/min, 20 m/min, 30 m/min, 40 m/min, 45 m/min, 50 m/min, or 60 m/min.

It can be appreciated that the higher the belt speed of the entire preparation apparatus for a composite electrode sheet, the higher production efficiency is. However, excessively high speeds can easily cause problems such as breakage in the belt-carried electrode sheet and solid electrolyte membrane. The present application does not have particular requirements for residence time of the electrode sheet and the solid electrolyte membrane in the gap of the shaping roller assembly. Without departing from the inventive concept of the present application, any adjustments to the residence time that do not require the exercise of creative effort should be construed as falling within the scope of protection of the present application.

In some implementations, linear speeds of the first shaping roller assembly and the second shaping roller assembly are kept consistent, and an unwinding linear speed of the electrode sheet unwinding mechanism 11 and a winding linear speed of the composite electrode sheet winding mechanism 12 are also kept consistent, thereby improving action consistency of the entire rolling preparation process of the composite electrode sheet and enhancing uniformity of the composite electrode sheet.

Referring to FIGs. 18-19, in conjunction with the structure of the preparation apparatus for a composite electrode sheet, the preparation method for a composite electrode sheet of the present application comprises the following steps: An electrode sheet is unwound by means of the electrode sheet unwinding mechanism 11 and conveyed to the composite electrode sheet winding mechanism 12, and at the same time, a first solid electrolyte membrane is unwound by means of the first solid electrolyte membrane unwinding mechanism 25. The electrode sheet and the first solid electrolyte membrane first reach the first heating roller assembly and are heated, and then the electrode sheet and the first solid electrolyte membrane continue to advance to the first shaping roller assembly, and form a composite membrane sheet under a rolling action of the first shaping roller assembly. The composite membrane sheet moves toward the second shaping roller assembly, and at the same time, the second solid electrolyte membrane unwinding mechanism unwinds a second solid electrolyte membrane. The composite membrane sheet and the second solid electrolyte membrane reach the second heating roller assembly and are heated before reaching the second shaping roller assembly. Under the action of the second shaping roller assembly, a composite electrode sheet is formed, which is wound by the composite electrode sheet winding mechanism.

In some implementations, at least one of the first shaping roller assembly and the second shaping roller assembly is configured as an elastic rolling assembly. The elastic rolling assembly comprises a rigid roller, and an elastic roller having a lower hardness than that of the rigid roller. A connecting line between axes of the rigid roller and the elastic roller is perpendicular to the conveying direction of the electrode sheet.

In some implementations, the solid electrolyte membrane is formed independently, that is, the solid electrolyte membrane can be formed without the aid of a substrate and maintain integrity of the membrane. In this case, after the electrode sheet and the first solid electrolyte membrane enter the gap of the first shaping roller assembly, a composite membrane sheet is obtained under the pressure of the first shaping roller assembly. After the composite membrane sheet and the second solid electrolyte membrane advance into the gap of the second shaping roller assembly, a composite electrode sheet is obtained under the rolling action of the second shaping roller assembly. Finally, the composite electrode sheet is wound by the electrode sheet winding mechanism 12.

In some implementations, the solid electrolyte membrane is covered by a substrate, to provide support for the solid electrolyte membrane. When the first solid electrolyte membrane unwinding mechanism 25 conveys the first solid electrolyte membrane, a first substrate is located at the side of the first solid electrolyte membrane distant from the electrode sheet. When the second solid electrolyte membrane unwinding mechanism 23 conveys the second solid electrolyte membrane, a second substrate is located at the side of the second solid electrolyte membrane distant from the electrode sheet. After lamination of the first solid electrolyte membrane and the electrode sheet is completed, the first substrate is separated from the composite membrane sheet. After lamination of the second solid electrolyte membrane and the composite membrane sheet is completed, the second substrate is separated from the composite electrode sheet. Specifically, the first substrate may be received by means of the first substrate winding mechanism 26 located at the same side of the electrode sheet as the first solid electrolyte membrane unwinding mechanism 25, the first substrate winding mechanism 26 being located between the first shaping roller assembly and the second shaping roller assembly. The second substrate is received by means of the second substrate winding mechanism 24 located at the same side of the electrode sheet as the second solid electrolyte membrane unwinding mechanism 23, the second substrate winding mechanism 24 being located between the second shaping roller assembly and the composite electrode sheet winding mechanism.

In some implementations, after the second shaping roller assembly has finished rolling and before the composite electrode sheet winding mechanism has started winding, a thickness measuring mechanism is used to inspect the composite electrode sheet, which, after passing the inspection, is then wound by the composite electrode sheet winding mechanism.

Referring to FIG. 17, FIG. 17 shows a flowchart of a method for preparing a composite electrode sheet using the foregoing preparation device for a composite electrode sheet, comprising the following steps:
S21: Heat an electrode sheet and a first solid electrolyte membrane by means of the first heating roller assembly;
S22: Composite the heated electrode sheet and first solid electrolyte membrane by means of the first shaping roller assembly, to obtain a composite membrane sheet;
S23: Heat the composite membrane sheet and a second solid electrolyte membrane by means of the second heating roller assembly;
S24: Composite the heated composite membrane sheet and second solid electrolyte membrane by means of the second shaping roller assembly, to obtain the composite electrode sheet.

At least one of the first shaping roller assembly and the second shaping roller assembly is configured as an elastic rolling assembly. The elastic rolling assembly comprises a rigid roller, and an elastic roller having a lower hardness than that of the rigid roller, the elastic roller facing the first solid electrolyte membrane or the second solid electrolyte membrane to perform compositing. During the rolling process, the elastic roller can adjust stress on the electrode sheet and the solid electrolyte membrane, so that the solid electrolyte membrane can better cover the electrode sheet in the composite electrode sheet after rolling. Furthermore, the lateral thickness of the electrode sheet tends to be uniform after rolling.

It can be appreciated that in the rolled composite electrode sheet, solid electrolyte layers are composited on the electrode sheet. The solid electrolyte membranes being located at two sides of the electrode sheet means that solid electrolyte membranes are composited on both sides of the electrode sheet by rollers.

In addition, S22 and S24 are both carried out under dry conditions. That is to say, the entire compositing process of the present application is carried out under dry conditions. The dry conditions in the present application are different from those of a conventional wet electrode preparation method. Conventional wet preparation of composite electrodes involves first preparing a solid electrolyte slurry and then coating the solid electrolyte slurry onto an electrode sheet, or vice versa, preparing an electrode slurry and then coating the electrode slurry onto a solid electrolyte membrane. The preparation process of the present application does not use solvents, eliminating the need for cumbersome subsequent drying steps, and effectively reducing production costs.

It can be appreciated that the dry process refers to preparation of related electrode sheets and electrolyte membranes without the addition of solvents. Technical solutions involving trace amounts of liquid lubricants or other liquid additives that may be used during a rolling process should still be within the scope of protection of the present application.

In some implementations, both the electrode sheet and the solid electrolyte membrane are prepared by means of a dry process.

In some implementations, at least one of the electrode sheet and the solid electrolyte membrane is prepared by means of a dry process.

In some implementations, both the electrode sheet and the solid electrolyte membrane are prepared by means of a wet process.

It can be appreciated that electrode sheet and the solid electrolyte membrane are preferably prepared under dry conditions, so that solvents are no longer needed in the entire electrode preparation process.

It can be appreciated that the preparation processes of the electrode sheet and the solid electrolyte membrane are independent of the preparation process of the composite electrode. That is, if a wet process is used, the electrode sheet undergoes coating, drying, and rolling processes.

In some implementations, the electrode sheet is a positive electrode sheet. In some implementations, the electrode sheet is a negative electrode sheet. In some implementations, the solid electrolyte membrane is composited on one or both sides of the positive electrode sheet or the negative electrode sheet. For material compositions, preparation methods, and related performance parameters of the positive electrode sheet, the negative electrode sheet, and the solid electrolyte membrane, reference may be made to the above embodiments of the present application, which will not be repeated here.

As mentioned in the Background section, during dry preparation, due to issues of high strength and poor deformation resistance of traditional shaping roller assemblies, in order to facilitate smoothness of a rolling process, an electrode sheet is thinned at the edges, to form a structure that is thick in the middle and thin at two ends. As shown in FIG. 2, due to a non-uniform lateral thickness of the electrode sheet 1, when the solid electrolyte membrane 2 is laminated on the electrode sheet 1, an edge region of the electrode sheet 1 remains separated from the solid electrolyte membrane. When a rolling apparatus performs roll compositing on the electrode sheet 1 and the solid electrolyte membrane 2, rolling forces of a steel roller are different in a middle region and the edge region of the electrode sheet 1, making it difficult for the electrode sheet 1 and the solid electrolyte membrane 2 to be tightly composited, i.e., ineffective compositing, which will cause the lateral compaction density of the composite electrode sheet to be non-uniform, and the uniformity of the composite electrode sheet is poor. In severe cases, the electrode sheet may crush, consequently producing a huge impact on the safety performance and quality of a lithium-ion battery.

The preparation method of the present application utilizes cushioning provided by the elastic roller in the elastic rolling assembly during rolling of the shaping roller assembly, so that the solid electrolyte membrane can better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling, as shown in FIG. 3. This, to a certain extent, avoids an adverse impact on the rolling composite process due to a phenomenon that the electrode sheet 1 is thick in the middle and thin at two ends, protects the electrode sheet 1 from being crushed, and further enables the active material layer in the electrode sheet 1 to better bond to the solid electrolyte membrane 2. In addition, during the rolling process of the shaping roller assembly, the electrode sheet 1 and the solid electrolyte membrane 2 can be pressed evenly, improving the compaction density of the composite electrode sheet, ensuring the thickness uniformity of the composite electrode sheet, easing the phenomenon of the electrode sheet 1 being thick in the middle and thin at two ends, improving the quality of continuous rolling, and allowing large-scale production.

Applying a solid electrolyte coating to a surface of an electrode, especially a surface of a high-capacity positive electrode, can effectively improve the safety performance of a battery. However, due to limitations in energy density, the thickness of a solid electrolyte membrane is usually quite small. Compared to an electrode sheet prepared by a dry process, the thickness of the solid electrolyte membrane is an order of magnitude smaller, which renders the solid electrolyte membrane prone to cracking during preparation a composite conductive electrode sheet by a dry process.

In some implementations, the solid electrolyte membrane is formed independently, meaning that the solid electrolyte membrane may be formed without the aid of a substrate and maintain the integrity of the membrane.

In some implementations, the side of the solid electrolyte membrane distant from the electrode sheet is covered by a substrate, and a bonding force between the substrate and the solid electrolyte membrane is less than a bonding force between the solid electrolyte membrane and the electrode sheet. After rolling, at least part of the solid electrolyte is transferred to the electrode sheet and separated from the substrate.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

The present application further provides a composite electrode sheet, which is prepared according to the preparation method for a composite electrode sheet provided above.

In some implementations, the first solid electrolyte membrane and the second solid electrolyte membrane have different compositions.

Furthermore, the temperatures and heating times of the heating rollers, and/or the pressures of the first shaping roller assembly and the second shaping roller assembly, are different.

It can be appreciated that the compositions of the first solid electrolyte membrane and the second solid electrolyte membrane being different may be understood as the material systems or structural compositions of the solid electrolyte membranes being different. This difference leads to different compositing processes for the first solid electrolyte membrane and the second solid electrolyte membrane. By means of using two compositing processes one after another, the present application can configure different compositing processes for different compositing performances of the first solid electrolyte membrane and the second solid electrolyte membrane with the positive electrode sheet.

More preferably, the electrode sheet comprises a current collector, and a first active material layer and a second active material layer disposed on two sides of the current collector, respectively, the first active material layer being laminated on the first solid electrolyte membrane, and the second active material layer being laminated on the second solid electrolyte membrane. The first active material layer and the second active material layer are different.

It can be appreciated that the first active material layer and the second active material layer being different means that the first active material layer and the second active material layer have a macro-scale performance difference. Any factor of the active material layers that may lead to a macro-scale performance difference, such as composition, structure, and areal density, should be construed as being within the scope of protection of the present application.

In some implementations, the elastic roller is configured to cover the elastic member around the outside the rigid roller. When the elastic roller rotates, the elastic member rotates together with the elastic roller. Furthermore, when the shaping roller assembly rolls the first solid electrolyte membrane, the electrode sheet and the second solid electrolyte membrane, the elastic member provides a cushioning function, so that the first electrolyte membrane and the second solid electrolyte membrane can better coat both sides of the electrode sheet, and uniformity of the lateral thickness of the electrode sheet after rolling is improved.

It can be appreciated that, during the production process of the electrode sheet, edges of the electrode sheet are usually thinned in order to ensure smooth progress of a subsequent rolling process. However, the existence of a thinned region in the electrode sheet can affect lamination between the solid electrolyte membrane and the electrode sheet. If the electrode sheet and the solid electrolyte membrane cannot form effective compositing in the thinned region, the resulting composite electrode sheet is prone to cracking at the edge region.

Surprisingly, the preparation apparatus for a composite electrode sheet of the present application utilizes cushioning provided by the elastic member during rolling, to enable the solid electrolyte membrane to better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling.

The elastic member is made of a flexible material. Under pressure, the flexible material undergoes elastic deformation. The slight elastic deformation makes the thicknesses of the middle region and the thinned region of the electrode sheet tend to be consistent under pressure, allowing better lamination with the solid electrolyte membrane.

A yield limit of the elastic member satisfies: when the solid electrolyte membrane and the electrode sheet pass through the gap between the shaping rollers, the solid electrolyte membrane and the electrode sheet undergo plastic deformation, and the elastic member undergoes elastic deformation.

Elastic deformation refers to a change in relative positions of points in a solid caused by an external force. When the external force is removed, the solid returns to an original shape, which is called elastic deformation.

When an object is subjected to a large force beyond an elastic limit, the object may break or deform, and fail to return to an original shape. This phenomenon is called plastic deformation.

In some implementations, the width of the elastic member is greater than or equal to a minimum value of the width of the solid electrolyte membrane or the electrode sheet.

In some implementations of the present application, the flexible material is a polymer. The present application does not impose special limitations on the material of the polymer. Exemplarily, the polymer may be a plastic such as polytetrafluoroethylene, polyethylene terephthalate, polypropylene or polyacrylonitrile, or a rubber such as Hypalon rubber, silicone rubber or fluororubber, or an elastic material such as silicone, that can undergo a certain degree of deformation. Highly thermally resistant hard plastics are preferred.

The present application does not impose particular limitations on the thickness of the elastic member. Any necessary adjustments to the thickness of the elastic member without departing from the inventive concept of the present application can be construed as being within the scope of protection of the present application.

In some implementations, the elastic roller may also be configured to partially cover the elastic member around the outside of the rigid roller, so that the elastic member is located between the first or second solid electrolyte membrane and the shaping roller assembly during roll compositing by the shaping roller assembly. Exemplarily, the first elastic roller 35 may be replaced by a rigid roller in combination with a protective film made of a flexible material. Specifically, the protective film may be unwound through the gap in the middle of the first shaping roller assembly by means of a protective film unwinding mechanism located between a pre-heater (such as the first heating roller assembly) and the first elastic roller 35. Optionally, specifically, the protective film may be unwound through the gap in the middle of the first shaping roller assembly by means of a protective film unwinding mechanism located between the first solid electrolyte membrane unwinding mechanism 25 and a pre-heater (such as the first heating roller assembly). In the first shaping roller assembly, the rigid roller, the protective film, the first solid electrolyte membrane, the electrode sheet and the rigid roller are distributed in sequence from top to bottom. During rolling, the protective film, rather than the elastic member in the first elastic roller, provides a cushioning function.

Surprisingly, in the compositing process of the electrode sheet and the solid electrolyte membrane, the combination of a rigid roller and an elastic roller is beneficial to the preparation of the composite electrode sheet. When the electrode sheet needs to be laminated with solid electrolyte membranes on both sides, the process of separate lamination of the two sides in the present application helps to improve the quality of the composite electrode sheet.

The present application further provides a lithium-ion battery, which comprises the composite electrode sheet provided above.

In some implementations, an electrode sheet and a solid electrolyte membrane may also be procured.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

LLZO was selected as a solid electrolyte, polytetrafluoroethylene was selected as a binder, and LiPF₆ was selected as a lithium salt. The substances were mixed and then stirred using a high-speed stirrer, to obtain a solid electrolyte mixture. The mixture was then subjected to fiberization treatment by means of air jet milling to obtain a fiberized solid electrolyte mixture, and the fiberized solid electrolyte mixture was then rolled to obtain a solid electrolyte membrane.

### 3. Preparation of composite positive electrode sheet

Using the preparation apparatus for a composite electrode sheet having a protective film as shown in FIG. 18, the positive electrode sheet was composited with the first and second solid electrolyte membranes. The elastic member was Hypalon rubber.

The first solid electrolyte membrane departed from the first solid electrolyte membrane unwinding mechanism 25, sequentially passed through the first guide roller 51, the second guide roller 52 and the third guide roller 53, and then reached the first heating roller 71 and was heated. The electrode sheet departed from the electrode sheet unwinding mechanism 11, reached the second guide roller 52, and was then laminated with the first solid electrolyte membrane. After being heated by the first heating roller 71 and the second heating roller 72, the electrode sheet and the first solid electrolyte membrane together entered the gap between the first elastic roller 35 and the first rigid roller 36 to undergo a first compositing, the electrode sheet being farther away from the first elastic roller 35 than the first solid electrolyte membrane. After completion of the compositing, a first substrate rotated around the first elastic roller 35 by a specific angle under the action of the first substrate winding mechanism 26 and was then guided by the fourth guide roller 54, and was finally wound by the first substrate winding mechanism 26.

The temperatures of the first heating roller 71 and the second heating roller 72 were 165°C, and the heating time was 3 seconds each. The temperature of the first shaping roller assembly was 160°C.

The second solid electrolyte membrane departed from the second solid electrolyte membrane unwinding mechanism 23, sequentially passed through the fifth guide roller 55, the sixth guide roller 56 and the seventh guide roller 57, and then reached the third heating roller 73 and was heated. The composite membrane sheet departed from the first shaping roller assembly, reached the sixth guide roller 56, and was then laminated on the second solid electrolyte membrane. The composite membrane sheet and the second solid electrolyte membrane were heated together by the third heating roller 73 and the fourth heating roller 79, and then entered the gap between the second elastic roller 34 and the second rigid roller 33 to undergo a second compositing, the composite membrane sheet being farther away from the second elastic roller 34 than the second solid electrolyte membrane. After completion of the compositing, a second substrate rotated around the second elastic roller 34 by a specific angle under the action of the second substrate winding mechanism 24 and was then guided by the ninth guide roller 59, and was finally wound by the second substrate winding mechanism 24. The composite electrode sheet was cooled by the first cooling roller 75 and the second cooling roller 76, and then wound by the composite electrode sheet winding mechanism 12.

The temperatures of the third heating roller 73 and the fourth heating roller 79 were 180°C, and the heating time was 2 s each. The temperature of the second shaping roller assembly was 180°C.

The prepared composite electrode sheet had no cracks on the surface, and the overall thickness of the composite electrode sheet was 165 µm.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

A pre-selected solid electrolyte material was selected, and polytetrafluoroethylene was used as a binder. The substances were mixed and then stirred using a high-speed stirrer, to obtain a solid electrolyte mixture. The mixture was then subjected to fiberization treatment by means of air jet milling to obtain a fiberized solid electrolyte mixture, and the fiberized solid electrolyte mixture was then rolled to obtain a solid electrolyte membrane.

Raw materials for a first solid electrolyte membrane were LLZO and PTFE particles. Raw materials for a second solid electrolyte membrane were LLZO and PTFE fiber membranes.

### 3. Preparation of composite positive electrode sheet

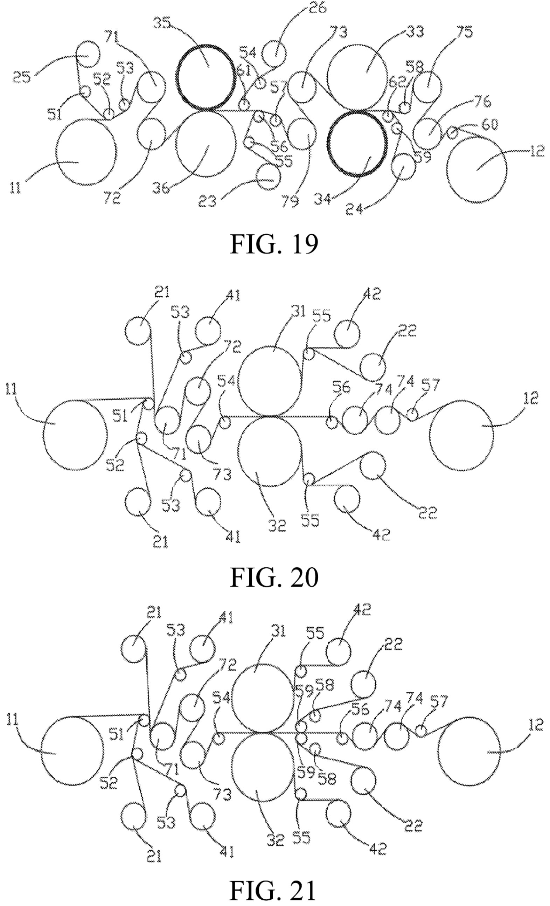

Using the preparation apparatus for a composite electrode sheet having a protective film as shown in FIG. 19, the positive electrode sheet was composited with the first and second solid electrolyte membranes. The elastic member was Hypalon rubber. Differences from the previous embodiment lie in a separation angle not being controlled when the first substrate was separated from the composite membrane sheet and when the second substrate was separated from the composite electrode sheet.

The first solid electrolyte membrane departed from the first solid electrolyte membrane unwinding mechanism 25, sequentially passed through the first guide roller 51, the second guide roller 52 and the third guide roller 53, and then reached the first heating roller 71 and was heated. The electrode sheet departed from the electrode sheet unwinding mechanism 11, reached the second guide roller 52, and was then laminated with the first solid electrolyte membrane. After being heated by the first heating roller 71 and the second heating roller 72, the electrode sheet and the first solid electrolyte membrane together entered the gap between the first elastic roller 35 and the first rigid roller 36 to undergo a first compositing, the electrode sheet being farther away from the first elastic roller 35 than the first solid electrolyte membrane. After completion of the compositing, the first substrate moved toward the second shaping roller assembly together with the composite membrane sheet. At the same time, the first substrate was subjected to a force transmitted by the first substrate winding mechanism 26 via the fourth guide roller 54 and the eleventh guide roller 61, so that the first substrate was separated from the composite membrane sheet at the eleventh guide roller 61. Finally, the first substrate was wound by the first substrate winding mechanism 26. The eleventh guide roller 61 was located close to the traveling route of the composite membrane sheet.

The temperature of the first heating roller 71 was 160°C, and the heating time was 5 s; the temperature of the second heating roller 72 was 165°C, and the heating time was 5 s; and the temperature of the first shaping roller was 160°C.

The second solid electrolyte membrane departed from the second solid electrolyte membrane unwinding mechanism 23, sequentially passed through the fifth guide roller 55, the sixth guide roller 56 and the seventh guide roller 57, and then reached the third heating roller 73 and was heated. The composite membrane sheet departed from the first shaping roller assembly, reached the sixth guide roller 56, and was then laminated on the second solid electrolyte membrane. The composite membrane sheet and the second solid electrolyte membrane were heated together by the third heating roller 73 and the fourth heating roller 79, and then entered the gap between the second elastic roller 34 and the second rigid roller 33 to undergo a second compositing, the composite membrane sheet being farther away from the second elastic roller 34 than the second solid electrolyte membrane. After completion of the compositing, the second substrate was subjected to a force transmitted by the second substrate winding mechanism 24 via the ninth guide roller 59 and the twelfth guide roller 62, so that the second substrate and the composite electrode sheet were separated at the twelfth guide roller 62. Finally, the second substrate was wound by the second substrate winding mechanism 24. The twelfth guide roller 62 was located close to the traveling route of the composite electrode sheet. The composite electrode sheet was cooled by the first cooling roller 75 and the second cooling roller 76, and then wound by the composite electrode sheet winding mechanism 12.

The temperature of the fourth heating roller 79 was 180°C, and the heating time was 3 s; and the temperature of the third heating roller 73 was 185°C, and the heating time was 5 s. The temperature of the second shaping roller assembly was 180°C.

The prepared composite electrode sheet had no cracks on the surface, and the overall thickness of the composite electrode sheet was 160 µm.

One embodiment of the present application comprises the following steps.

### 1. Preparation of positive electrode sheet

A positive electrode active material layer laminated on a first solid electrolyte membrane was designated as a first positive electrode active material layer, and a positive electrode active material layer laminated on a second solid electrolyte membrane was designated as a second positive electrode active material layer. The first positive electrode active material layer used lithium iron phosphate as a positive electrode active material, Ketjenblack as an electric conductive agent, and PTFE as a binder, the regional density of the first positive electrode active material layer being 25 mg/cm². The second positive electrode active material layer used ternary NCM333 as a positive electrode active material, Ketjenblack as an electric conductive agent, and PTFE as a binder. The substances were mixed and then stirred using a high-speed stirrer to obtain a positive electrode sheet mixture, the regional density of the second positive electrode active material layer being 35 mg/cm².

The first positive electrode active material layer mixture and the second positive electrode active material layer mixture were separately subjected to fiberization treatment by means of air jet milling, to obtain fiberized first positive electrode active material layer and second positive electrode active material layer mixtures, respectively. Then, the first positive electrode active material layer and the second positive electrode active material layer were subjected to roll compositing with a current collector, to prepare a positive electrode sheet.

### 2. Preparation of solid electrolyte membrane

Pre-selected LLZO was used as a solid electrolyte material, and polytetrafluoroethylene was used as a binder. The substances were mixed and then stirred using a high-speed stirrer, to obtain a solid electrolyte mixture. The mixture was then subjected to fiberization treatment by means of air jet milling, to obtain a fiberized solid electrolyte mixture. The fiberized solid electrolyte mixture was rolled, to obtain a first solid electrolyte membrane and a second solid electrolyte membrane, the thickness of the second solid electrolyte membrane being 3 µm thicker than that of the first solid electrolyte membrane.

Raw materials for the first solid electrolyte membrane were LLZO and PTFE particles. Raw materials for the second solid electrolyte membrane were LLZO and PTFE fiber membranes.

### 3. Preparation of composite positive electrode sheet

The first solid electrolyte membrane departed from the first solid electrolyte membrane unwinding mechanism 25, sequentially passed through the first guide roller 51, the second guide roller 52 and the third guide roller 53, and then reached the first heating roller 71 and was heated. The electrode sheet departed from the electrode sheet unwinding mechanism 11, reached the second guide roller 52, and was then laminated with the first solid electrolyte membrane. After being heated by the first heating roller 71 and the second heating roller 72, the electrode sheet and the first solid electrolyte membrane together entered the gap between the first elastic roller 35 and the first rigid roller 36 to undergo a first compositing, the electrode sheet being farther away from the first elastic roller 35 than the first solid electrolyte membrane. After completion of the compositing, the first substrate moved toward the second shaping roller assembly together with the composite membrane sheet. At the same time, the first substrate was subjected to a force transmitted by the first substrate winding mechanism 26 via the fourth guide roller 54 and the eleventh guide roller 61, so that the first substrate was separated from the composite membrane sheet at the eleventh guide roller 61. Finally, the first substrate was wound by the first substrate winding mechanism 26. The eleventh guide roller 61 was located close to the traveling route of the composite membrane sheet.

The temperature of the first heating roller 71 was 160°C, and the heating time was 5 s; the temperature of the second heating roller 72 was 165°C, and the heating time was 5 s; and the temperature of the first shaping roller was 160°C.

The second solid electrolyte membrane departed from the second solid electrolyte membrane unwinding mechanism 23, sequentially passed through the fifth guide roller 55, the sixth guide roller 56 and the seventh guide roller 57, and then reached the third heating roller 73 and was heated. The composite membrane sheet departed from the first shaping roller assembly, reached the sixth guide roller 56, and was then laminated on the second solid electrolyte membrane. The composite membrane sheet and the second solid electrolyte membrane were heated together by the third heating roller 73 and the fourth heating roller 79, and then entered the gap between the second elastic roller 34 and the second rigid roller 33 to undergo a second compositing, the composite membrane sheet being farther away from the second elastic roller 34 than the second solid electrolyte membrane. After completion of the compositing, the second substrate was subjected to a force transmitted by the second substrate winding mechanism 24 via the ninth guide roller 59 and the twelfth guide roller 62, so that the second substrate and the composite electrode sheet were separated at the twelfth guide roller 62. Finally, the second substrate was wound by the second substrate winding mechanism 24. The twelfth guide roller 62 was located close to the traveling route of the composite electrode sheet. The composite electrode sheet was cooled by the first cooling roller 75 and the second cooling roller 76, and then wound by the composite electrode sheet winding mechanism 12.

The temperature of the fourth heating roller 79 was 160°C, and the heating time was 3 s; and the temperature of the third heating roller 73 was 165°C, and the heating time was 5 s. The temperature of the second shaping roller assembly was 160°C.

The prepared composite electrode sheet had no cracks on the surface, and the overall thickness of the composite electrode sheet was 170 µm.

Another aspect of the present application provides a preparation apparatus for a composite electrode sheet. As shown in FIGs. 20-22, the preparation apparatus for a composite electrode sheet of the present application comprises a shaping roller assembly, an electrode sheet unwinding mechanism 11, a solid electrolyte membrane unwinding mechanism 21, a protective film unwinding mechanism 41, a heating mechanism, and a composite electrode sheet winding mechanism 12. The shaping roller assembly comprises a first shaping roller 31 and a second shaping roller 32, symmetrically disposed at two sides of an electrode sheet. A connecting line between axes of the first shaping roller 31 and the second shaping roller 32 is perpendicular to a conveying direction of the electrode sheet. That is, the conveying direction of the electrode sheet is perpendicular to a plane in which the axes of the first shaping roller 31 and the second shaping roller 32 are located. However, this is not a limitation, and the conveying direction of the electrode sheet may be adjusted according to actual production needs.

The electrode sheet unwinding mechanism 11 is located upstream of the shaping roller assembly, and is used to unwind the electrode sheet and then convey the electrode sheet, so that the electrode sheet passes through a gap between the first shaping roller 31 and the second shaping roller 32.

It can be appreciated that the electrode sheet in the present application is a positive electrode sheet or a negative electrode sheet.

The solid electrolyte membrane unwinding mechanism 21 is located upstream of the shaping roller assembly, and more specifically between the electrode sheet unwinding mechanism 11 and the shaping roller assembly. The solid electrolyte membrane unwinding mechanism 21 is used to unwind a solid electrolyte membrane, and then convey the solid electrolyte membrane so that the solid electrolyte membrane passes through the gap between the first shaping roller 31 and the second shaping roller 32. More specifically, the solid electrolyte membrane unwinding mechanism 21 causes the solid electrolyte membrane to pass through a gap between the electrode sheet and the shaping roller assembly.

In some implementations, there are two solid electrolyte membrane unwinding mechanisms 21 located at two sides of the electrode sheet unwinding mechanism 11, respectively, and solid electrolyte membranes are then conveyed so that the two solid electrolyte membranes pass through the gap between the first shaping roller 31 and the second shaping roller 32, and the electrode sheet is located between the two solid electrolyte membranes.

Optionally, the two solid electrolyte membrane unwinding mechanisms 21 are symmetrically disposed at two sides of the electrode sheet unwinding mechanism 11.

The protective film unwinding mechanism 41 is located upstream of the shaping roller assembly, disposed between the solid electrolyte membrane unwinding mechanism 21 and the shaping roller assembly, and is used to unwind a protective film and convey the protective film through a gap between the solid electrolyte membrane and the shaping roller assembly. More specifically, the protective film is transported through the gap between the shaping roller assembly and the solid electrolyte membrane. As an elastic member, the protective film undergoes elastic deformation when the solid electrolyte membrane passes through the gap between the shaping roller and the electrode sheet, so that compositing effects of the solid electrolyte membrane and the electrode sheet are improved, and the lateral thickness of the composite electrode sheet tends to be uniform.

The present application does not have particular requirements for the structure of the protective film. Without departing from the inventive concept of the present application, any known film layer that can undergo a certain degree of elastic deformation under a certain pressure can be used in the present application. As an illustrative example only, rather than a limitation on the scope of protection, the protective film may be selected from a polymer film or a non-woven fabric. Non-woven fabrics include, but are not limited to, a PP-based non-woven fabric, a PE-based non-woven fabric, a PET-based non-woven fabric, a PAN-based non-woven fabric, a PTFE-based non-woven fabric, a Celgard non-woven fabric, etc. The polymer film may be selected from a PVDF film, a PE film, a PP film, a PE/PP film, a PE/PP/PE film, a PP/PE/PP film, a PTFE film, a silicone release film, a fluorine release film, a PET film, a non-silicone release film, etc. It can be appreciated that the protective film may also be a multilayer structure consisting of two or more polymer films and/or non-woven fabrics.

The present application does not impose particular limitations on the thickness of the protective film. Without departing from the inventive concept of the present application, any conventional adjustments to the thickness of the protective film to adjust rolling effects should be regarded as within the scope of protection of the present application. It can be appreciated that when the protective film is a multilayer structure, the thickness of the protective film should be the sum of the thicknesses of a plurality of layers.

The heating mechanism is located between the electrode sheet unwinding mechanism 11 and the shaping roller assembly, and is used to preheat the electrode sheet and/or the solid electrolyte membrane and/or the protective film.

The preparation apparatus for a composite electrode sheet of the present application is provided with a heating mechanism. The heating mechanism simultaneously preheats the electrode sheet, the solid electrolyte membrane and the protective film, improving the overall flexibility of the electrode sheet, the solid electrolyte membrane and the protective film. This improves the extensibility and plasticity of the three, so that adjacent membranes are interlocked more tightly during the process of roll compositing the electrode sheet, the solid electrolyte membrane and the protective film by the shaping roller assembly, improving bonding strength between the membranes, and increasing the degree of compositing between the electrode sheet, the solid electrolyte membrane and the protective film.

In some implementations, the heating mechanism is a heating roller.

In some implementations, the number of heating rollers in the preparation apparatus for a composite electrode sheet is not particularly limited, and a specific number of heating rollers may be increased or decreased according to actual situations.

In some implementations, there may be one heating roller, i.e., a first heating roller 71.

In some implementations, there may be a plurality of heating rollers, the temperatures of the heating rollers gradually increasing along the running direction of the electrode sheet, so that preheating effects are more uniform. Specifically, the heating rollers are, in sequence along the running direction of the electrode sheet, a first heating roller 71, a second heating roller 72 and a third heating roller 73. The numbers of the first heating roller 71, the second heating roller 72, and the third heating roller 73 may also each be one, two or more, and are not particularly limited herein.

In some implementations, preheating time of the heating roller is greater than or equal to 2 s.

In some implementations, the heating roller is used to preheat the electrode sheet, the solid electrolyte membrane and the protective film simultaneously.

The composite electrode sheet winding mechanism 12 is located downstream of the shaping roller assembly, and is used to provide tension to the electrode sheet along the movement direction of the electrode sheet and to receive the composite electrode sheet obtained after roll compositing by the shaping roller assembly, and to complete a winding action.

It can be appreciated that the present application does not impose particular limitations on a preheating method. The preheating method may be using contact preheating, blower preheating, or radiation preheating, etc., to preheat the electrode sheet, the solid electrolyte membrane, and the protective film. Preferably, S-shaped roller pair contact heating is employed, which can save space by using rollers having large wrap angles, or a plurality of heating rollers having small sizes. Any heating roller in contact preheating that achieves rapid heating, a short preheating stroke, and a high thermal transfer rate at relatively low costs can achieve independent temperature control.

In some implementations, the preparation apparatus for a composite electrode sheet further comprises a protective film winding mechanism 42. The protective film winding mechanism 42 is located downstream of the shaping roller assembly and is located between the shaping roller assembly and the composite electrode sheet winding mechanism 12, and is used to provide tension to the protective film and to wind and receive the protective film.

In some implementations, the preparation apparatus for a composite electrode sheet further comprises a substrate winding mechanism 22.

When a substrate is provided on the solid electrolyte membrane, the substrate covers the side of the solid electrolyte membrane distant from the electrode sheet. After the electrode sheet and the solid electrolyte membrane are rolled by means of the shaping roller assembly to obtain the composite electrode sheet, the substrate needs to be separated. The substrate and the composite electrode sheet are separated by means of the substrate winding mechanism 22 disposed downstream of the shaping roller assembly. During the separation process, the substrate winding mechanism 22 provides tension to the substrate covering the solid electrolyte membrane, so that the substrate is separated from the composite electrode sheet, and performs a substrate winding action when necessary.

The number of the substrate winding mechanism 22 corresponds to the number of the solid electrolyte membrane unwinding mechanism 21, and the substrate winding mechanism 22 and the solid electrolyte membrane unwinding mechanism 21 are located at the same side of the electrode sheet unwinding mechanism 11.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

In some implementations, the preparation apparatus for a composite electrode sheet further comprises a guide roller.

Optionally, the guide roller is located between the electrode sheet unwinding mechanism 11 and the shaping roller assembly, to provide guidance for the electrode sheet. The guide roller may also be provided between the shaping roller assembly and the composite electrode sheet winding mechanism 12, the guide roller being used to provide guidance for winding of the composite electrode sheet.

Optionally, the guide roller is located between the solid electrolyte membrane unwinding mechanism 21 and the shaping roller assembly, to provide guidance for the solid electrolyte membrane. The guide roller may also be provided between the shaping roller assembly and the substrate winding mechanism 22, the guide roller being used to provide guidance for the substrate separated from the composite electrode sheet and covering the solid electrolyte membrane.

Optionally, the guide roller is located between the protective film unwinding mechanism 41 and the shaping roller assembly, to provide guidance for the protective film. A guide roller may also be provided between the shaping roller assembly and the protective film winding mechanism 42, the guide roller being used to provide guidance for recovery of the protective film.

In the preparation apparatus for a composite electrode sheet of the present application, before the roll compositing process, the protective films are already laminated on both sides of the electrode sheet and the solid electrolyte membrane, providing a protective function. During the roll compositing process, cushioning provided by the protective films is utilized to adjust the stress on the electrode sheet and the solid electrolyte membrane during the rolling process, so that the solid electrolyte membrane can better coat the electrode sheet. Furthermore, this ensures uniform stress on the electrode sheet and the solid electrolyte membrane during the rolling process, so that the lateral thickness of the electrode sheet tends to be uniform after rolling, avoiding an adverse impact on the roll compositing process due to the phenomenon of an electrode sheet being thick in the middle and thin at two ends, preventing the electrode sheet from being crushed, improving the degree of compositing between the electrode sheet, the solid electrolyte membrane and the protective film, and improving the uniformity of the lateral thickness of the composite electrode sheet.

In some implementations, the preparation apparatus for a composite electrode sheet further comprises a cooling roller 74 located between the shaping roller assembly and the composite electrode sheet winding mechanism 12, which is used to perform cooling treatment on the composite electrode sheet exiting the gap in the shaping roller assembly. The present application provides the cooling roller 74 to reduce the temperature of the composite electrode sheet, so that the composite electrode sheet can be continuously wound, improving production efficiency. Furthermore, the cooling roller 74 further provides shaping treatment for the composite electrode sheet.

In some implementations, the number of the cooling roller 74 may be one or more, preferably two.

In some implementations, a guide roller is provided between the shaping roller assembly and the cooling roller 74, and/or a guide roller is provided between the cooling roller 74 and the composite electrode sheet winding mechanism 12, to adjust cooling time of the composite electrode sheet.

In some implementations, the numbers of the cooling roller 74 and the guide roller in the preparation device for a composite electrode sheet are not particularly limited, and specific numbers may be increased or decreased according to actual situations.

The preparation apparatus for a composite electrode sheet of the present application is provided with a cooling roller, which can quickly reduce the temperature of the composite electrode sheet exiting the gap of the shaping roller assembly, so that the composite electrode sheet can be continuously wound, improving production efficiency. Furthermore, the cooling roller further provides shaping treatment for the composite electrode sheet.

In some implementations, the preparation apparatus for a composite electrode sheet further comprises an unwinding correction assembly, an electrode sheet static elimination assembly, etc. arranged in sequence along an unwinding path of the preparation apparatus. The unwinding correction assembly can correct unwinding and running paths of the electrode sheet, the solid electrolyte membrane, etc., so that initial feed lines are kept at the same level. A winding and unwinding mechanism for a main material employs single-station correction, and winding and unwinding mechanisms for the remaining materials employ a cantilever type, all of which are provided with correction. The static elimination assembly performs static elimination treatment on both sides of the electrode sheet, and can reduce friction between the electrode sheet and the conveyor roller. It can be appreciated that, without departing from the inventive concept of the present application, known functional assemblies or structures may be used in the present application throughout the entire process from winding, to rolling, and unwinding.

In some implementations, the preparation apparatus for a composite electrode sheet further comprises a tension control apparatus.

In some implementations, the tension control apparatus comprises a plurality of tension control elements disposed upstream of the shaping roller assembly, which are used to separately control unwinding tension of the electrode sheet, the solid electrolyte membrane, and the protective film.

In some implementations, the tension control apparatus comprises a plurality of tension control elements disposed downstream of the shaping roller assembly, which are used to separately control winding tension of the composite electrode sheet, the substrate, and the protective film.

In some implementations, the preparation apparatus for a composite electrode sheet further comprises a thickness measuring mechanism. After roll compositing by the shaping roller assembly, the composite electrode sheet passes inspection of the thickness measuring mechanism, that is, the thickness of the composite electrode sheet reaches a target thickness, and the composite electrode sheet then enters the composite electrode sheet winding mechanism 12 to undergo winding.

In some implementations, the aforementioned heating roller and cooling roller 74 further comprise a sensor for measuring a surface temperature of the composite electrode sheet.

The width, diameter, tonnage, mechanical speed, etc. of the shaping roller assembly in the present application have been described in detail in the embodiments disclosed above, and will not be repeated here.

It can be appreciated that the higher the belt speed of the entire preparation apparatus for a composite electrode sheet, the higher production efficiency is. However, excessively high speeds can easily cause problems such as breakage in the belt-carried electrode sheet and solid electrolyte membrane. The present application does not have particular requirements for residence time of the electrode sheet and the solid electrolyte membrane in the gap of the shaping roller assembly. Without departing from the inventive concept of the present application, any adjustments to the residence time that do not require the exercise of creative effort should be construed as falling within the scope of protection of the present application.

In some implementations, linear speeds of the first shaping roller 31 and the second shaping roller 32 are kept consistent, and an unwinding linear speed of the electrode sheet unwinding mechanism 11 and a winding linear speed of the composite electrode sheet winding mechanism 12 are also kept consistent, thereby improving action consistency of the entire rolling preparation process of the composite electrode sheet and enhancing uniformity of the composite electrode sheet.

Referring to FIGs. 20-22, in conjunction with the structure of the preparation device for a composite electrode sheet, the preparation process for a composite electrode sheet of the present application is specifically as follows: An electrode sheet is unwound by means of the electrode sheet unwinding mechanism 11 and conveyed to the composite electrode sheet winding mechanism 12, so that the electrode sheet sequentially passes through the heating roller, and the gap between the first shaping roller 31 and the second shaping roller 32. A solid electrolyte membrane is conveyed by means of the solid electrolyte membrane unwinding mechanism 21 located at a side of the electrode sheet unwinding mechanism 11, so that the solid electrolyte membrane sequentially passes through a gap between the heating roller and the electrode sheet, and a gap between the shaping roller assembly and the electrode sheet. A protective film is unwound by means of the protective film unwinding mechanism 41 located between the solid electrolyte membrane unwinding mechanism 21 and the shaping roller assembly, so that the protective film sequentially passes through a gap between the heating roller and the solid electrolyte membrane, and a gap between the shaping roller assembly and the solid electrolyte membrane. Before being rolled, the electrode sheet, the solid electrolyte membrane and the protective film are first laminated and preheated at the heating roller, and then roll composited by means of the first shaping roller 31 and the second shaping roller 32, to obtain a composite membrane sheet. Finally, downstream of the shaping roller assembly, the protective film is separated from the composite membrane sheet by means of the protective film winding mechanism 42, to obtain a composite electrode sheet. After being cooled by the cooling roller 74, the composite electrode sheet is received by means of the composite electrode sheet winding mechanism 12.

In some implementations, the composite electrode sheet comprises the electrode sheet, and solid electrolyte membranes located at two sides of the electrode sheet, respectively. In this case, after the electrode sheet is transported, the solid electrolyte membranes are unwound by means of two solid electrolyte membrane unwinding mechanisms 21 located at two sides of the electrode sheet unwinding mechanism 11, respectively, and conveyed to the shaping roller assembly, so that the two solid electrolyte membranes separately pass through the heating roller and the gap between the first shaping roller 31 and the second shaping roller 32 in sequence. Protective films are unwound by means of two protective film unwinding mechanisms 41 located at the side of the solid electrolyte membrane unwinding mechanism 21 distant from the electrode sheet, and the protective film unwinding mechanisms 41 convey the protective films to the shaping roller assembly, so that the two protective films separately pass through the heating roller and the gap between the first shaping roller 31 and the second shaping roller 32 in sequence. At the heating roller, the protective film, the solid electrolyte membrane, the electrode sheet, the solid electrolyte membrane and the protective film are sequentially laminated to one another and preheated, and the solid electrolyte membranes are composited on two sides of the electrode sheet under the rolling action of the shaping roller assembly, so as to obtain the composite electrode sheet.

In some implementations, the solid electrolyte membrane is formed independently, that is, the solid electrolyte membrane can be formed without the aid of a substrate and maintain integrity of the membrane. In this case, after the electrode sheet, the solid electrolyte membrane and the protective film enter the gap of the shaping roller assembly, the composite electrode sheet is obtained under the pressure of the shaping roller assembly. The composite electrode sheet may then be wound by means of the electrode sheet winding mechanism.

In some implementations, the solid electrolyte membrane is covered by a substrate, to provide support for the solid electrolyte membrane. When the solid electrolyte membrane unwinding mechanism 21 conveys the solid electrolyte membrane, the substrate is located at the side of the solid electrolyte membrane distant from the electrode sheet. After compositing of the solid electrolyte membrane and the electrode sheet is completed, the substrate is separated from the composite electrode sheet. Specifically, substrates may be separately received by means of substrate winding mechanisms 22 located at two sides of the composite electrode sheet winding mechanism 12, the substrate winding mechanisms 22 being located between the shaping roller assembly and the composite electrode sheet winding mechanism 12.

Optionally, as shown in FIGs. 20-22, in the shaping roller assembly and upstream thereof, the electrode sheet on the electrode sheet unwinding mechanism 11 is guided by a first guide roller 51 and then reaches the first heating roller 71. The solid electrolyte membrane located at the upper side of the electrode sheet unwinding mechanism 11 is guided by the first guide roller 51 and then reaches the first heating roller 71. The solid electrolyte membrane located at the lower side of the electrode sheet unwinding mechanism 11 is guided by a second guide roller 52 and the first guide roller 51, and then reaches the first heating roller 71. The protective film located at the upper side of the electrode sheet unwinding mechanism 11 is guided by a third guide roller 53 and then reaches the first heating roller 71. The protective film located at the lower side of the electrode sheet unwinding mechanism 11 is guided by the third guide roller 53, the second guide roller 52 and the first guide roller 51, and then reaches the first heating roller 71. The second guide roller 52 is located at the side of the first guide roller 51 distant from the shaping roller assembly. The first guide roller 51 is located at the side of the third guide roller 53 distant from the shaping roller assembly. The protective film, the solid electrolyte membrane, the electrode sheet, the solid electrolyte membrane and the protective film are first laminated and preheated at the first heating roller 71, then preheated together by the second heating roller 72 and the third heating roller 73, reach the shaping roller assembly under the guidance of the fourth guide roller 54, and pass through the gap between the first shaping roller 31 and the second shaping roller 32. Under the rolling of the first shaping roller 31 and the second shaping roller 32, compositing of the protective film, the solid electrolyte membrane, the electrode sheet, the solid electrolyte membrane and the protective film is completed, to obtain a composite membrane sheet.

Before roll compositing, the electrode sheet, the solid electrolyte membrane and the protective film are laminated and preheated simultaneously, to obtain a laminated sheet. The preheating temperature increase improves the overall flexibility of the laminated sheet, helping to achieve tight compositing effects in the subsequent roll compositing process, and improving the degree of compositing between the electrode sheet, the solid electrolyte membrane and the protective film. The "simultaneous preheating" ensures that the entire laminated sheet is heated to a uniform temperature, resulting in even heating and a higher degree of lamination.

During roll compositing, the shaping roller assembly applies tension to the electrode sheet and the solid electrolyte membrane. In this case, the two protective films are each located between the shaping roller assembly and the two solid electrolyte membranes, achieving a cushioning function. This ensures that forces received at points of the electrode sheet and the solid electrolyte membrane are uniform, and finally the solid electrolyte membrane in the composite electrode sheet almost completely coats the electrode sheet. The bonding between the electrode sheet and the solid electrolyte membrane is better, the uniformity of the lateral thickness of the composite electrode sheet is improved, and the compaction density is also increased.

In some implementations, the protective film and the substrate may be simultaneously separated from the composite membrane sheet.

Optionally, as shown in FIG. 20, the protective film and the substrate laminated are separated downstream of the shaping roller assembly. Specifically, after being guided by a fifth guide roller 55, the protective film and the substrate reach the protective film winding mechanism 42 and the substrate winding mechanism 22, respectively, and the protective film and the substrate are separated from the composite membrane sheet, to obtain the composite electrode sheet. After being guided by a sixth guide roller 56, the composite electrode sheet reached the cooling roller 74, and then reached the composite electrode sheet winding mechanism 12 under the guidance of the seventh guide roller 57, to complete winding of the composite electrode sheet.

Optionally, downstream of the shaping roller assembly, the protective film and the substrate may reach the protective film winding mechanism 42 and the substrate winding mechanism 22, respectively, through different guide rollers, and, as shown in FIG. 21, be separated without controlling a separation angle of the substrate and the composite membrane sheet. Specifically, the protective film is guided by the fifth guide roller 55, and then reaches the protective film winding mechanism 42. After being guided by a ninth guide roller 59 and an eighth guide roller 58, the substrate reaches the substrate winding mechanism 22, a movement path between the ninth guide roller 59 and the eighth guide roller 58 being a straight line. The protective film and the substrate are separated from the composite membrane sheet.

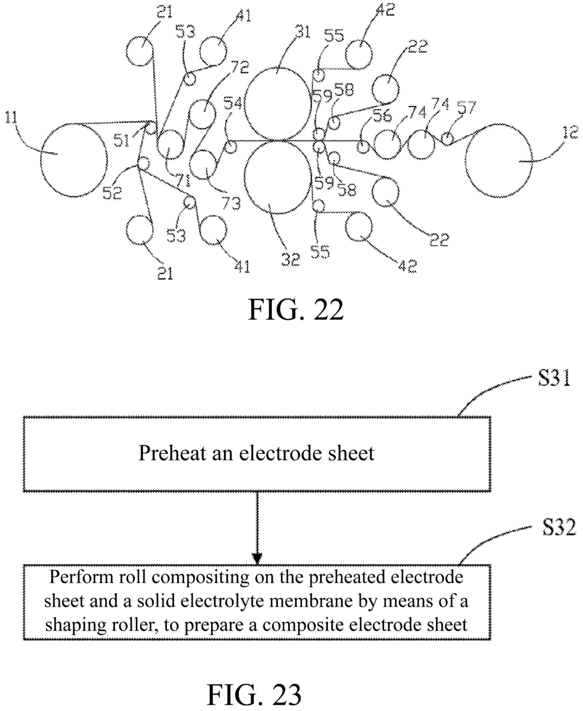

Optionally, downstream of the shaping roller assembly, the protective film and the substrate may reach the protective film winding mechanism 42 and the substrate winding mechanism 22, respectively, through different guide rollers, and, as shown in FIG. 22, be separated by controlling a separation angle of the substrate and the composite membrane sheet. Specifically, the protective film is guided by the fifth guide roller 55, and then reaches the protective film winding mechanism 42. The substrate is sequentially guided by the ninth guide roller 59 and the eighth guide roller 58 before reaching the substrate winding mechanism 22, a movement path between the ninth guide roller 59 and the eighth guide roller 58 being an S-shaped curve. The protective film and the substrate are separated from the composite membrane sheet.

As shown in FIGs. 20-22, the protective film, the solid electrolyte membrane, the electrode sheet, the solid electrolyte membrane and the protective film are distributed in sequence between the shaping roller assemblies. The protective film departs upstream of the shaping roller assembly and is transported to reach the shaping roller assembly, passes through the gap between the shaping roller assembly and the solid electrolyte membrane and is rolled, and then continues to run downstream of the shaping roller assembly until being recovered. Therefore, the protective film of the present application can be reused repeatedly, reducing production and manufacturing costs while reducing harm to the environment, and facilitating improved production efficiency.

In some implementations, the protective film may be wound and recovered downstream of the shaping roller assembly by separating the protective film from the composite electrode sheet by means of the protective film winding mechanism 42.

In some implementations, the substrate may be wound and recovered downstream of the shaping roller assembly by separating the substrate from the composite electrode sheet by means of the substrate winding mechanism 22.

In some implementations, the cooling roller 74 is provided to cool the composite electrode sheet, so as reduce the temperature of the composite electrode sheet, achieving higher production efficiency compared to natural air cooling. Furthermore, the cooling roller 74 further provides shaping treatment for the composite electrode sheet.

As mentioned in the Background section, conventional shaping roller assemblies have high strength and poor deformation resistance, and in order to facilitate smoothness of a rolling process, an electrode sheet is thinned at the edges, to form a structure that is thick in the middle and thin at two ends. Due to a non-uniform lateral thickness of the electrode sheet, when a solid electrolyte membrane is laminated on the electrode sheet, an edge region of the electrode sheet is still separated from the solid electrolyte membrane. When a rolling apparatus performs roll compositing on the electrode sheet and the solid electrolyte membrane, rolling forces of a steel roller are different in a middle region and the edge region of the electrode sheet, making it difficult for the electrode sheet and the solid electrolyte membrane to be tightly composited, i.e., ineffective compositing, which will cause the lateral compaction density of the composite electrode sheet to be non-uniform, and the uniformity of the composite electrode sheet is poor. In severe cases, the electrode sheet may crush, consequently producing a huge impact on the safety performance and quality of a lithium-ion battery.

The preparation apparatus for a composite electrode sheet of the present application provides the heating mechanism upstream of the shaping roller assembly, to preheat the electrode sheet, the solid electrolyte membrane and the protective film before the roll compositing step. The preheating temperature increase improves the overall flexibility of the whole, helping to achieve tight compositing effects in the subsequent roll compositing process, and improving the degree of compositing between the electrode sheet, the solid electrolyte membrane and the protective film.

Using the preparation apparatus for a composite electrode sheet of the present application, before the roll compositing process, the protective films are already laminated on both sides of the electrode sheet and the solid electrolyte membrane, achieving a protective function. During the roll compositing process, cushioning provided by the protective films is utilized to adjust the stress on the electrode sheet and the solid electrolyte membrane during the rolling process, so that the solid electrolyte membrane can better coat the electrode sheet. Furthermore, the lateral thickness of the electrode sheet tends to be uniform after rolling, avoiding an adverse impact on the roll compositing process due to the phenomenon of an electrode sheet being thick in the middle and thin at two ends, and preventing the electrode sheet from being crushed. Furthermore, the stress on the electrode sheet and the solid electrolyte membrane is uniform during the rolling process, improving the degree of compositing between the electrode sheet, the solid electrolyte membrane and the protective film, and improving the uniformity of the lateral thickness of the composite electrode sheet. Additionally, when the composite electrode sheet prepared using the method of the present application is applied to a battery, the composite electrode sheet can effectively prevent powder shedding that may occur during a charge and discharge cycle from affecting the cycle performance of the battery, helping to improve the overall safety performance of the battery.

The compositing process of the present application is carried out under dry conditions. The dry conditions in the present application are different from those of a conventional wet electrode preparation method. Conventional wet preparation of composite electrodes involves first preparing a solid electrolyte slurry and then coating the solid electrolyte slurry onto an electrode sheet, or vice versa, preparing an electrode slurry and then coating the electrode slurry onto a solid electrolyte membrane. The preparation process of the present application does not use solvents, eliminating the need for cumbersome subsequent drying steps, and effectively reducing production costs.

It can be appreciated that the dry process refers to preparation of related electrode sheets and electrolyte membranes without the addition of solvents. Technical solutions involving trace amounts of liquid lubricants or other liquid additives that may be used during a rolling process should still be within the scope of protection of the present application.

In some implementations, both the electrode sheet and the solid electrolyte membrane are prepared by means of a dry process.

In some implementations, at least one of the electrode sheet and the solid electrolyte membrane is prepared by means of a dry process.

In some implementations, both the electrode sheet and the solid electrolyte membrane are prepared by means of a wet process.

It can be appreciated that electrode sheet and the solid electrolyte membrane are preferably prepared under dry conditions, so that solvents are no longer needed in the entire electrode preparation process.

It can be appreciated that the preparation processes of the electrode sheet and the solid electrolyte membrane are independent of the preparation process of the composite electrode. That is, if a wet process is used, the electrode sheet undergoes coating, drying, and rolling processes.

In some implementations, the electrode sheet is a positive electrode sheet, comprising a positive electrode sheet material, especially a high-nickel ternary material having high energy density, which is prone to undesirable side reactions with an electrolyte, especially a non-aqueous electrolyte. These side reactions cause a decline in battery performance and may pose potential safety hazards. Compositing a solid electrolyte layer on a positive electrode surface helps to improve battery safety.

In some implementations, the electrode sheet is a negative electrode sheet. In some implementations, the solid electrolyte membrane is composited on one or both sides of the positive electrode sheet or the negative electrode sheet. For material compositions, preparation methods, and related performance parameters of the positive electrode sheet, the negative electrode sheet, and the solid electrolyte membrane, reference may be made to the embodiments of the present application disclosed above, which will not be repeated here.

Applying a solid electrolyte coating to a surface of an electrode, especially a surface of a high-capacity positive electrode, can effectively improve the safety performance of a battery. However, due to limitations in energy density, the thickness of a solid electrolyte membrane is usually quite small. Compared to an electrode sheet prepared by a dry process, the thickness of the solid electrolyte membrane is an order of magnitude smaller, which renders the solid electrolyte membrane prone to cracking during preparation a composite conductive electrode sheet by a dry process.

In some implementations, the solid electrolyte membrane is formed independently, meaning that the solid electrolyte membrane may be formed without the aid of a substrate and maintain the integrity of the membrane.

In some implementations, the side of the solid electrolyte membrane distant from the electrode sheet is covered by a substrate, and a bonding force between the substrate and the solid electrolyte membrane is less than a bonding force between the solid electrolyte membrane and the electrode sheet. After rolling, at least part of the solid electrolyte is transferred to the electrode sheet and separated from the substrate.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

In some implementations, an electrode sheet and a solid electrolyte membrane may also be procured.

The present application further provides a composite electrode sheet, which is prepared according to the preparation method for a composite electrode sheet provided above.

The present application further provides a lithium-ion battery, which comprises the composite electrode sheet provided above.

One embodiment of the present application comprises the following steps. Using the preparation apparatus for a composite electrode sheet as shown in FIG. 20, a positive electrode sheet was composited with two solid electrolyte membranes, so that the solid electrolyte membranes were simultaneously composited on positive electrode active material layers on two sides of the positive electrode sheet. The solid electrolyte membrane was covered by a substrate. A protective film was a PE-based non-woven fabric.

The electrode sheet departed from the electrode sheet unwinding mechanism 11, passed through the first guide roller 51, and reached the first heating roller 71. The solid electrolyte membrane located at the upper side of the electrode sheet unwinding mechanism 11 departed from the solid electrolyte membrane unwinding mechanism 21, was guided by the first guide roller 51, and then reached the first heating roller 71. The solid electrolyte membrane located at the lower side of the electrode sheet unwinding mechanism 11 departed from the solid electrolyte membrane unwinding mechanism 21, was guided by the second guide roller 52 and the first guide roller 51, and then reached the first heating roller 71. The protective film located at the upper side of the electrode sheet unwinding mechanism 11 departed from the protective film unwinding mechanism 41, was guided by the third guide roller 53, and then reached the first heating roller 71. The protective film located at the lower side of the electrode sheet unwinding mechanism 11 departed from the protective film unwinding mechanism 41, was guided by the third guide roller 53, the second guide roller 52, and the first guide roller 51, and then reached the first heating roller 71. The protective film, the solid electrolyte membrane, the electrode sheet, the solid electrolyte membrane and the protective film were first laminated and preheated at the first heating roller 71, to obtain a laminated sheet. Then, after the laminated sheet was preheated by the second heating roller 72 and the third heating roller 73, the laminated sheet was guided by the fourth guide roller 54 and then reached the shaping roller assembly, passed through the gap between the first shaping roller 31 and the second shaping roller 32, and was rolled by means of the first shaping roller 31 and the second shaping roller 32 to complete compositing of the protective film, the solid electrolyte membrane, the electrode sheet, the solid electrolyte membrane and the protective film, so as to obtain a composite membrane sheet. Next, after being guided by the fifth guide roller 55, the protective film and the substrate reached the protective film winding mechanism 42 and the substrate winding mechanism 22, respectively, and the protective film and the substrate were separated from the composite membrane sheet to obtain a composite electrode sheet. After being guided by a sixth guide roller 56, the composite electrode sheet reached the cooling roller 74, and then reached the composite electrode sheet winding mechanism 12 under the guidance of the seventh guide roller 57, to complete winding of the composite electrode sheet.

One embodiment of the present application comprises the following steps. The only difference between this embodiment and the previous embodiment is that a method of separating a substrate from a composite electrode sheet downstream of the shaping roller assembly is different.

As shown in FIG. 21, downstream of the shaping roller assembly, a protective film was guided by the fifth guide roller 55 and then reached the protective film winding mechanism 42. The protective film winding mechanism 42 separated the protective film from a composite membrane sheet, and completed winding. A substrate was guided by the ninth guide roller 59 and the eighth guide roller 58 and then reached the substrate winding mechanism 22, a movement path between the ninth guide roller 59 and the eighth guide roller 58 being a straight line. The substrate winding mechanism 22 separated the substrate from the composite membrane sheet and completed winding.

One embodiment of the present application comprises the following steps. The only difference between this embodiment and the previous embodiment is that a method of separating a substrate from a composite electrode sheet downstream of the shaping roller assembly is different.

As shown in FIG. 22, downstream of the shaping roller assembly, a protective film was guided by the fifth guide roller 55 and then reached the protective film winding mechanism 42. The protective film winding mechanism 42 separated the protective film from the composite membrane sheet and completed winding. A substrate was guided by the ninth guide roller 59 and the eighth guide roller 58, and then reached the substrate winding mechanism 22, a movement path between the ninth guide roller 59 and the eighth guide roller 58 being an S-shaped curve. The substrate winding mechanism 22 separated the substrate from the composite membrane sheet and completed winding.

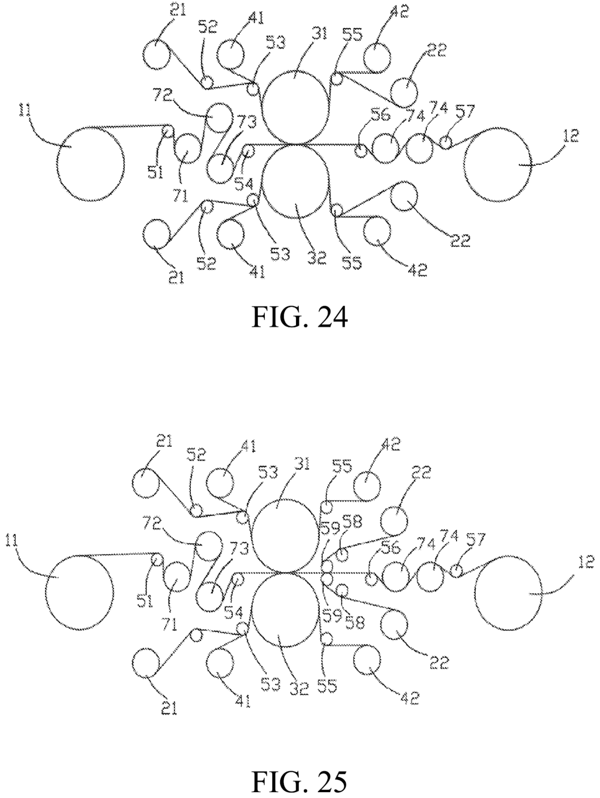

Another aspect of the present application provides a preparation method for a composite electrode sheet, which can improve compositing effects of a composite electrode sheet and a solid electrolyte membrane by a dry process. Referring to FIGs. 24-27, a preparation apparatus for a composite electrode sheet of the present application comprises a shaping roller assembly, an electrode sheet unwinding mechanism 11, a solid electrolyte membrane unwinding mechanism 21, a heating mechanism and a composite electrode sheet winding mechanism 12. The shaping roller assembly comprises a first shaping roller 31 and a second shaping roller 32, symmetrically disposed at two sides of an electrode sheet. A connecting line between axes of the first shaping roller 31 and the second shaping roller 32 is perpendicular to a conveying direction of the electrode sheet. That is, the conveying direction of the electrode sheet is perpendicular to a plane in which the axes of the first shaping roller 31 and the second shaping roller 32 are located. However, this is not a limitation, and the conveying direction of the electrode sheet may be adjusted according to actual needs.

The electrode sheet unwinding mechanism 11 is located upstream of the shaping roller assembly, and is used to unwind the electrode sheet and then convey the electrode sheet, so that the electrode sheet passes through a gap between the first shaping roller 31 and the second shaping roller 32.

It can be appreciated that the electrode sheet in the present application is a positive electrode sheet or a negative electrode sheet.

The solid electrolyte membrane unwinding mechanism 21 is located upstream of the shaping roller assembly, and more specifically between the electrode sheet unwinding mechanism 11 and the shaping roller assembly. The solid electrolyte membrane unwinding mechanism 21 is used to unwind a solid electrolyte membrane, and then convey the solid electrolyte membrane so that the solid electrolyte membrane passes through the gap between the first shaping roller 31 and the second shaping roller 32. More specifically, the solid electrolyte membrane unwinding mechanism 21 causes the solid electrolyte membrane to pass through a gap between the electrode sheet and the shaping roller assembly.

In some implementations, there are two solid electrolyte membrane unwinding mechanisms 21 located at two sides of the electrode sheet unwinding mechanism 11, respectively, and solid electrolyte membranes are then conveyed so that the two solid electrolyte membranes pass through the gap between the first shaping roller 31 and the second shaping roller 32, and the electrode sheet is located between the two solid electrolyte membranes.

Optionally, the two solid electrolyte membrane unwinding mechanisms 21 are symmetrically disposed at two sides of the electrode sheet unwinding mechanism 11.

The heating mechanism is located between the electrode sheet unwinding mechanism 11 and the shaping roller assembly, and is used to preheat the electrode sheet and/or the solid electrolyte membrane.

In some implementations, the heating mechanism is a heating roller.

In some implementations, the number of heating rollers in the preparation apparatus for a composite electrode sheet is not particularly limited, and a specific number of heating rollers may be increased or decreased according to actual situations.

In some implementations, there may be one heating roller, i.e., a first heating roller 71.

In some implementations, there may be a plurality of heating rollers, the temperatures of the heating rollers gradually increasing along the running direction of the electrode sheet, so that preheating effects are more uniform. Specifically, the heating rollers are, in sequence along the running direction of the electrode sheet, a first heating roller 71, a second heating roller 72 and a third heating roller 73. The numbers of the first heating roller 71, the second heating roller 72, and the third heating roller 73 may also each be one, two or more, and are not particularly limited herein.

In some implementations, preheating time of the heating roller is greater than or equal to 2 s.

In the preparation method for a composite electrode sheet of the present application, the heating roller is used to preheat the electrode sheet separately, without preheating the solid electrolyte membrane. A preparation apparatus separately preheating the electrode sheet has a relatively simple overall structure. During preheating, it is only necessary to consider whether the electrode sheet is preheated sufficiently, without having to consider factors such as different preheating rates of the electrode sheet, the solid electrolyte membrane and the protective film, or different preheating temperatures required.

The composite electrode sheet winding mechanism 12 is located downstream of the shaping roller assembly, and is used to provide tension to the electrode sheet along the movement direction of the electrode sheet and to receive the composite electrode sheet obtained after roll compositing by the shaping roller assembly, and to complete a winding action.

It can be appreciated that the present application does not impose particular limitations on a preheating method. The preheating method may be using contact preheating, blower preheating, or radiation preheating, etc., to preheat the electrode sheet, the solid electrolyte membrane, and the protective film. Preferably, S-shaped roller pair contact heating is employed, which can save space by using rollers having large wrap angles, or a plurality of heating rollers having small sizes. Any heating roller in contact preheating that achieves rapid heating, a short preheating stroke, and a high thermal transfer rate at relatively low costs can achieve independent temperature control.

The electrode sheet is subjected to preheating treatment before entering the shaping roller assembly. The preheated electrode sheet will soften compared to before preheating, so that the ductility of the electrode sheet is improved. Therefore, when the first shaping roller assembly roll composites the solid electrolyte membrane and the electrode sheet, the solid electrolyte membrane and the electrode sheet are more tightly interlocked, improving bonding strength therebetween and further improving compositing effects thereof.

In some implementations, an elastic member is provided between the first shaping roller 31 and the second shaping roller 32.

In an electrode sheet production process, edges of the electrode sheet are usually thinned in order to ensure smooth progress of a subsequent rolling process. However, the existence of a thinned region in the electrode sheet will affect lamination between the solid electrolyte membrane and the electrode sheet.

Surprisingly, the preparation apparatus for a composite electrode sheet of the present application utilizes cushioning provided by the elastic member during rolling, to enable the solid electrolyte membrane to better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling.

The elastic layer is made of a flexible material. Under pressure, the flexible material undergoes elastic deformation. The slight elastic deformation makes the thicknesses of the middle region and the thinned region of the electrode sheet tend to be consistent under pressure, allowing better lamination with the solid electrolyte membrane.

A yield limit of the elastic member satisfies: when the solid electrolyte membrane and the electrode sheet pass through the gap in the middle of the shaping roller assembly, the solid electrolyte membrane and the electrode sheet undergo plastic deformation, and the elastic member undergoes elastic deformation.

Elastic deformation refers to a change in relative positions of points in a solid caused by an external force. When the external force is removed, the solid returns to an original shape, which is called elastic deformation.

When an object is subjected to a large force beyond an elastic limit, the object may break or deform, and fail to return to an original shape. This phenomenon is called plastic deformation.

In some implementations, the width of the elastic member is greater than or equal to a minimum value of the width of the solid electrolyte membrane or the electrode sheet.

In some implementations of the present application, the flexible material is a polymer.

The present application does not impose special limitations on the material of the polymer. Exemplarily, the polymer may be a plastic such as polytetrafluoroethylene, polyethylene terephthalate, polypropylene or polyacrylonitrile, or a rubber such as Hypalon rubber, silicone rubber or fluororubber, or an elastic material such as silicone, that can undergo a certain degree of deformation.

The present application does not impose particular limitations on the thickness of the elastic member. Any necessary adjustments to the thickness of the elastic member without departing from the inventive concept of the present application can be construed as being within the scope of protection of the present application.

In some implementations, the elastic member is an adhesive layer 81 that covers around the outside of two shaping roller assemblies.

In some implementations, the elastic member is a protective film that is transported through a gap between the shaping roller assembly and the solid electrolyte membrane.

Accordingly, the preparation apparatus for a composite electrode sheet of the present application further comprises a protective film unwinding mechanism 41 for unwinding the protective film. The protective film unwinding mechanism 41 is located upstream of the shaping roller assembly, disposed between the solid electrolyte membrane unwinding mechanism 21 and the shaping roller assembly, and is used to unwind the protective film. The protective film is transported through the gap between the shaping roller assembly and the solid electrolyte membrane.

The present application does not have particular requirements for the structure of the protective film. Without departing from the inventive concept of the present application, any known film layer that can undergo a certain degree of elastic deformation under a certain pressure can be used in the present application. An illustrative example only, rather than a limitation on the scope of protection, the protective film may be selected from a polymer film or a non-woven fabric. The non-woven fabric comprises, but is not limited to, a PP-based non-woven fabric, a PE-based non-woven fabric, a PET-based non-woven fabric, a PAN-based non-woven fabric, a PTFE-based non-woven fabric, a Celgard non-woven fabric, etc. The polymer film may be selected from a PVDF film, a PE film, a PP film, a PE/PP film, a PE/PP/PE film, a PP/PE/PP film, a PTFE film, a silicone release film, a fluorine release film, a PET film, a non-silicone release film, etc. It can be appreciated that the protective film may also be a multilayer structure consisting of two or more polymer films and/or non-woven fabrics.

The present application does not impose particular limitations on the thickness of the protective film. Without departing from the inventive concept of the present application, any conventional adjustments to the thickness of the protective film to adjust rolling effects should be regarded as within the scope of protection of the present application. It can be appreciated that when the protective film is a multilayer structure, the thickness of the protective film should be the sum of the thicknesses of a plurality of layers.

In some implementations, the preparation apparatus for a composite electrode sheet further comprises a protective film winding mechanism 42. The protective film winding mechanism 42 is located downstream of the shaping roller assembly and is located between the shaping roller assembly and the composite electrode sheet winding mechanism 12, and is used to provide tension to the protective film and to wind and receive the protective film.

In some implementations, the preparation apparatus for a composite electrode sheet further comprises a substrate winding mechanism 22.

When a substrate is provided on the solid electrolyte membrane, the substrate covers the side of the solid electrolyte membrane distant from the electrode sheet. After the electrode sheet and the solid electrolyte membrane are rolled by means of the shaping roller assembly to obtain the composite electrode sheet, the substrate needs to be separated. The substrate and the composite electrode sheet are separated by means of the substrate winding mechanism 22 disposed downstream of the shaping roller assembly. During the separation process, the substrate winding mechanism 22 provides tension to the substrate covering the solid electrolyte membrane, so that the substrate is separated from the composite electrode sheet, and performs a substrate winding action when necessary.

The number of the substrate winding mechanism 22 corresponds to the number of the solid electrolyte membrane unwinding mechanism 21, and the substrate winding mechanism 22 and the solid electrolyte membrane unwinding mechanism 21 are located at the same side of the electrode sheet unwinding mechanism 11.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

In some implementations, the preparation apparatus for a composite electrode sheet further comprises a guide roller.

Optionally, the guide roller is located between the electrode sheet unwinding mechanism 11 and the shaping roller assembly, to provide guidance for the electrode sheet. The guide roller may also be provided between the shaping roller assembly and the composite electrode sheet winding mechanism 12, the guide roller being used to provide guidance for winding of the composite electrode sheet.

Optionally, the guide roller is located between the solid electrolyte membrane unwinding mechanism 21 and the shaping roller assembly, to provide guidance for the solid electrolyte membrane. The guide roller may also be provided between the shaping roller assembly and the substrate winding mechanism 22, the guide roller being used to provide guidance for the substrate separated from the composite electrode sheet and covering the solid electrolyte membrane.

Optionally, the guide roller is located between the protective film unwinding mechanism 41 and the shaping roller assembly, to provide guidance for the protective film. A guide roller may also be provided between the shaping roller assembly and the protective film winding mechanism 42, the guide roller being used to provide guidance for recovery of the protective film.

In some implementations, the preparation apparatus for a composite electrode sheet further comprises a cooling roller 74 located between the shaping roller assembly and the composite electrode sheet winding mechanism 12, which is used to perform cooling treatment on the composite electrode sheet exiting the gap in the shaping roller assembly. The present application provides the cooling roller 74 to reduce the temperature of the composite electrode sheet, so that the composite electrode sheet can be continuously wound, improving production efficiency. Furthermore, the cooling roller 74 further provides shaping treatment for the composite electrode sheet.

In some implementations, the number of the cooling roller 74 may be one or more, preferably two.

In some implementations, a guide roller is provided between the shaping roller assembly and the cooling roller 74, and/or a guide roller is provided between the cooling roller 74 and the composite electrode sheet winding mechanism 12, to adjust cooling time of the composite electrode sheet.

In some implementations, the numbers of the cooling roller 74 and the guide roller in the preparation device for a composite electrode sheet are not particularly limited, and specific numbers may be increased or decreased according to actual situations.

In some implementations, the preparation apparatus for a composite electrode sheet further comprises an unwinding correction assembly, an electrode sheet static elimination assembly, etc. arranged in sequence along an unwinding path of the preparation apparatus. The unwinding correction assembly can correct unwinding and running paths of the electrode sheet, the solid electrolyte membrane, etc., so that initial feed lines are kept at the same level. A winding and unwinding mechanism for a main material employs single-station correction, and winding and unwinding mechanisms for the remaining materials employ a cantilever type, all of which are provided with correction. The static elimination assembly performs static elimination treatment on both sides of the electrode sheet, and can reduce friction between the electrode sheet and the conveyor roller. It can be appreciated that, without departing from the inventive concept of the present application, known functional assemblies or structures may be used in the present application throughout the entire process from winding, to rolling, and unwinding.

In some implementations, the preparation apparatus for a composite electrode sheet further comprises a tension control apparatus.

In some implementations, the tension control apparatus comprises a plurality of tension control elements disposed upstream of the shaping roller assembly, which are used to separately control unwinding tension of the electrode sheet, the solid electrolyte membrane, and the protective film.

In some implementations, the tension control apparatus comprises a plurality of tension control elements disposed downstream of the shaping roller assembly, which are used to separately control winding tension of the composite electrode sheet, the substrate, and the protective film.

In some implementations, the preparation apparatus for a composite electrode sheet further comprises a thickness measuring mechanism. After roll compositing by the shaping roller assembly, the composite electrode sheet passes inspection of the thickness measuring mechanism, and the composite electrode sheet then enters the composite electrode sheet winding mechanism 12 to undergo winding. In some implementations, the aforementioned heating roller and cooling roller 74 further comprise a sensor for measuring a surface temperature of the composite electrode sheet.

In some implementations, the shaping roller assembly applies tension by means of upper and lower opposing rollers, or a heating roller, etc., preferably a heating roller, which has a relatively large roller diameter and is provided with a heating apparatus inside.

The width, diameter, tonnage, and mechanical speed, etc. of the shaping roller assembly in the present application have been described in detail in the embodiments described above, and will not be repeated here.

It can be appreciated that the higher the belt speed of the entire preparation apparatus for a composite electrode sheet, the higher production efficiency is. However, excessively high speeds can easily cause problems such as breakage in the belt-carried electrode sheet and solid electrolyte membrane. The present application does not have particular requirements for residence time of the electrode sheet and the solid electrolyte membrane in the gap of the shaping roller assembly. Without departing from the inventive concept of the present application, any adjustments to the residence time that do not require the exercise of creative effort should be construed as falling within the scope of protection of the present application.

In some implementations, linear speeds of the first shaping roller assembly 31 and the second shaping roller assembly 32 are kept consistent, and an unwinding linear speed of the electrode sheet unwinding mechanism 11 and a winding linear speed of the composite electrode sheet winding mechanism 12 are also kept consistent, thereby improving action consistency of the entire rolling preparation process of the composite electrode sheet and enhancing uniformity of the composite electrode sheet.

Referring to FIGs. 24-27, in conjunction with the structure of the preparation apparatus for a composite electrode sheet, the preparation method for a composite electrode sheet of the present application comprises the following steps: An electrode sheet is unwound by means of the electrode sheet unwinding mechanism 11 and conveyed to the composite electrode sheet winding mechanism 12, so that the electrode sheet sequentially passes through the heating roller, and the gap between the first shaping roller 31 and the second shaping roller 32. A solid electrolyte membrane is conveyed by means of the solid electrolyte membrane unwinding mechanism 21 located at a side of the electrode sheet unwinding mechanism 11, so that the solid electrolyte membrane passes through a gap between the shaping roller assembly and the electrode sheet, and then undergoes roll compositing by means of the first shaping roller 31 and the second shaping roller 32. During roll compositing, an elastic member is provided between the shaping roller assembly and the solid electrolyte membrane. Finally, downstream of the shaping roller assembly, a composite electrode sheet is received by means of the composite electrode sheet winding mechanism 12.

In some implementations, the composite electrode sheet comprises the electrode sheet, and solid electrolyte membranes located at two sides of the electrode sheet, respectively. In this case, after the electrode sheet is transported, the solid electrolyte membranes are unwound by means of two solid electrolyte membrane unwinding mechanisms 21 located at two sides of the electrode sheet unwinding mechanism 11, respectively, and conveyed to the shaping roller assembly, so that the two solid electrolyte membranes separately pass through the gap between the first shaping roller 31 and the second shaping roller 32. In the gap between the first shaping roller 31 and the second shaping roller 32, the two solid electrolyte membranes, the electrode sheet located between the two solid electrolyte membranes, and the elastic members located at outer sides of the two solid electrolyte membranes are laminated to one another, and the solid electrolyte membranes are composited on two sides of the electrode sheet under the rolling action of the shaping roller assembly, so as to obtain the composite electrode sheet.

In some implementations, the solid electrolyte membrane is formed independently, that is, the solid electrolyte membrane can be formed without the aid of a substrate and maintain integrity of the membrane. In this case, after the electrode sheet and the solid electrolyte membrane enter the gap of the shaping roller assembly, the composite electrode sheet is obtained under the pressure of the shaping roller assembly. The composite electrode sheet may then be wound by means of the electrode sheet winding mechanism.

In some implementations, the solid electrolyte membrane is covered by a substrate, to provide support for the solid electrolyte membrane. When the solid electrolyte membrane unwinding mechanism 21 conveys the solid electrolyte membrane, the substrate is located at the side of the solid electrolyte membrane distant from the electrode sheet. After compositing of the solid electrolyte membrane and the electrode sheet is completed, the substrate is separated from the composite electrode sheet. Specifically, substrates may be separately received by means of substrate winding mechanisms 22 located at two sides of the composite electrode sheet winding mechanism 12, the substrate winding mechanisms 22 being located between the shaping roller assembly and the composite electrode sheet winding mechanism 12.

In some implementations, the elastic member is an adhesive layer 81 that covers around the outside of the first shaping roller 31 and the second shaping roller 32. When the shaping roller assembly rotates, the adhesive layer 81 rotates with the shaping roller assembly. Furthermore, when the shaping roller assembly rolls the solid electrolyte membrane and/or the electrode sheet, the adhesive layer 81 provides a cushioning function for the solid electrolyte membrane and/or the electrode sheet, enabling the solid electrolyte membrane to better coat one or two sides of the electrode sheet, and improving uniformity of the lateral thickness of the electrode sheet after rolling.

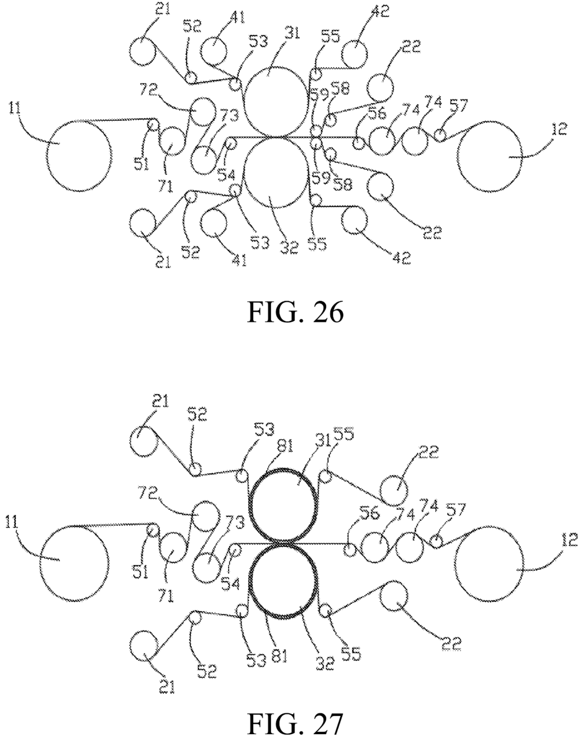

In some implementations, the elastic member is an adhesive layer 81 that covers around the outside of the shaping roller assembly. As shown in FIG. 27, the adhesive layer 81, the solid electrolyte membrane, the electrode sheet, the solid electrolyte membrane and the adhesive layer 81 are sequentially distributed between the shaping roller assemblies. The length of the adhesive layer 81 in an axial direction of the shaping roller assembly may be slightly greater than an axial length of the shaping roller assembly, and the adhesive layer 81 rotates together with the shaping roller assembly during rolling.

In some implementations, the elastic member is a protective film. Protective films may be unwound by means of two protective film unwinding mechanisms 41 located at the side of the solid electrolyte membrane unwinding mechanisms 21 distant from the electrode sheet, and the protective film unwinding mechanisms 41 convey the protective films to the shaping roller assembly so that the two protective films separately pass through the gap between the first shaping roller 31 and the second shaping roller 32. In the gap between the first shaping roller 31 and the second shaping roller 32, the sequentially distributed protective film, solid electrolyte membrane, electrode sheet, solid electrolyte membrane and protective film are laminated on one another, and the solid electrolyte membranes are composited on two sides of the electrode sheet under the rolling action of the shaping roller assembly, so as to obtain the composite electrode sheet.

Optionally, as shown in FIGs. 24-26, in the shaping roller assembly and upstream thereof, the electrode sheet on the electrode sheet unwinding mechanism 11 is guided by a first guide roller 51 and then reaches the first heating roller 71, and is then preheated by the second heating roller 72 and the third heating roller 73, and then guided by a fourth guide roller 54 and reaches the shaping roller assembly. The solid electrolyte membranes located at two sides of the electrode sheet unwinding mechanism 11 are guided by a second guide roller 52 and a third guide roller 53, and then reach the shaping roller assembly. Protective films located at two sides of the electrode sheet unwinding mechanism 11 were guided by the third guide roller 53 and then reached the shaping roller assembly. Subsequently, the protective films passed through the gap between the first shaping roller 31 and the second shaping roller 32. Under rolling of the first shaping roller 31 and the second shaping roller 32, compositing of the protective film, the solid electrolyte membrane, the electrode sheet, the solid electrolyte membrane and the protective film was completed.

Optionally, the solid electrolyte membrane and the protective film are first laminated upstream of the shaping roller assembly, and then make contact with the electrode sheet after rotating with the shaping roller assembly. For example, at the third guide roller 53, the protective film is laminated on the side of the solid electrolyte membrane away from the electrode sheet. Then, the solid electrolyte membrane and the protective film rotate together with the first shaping roller 31 or the second shaping roller 32 to the gap between the first shaping roller 31 and the second shaping roller 32. The side of the solid electrolyte membrane away from the protective film then makes contact with and is laminated on the electrode sheet.

Optionally, as shown in FIG. 27, in the shaping roller assembly and upstream thereof, the electrode sheet on the electrode sheet unwinding mechanism 11 is guided by a first guide roller 51 and then reaches the first heating roller 71, and is then preheated by the second heating roller 72 and the third heating roller 73, and then guided by a fourth guide roller 54 and reaches the shaping roller assembly. The solid electrolyte membranes located at two sides of the electrode sheet unwinding mechanism 11 are guided by a second guide roller 52 and a third guide roller 53, and then reach the shaping roller assembly. The outside of the first shaping roller 31 and the second shaping roller 32 is covered by the adhesive layer 81. Under the rolling of the first shaping roller 31 and the second shaping roller 32, compositing of the electrode sheet and the solid electrolyte membrane is completed.

During rolling, the shaping roller assembly applies tension to the electrode sheet and the solid electrolyte membrane, and the protective film and the adhesive layer 81 are located between the shaping roller assembly and the solid electrolyte membrane, achieving a cushioning function. This ensures that forces received at points of the electrode sheet and the solid electrolyte membrane are uniform, and the solid electrolyte membrane in the finally resulting composite electrode sheet almost completely coats the electrode sheet. The bonding between the electrode sheet and the solid electrolyte membrane is better, the uniformity of the lateral thickness of the composite electrode sheet is improved, and the compaction density is also increased.

In some implementations, the protective film and the substrate may be separated from the composite electrode sheet simultaneously.

Optionally, as shown in FIG. 24, the protective film and the substrate are separated from the shaping roller assembly downstream of the shaping roller assembly. Specifically, after being guided by a fifth guide roller 55, the protective film and the substrate reach the protective film winding mechanism 42 and the substrate winding mechanism 22, respectively, and the protective film and the substrate are separated from the composite electrode sheet to obtain the composite electrode sheet. After being guided by a sixth guide roller 56, the composite electrode sheet reached the cooling roller 74, and then reached the composite electrode sheet winding mechanism 12 under the guidance of the seventh guide roller 57, to complete winding of the composite electrode sheet.

As shown in FIG. 27, the laminated substrate is separated from the shaping roller assembly. Specifically, after being guided by the fifth guide roller 55, the substrate reaches the substrate winding mechanism 22, and the substrate is separated from the composite electrode sheet to obtain the composite electrode sheet. After being guided by a sixth guide roller 56, the composite electrode sheet reached the cooling roller 74, and then reached the composite electrode sheet winding mechanism 12 under the guidance of the seventh guide roller 57, to complete winding of the composite electrode sheet.

Optionally, downstream of the shaping roller assembly, the protective film and the substrate may reach the protective film winding mechanism 42 and the substrate winding mechanism 22, respectively, through different guide rollers, and, as shown in FIG. 25, are separated without controlling a separation angle of the substrate and the composite electrode sheet. Specifically, the protective film is guided by the fifth guide roller 55, and then reaches the protective film winding mechanism 42. After being guided by a ninth guide roller 59 and an eighth guide roller 58, the substrate reaches the substrate winding mechanism 22, a movement path between the ninth guide roller 59 and the eighth guide roller 58 being a straight line. The protective film and the substrate are separated from the composite electrode sheet.

Optionally, downstream of the shaping roller assembly, the protective film and the substrate may reach the protective film winding mechanism 42 and the substrate winding mechanism 22, respectively, through different guide rollers, and, as shown in FIG. 26, be separated without controlling a separation angle of the substrate and the composite membrane sheet. Specifically, the protective film is guided by the fifth guide roller 55, and then reaches the protective film winding mechanism 42. The substrate is sequentially guided by the ninth guide roller 59 and the eighth guide roller 58 before reaching the substrate winding mechanism 22, a movement path between the ninth guide roller 59 and the eighth guide roller 58 being an S-shaped curve. The protective film and the substrate are separated from the composite electrode sheet.

The present application provides a preparation method for a composite electrode sheet using the foregoing preparation device for a composite electrode sheet, which, as shown in FIG. 23, comprises the following steps:
S31. Preheat an electrode sheet;
S32. Perform roll compositing on the preheated electrode sheet and a solid electrolyte membrane by means of the shaping roller assembly, to prepare the composite electrode sheet, an elastic member being provided between the shaping roller assembly and the solid electrolyte membrane.

In some implementations, the elastic member is a protective film that is transported through a gap between the shaping roller assembly and the solid electrolyte membrane.

As shown in FIGs. 24-26, the protective film, the solid electrolyte membrane, the electrode sheet, the solid electrolyte membrane and the protective film are distributed in sequence between the shaping roller assemblies. The protective film departs upstream of the shaping roller assembly and is transported to reach the shaping roller assembly, passes through the gap between the shaping roller assembly and the solid electrolyte membrane and is rolled, and then continues to run downstream of the shaping roller assembly until being recovered. Therefore, the protective film of the present application can be reused repeatedly, reducing production and manufacturing costs while reducing harm to the environment, and facilitating improved production efficiency.

In some implementations, the elastic member is an adhesive layer 81 that covers around the outside of the shaping roller assembly.

In some implementations, solid electrolyte membranes located at two sides of the electrode sheet, respectively, are roll composited on the electrode sheet by the shaping roller assembly, to obtain the composite electrode sheet.

It can be appreciated that in the rolled composite electrode sheet, solid electrolyte layers are composited on the electrode sheet. The solid electrolyte membranes being located at two sides of the electrode sheet means that solid electrolyte membranes are composited on both sides of the electrode sheet by rollers.

In some implementations, the electrode sheet is preheated several times, and temperatures of the several preheatings progressively increase. The temperatures of the number of preheatings gradually increase, so that heating is more uniform across the electrode sheet and subsequent roll compositing is tighter.

In some implementations, the electrode sheet is preheated three times by the first heating roller 71, the second heating roller 72, and the third heating roller 73.

In some implementations, preheating time of the heating roller is greater than or equal to 2 s.

In some implementations, a substrate is coated on the side of the solid electrolyte membrane distant from the electrode sheet, and the preparation method for a composite electrode sheet further comprises the following step: separating the substrate from the composite electrode sheet.

In some implementations, the substrate may be wound and recovered downstream of the shaping roller assembly by separating the substrate from the composite electrode sheet by means of the substrate winding mechanism 22.

In some implementations, the preparation method for a composite electrode sheet further comprises the following step: performing cooling treatment on the composite electrode sheet.

In some implementations, the cooling roller 74 is provided to perform cooling treatment on the composite electrode sheet, so as to reduce the temperature of the composite electrode sheet, so that the composite electrode sheet can be continuously wound, improving production efficiency. Furthermore, the cooling roller 74 further provides shaping treatment for the composite electrode sheet.

In some implementations, the preparation method for a composite electrode sheet further comprises:
downstream of the shaping roller assembly, receiving the composite electrode sheet by means of a composite electrode sheet winding mechanism 12;
receiving the substrate by means of a substrate winding mechanism 22 between the shaping roller assembly and the composite electrode sheet winding mechanism 12, wherein
the substrate winding mechanism 22 and the solid electrolyte membrane unwinding mechanism 21 are located at the same side of the electrode sheet unwinding mechanism 11.

In some implementations, the preparation method for a composite electrode sheet further comprises:
conveying the elastic member by means of the protective film unwinding mechanism 41, wherein the protective film unwinding mechanism 41 is located between the solid electrolyte membrane unwinding mechanism 21 and the shaping roller assembly; and
between the shaping roller assembly and the substrate winding mechanism 22, receiving the elastic member by means of the protective film winding mechanism 42.

In the preparation method for a composite electrode sheet of the present application, the electrode sheet is preheated before the roll compositing step. The preheating and temperature raising increase the flexibility of the electrode sheet, so that the ductility of the electrode sheet is improved, and the plasticity of the electrode sheet is increased. Thus, when the shaping roller assembly rolls the electrode sheet and the solid electrolyte membrane, the electrode sheet and the solid electrolyte membrane are more tightly interlocked, improving the adhesion strength between two membranes and more easily achieving a tight compositing effect.

In the preparation method for a composite electrode sheet of the present application, compared with overall preheating of the electrode sheet and the solid electrolyte membrane, the structure of a rolling apparatus for separately preheating the electrode sheet is simpler, and the preheating of the electrode sheet is more thorough, without having to consider factors such as a slower preheating rate for the composite membrane and a different preheating temperature for the solid electrolyte membrane.

As mentioned in the Background section, conventional shaping roller assemblies have high strength and poor deformation resistance, and in order to facilitate smoothness of a rolling process, an electrode sheet is thinned at the edges, to form a structure that is thick in the middle and thin at two ends. Due to a non-uniform lateral thickness of the electrode sheet, when a solid electrolyte membrane is laminated on the electrode sheet, an edge region of the electrode sheet is still separated from the solid electrolyte membrane. When a rolling apparatus performs roll compositing on the electrode sheet and the solid electrolyte membrane, rolling forces of a steel roller are different in a middle region and the edge region of the electrode sheet, making it difficult for the electrode sheet and the solid electrolyte membrane to be tightly composited, i.e., ineffective compositing, which will cause the lateral compaction density of the composite electrode sheet to be non-uniform, and the uniformity of the composite electrode sheet is poor. In severe cases, the electrode sheet may crush, consequently producing a huge impact on the safety performance and quality of a lithium-ion battery.

In the preparation method for a composite electrode sheet of the present application, the stress on the electrode sheet and the solid electrolyte membrane during the rolling process is adjusted by means of cushioning provided by the elastic member, so that the solid electrolyte membrane can better coat the electrode sheet. Furthermore, the stress on the electrode sheet and the solid electrolyte membrane is uniform during the rolling process, so that the lateral thickness of the electrode sheet tends to be uniform after rolling, avoiding an adverse impact on the roll compositing process due to the phenomenon of an electrode sheet being thick in the middle and thin at two ends, and preventing the electrode sheet from being crushed. This improves the degree of compositing between the electrode sheet, the solid electrolyte membrane and the protective film, and improves the uniformity of the lateral thickness of the composite electrode sheet. Additionally, when the composite electrode sheet prepared using the method of the present application is applied to a battery, the composite electrode sheet can effectively prevent powder shedding that may occur during a charge and discharge cycle from affecting the cycle performance of the battery, helping to improve the overall safety performance of the battery.

The compositing process of the present application is carried out under dry conditions. The dry conditions in the present application are different from those of a conventional wet electrode preparation method. Conventional wet preparation of composite electrodes involves first preparing a solid electrolyte slurry and then coating the solid electrolyte slurry onto an electrode sheet, or vice versa, preparing an electrode slurry and then coating the electrode slurry onto a solid electrolyte membrane. The preparation process of the present application does not use solvents, eliminating the need for cumbersome subsequent drying steps, and effectively reducing production costs.

It can be appreciated that the dry process refers to preparation of related electrode sheets and electrolyte membranes without the addition of solvents. Technical solutions involving trace amounts of liquid lubricants or other liquid additives that may be used during a rolling process should still be within the scope of protection of the present application.

In some implementations, both the electrode sheet and the solid electrolyte membrane are prepared by means of a dry process.

In some implementations, at least one of the electrode sheet and the solid electrolyte membrane is prepared by means of a dry process.

In some implementations, both the electrode sheet and the solid electrolyte membrane are prepared by means of a wet process.

It can be appreciated that electrode sheet and the solid electrolyte membrane are preferably prepared under dry conditions, so that solvents are no longer needed in the entire electrode preparation process.

It can be appreciated that the preparation processes of the electrode sheet and the solid electrolyte membrane are independent of the preparation process of the composite electrode. That is, if a wet process is used, the electrode sheet undergoes coating, drying, and rolling processes.

In some implementations, the electrode sheet is a positive electrode sheet. Positive electrode materials, especially high-nickel ternary materials with high energy density, are prone to undesirable side reactions with electrolytes, especially non-aqueous electrolytes. These side reactions cause a decline in battery performance, and may pose potential safety hazards. Compositing a solid electrolyte layer on a positive electrode surface helps to improve battery safety.

In some implementations, the electrode sheet is a negative electrode sheet. In some implementations, the solid electrolyte membrane is composited on one or both sides of the positive electrode sheet or the negative electrode sheet. Material compositions, preparation methods and related performance parameters of the positive electrode sheet, the negative electrode sheet and the solid electrolyte membrane have been described in detail in the above embodiments of the present application, and will not be repeated here.

Applying a solid electrolyte coating to a surface of an electrode, especially a surface of a high-capacity positive electrode, can effectively improve the safety performance of a battery. However, due to limitations in energy density, the thickness of a solid electrolyte membrane is usually quite small. Compared to an electrode sheet prepared by a dry process, the thickness of the solid electrolyte membrane is an order of magnitude smaller, which renders the solid electrolyte membrane prone to cracking during preparation a composite conductive electrode sheet by a dry process.

In some implementations, the solid electrolyte membrane is formed independently, meaning that the solid electrolyte membrane may be formed without the aid of a substrate and maintain the integrity of the membrane.

In some implementations, the side of the solid electrolyte membrane distant from the electrode sheet is covered by a substrate, and a bonding force between the substrate and the solid electrolyte membrane is less than a bonding force between the solid electrolyte membrane and the electrode sheet. After rolling, at least part of the solid electrolyte is transferred to the electrode sheet and separated from the substrate.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

In some implementations, an electrode sheet and a solid electrolyte membrane may also be procured.

The present application further provides a composite electrode sheet, which is prepared according to the preparation method for a composite electrode sheet provided above.

The present application further provides a lithium-ion battery, which comprises the composite electrode sheet provided above.

One embodiment of the present application comprises the following steps. Using the preparation apparatus for a composite electrode sheet as shown in FIG. 24, a positive electrode sheet was composited with two solid electrolyte membranes, so that the solid electrolyte membranes were simultaneously composited on positive electrode active material layers on two sides of the positive electrode sheet. The solid electrolyte membrane was covered by a substrate. A protective film was a PE-based non-woven fabric.

The electrode sheet departed from the electrode sheet unwinding mechanism 11, passed through the first guide roller 51 and reached the first heating roller 71, was then preheated by the second heating roller 72 and the third heating roller 73, and after being guided by the fourth guide roller 54, reached the shaping roller assembly. Solid electrolyte membranes located at two sides of the electrode sheet unwinding mechanism 11 were guided by the second guide roller 52 and the third guide roller 53, respectively, and then reached the shaping roller assembly. Protective films located at two sides of the electrode sheet unwinding mechanism 11 were guided by the third guide roller 53 and then reached the shaping roller assembly. Subsequently, the protective films passed through the gap between the first shaping roller 31 and the second shaping roller 32. Under rolling of the first shaping roller 31 and the second shaping roller 32, roll compositing of the protective film, the solid electrolyte membrane, the electrode sheet, the solid electrolyte membrane, and the protective film was completed. Next, after being guided by the fifth guide roller 55, the protective film and the substrate reached the protective film winding mechanism 42 and the substrate winding mechanism 22, respectively, and the protective film and the substrate were separated from the composite electrode sheet, to obtain a composite electrode sheet. After being guided by a sixth guide roller 56, the composite electrode sheet reached the cooling roller 74, and then reached the composite electrode sheet winding mechanism 12 under the guidance of the seventh guide roller 57, to complete winding of the composite electrode sheet.

The prepared composite electrode sheet had no cracks on the surface.

One embodiment of the present application comprises the following steps. The only difference between this embodiment and the previous embodiment is that a method of separating a substrate from a composite electrode sheet downstream of the shaping roller assembly is different.

As shown in FIG. 25, downstream of the shaping roller assembly, a protective film was guided by the fifth guide roller 55 and then reached the protective film winding mechanism 42. The protective film winding mechanism 42 separated the protective film from the composite electrode sheet and completed winding. The substrate was guided by the ninth guide roller 59 and the eighth guide roller 58 and then reached the substrate winding mechanism 22, a movement path between the ninth guide roller 59 and the eighth guide roller 58 being a straight line. The substrate winding mechanism 22 separated the substrate from the composite electrode sheet and completed winding.

The prepared composite electrode sheet had no cracks on the surface.

One embodiment of the present application comprises the following steps. The only difference between this embodiment and the previous embodiment is that a method of separating a substrate from a composite electrode sheet downstream of the shaping roller assembly is different.

As shown in FIG. 26, downstream of the shaping roller assembly, a protective film was guided by the fifth guide roller 55 and then reached the protective film winding mechanism 42. The protective film winding mechanism 42 separated the protective film from the composite electrode sheet and completed winding. The substrate was guided by the ninth guide roller 59 and the eighth guide roller 58, and then reached the substrate winding mechanism 22, a movement path between the ninth guide roller 59 and the eighth guide roller 58 being an S-shaped curve. The substrate winding mechanism 22 separated the substrate from the composite electrode sheet and completed winding.

The prepared composite electrode sheet had no cracks on the surface.

One embodiment of the present application comprises the following steps. The only difference between this embodiment and the previous embodiment is that an elastic member is an adhesive layer 81 instead of the protective film, and the adhesive layer 81 covers the outside of the first shaping roller 31 and the second shaping roller 32.

As shown in FIG. 27, an electrode sheet departed from the electrode sheet unwinding mechanism 11, passed through the first guide roller 51 and reached the first heating roller 71, was then preheated by the second heating roller 72 and the third heating roller 73, and after being guided by the fourth guide roller 54, reached the shaping roller assembly. Solid electrolyte membranes located at two sides of the electrode sheet unwinding mechanism 11 were guided by the second guide roller 52 and the third guide roller 53, respectively, and then reached the shaping roller assembly. Subsequently, the solid electrolyte membranes passed through the gap between the first shaping roller 31 and the second shaping roller 32. Under rolling of the first shaping roller 31 and the second shaping roller 32, roll compositing of the solid electrolyte membrane, the electrode sheet and the solid electrolyte membrane was completed. Next, after being guided by the fifth guide roller 55, a substrate reached the substrate winding mechanism 22, and the substrate was separated from the composite electrode sheet to obtain a composite electrode sheet. After being guided by the sixth guide roller 56, the composite electrode sheet reached the cooling roller 74, and then reached the composite electrode sheet winding mechanism 12 under the guidance of the seventh guide roller 57, to complete winding of the composite electrode sheet.

The prepared composite electrode sheet had no cracks on the surface.

In a comparative embodiment of the present application, a difference between this comparative embodiment and the previous embodiment is that the preparation apparatus for a composite electrode sheet is not provided with a heating roller.

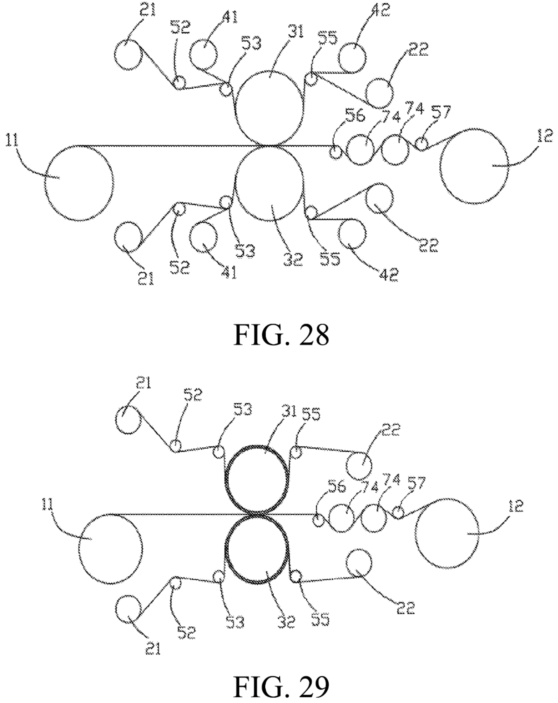

As shown in FIG. 28, an electrode sheet departed from the electrode sheet unwinding mechanism 11 and was transported to reach the shaping roller assembly. Solid electrolyte membranes located at two sides of the electrode sheet unwinding mechanism 11 were guided by the second guide roller 52 and the third guide roller 53, respectively, and then reached the shaping roller assembly. Protective films located at two sides of the electrode sheet unwinding mechanism 11 were guided by the third guide roller 53 and then reached the shaping roller assembly. Subsequently, the protective films passed through the gap between the first shaping roller 31 and the second shaping roller 32. Under rolling of the first shaping roller 31 and the second shaping roller 32, roll compositing of the protective film, the solid electrolyte membrane, the electrode sheet, the solid electrolyte membrane, and the protective film was completed. Next, after being guided by the fifth guide roller 55, the protective film and the substrate reached the protective film winding mechanism 42 and the substrate winding mechanism 22, respectively, and the protective film and the substrate were separated from the composite electrode sheet, to obtain a composite electrode sheet. After being guided by a sixth guide roller 56, the composite electrode sheet reached the cooling roller 74, and then reached the composite electrode sheet winding mechanism 12 under the guidance of the seventh guide roller 57, to complete winding of the composite electrode sheet.

There was an interlayer separation phenomenon at edges of the composite electrode sheet, and there were fine cracks at the edges.

In a comparative embodiment of the present application, a difference between this comparative embodiment and the previous embodiment is that the preparation apparatus for a composite electrode sheet is not provided with a heating roller.

As shown in FIG. 29, an electrode sheet departed from the electrode sheet unwinding mechanism 11 and was transported to reach the shaping roller assembly. Solid electrolyte membranes located at two sides of the electrode sheet unwinding mechanism 11 were guided by the second guide roller 52 and the third guide roller 53, respectively, and then reached the shaping roller assembly. Subsequently, the solid electrolyte membranes passed through the gap between the first shaping roller 31 and the second shaping roller 32. Under rolling of the first shaping roller 31 and the second shaping roller 32, roll compositing of the solid electrolyte membrane, the electrode sheet and the solid electrolyte membrane was completed. Next, after being guided by the fifth guide roller 55, a substrate reached the substrate winding mechanism 22, and the substrate was separated from the composite electrode sheet to obtain a composite electrode sheet. After being guided by a sixth guide roller 56, the composite electrode sheet reached the cooling roller 74, and then reached the composite electrode sheet winding mechanism 12 under the guidance of the seventh guide roller 57, to complete winding of the composite electrode sheet.

There was an interlayer separation phenomenon at edges of the composite electrode sheet, and there were fine cracks at the edges.

In a comparative embodiment of the present application, a difference between this comparative embodiment and the previous embodiment is that the preparation apparatus for a composite electrode sheet is not provided with a heating roller or an elastic member.

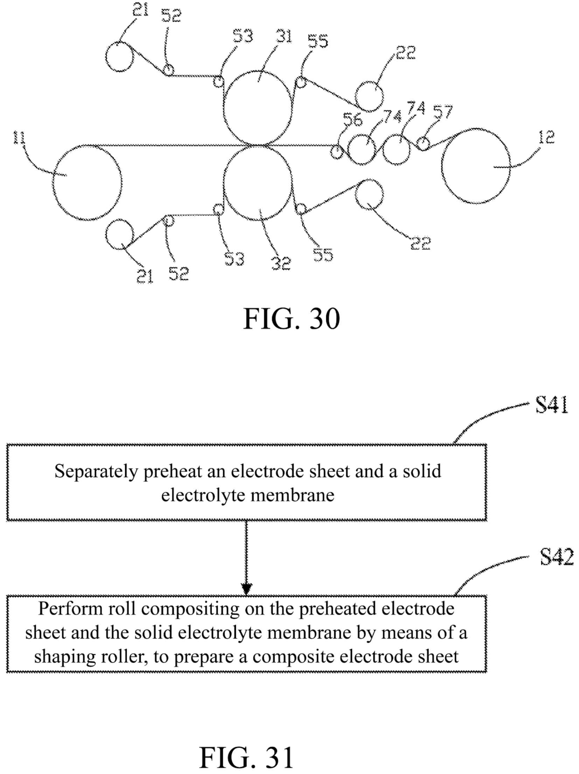

As shown in FIG. 30, an electrode sheet departed from the electrode sheet unwinding mechanism 11 and was transported to reach the shaping roller assembly. Solid electrolyte membranes located on two sides of the electrode sheet unwinding mechanism 11 departed from the solid electrolyte membrane unwinding mechanism 21, passed through the second guide roller 52 and the third guide roller 53, and then reached the shaping roller assembly. Subsequently, the solid electrolyte membranes passed through the gap between the first shaping roller 31 and the second shaping roller 32. Under rolling of the first shaping roller 31 and the second shaping roller 32, compositing of the solid electrolyte membrane, the electrode sheet, and the solid electrolyte membrane was completed. Next, after being guided by the fifth guide roller 55, a substrate reached the substrate winding mechanism 22, and the substrate winding mechanism 22 separated the substrate from the composite electrode sheet to obtain a composite electrode sheet. After being guided by a sixth guide roller 56, the composite electrode sheet reached the cooling roller 74, and then reached the composite electrode sheet winding mechanism 12 under the guidance of the seventh guide roller 57, to complete winding of the composite electrode sheet.

There was an interlayer separation phenomenon at edges of the composite electrode sheet, and there were fine cracks at the edges.

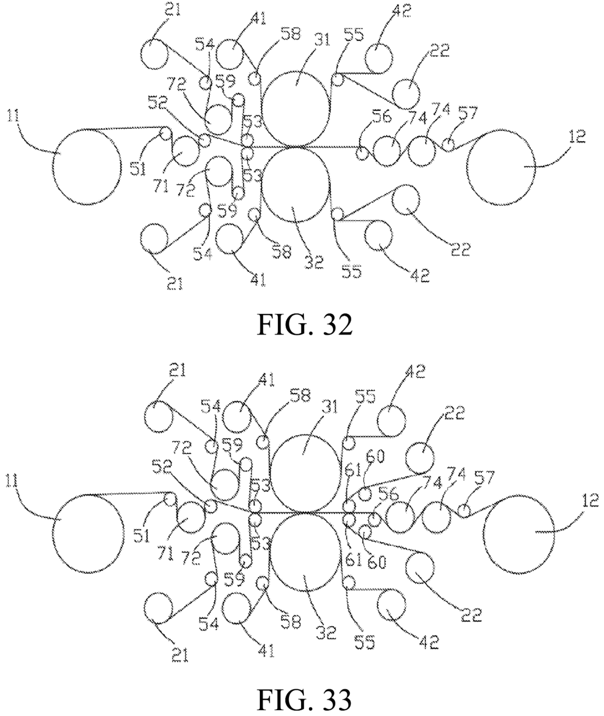

Another aspect of the present application provides a preparation method for a composite electrode sheet, which can improve compositing effects of a composite electrode sheet and a solid electrolyte membrane by a dry process. Referring to FIGs. 32-35, a preparation apparatus for a composite electrode sheet of the present application comprises a shaping roller assembly, an electrode sheet unwinding mechanism 11, a solid electrolyte membrane unwinding mechanism 21, a heating mechanism and a composite electrode sheet winding mechanism 12. The shaping roller assembly comprises a first shaping roller 31 and a second shaping roller 32, symmetrically disposed at two sides of an electrode sheet. A connecting line between axes of the first shaping roller 31 and the second shaping roller 32 is perpendicular to a conveying direction of the electrode sheet. That is, the conveying direction of the electrode sheet is perpendicular to a plane in which the axes of the first shaping roller 31 and the second shaping roller 32 are located. However, this is not a limitation, and the conveying direction of the electrode sheet may be adjusted according to actual needs.

The electrode sheet unwinding mechanism 11 is located upstream of the shaping roller assembly, and is used to unwind the electrode sheet and then convey the electrode sheet, so that the electrode sheet passes through a gap between the first shaping roller 31 and the second shaping roller 32.

It can be appreciated that the electrode sheet in the present application is a positive electrode sheet or a negative electrode sheet.

The solid electrolyte membrane unwinding mechanism 21 is located upstream of the shaping roller assembly, and more specifically between the electrode sheet unwinding mechanism 11 and the shaping roller assembly. The solid electrolyte membrane unwinding mechanism 21 is used to unwind a solid electrolyte membrane, and then convey the solid electrolyte membrane so that the solid electrolyte membrane passes through the gap between the first shaping roller 31 and the second shaping roller 32. More specifically, the solid electrolyte membrane unwinding mechanism 21 causes the solid electrolyte membrane to pass through a gap between the electrode sheet and the shaping roller assembly.

In some implementations, there are two solid electrolyte membrane unwinding mechanisms 21 located at two sides of the electrode sheet unwinding mechanism 11, respectively, and solid electrolyte membranes are then conveyed so that the two solid electrolyte membranes pass through the gap between the first shaping roller 31 and the second shaping roller 32, and the electrode sheet is located between the two solid electrolyte membranes.

Optionally, the two solid electrolyte membrane unwinding mechanisms 21 are symmetrically disposed at two sides of the electrode sheet unwinding mechanism 11.

The heating mechanism is located between the electrode sheet unwinding mechanism 11 and the shaping roller assembly, and is used to preheat the electrode sheet and/or the solid electrolyte membrane.

In some implementations, the heating mechanism comprises a first heating mechanism and a second heating mechanism, the first heating mechanism being used to preheat the electrode sheet, and the second heating mechanism being used to preheat the solid electrolyte membrane.

In some implementations, the numbers of the first heating mechanism and the second heating mechanism are not particularly limited, and there may be one or more first heating mechanisms; there may be one or more second heating mechanisms; the numbers may be increased or decreased according to actual situations.

In some implementations, the heating mechanism is a heating roller.

In some implementations, the number of heating rollers in the preparation apparatus for a composite electrode sheet is not particularly limited, and a specific number of heating rollers may be increased or decreased according to actual situations.

In some implementations, there may be one heating roller, i.e., a first heating roller 71.

In some implementations, there may be a plurality of heating rollers, the temperatures of the heating rollers gradually increasing along the running direction of the electrode sheet, so that preheating effects are more uniform.

In some implementations, the numbers of the first heating roller 71 and the second heating roller 72 may separately be one, two, or more, which are not particularly limited herein.

In some implementations, preheating time of the heating roller is greater than or equal to 2 s.

In some implementations, the first heating roller 71 is used to preheat the electrode sheet, and the second heating roller 72 is used to preheat the solid electrolyte membrane.

The composite electrode sheet winding mechanism 12 is located downstream of the shaping roller assembly, and is used to provide tension to the electrode sheet along the movement direction of the electrode sheet and to receive the composite electrode sheet obtained after roll compositing by the shaping roller assembly, and to complete a winding action.

It can be appreciated that the present application does not impose particular limitations on a preheating method. The preheating method may be using contact preheating, blower preheating, or radiation preheating, etc., to preheat the electrode sheet, the solid electrolyte membrane, and the protective film. Preferably, S-shaped roller pair contact heating is employed, which can save space by using rollers having large wrap angles, or a plurality of heating rollers having small sizes. Any heating roller in contact preheating that achieves rapid heating, a short preheating stroke, and a high thermal transfer rate at relatively low costs can achieve independent temperature control.

In some implementations, an elastic member is provided between the first shaping roller 31 and the second shaping roller 32.

In some implementations, a heating unit is provided inside the first shaping roller 31 and/or the second shaping roller 32.

In an electrode sheet production process, edges of the electrode sheet are usually thinned in order to ensure smooth progress of a subsequent rolling process. However, the existence of a thinned region in the electrode sheet will affect lamination between the solid electrolyte membrane and the electrode sheet.

Surprisingly, the preparation apparatus for a composite electrode sheet of the present application utilizes cushioning provided by the elastic member during rolling, to enable the solid electrolyte membrane to better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling.

The elastic layer is made of a flexible material. Under pressure, the flexible material undergoes elastic deformation. The slight elastic deformation makes the thicknesses of the middle region and the thinned region of the electrode sheet tend to be consistent under pressure, allowing better lamination with the solid electrolyte membrane.

In some implementations of the present application, the flexible material is a polymer.

The present application does not impose special limitations on the material of the polymer. Exemplarily, the polymer may be a plastic such as polytetrafluoroethylene, polyethylene terephthalate, polypropylene or polyacrylonitrile, or a rubber such as Hypalon rubber, silicone rubber or fluororubber, or an elastic material such as silicone, that can undergo a certain degree of deformation.

The present application does not impose particular limitations on the thickness of the elastic member. Any necessary adjustments to the thickness of the elastic member without departing from the inventive concept of the present application can be construed as being within the scope of protection of the present application.

In some implementations, the elastic member is an adhesive layer 81 that covers around the outside of two shaping roller assemblies.

In some implementations, the elastic member is a protective film that is transported through a gap between the shaping roller assembly and the solid electrolyte membrane.

Accordingly, the preparation apparatus for a composite electrode sheet of the present application further comprises a protective film unwinding mechanism 41 for unwinding the protective film. The protective film unwinding mechanism 41 is located upstream of the shaping roller assembly, disposed between the solid electrolyte membrane unwinding mechanism 21 and the shaping roller assembly, and is used to unwind the protective film. The protective film is transported through the gap between the shaping roller assembly and the solid electrolyte membrane.

The present application does not have particular requirements for the structure of the protective film. Without departing from the inventive concept of the present application, any known film layer that can undergo a certain degree of elastic deformation under a certain pressure can be used in the present application. An illustrative example only, rather than a limitation on the scope of protection, the protective film may be selected from a polymer film or a non-woven fabric. The non-woven fabric comprises, but is not limited to, a PP-based non-woven fabric, a PE-based non-woven fabric, a PET-based non-woven fabric, a PAN-based non-woven fabric, a PTFE-based non-woven fabric, a Celgard non-woven fabric, etc. The polymer film may be selected from a PVDF film, a PE film, a PP film, a PE/PP film, a PE/PP/PE film, a PP/PE/PP film, a PTFE film, a silicone release film, a fluorine release film, a PET film, a non-silicone release film, etc. It can be appreciated that the protective film may also be a multilayer structure consisting of two or more polymer films and/or non-woven fabrics.

The present application does not impose particular limitations on the thickness of the protective film. Without departing from the inventive concept of the present application, any conventional adjustments to the thickness of the protective film to adjust rolling effects should be regarded as within the scope of protection of the present application. It can be appreciated that when the protective film is a multilayer structure, the thickness of the protective film should be the sum of the thicknesses of a plurality of layers.

In some implementations, the preparation apparatus for a composite electrode sheet further comprises a protective film winding mechanism 42. The protective film winding mechanism 42 is located downstream of the shaping roller assembly and is located between the shaping roller assembly and the composite electrode sheet winding mechanism 12, and is used to provide tension to the protective film and to wind and receive the protective film.

In some implementations, the preparation apparatus for a composite electrode sheet further comprises a substrate winding mechanism 22.

When a substrate is provided on the solid electrolyte membrane, the substrate covers the side of the solid electrolyte membrane distant from the electrode sheet. After the electrode sheet and the solid electrolyte membrane are rolled by means of the shaping roller assembly to obtain the composite electrode sheet, the substrate needs to be separated. The substrate and the composite electrode sheet are separated by means of the substrate winding mechanism 22 disposed downstream of the shaping roller assembly. During the separation process, the substrate winding mechanism 22 provides tension to the substrate covering the solid electrolyte membrane, so that the substrate is separated from the composite electrode sheet, and performs a substrate winding action when necessary.

The number of the substrate winding mechanism 22 corresponds to the number of the solid electrolyte membrane unwinding mechanism 21, and the substrate winding mechanism 22 and the solid electrolyte membrane unwinding mechanism 21 are located at the same side of the electrode sheet unwinding mechanism 11.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

In some implementations, the preparation apparatus for a composite electrode sheet further comprises a guide roller.

Optionally, the guide roller is located between the electrode sheet unwinding mechanism 11 and the shaping roller assembly, to provide guidance for the electrode sheet. The guide roller may also be provided between the shaping roller assembly and the composite electrode sheet winding mechanism 12, the guide roller being used to provide guidance for winding of the composite electrode sheet.

Optionally, the guide roller is located between the solid electrolyte membrane unwinding mechanism 21 and the shaping roller assembly, to provide guidance for the solid electrolyte membrane. The guide roller may also be provided between the shaping roller assembly and the substrate winding mechanism 22, the guide roller being used to provide guidance for the substrate separated from the composite electrode sheet and covering the solid electrolyte membrane.

Optionally, the guide roller is located between the protective film unwinding mechanism 41 and the shaping roller assembly, to provide guidance for the protective film. A guide roller may also be provided between the shaping roller assembly and the protective film winding mechanism 42, the guide roller being used to provide guidance for recovery of the protective film.

In some implementations, a ninth guide roller 59 is provided between the shaping roller assembly and the second heating mechanism. The ninth guide roller 59 is used to adjust preheating time of the solid electrolyte membrane. During the conveying process of the solid electrolyte membrane, there is a wrap angle between the solid electrolyte membrane and the second heating roller 72. When the wrap angle is overly large, contact time between the solid electrolyte membrane and the second heating roller 72 will be excessively long, which will cause the solid electrolyte membrane to easily stick to the second heating roller 72. When the wrap angle is too small, the contact time between the solid electrolyte membrane and the second heating roller 72 will be excessively short, resulting in insufficient heating time of the solid electrolyte membrane. Therefore, the present application provides the ninth guide roller 59 between the shaping roller assembly and the second heating mechanism. The size of the wrap angle is controlled by means of the ninth guide roller 59, so that the preheating time of the solid electrolyte membrane is within an appropriate range.

In some implementations, a third guide roller 53 is provided between the shaping roller assembly and the ninth guide roller 59. By providing the third guide roller 53, the preheated electrode sheet and solid electrolyte membrane can be adjusted to enter the shaping roller assembly in a horizontal direction, ensuring flatness of the composite electrode sheet.

It can be appreciated that "in a horizontal direction" in the present application does not include only the case of being completely horizontal. When the membrane sheet exiting the third guide roller 53 forms a specific angle with the horizontal direction, specifically when the angle is less than 10°, the direction is also included in the scope of protection of "in a horizontal direction" in the present application. In some implementations, the preparation apparatus for a composite electrode sheet further comprises a cooling roller 74 located between the shaping roller assembly and the composite electrode sheet winding mechanism 12, which is used to perform cooling treatment on the composite electrode sheet exiting the gap in the shaping roller assembly. The present application provides the cooling roller 74 to reduce the temperature of the composite electrode sheet, so that the composite electrode sheet can be continuously wound, improving production efficiency. Furthermore, the cooling roller 74 further provides shaping treatment for the composite electrode sheet.

In some implementations, the number of the cooling roller 74 may be one or more, preferably two.

In some implementations, a guide roller is provided between the shaping roller assembly and the cooling roller 74, and/or a guide roller is provided between the cooling roller 74 and the composite electrode sheet winding mechanism 12, to adjust cooling time of the composite electrode sheet.

In some implementations, the numbers of the cooling roller 74 and the guide roller in the preparation device for a composite electrode sheet are not particularly limited, and specific numbers may be increased or decreased according to actual situations.

In some implementations, the preparation apparatus for a composite electrode sheet further comprises an unwinding correction assembly, an electrode sheet static elimination assembly, etc. arranged in sequence along an unwinding path of the preparation apparatus. The unwinding correction assembly can correct unwinding and running paths of the electrode sheet, the solid electrolyte membrane, etc., so that initial feed lines are kept at the same level. A winding and unwinding mechanism for a main material employs single-station correction, and winding and unwinding mechanisms for the remaining materials employ a cantilever type, all of which are provided with correction. The static elimination assembly performs static elimination treatment on both sides of the electrode sheet, and can reduce friction between the electrode sheet and the conveyor roller. It can be appreciated that, without departing from the inventive concept of the present application, known functional assemblies or structures may be used in the present application throughout the entire process from winding, to rolling, and unwinding.

In some implementations, the preparation apparatus for a composite electrode sheet further comprises a tension control apparatus.

In some implementations, the tension control apparatus comprises a plurality of tension control elements disposed upstream of the shaping roller assembly, which are used to separately control unwinding tension of the electrode sheet, the solid electrolyte membrane, and the protective film.

In some implementations, the tension control apparatus comprises a plurality of tension control elements disposed downstream of the shaping roller assembly, which are used to separately control winding tension of the composite electrode sheet, the substrate, and the protective film.

In some implementations, the preparation apparatus for a composite electrode sheet further comprises a thickness measuring mechanism. After roll compositing by the shaping roller assembly, the composite electrode sheet passes inspection of the thickness measuring mechanism, and the composite electrode sheet then enters the composite electrode sheet winding mechanism 12 to undergo winding.

In some implementations, the aforementioned heating roller and cooling roller 74 further comprise a sensor for measuring a surface temperature of the composite electrode sheet.

The width, diameter, tonnage, and mechanical speed, etc. of the shaping roller assembly in the present application have been described in detail in the embodiments described above, and will not be repeated here.

It can be appreciated that the higher the belt speed of the entire preparation apparatus for a composite electrode sheet, the higher production efficiency is. However, excessively high speeds can easily cause problems such as breakage in the belt-carried electrode sheet and solid electrolyte membrane. The present application does not have particular requirements for residence time of the electrode sheet and the solid electrolyte membrane in the gap of the shaping roller assembly. Without departing from the inventive concept of the present application, any adjustments to the residence time that do not require the exercise of creative effort should be construed as falling within the scope of protection of the present application.

In some implementations, linear speeds of the first shaping roller 31 and the second shaping roller 32 are kept consistent, and an unwinding linear speed of the electrode sheet unwinding mechanism 11 and a winding linear speed of the composite electrode sheet winding mechanism 12 are also kept consistent, thereby improving action consistency of the entire rolling preparation process of the composite electrode sheet and enhancing uniformity of the composite electrode sheet.

Referring to FIGs. 32-35, in conjunction with the structure of the preparation apparatus for a composite electrode sheet, the preparation method for a composite electrode sheet of the present application comprises the following steps: An electrode sheet is unwound by means of the electrode sheet unwinding mechanism 11 and conveyed to the composite electrode sheet winding mechanism 12, so that the electrode sheet sequentially passes through the first heating roller 71, and the gap between the first shaping roller 31 and the second shaping roller 32. A solid electrolyte membrane is conveyed by means of the solid electrolyte membrane unwinding mechanism 21 located at a side of the electrode sheet unwinding mechanism 11, so that the solid electrolyte membrane sequentially passes through the second heating roller 72, and a gap between the shaping roller assembly and the electrode sheet, and then undergoes roll compositing by means of the first shaping roller 31 and the second shaping roller 32. During roll compositing, an elastic member is provided between the shaping roller assembly and the solid electrolyte membrane. Finally, downstream of the shaping roller assembly, a composite electrode sheet is received by means of the composite electrode sheet winding mechanism 12.

In some implementations, the composite electrode sheet comprises the electrode sheet, and solid electrolyte membranes located at two sides of the electrode sheet, respectively. In this case, after the electrode sheet is transported, the solid electrolyte membranes are unwound by means of two solid electrolyte membrane unwinding mechanisms 21 located at two sides of the electrode sheet unwinding mechanism 11, respectively, and conveyed to the shaping roller assembly, so that the two solid electrolyte membranes separately pass through the second heating roller 72 and the gap between the first shaping roller 31 and the second shaping roller 32 in sequence. In the gap between the first shaping roller 31 and the second shaping roller 32, the two solid electrolyte membranes, the electrode sheet located between the two solid electrolyte membranes, and the elastic members located at outer sides of the two solid electrolyte membranes are laminated to one another, and the solid electrolyte membranes are composited on two sides of the electrode sheet under the rolling action of the shaping roller assembly, so as to obtain the composite electrode sheet.

In some implementations, the solid electrolyte membrane is formed independently, that is, the solid electrolyte membrane can be formed without the aid of a substrate and maintain integrity of the membrane. In this case, after the electrode sheet and the solid electrolyte membrane enter the gap of the shaping roller assembly, the composite electrode sheet is obtained under the pressure of the shaping roller assembly. The composite electrode sheet may then be wound by means of the electrode sheet winding mechanism.

In some implementations, the solid electrolyte membrane is covered by a substrate, to provide support for the solid electrolyte membrane. When the solid electrolyte membrane unwinding mechanism 21 conveys the solid electrolyte membrane, the substrate is located at the side of the solid electrolyte membrane distant from the electrode sheet. After compositing of the solid electrolyte membrane and the electrode sheet is completed, the substrate is separated from the composite electrode sheet. Specifically, substrates may be separately received by means of substrate winding mechanisms 22 located at two sides of the composite electrode sheet winding mechanism 12, the substrate winding mechanisms 22 being located between the shaping roller assembly and the composite electrode sheet winding mechanism 12.

In some implementations, the elastic member is an adhesive layer 81 that covers around the outside of the first shaping roller 31 and the second shaping roller 32. When the shaping roller assembly rotates, the adhesive layer 81 rotates with the shaping roller assembly. Furthermore, when the shaping roller assembly rolls the solid electrolyte membrane and/or the electrode sheet, the adhesive layer 81 provides a cushioning function for the solid electrolyte membrane and/or the electrode sheet, enabling the solid electrolyte membrane to better coat one or two sides of the electrode sheet, and improving uniformity of the lateral thickness of the electrode sheet after rolling.

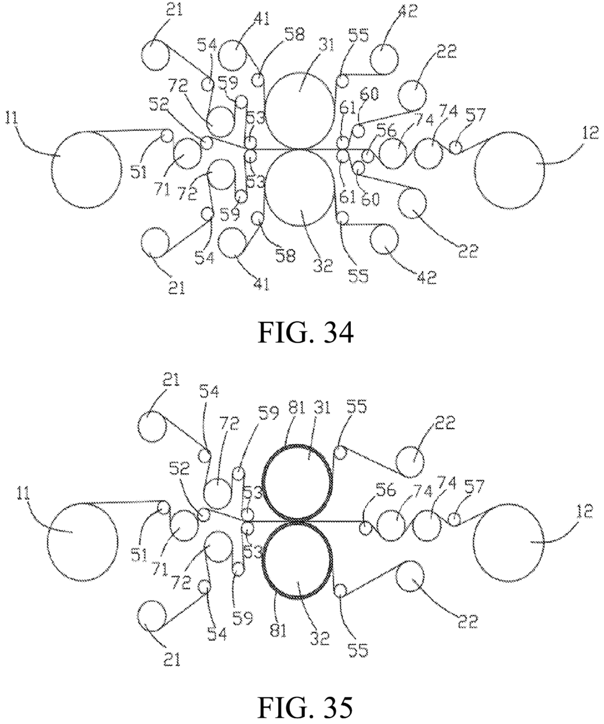

In some implementations, the elastic member is an adhesive layer 81 that covers around the outside of the shaping roller assembly. As shown in FIG. 35, the adhesive layer 81, the solid electrolyte membrane, the electrode sheet, the solid electrolyte membrane and the adhesive layer 81 are sequentially distributed between the shaping roller assemblies. The length of the adhesive layer 81 in an axial direction of the shaping roller assembly may be slightly greater than an axial length of the shaping roller assembly, and the adhesive layer 81 rotates together with the shaping roller assembly during rolling.

In some implementations, the elastic member is a protective film. Protective films may be unwound by means of two protective film unwinding mechanisms 41 located at the side of the solid electrolyte membrane unwinding mechanisms 21 distant from the electrode sheet, and the protective film unwinding mechanisms 41 convey the protective films to the shaping roller assembly so that the two protective films separately pass through the gap between the first shaping roller 31 and the second shaping roller 32. In the gap between the first shaping roller 31 and the second shaping roller 32, the sequentially distributed protective film, solid electrolyte membrane, electrode sheet, solid electrolyte membrane and protective film are laminated on one another, and the solid electrolyte membranes are composited on two sides of the electrode sheet under the rolling action of the shaping roller assembly, so as to obtain the composite electrode sheet.

Optionally, as shown in FIGs. 32-34, in the shaping roller assembly and upstream thereof, the electrode sheet on the electrode sheet unwinding mechanism 11 is guided by a first guide roller 51 and reaches the first heating roller 71, and is then guided by a second guide roller 52 and the third guide roller 53 and reaches the shaping roller assembly. The solid electrolyte membranes located at two sides of the electrode sheet unwinding mechanism 11 are guided by a fourth guide roller 54 and reach the second heating roller 72, and are then guided by the ninth guide roller 59 and the third guide roller 53 and reach the shaping roller assembly. The protective films located at two sides of the electrode sheet unwinding mechanism 11 are guided by an eighth guide roller 58 and then reach the shaping roller assembly. Subsequently, the protective films pass through the gap between the first shaping roller 31 and the second shaping roller 32. Under rolling of the first shaping roller 31 and the second shaping roller 32, compositing of the protective film, the solid electrolyte membrane, the electrode sheet, the solid electrolyte membrane and the protective film is completed.

Optionally, as shown in FIG. 35, in the shaping roller assembly and upstream thereof, the electrode sheet on the electrode sheet unwinding mechanism 11 is guided by the first guide roller 51 and reaches the first heating roller 71, and is then guided by the second guide roller 52 and the third guide roller 53 and reaches the shaping roller assembly. The solid electrolyte membranes located at two sides of the electrode sheet unwinding mechanism 11 are guided by a fourth guide roller 54 and reach the second heating roller 72, and are then guided by the ninth guide roller 59 and the third guide roller 53 and reach the shaping roller assembly. The outside of the first shaping roller 31 and the second shaping roller 32 is covered by the adhesive layer 81. Under the rolling of the first shaping roller 31 and the second shaping roller 32, compositing of the solid electrolyte membrane, the electrode sheet, and the solid electrolyte membrane is completed.

During rolling, the shaping roller assembly applies tension to the electrode sheet and the solid electrolyte membrane, and the protective film and the adhesive layer 81 are located between the shaping roller assembly and the solid electrolyte membrane, achieving a cushioning function. This ensures that forces received at points of the electrode sheet and the solid electrolyte membrane are uniform, and the solid electrolyte membrane in the finally resulting composite electrode sheet almost completely coats the electrode sheet. The bonding between the electrode sheet and the solid electrolyte membrane is better, the uniformity of the lateral thickness of the composite electrode sheet is improved, and the compaction density is also increased.

In some implementations, the protective film and the substrate may be simultaneously separated from the composite membrane sheet.

Optionally, as shown in FIG. 32, the protective film and the substrate are separated from the shaping roller assembly downstream of the shaping roller assembly. Specifically, after being guided by a fifth guide roller 55, the protective film and the substrate reach the protective film winding mechanism 42 and the substrate winding mechanism 22, respectively, and the protective film and the substrate are separated from the composite electrode sheet to obtain the composite electrode sheet. After being guided by a sixth guide roller 56, the composite electrode sheet reached the cooling roller 74, and then reached the composite electrode sheet winding mechanism 12 under the guidance of a seventh guide roller 57, to complete winding of the composite electrode sheet.

As shown in FIG. 35, the laminated substrate is separated from the shaping roller assembly. Specifically, after being guided by the fifth guide roller 55, the substrate reaches the substrate winding mechanism 22, and the substrate is separated from the composite electrode sheet to obtain the composite electrode sheet. After being guided by the sixth guide roller 56, the composite electrode sheet reached the cooling roller 74, and then reached the composite electrode sheet winding mechanism 12 under the guidance of the seventh guide roller 57, to complete winding of the composite electrode sheet.

Optionally, downstream of the shaping roller assembly, the protective film and the substrate may reach the protective film winding mechanism 42 and the substrate winding mechanism 22, respectively, through different guide rollers, and, as shown in FIG. 33, be separated without controlling a separation angle of the substrate and the composite electrode sheet. Specifically, the protective film is guided by the fifth guide roller 55, and then reaches the protective film winding mechanism 42. After being guided by an eleventh guide roller 61 and a tenth guide roller 60, the substrate reached the substrate winding mechanism 22, a movement path between the tenth guide roller 60 and the eleventh guide roller 61 being a straight line. The protective film and the substrate are separated from the composite membrane sheet.

Optionally, downstream of the shaping roller assembly, the protective film and the substrate may reach the protective film winding mechanism 42 and the substrate winding mechanism 22, respectively, through different guide rollers, and, as shown in FIG. 34, be separated without controlling a separation angle of the substrate and the composite membrane sheet. Specifically, the protective film is guided by the fifth guide roller 55, and then reaches the protective film winding mechanism 42. The substrate is sequentially guided by the eleventh guide roller 61 and the tenth guide roller 60 before reaching the substrate winding mechanism 22, a movement path between the tenth guide roller 60 and the eleventh guide roller 61 being an S-shaped curve. The protective film and the substrate are separated from the composite electrode sheet.

The present application provides a preparation method for a composite electrode sheet using the foregoing preparation apparatus for a composite electrode sheet, which, as shown in FIG. 31, comprises the following steps:
S41. Separately preheat an electrode sheet and a solid electrolyte membrane;
S42. Perform roll compositing on the preheated electrode sheet and solid electrolyte membrane by means of the shaping roller assembly, to prepare the composite electrode sheet.

In some implementations, the preparation method for a composite electrode sheet comprises the following steps:
conveying an electrode sheet by means of the electrode sheet unwinding mechanism, so that the electrode sheet passes through a gap between the first heating mechanism and the shaping roller assembly;
conveying a solid electrolyte membrane by means of the solid electrolyte membrane unwinding mechanism located at the side of the electrode sheet unwinding mechanism, so that the solid electrolyte membrane passes through the second heating mechanism and the gap between the shaping roller assembly and the electrode sheet;
preheating the electrode sheet by means of the first heating mechanism;
preheating the solid electrolyte membrane by means of the second heating mechanism; and
performing roll compositing on the preheated electrode sheet and solid electrolyte membrane by means of the shaping roller assembly, to prepare the composite electrode sheet.

In some implementations, an elastic member is provided between the shaping roller assembly and the solid electrolyte membrane.

In some implementations, the elastic member is a protective film that is transported through a gap between the shaping roller assembly and the solid electrolyte membrane, and the protective film is laminated on a surface of the composite electrode sheet.

In some implementations, the preparation method for a composite electrode sheet further comprises the following step: separating the protective film from the composite electrode sheet.

As shown in FIGs. 32-34, the protective film, the solid electrolyte membrane, the electrode sheet, the solid electrolyte membrane and the protective film are distributed in sequence between the shaping roller assemblies. The protective film departs upstream of the shaping roller assembly and is transported to reach the shaping roller assembly, passes through the gap between the shaping roller assembly and the solid electrolyte membrane and is rolled, and then continues to run downstream of the shaping roller assembly until being recovered. Therefore, the protective film of the present application can be reused repeatedly, reducing production and manufacturing costs while reducing harm to the environment, and facilitating improved production efficiency.

In some implementations, the elastic member is an adhesive layer 81 that covers around the outside of the shaping roller assembly.

In some implementations, solid electrolyte membranes located at two sides of the electrode sheet, respectively, are roll composited on the electrode sheet by the shaping roller assembly, to obtain the composite electrode sheet.

It can be appreciated that in the rolled composite electrode sheet, solid electrolyte layers are composited on the electrode sheet. The solid electrolyte membranes being located at two sides of the electrode sheet means that solid electrolyte membranes are composited on both sides of the electrode sheet by rollers.

In some implementations, the electrode sheet and the solid electrolyte membrane are each preheated several times, and temperatures of the several preheatings progressively increase. The temperatures of the several preheatings gradually increase, so that heating is more uniform across the electrode sheet and the solid electrolyte membrane, and subsequent roll compositing is tighter.

In some implementations, preheating time of the heating roller is greater than or equal to 2 s.

In some implementations, a substrate is coated on the side of the solid electrolyte membrane distant from the electrode sheet, and the preparation method for a composite electrode sheet further comprises the following step: separating the substrate from the composite electrode sheet.

In some implementations, the substrate may be wound and recovered downstream of the shaping roller assembly by separating the substrate from the composite electrode sheet by means of the substrate winding mechanism 22.

In some implementations, the preparation method for a composite electrode sheet further comprises the following step: performing cooling treatment on the composite electrode sheet.

In some implementations, the cooling roller 74 is provided to perform cooling treatment on the composite electrode sheet, so as to reduce the temperature of the composite electrode sheet, so that the composite electrode sheet can be continuously wound, improving production efficiency. Furthermore, the cooling roller 74 further provides shaping treatment for the composite electrode sheet.

In some implementations, the preparation method for a composite electrode sheet comprises the following steps:
conveying an electrode sheet by means of the electrode sheet unwinding mechanism 11, so that the electrode sheet passes through the first heating mechanism and the gap in the middle of the shaping roller assembly;
conveying a solid electrolyte membrane by the solid electrolyte membrane unwinding mechanism 21 located at a side of the electrode sheet unwinding mechanism 11, so that the solid electrolyte membrane passes through the second heating mechanism, and a gap between the shaping roller assembly and the electrode sheet;
preheating the electrode sheet by means of the first heating mechanism;
preheating the solid electrolyte membrane by means of the second heating mechanism; and
performing roll compositing on the preheated electrode sheet and solid electrolyte membrane by means of the shaping roller assembly, to prepare the composite electrode sheet,
wherein an elastic member is provided between the shaping roller assembly and the solid electrolyte membrane.

In some implementations, the preparation method for a composite electrode sheet further comprises:
downstream of the shaping roller assembly, receiving the composite electrode sheet by means of a composite electrode sheet winding mechanism 12;
receiving the substrate by means of a substrate winding mechanism 22 between the shaping roller assembly and the composite electrode sheet winding mechanism 12, wherein
the substrate winding mechanism 22 and the solid electrolyte membrane unwinding mechanism 21 are located at the same side of the electrode sheet unwinding mechanism 11.

In some implementations, the preparation method for a composite electrode sheet further comprises:
conveying the elastic member by means of the protective film unwinding mechanism 41, wherein the protective film unwinding mechanism 41 is located between the solid electrolyte membrane unwinding mechanism 21 and the shaping roller assembly; and
between the shaping roller assembly and the substrate winding mechanism 22, receiving the elastic member by means of the protective film winding mechanism 42.

In the preparation method for a composite electrode sheet of the present application, considering that the electrode sheet and the solid electrolyte membrane are made of different materials and have different suitable heating temperatures, before the roll compositing step, the electrode sheet and the solid electrolyte membrane are separately subjected to preheating treatment by means of the first heating mechanism and the second heating mechanism, respectively, to ensure that the electrode sheet and the solid electrolyte membrane are fully preheated and do not affect each other during the preheating treatment process, ensuring preheating effects. The preheated electrode sheet and solid electrolyte membrane will soften compared to before preheating, which improves the flexibility of the electrode sheet and the solid electrolyte membrane, so that the extensibility of the electrode sheet and the solid electrolyte membrane is increased. This causes the electrode sheet to be quickly composited with the solid electrolyte membrane during the roll compositing step, and the electrode sheet and the solid electrolyte membrane to be more tightly interlocked, increasing the bonding strength between the two membranes and more easily achieving a tight compositing effect.

Conventional shaping roller assemblies have high strength but poor deformation resistance, and in order to facilitate smoothness of a rolling process, the electrode sheet is thinned at the edges, to form a structure that is thick in the middle and thin at two ends. Due to a non-uniform lateral thickness of the electrode sheet, when a solid electrolyte membrane is laminated on the electrode sheet, an edge region of the electrode sheet is still separated from the solid electrolyte membrane. When a rolling apparatus performs roll compositing on the electrode sheet and the solid electrolyte membrane, rolling forces of a steel roller are different in a middle region and the edge region of the electrode sheet, making it difficult for the electrode sheet and the solid electrolyte membrane to be tightly composited, i.e., ineffective compositing, which will cause the lateral compaction density of the composite electrode sheet to be non-uniform, and the uniformity of the composite electrode sheet is poor. In severe cases, the electrode sheet may crush, consequently producing a huge impact on the safety performance and quality of a lithium-ion battery.

In the preparation method for a composite electrode sheet of the present application, the stress on the electrode sheet and the solid electrolyte membrane during the rolling process is adjusted by means of cushioning provided by the elastic member, so that the solid electrolyte membrane can better coat the electrode sheet. Furthermore, the stress on the electrode sheet and the solid electrolyte membrane is uniform during the rolling process, so that the lateral thickness of the electrode sheet tends to be uniform after rolling, avoiding an adverse impact on the roll compositing process due to the phenomenon of an electrode sheet being thick in the middle and thin at two ends, and preventing the electrode sheet from being crushed. This improves the degree of compositing between the electrode sheet, the solid electrolyte membrane and the protective film, and improves the uniformity of the lateral thickness of the composite electrode sheet. Additionally, when the composite electrode sheet prepared using the method of the present application is applied to a battery, the composite electrode sheet can effectively prevent powder shedding that may occur during a charge and discharge cycle from affecting the cycle performance of the battery, helping to improve the overall safety performance of the battery.

The compositing process of the present application is carried out under dry conditions. The dry conditions in the present application are different from those of a conventional wet electrode preparation method. Conventional wet preparation of composite electrodes involves first preparing a solid electrolyte slurry and then coating the solid electrolyte slurry onto an electrode sheet, or vice versa, preparing an electrode slurry and then coating the electrode slurry onto a solid electrolyte membrane. The preparation process of the present application does not use solvents, eliminating the need for cumbersome subsequent drying steps, and effectively reducing production costs.

It can be appreciated that the dry process refers to preparation of related electrode sheets and electrolyte membranes without the addition of solvents. Technical solutions involving trace amounts of liquid lubricants or other liquid additives that may be used during a rolling process should still be within the scope of protection of the present application.

In some implementations, both the electrode sheet and the solid electrolyte membrane are prepared by means of a dry process.

In some implementations, at least one of the electrode sheet and the solid electrolyte membrane is prepared by means of a dry process.

In some implementations, both the electrode sheet and the solid electrolyte membrane are prepared by means of a wet process.

It can be appreciated that electrode sheet and the solid electrolyte membrane are preferably prepared under dry conditions, so that solvents are no longer needed in the entire electrode preparation process.

It can be appreciated that the preparation processes of the electrode sheet and the solid electrolyte membrane are independent of the preparation process of the composite electrode. That is, if a wet process is used, the electrode sheet undergoes coating, drying, and rolling processes.

In some implementations, the electrode sheet is a positive electrode sheet. Positive electrode materials, especially high-nickel ternary materials with high energy density, are prone to undesirable side reactions with electrolytes, especially non-aqueous electrolytes. These side reactions cause a decline in battery performance, and may pose potential safety hazards. Compositing a solid electrolyte layer on a positive electrode surface helps to improve battery safety.

In some implementations, the electrode sheet is a negative electrode sheet. In some implementations, the solid electrolyte membrane is composited on one or both sides of the positive electrode sheet or the negative electrode sheet. Material compositions, preparation methods and related performance parameters of the positive electrode sheet, the negative electrode sheet and the solid electrolyte membrane have been described in detail in the above embodiments of the present application, and will not be repeated here.

Applying a solid electrolyte coating to a surface of an electrode, especially a surface of a high-capacity positive electrode, can effectively improve the safety performance of a battery. However, due to limitations in energy density, the thickness of a solid electrolyte membrane is usually quite small. Compared to an electrode sheet prepared by a dry process, the thickness of the solid electrolyte membrane is an order of magnitude smaller, which renders the solid electrolyte membrane prone to cracking during preparation a composite conductive electrode sheet by a dry process.

In some implementations, the solid electrolyte membrane is formed independently, meaning that the solid electrolyte membrane may be formed without the aid of a substrate and maintain the integrity of the membrane.

In some implementations, the side of the solid electrolyte membrane distant from the electrode sheet is covered by a substrate, and a bonding force between the substrate and the solid electrolyte membrane is less than a bonding force between the solid electrolyte membrane and the electrode sheet. After rolling, at least part of the solid electrolyte is transferred to the electrode sheet and separated from the substrate.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

In some implementations, an electrode sheet and a solid electrolyte membrane may also be procured.

The present application further provides a composite electrode sheet, which is prepared according to the preparation method for a composite electrode sheet provided above.

The present application further provides a lithium-ion battery, which comprises the composite electrode sheet provided above.

One embodiment of the present application comprises the following steps. Using the preparation apparatus for a composite electrode sheet as shown in FIG. 32, a positive electrode sheet was composited with two solid electrolyte membranes, so that the solid electrolyte membranes were simultaneously composited on positive electrode active material layers on two sides of the positive electrode sheet. The solid electrolyte membrane was covered by a substrate. A protective film was a PE-based non-woven fabric.

The electrode sheet departed from the electrode sheet unwinding mechanism 11, passed through the first guide roller 51 and reached the first heating roller 71, and then was guided by the second guide roller 52 and the third guide roller 53 and reached the shaping roller assembly. The solid electrolyte membranes located at two sides of the electrode sheet unwinding mechanism 11 are separately guided by a fourth guide roller 54 and reach the second heating roller 72, and are then guided by the ninth guide roller 59 and the third guide roller 53 and reach the shaping roller assembly. The protective films located at two sides of the electrode sheet unwinding mechanism 11 are guided by an eighth guide roller 58 and then reach the shaping roller assembly. Subsequently, the protective films passed through the gap between the first shaping roller 31 and the second shaping roller 32. Under rolling of the first shaping roller 31 and the second shaping roller 32, roll compositing of the protective film, the solid electrolyte membrane, the electrode sheet, the solid electrolyte membrane, and the protective film was completed. Next, after being guided by the fifth guide roller 55, the protective film and the substrate reached the protective film winding mechanism 42 and the substrate winding mechanism 22, respectively, and the protective film and the substrate were separated from the composite electrode sheet, to obtain a composite electrode sheet. After being guided by the sixth guide roller 56, the composite electrode sheet reached the cooling roller 74, and then reached the composite electrode sheet winding mechanism 12 under the guidance of the seventh guide roller 57, to complete winding of the composite electrode sheet.

The prepared composite electrode sheet had no cracks on the surface.

One embodiment of the present application comprises the following steps. The only difference between this embodiment and the previous embodiment is that a method of separating a substrate from a composite electrode sheet downstream of the shaping roller assembly is different.

As shown in FIG. 33, downstream of the shaping roller assembly, a protective film was guided by the fifth guide roller 55 and then reached the protective film winding mechanism 42. The protective film winding mechanism 42 separated the protective film from the composite membrane sheet and completed winding. After being guided by an eleventh guide roller 61 and a tenth guide roller 60, the substrate reached the substrate winding mechanism 22, a movement path between the tenth guide roller 60 and the eleventh guide roller 61 being a straight line. The substrate winding mechanism 22 separated the substrate from the composite membrane sheet and completed winding.

The prepared composite electrode sheet had no cracks on the surface.

One embodiment of the present application comprises the following steps. The only difference between this embodiment and the previous embodiment is that a method of separating a substrate from a composite electrode sheet downstream of the shaping roller assembly is different.

As shown in FIG. 34, downstream of the shaping roller assembly, a protective film was guided by the fifth guide roller 55 and then reached the protective film winding mechanism 42. The protective film winding mechanism 42 separated the protective film from the composite membrane sheet and completed winding. The substrate is sequentially guided by the eleventh guide roller 61 and the tenth guide roller 60 before reaching the substrate winding mechanism 22, a movement path between the tenth guide roller 60 and the eleventh guide roller 61 being an S-shaped curve. The substrate winding mechanism 22 separated the substrate from the composite membrane sheet and completed winding.

The prepared composite electrode sheet had no cracks on the surface.

One embodiment of the present application comprises the following steps. The only difference between this embodiment and the previous embodiment is that an elastic member is an adhesive layer 81 instead of the protective film, and the adhesive layer 81 covers the outside of the first shaping roller 31 and the second shaping roller 32.

As shown in FIG. 35, an electrode sheet departed from the electrode sheet unwinding mechanism 11, passed through the first guide roller 51 and reached the first heating roller 71, and then was guided by the second guide roller 52 and the third guide roller 53, and reached the shaping roller assembly. The solid electrolyte membranes located at two sides of the electrode sheet unwinding mechanism 11 are separately guided by a fourth guide roller 54 and reach the second heating roller 72, and are then guided by the ninth guide roller 59 and the third guide roller 53 and reach the shaping roller assembly. Subsequently, the solid electrolyte membranes passed through the gap between the first shaping roller 31 and the second shaping roller 32. Under rolling of the first shaping roller 31 and the second shaping roller 32, roll compositing of the solid electrolyte membrane, the electrode sheet and the solid electrolyte membrane was completed. Next, after being guided by the fifth guide roller 55, a substrate reached the substrate winding mechanism 22, and the substrate was separated from the composite electrode sheet to obtain a composite electrode sheet. After being guided by a sixth guide roller 56, the composite electrode sheet reached the cooling roller 74, and then reached the composite electrode sheet winding mechanism 12 under the guidance of the seventh guide roller 57, to complete winding of the composite electrode sheet.

The prepared composite electrode sheet had no cracks on the surface.

In a comparative embodiment of the present application, a difference between this comparative embodiment and the previous embodiment is that the preparation apparatus for a composite electrode sheet is not provided with a heating roller.

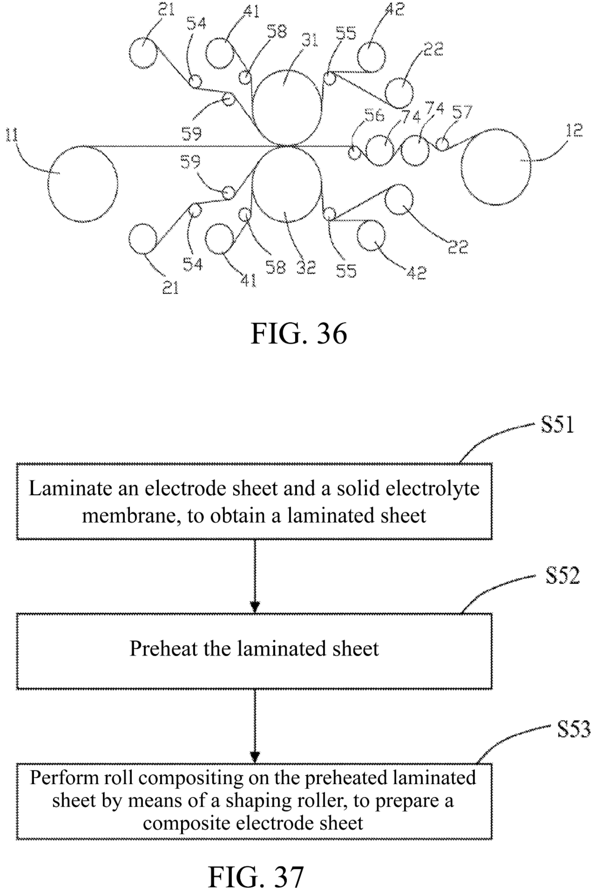

As shown in FIG. 36, an electrode sheet departed from the electrode sheet unwinding mechanism 11 and was transported to reach the shaping roller assembly. Solid electrolyte membranes located at two sides of the electrode sheet unwinding mechanism 11 were guided by the fourth guide roller 54 and the ninth guide roller 59, respectively, and then reached the shaping roller assembly. The protective films located at two sides of the electrode sheet unwinding mechanism 11 are guided by an eighth guide roller 58 and then reach the shaping roller assembly. Subsequently, the protective films passed through the gap between the first shaping roller 31 and the second shaping roller 32. Under rolling of the first shaping roller 31 and the second shaping roller 32, roll compositing of the protective film, the solid electrolyte membrane, the electrode sheet, the solid electrolyte membrane, and the protective film was completed. Next, after being guided by the fifth guide roller 55, the protective film and the substrate reached the protective film winding mechanism 42 and the substrate winding mechanism 22, respectively, and the protective film and the substrate were separated from the composite electrode sheet, to obtain a composite electrode sheet. After being guided by the sixth guide roller 56, the composite electrode sheet reached the cooling roller 74, and then reached the composite electrode sheet winding mechanism 12 under the guidance of the seventh guide roller 57, to complete winding of the composite electrode sheet.

There was an interlayer separation phenomenon at edges of the composite electrode sheet, and there were fine cracks at the edges.

In a comparative embodiment of the present application, a difference between this comparative embodiment and the previous embodiment is that the preparation apparatus for a composite electrode sheet is not provided with a heating roller.

As shown in FIG. 29, an electrode sheet departed from the electrode sheet unwinding mechanism 11 and was transported to reach the shaping roller assembly. Solid electrolyte membranes located at two sides of the electrode sheet unwinding mechanism 11 were guided by the fourth guide roller 54 and the ninth guide roller 59, respectively, and then reached the shaping roller assembly. Subsequently, the solid electrolyte membranes passed through the gap between the first shaping roller 31 and the second shaping roller 32. Under rolling of the first shaping roller 31 and the second shaping roller 32, roll compositing of the solid electrolyte membrane, the electrode sheet and the solid electrolyte membrane was completed. Next, after being guided by the fifth guide roller 55, a substrate reached the substrate winding mechanism 22, and the substrate was separated from the composite electrode sheet to obtain a composite electrode sheet. After being guided by a sixth guide roller 56, the composite electrode sheet reached the cooling roller 74, and then reached the composite electrode sheet winding mechanism 12 under the guidance of the seventh guide roller 57, to complete winding of the composite electrode sheet.

In a comparative embodiment of the present application, a difference between this comparative embodiment and the previous embodiment is that the preparation device for a composite electrode sheet is not provided with a heating roller or an elastic member.

As shown in FIG. 30, an electrode sheet departed from the electrode sheet unwinding mechanism 11 and was transported to reach the shaping roller assembly. Solid electrolyte membranes located at two sides of the electrode sheet unwinding mechanism 11 were guided by the fourth guide roller 54 and the ninth guide roller 59, respectively, and then reached the shaping roller assembly. Subsequently, the solid electrolyte membranes passed through the gap between the first shaping roller 31 and the second shaping roller 32. Under rolling of the first shaping roller 31 and the second shaping roller 32, compositing of the solid electrolyte membrane, the electrode sheet, and the solid electrolyte membrane was completed. Next, after being guided by the fifth guide roller 55, a substrate reached the substrate winding mechanism 22, and the substrate winding mechanism 22 separated the substrate from the composite electrode sheet to obtain a composite electrode sheet. After being guided by the sixth guide roller 56, the composite electrode sheet reached the cooling roller 74, and then reached the composite electrode sheet winding mechanism 12 under the guidance of the seventh guide roller 57, to complete winding of the composite electrode sheet.

There was an interlayer separation phenomenon at edges of the composite electrode sheet, and there were fine cracks at the edges.

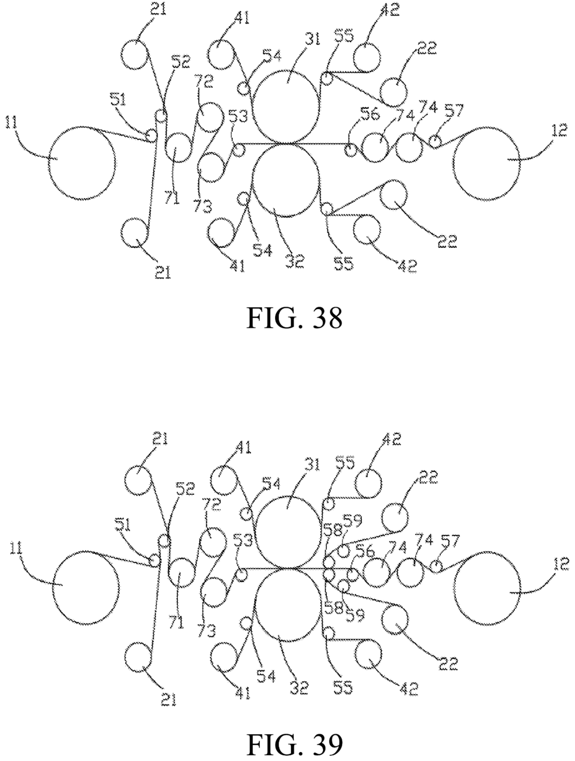

Another aspect of the present application provides a preparation method for a composite electrode sheet, to improve compositing effects of a composite electrode sheet and a solid electrolyte membrane by a dry process. Referring to FIGs. 38-41, a preparation apparatus for a composite electrode sheet of the present application comprises a shaping roller assembly, an electrode sheet unwinding mechanism 11, a solid electrolyte membrane unwinding mechanism 21, a heating mechanism and a composite electrode sheet winding mechanism 12. The shaping roller assembly comprises a first shaping roller 31 and a second shaping roller 32, symmetrically disposed at two sides of an electrode sheet. A connecting line between axes of the first shaping roller 31 and the second shaping roller 32 is perpendicular to a conveying direction of the electrode sheet. That is, the conveying direction of the electrode sheet is perpendicular to a plane in which the axes of the first shaping roller 31 and the second shaping roller 32 are located. However, this is not a limitation, and the conveying direction of the electrode sheet may be adjusted according to actual production needs.

The electrode sheet unwinding mechanism 11 is located upstream of the shaping roller assembly, and is used to unwind the electrode sheet and then convey the electrode sheet, so that the electrode sheet passes through a gap between the first shaping roller 31 and the second shaping roller 32.

It can be appreciated that the electrode sheet in the present application is a positive electrode sheet and/or a negative electrode sheet.

The solid electrolyte membrane unwinding mechanism 21 is located upstream of the shaping roller assembly, and more specifically between the electrode sheet unwinding mechanism 11 and the shaping roller assembly. The solid electrolyte membrane unwinding mechanism 21 is used to unwind a solid electrolyte membrane, and then convey the solid electrolyte membrane so that the solid electrolyte membrane passes through the gap between the first shaping roller 31 and the second shaping roller 32. More specifically, the solid electrolyte membrane unwinding mechanism 21 causes the solid electrolyte membrane to pass through a gap between the electrode sheet and the shaping roller assembly.

In some implementations, there are two solid electrolyte membrane unwinding mechanisms 21 located at two sides of the electrode sheet unwinding mechanism 11, respectively, and solid electrolyte membranes are then conveyed so that the two solid electrolyte membranes pass through the gap between the first shaping roller 31 and the second shaping roller 32, and the electrode sheet is located between the two solid electrolyte membranes.

Optionally, the two solid electrolyte membrane unwinding mechanisms 21 are symmetrically disposed at two sides of the electrode sheet unwinding mechanism 11.

The heating mechanism is located between the electrode sheet unwinding mechanism 11 and the shaping roller assembly, and is used to preheat the electrode sheet and/or the solid electrolyte membrane.

In some implementations, the heating mechanism is a heating roller.

In some implementations, the number of heating rollers in the preparation apparatus for a composite electrode sheet is not particularly limited, and a specific number of heating rollers may be increased or decreased according to actual situations.

In some implementations, there may be one heating roller, i.e., a first heating roller 71.

In some implementations, there may be a plurality of heating rollers, the temperatures of the heating rollers gradually increasing along the running direction of the electrode sheet, so that preheating effects are more uniform. Specifically, the heating rollers are, in sequence along the running direction of the electrode sheet, a first heating roller 71, a second heating roller 72 and a third heating roller 73. The numbers of the first heating roller 71, the second heating roller 72, and the third heating roller 73 may each be one, two or more, and are not particularly limited herein.

In some implementations, preheating time of the heating roller is greater than or equal to 2 s.

The composite electrode sheet winding mechanism 12 is located downstream of the shaping roller assembly, and is used to provide tension to the electrode sheet along the movement direction of the electrode sheet and to receive the composite electrode sheet obtained after roll compositing by the shaping roller assembly, and to complete a winding action.

It can be appreciated that the present application does not impose particular limitations on a preheating method. The preheating method may be using contact preheating, blower preheating, or radiation preheating, etc., to preheat the electrode sheet, the solid electrolyte membrane, and the protective film. Preferably, S-shaped roller pair contact heating is employed, which can save space by using rollers having large wrap angles, or a plurality of heating rollers having small sizes. Any heating roller in contact preheating that achieves rapid heating, a short preheating stroke, and a high thermal transfer rate at relatively low costs can achieve independent temperature control.

In some implementations, an elastic member is provided between the first shaping roller 31 and the second shaping roller 32.

In an electrode sheet production process, edges of the electrode sheet are usually thinned in order to ensure smooth progress of a subsequent rolling process. However, the existence of a thinned region in the electrode sheet will affect lamination between the solid electrolyte membrane and the electrode sheet.

Surprisingly, the preparation apparatus for a composite electrode sheet of the present application utilizes cushioning provided by the elastic member during rolling, to enable the solid electrolyte membrane to better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling.

The elastic layer is made of a flexible material. Under pressure, the flexible material undergoes elastic deformation. The slight elastic deformation makes the thicknesses of the middle region and the thinned region of the electrode sheet tend to be consistent under pressure, allowing better lamination with the solid electrolyte membrane.

In some implementations of the present application, the flexible material is a polymer. The present application does not impose special limitations on the material of the polymer. Exemplarily, the polymer may be a plastic such as polytetrafluoroethylene, polyethylene terephthalate, polypropylene or polyacrylonitrile, or a rubber such as Hypalon rubber, silicone rubber or fluororubber, or an elastic material such as silicone, that can undergo a certain degree of deformation.

The present application does not impose particular limitations on the thickness of the elastic member. Any necessary adjustments to the thickness of the elastic member without departing from the inventive concept of the present application can be construed as being within the scope of protection of the present application.

In some implementations, the elastic member is an adhesive layer 81 that covers around the outside of two shaping roller assemblies.

In some implementations, the elastic member is a protective film that is transported through a gap between the shaping roller assembly and the solid electrolyte membrane.

Accordingly, the preparation apparatus for a composite electrode sheet of the present application further comprises a protective film unwinding mechanism 41 for unwinding the protective film. The protective film unwinding mechanism 41 is located upstream of the shaping roller assembly, disposed between the solid electrolyte membrane unwinding mechanism 21 and the shaping roller assembly, and is used to unwind the protective film. The protective film is transported through the gap between the shaping roller assembly and the solid electrolyte membrane.

The present application does not have particular requirements for the structure of the protective film. Without departing from the inventive concept of the present application, any known film layer that can undergo a certain degree of elastic deformation under a certain pressure can be used in the present application. An illustrative example only, rather than a limitation on the scope of protection, the protective film may be selected from a polymer film or a non-woven fabric. The non-woven fabric comprises, but is not limited to, a PP-based non-woven fabric, a PE-based non-woven fabric, a PET-based non-woven fabric, a PAN-based non-woven fabric, a PTFE-based non-woven fabric, a Celgard non-woven fabric, etc. The polymer film may be selected from a PVDF film, a PE film, a PP film, a PE/PP film, a PE/PP/PE film, a PP/PE/PP film, a PTFE film, a silicone release film, a fluorine release film, a PET film, a non-silicone release film, etc. It can be appreciated that the protective film may also be a multilayer structure consisting of two or more polymer films and/or non-woven fabrics.

The present application does not impose particular limitations on the thickness of the protective film. Without departing from the inventive concept of the present application, any conventional adjustments to the thickness of the protective film to adjust rolling effects should be regarded as within the scope of protection of the present application. It can be appreciated that when the protective film is a multilayer structure, the thickness of the protective film should be the sum of the thicknesses of a plurality of layers.

In some implementations, the preparation apparatus for a composite electrode sheet further comprises a protective film winding mechanism 42. The protective film winding mechanism 42 is located downstream of the shaping roller assembly and is located between the shaping roller assembly and the composite electrode sheet winding mechanism 12, and is used to provide tension to the protective film and to wind and receive the protective film.

In some implementations, the preparation apparatus for a composite electrode sheet further comprises a substrate winding mechanism 22.

When a substrate is provided on the solid electrolyte membrane, the substrate covers the side of the solid electrolyte membrane distant from the electrode sheet. After the electrode sheet and the solid electrolyte membrane are rolled by means of the shaping roller assembly to obtain the composite electrode sheet, the substrate needs to be separated. The substrate and the composite electrode sheet are separated by means of the substrate winding mechanism 22 disposed downstream of the shaping roller assembly. During the separation process, the substrate winding mechanism 22 provides tension to the substrate covering the solid electrolyte membrane, so that the substrate is separated from the composite electrode sheet, and performs a substrate winding action when necessary.

The number of the substrate winding mechanism 22 corresponds to the number of the solid electrolyte membrane unwinding mechanism 21, and the substrate winding mechanism 22 and the solid electrolyte membrane unwinding mechanism 21 are located at the same side of the electrode sheet unwinding mechanism 11.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

In some implementations, the preparation apparatus for a composite electrode sheet further comprises a guide roller.

Optionally, the guide roller is located between the electrode sheet unwinding mechanism 11 and the shaping roller assembly, to provide guidance for the electrode sheet. The guide roller may also be provided between the shaping roller assembly and the composite electrode sheet winding mechanism 12, the guide roller being used to provide guidance for winding of the composite electrode sheet.

Optionally, the guide roller is located between the solid electrolyte membrane unwinding mechanism 21 and the shaping roller assembly, to provide guidance for the solid electrolyte membrane. The guide roller may also be provided between the shaping roller assembly and the substrate winding mechanism 22, the guide roller being used to provide guidance for the substrate separated from the composite electrode sheet and covering the solid electrolyte membrane.

Optionally, the guide roller is located between the protective film unwinding mechanism 41 and the shaping roller assembly, to provide guidance for the protective film. A guide roller may also be provided between the shaping roller assembly and the protective film winding mechanism 42, the guide roller being used to provide guidance for recovery of the protective film.

In some implementations, the preparation apparatus for a composite electrode sheet further comprises a cooling roller located between the shaping roller assembly and the composite electrode sheet winding mechanism 12, which is used to perform cooling treatment on the composite electrode sheet exiting the gap in the shaping roller assembly. The present application provides the cooling roller to reduce the temperature of the composite electrode sheet, so that the composite electrode sheet can be continuously wound, improving production efficiency. Furthermore, the cooling roller further provides shaping treatment for the composite electrode sheet. Implementation means regarding the number of cooling rollers, cooling time, etc., in the present application have been described in the embodiments described above and will not be repeated here.

In some implementations, the preparation apparatus for a composite electrode sheet further comprises an unwinding correction assembly, an electrode sheet static elimination assembly, a tension control element, etc. arranged in sequence along an unwinding path of the preparation apparatus. Implementation methods regarding the arrangement of the unwinding correction assembly, the electrode sheet static elimination assembly, the tension control element, etc. in the preparation apparatus for a composite electrode sheet have been described in the embodiments described above, and will not be repeated here.

In some implementations, the preparation apparatus for a composite electrode sheet further comprises a thickness measuring mechanism. After roll compositing by the shaping roller assembly, the composite electrode sheet passes inspection of the thickness measuring mechanism, and the composite electrode sheet then enters the composite electrode sheet winding mechanism 12 to undergo winding.

In some implementations, the aforementioned heating roller and cooling roller further include a sensor for measuring a surface temperature of the composite electrode sheet.

In the present application, the selection of the width, diameter, tonnage, mechanical speed, etc. of the shaping roller assembly has been described in the embodiments described above, and will not be repeated here.

It can be appreciated that the higher the belt speed of the entire preparation apparatus for a composite electrode sheet, the higher production efficiency is. However, excessively high speeds can easily cause problems such as breakage in the belt-carried electrode sheet and solid electrolyte membrane. The present application does not have particular requirements for residence time of the electrode sheet and the solid electrolyte membrane in the gap of the shaping roller assembly. Without departing from the inventive concept of the present application, any adjustments to the residence time that do not require the exercise of creative effort should be construed as falling within the scope of protection of the present application.

In some implementations, linear speeds of the first shaping roller 31 and the second shaping roller 32 are kept consistent, and an unwinding linear speed of the electrode sheet unwinding mechanism 11 and a winding linear speed of the composite electrode sheet winding mechanism 12 are also kept consistent, thereby improving action consistency of the entire rolling preparation process of the composite electrode sheet and enhancing uniformity of the composite electrode sheet.

Referring to FIGs. 38-41, in conjunction with the structure of the preparation apparatus for a composite electrode sheet, the preparation method for a composite electrode sheet of the present application comprises the following steps: An electrode sheet is unwound by means of the electrode sheet unwinding mechanism 11 and conveyed to the composite electrode sheet winding mechanism 12, so that the electrode sheet sequentially passes through the heating roller, and the gap between the first shaping roller 31 and the second shaping roller 32. A solid electrolyte membrane is conveyed by means of the solid electrolyte membrane unwinding mechanism 21 located on a side of the electrode sheet unwinding mechanism 11, so that the solid electrolyte membrane sequentially passes through the heating roller and a gap between the shaping roller assembly and the electrode sheet. The electrode sheet and the solid electrolyte membrane have been subjected to lamination treatment before the heating roller, followed by preheating at the heating roller, and then roll compositing by the first shaping roller 31 and the second shaping roller 32. During roll compositing, an elastic member is provided between the shaping roller assembly and the solid electrolyte membrane. Finally, downstream of the shaping roller assembly, a composite electrode sheet is received by means of the composite electrode sheet winding mechanism 12.

In some implementations, the composite electrode sheet comprises the electrode sheet, and solid electrolyte membranes located at two sides of the electrode sheet, respectively. In this case, after the electrode sheet is transported, the solid electrolyte membranes are unwound by means of two solid electrolyte membrane unwinding mechanisms 21 located at two sides of the electrode sheet unwinding mechanism 11, respectively, and conveyed to the shaping roller assembly, so that the two solid electrolyte membranes separately pass through the heating roller and the gap between the first shaping roller 31 and the second shaping roller 32 in sequence. In the gap between the first shaping roller 31 and the second shaping roller 32, the two solid electrolyte membranes, the electrode sheet located between the two solid electrolyte membranes, and the elastic members located at outer sides of the two solid electrolyte membranes are laminated to one another, and the solid electrolyte membranes are composited on two sides of the electrode sheet under the rolling action of the shaping roller assembly, so as to obtain the composite electrode sheet.

In some implementations, the solid electrolyte membrane is formed independently, that is, the solid electrolyte membrane can be formed without the aid of a substrate and maintain integrity of the membrane. In this case, after the electrode sheet and the solid electrolyte membrane enter the gap of the shaping roller assembly, the composite electrode sheet is obtained under the pressure of the shaping roller assembly. The composite electrode sheet may then be wound by means of the electrode sheet winding mechanism.

In some implementations, the solid electrolyte membrane is covered by a substrate, to provide support for the solid electrolyte membrane. When the solid electrolyte membrane unwinding mechanism 21 conveys the solid electrolyte membrane, the substrate is located at the side of the solid electrolyte membrane distant from the electrode sheet. After compositing of the solid electrolyte membrane and the electrode sheet is completed, the substrate is separated from the composite electrode sheet. Specifically, substrates may be separately received by means of substrate winding mechanisms 22 located at two sides of the composite electrode sheet winding mechanism 12, the substrate winding mechanisms 22 being located between the shaping roller assembly and the composite electrode sheet winding mechanism 12.

In some implementations, the elastic member is an adhesive layer 81 that covers around the outside of the first shaping roller 31 and the second shaping roller 32. When the shaping roller assembly rotates, the adhesive layer 81 rotates with the shaping roller assembly. Furthermore, when the shaping roller assembly rolls the solid electrolyte membrane and/or the electrode sheet, the adhesive layer 81 provides a cushioning function for the solid electrolyte membrane and/or the electrode sheet, enabling the solid electrolyte membrane to better coat one or two sides of the electrode sheet, and improving uniformity of the lateral thickness of the electrode sheet after rolling.

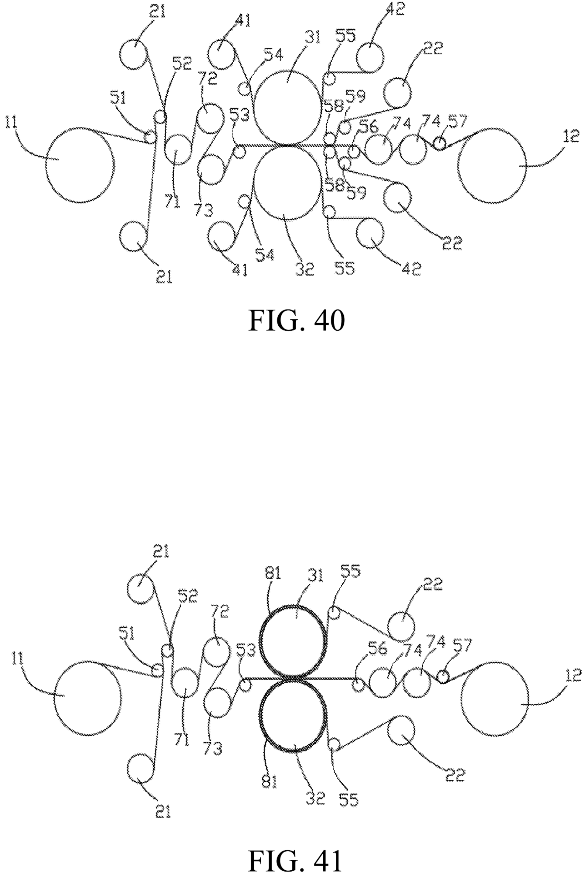

In some implementations, the elastic member is an adhesive layer 81 that covers around the outside of the shaping roller assembly. As shown in FIG. 41, the adhesive layer 81, the solid electrolyte membrane, the electrode sheet, the solid electrolyte membrane and the adhesive layer 81 are sequentially distributed between the shaping roller assemblies. The length of the adhesive layer 81 in an axial direction of the shaping roller assembly may be slightly greater than an axial length of the shaping roller assembly, and the adhesive layer 81 rotates together with the shaping roller assembly during rolling.

In some implementations, the elastic member is a protective film. Protective films may be unwound by means of two protective film unwinding mechanisms 41 located at the side of the solid electrolyte membrane unwinding mechanisms 21 distant from the electrode sheet, and the protective film unwinding mechanisms 41 convey the protective films to the shaping roller assembly so that the two protective films separately pass through the gap between the first shaping roller 31 and the second shaping roller 32. In the gap between the first shaping roller 31 and the second shaping roller 32, the sequentially distributed protective film, solid electrolyte membrane, electrode sheet, solid electrolyte membrane and protective film are laminated on one another, and the solid electrolyte membranes are composited on two sides of the electrode sheet under the rolling action of the shaping roller assembly, so as to obtain the composite electrode sheet.

Optionally, as shown in FIGs. 38-40, in the shaping roller assembly and upstream thereof, the electrode sheet on the electrode sheet unwinding mechanism 11 is guided by a first guide roller 51 and a second guide roller 52, and then reaches the first heating roller 71. The solid electrolyte membranes located at two sides of the electrode sheet unwinding mechanism 11 are guided by the first guide roller 52 and then reach the first heating roller 71. The solid electrolyte membrane, the electrode sheet and the solid electrolyte membrane are composited at the second guide roller 52, then preheated by the first heating roller 71, the second heating roller 72 and the third heating roller 73, and guided by a third guide roller 53 and reach the shaping roller assembly. The protective films located at two sides of the electrode sheet unwinding mechanism 11 were guided by a fourth guide roller 54, and then reached the shaping roller assembly. Subsequently, the electrode sheet, the solid electrolyte membranes and the protective films pass through the gap between the first shaping roller 31 and the second shaping roller 32. Under rolling of the first shaping roller 31 and the second shaping roller 32, compositing of the protective film, the solid electrolyte membrane, the electrode sheet, the solid electrolyte membrane and the protective film is completed.

Optionally, as shown in FIG. 41, in the shaping roller assembly and upstream thereof, the electrode sheet on the electrode sheet unwinding mechanism 11 is guided by the first guide roller 51 and the second guide roller 52, and then reaches the first heating roller 71. The solid electrolyte membranes located at two sides of the electrode sheet unwinding mechanism 11 are guided by the first guide roller 52 and then reach the first heating roller 71. The solid electrolyte membrane, the electrode sheet and the solid electrolyte membrane are laminated at the second guide roller 52, then preheated by the first heating roller 71, the second heating roller 72 and the third heating roller 73, and guided by the third guide roller 53 and reach the shaping roller assembly. The outside of the first shaping roller 31 and the second shaping roller 32 is covered by the adhesive layer 81. Under the rolling of the first shaping roller 31 and the second shaping roller 32, compositing of the electrode sheet and the solid electrolyte membrane is completed.

During rolling, the shaping roller assembly applies tension to the electrode sheet and the solid electrolyte membrane, and the protective film and the adhesive layer 81 are located between the shaping roller assembly and the solid electrolyte membrane, achieving a cushioning function. This ensures that forces received at points of the electrode sheet and the solid electrolyte membrane are uniform, and the solid electrolyte membrane in the finally resulting composite electrode sheet almost completely coats the electrode sheet. The bonding between the electrode sheet and the solid electrolyte membrane is better, the uniformity of the lateral thickness of the composite electrode sheet is improved, and the compaction density is also increased.

In some implementations, the protective film and the substrate may be simultaneously separated from the composite membrane sheet.

Optionally, as shown in FIG. 39, the protective film and the substrate are separated from the shaping roller assembly downstream of the shaping roller assembly. Specifically, after being guided by a fifth guide roller 55, the protective film and the substrate reach the protective film winding mechanism 42 and the substrate winding mechanism 22, respectively, and the protective film and the substrate are separated from the composite electrode sheet to obtain the composite electrode sheet. After being guided by the sixth guide roller 56, the composite electrode sheet reached the cooling roller, and was further guided by the seventh guide roller 57 and then reached the composite electrode sheet winding mechanism 12, to complete winding of the composite electrode sheet.

As shown in FIG. 41, the laminated substrate is separated from the shaping roller assembly. Specifically, after being guided by the fifth guide roller 55, the substrate reaches the substrate winding mechanism 22, and the substrate is separated from the composite electrode sheet to obtain the composite electrode sheet. After being guided by the sixth guide roller 56, the composite electrode sheet reached the cooling roller, and was further guided by the seventh guide roller 57 and then reached the composite electrode sheet winding mechanism 12, to complete winding of the composite electrode sheet.

Optionally, downstream of the shaping roller assembly, the protective film and the substrate may reach the protective film winding mechanism 42 and the substrate winding mechanism 22, respectively, through different guide rollers, and, as shown in FIG. 39, are separated without controlling a separation angle of the substrate and the composite electrode sheet. Specifically, the protective film is guided by the fifth guide roller 55, and then reaches the protective film winding mechanism 42. After being guided by an eighth guide roller 58 and a ninth guide roller 59, the substrate reaches the substrate winding mechanism 22, a movement path between the eighth guide roller 58 and the ninth guide roller 59 being a straight line. The protective film and the substrate are separated from the composite membrane sheet.

Optionally, downstream of the shaping roller assembly, the protective film and the substrate may reach the protective film winding mechanism 42 and the substrate winding mechanism 22, respectively, through different guide rollers, and, as shown in FIG. 40, be separated without controlling a separation angle of the substrate and the composite membrane sheet. Specifically, the protective film is guided by the fifth guide roller 55, and then reaches the protective film winding mechanism 42. After being sequentially guided by the eighth guide roller 58 and the ninth guide roller 59, the substrate reaches the substrate winding mechanism 22, a movement path between the eighth guide roller 58 and the ninth guide roller 59 being an S-shaped curve. The protective film and the substrate are separated from the composite electrode sheet.

Referring to FIG. 37, the present application provides a preparation method for a composite electrode sheet using the foregoing preparation apparatus for a composite electrode sheet, comprising the following steps:
S51. Laminating an electrode sheet and a solid electrolyte membrane, to obtain a laminated sheet;
S52. Preheating the laminated sheet;
S53. Performing roll compositing on the preheated laminating sheet by means of the shaping roller assembly, to obtain the composite electrode sheet.

In some implementations, an elastic member is provided between the shaping roller assembly and the solid electrolyte membrane.

In some implementations, the elastic member is a protective film that is transported through a gap between the shaping roller assembly and the solid electrolyte membrane, within which the protective film is laminated on a surface of the solid electrolyte membrane.

In some implementations, the preparation method for a composite electrode sheet further comprises: after the composite electrode sheet is prepared, separating the protective film from the surface of the solid electrolyte membrane.

As shown in FIGs. 38-40, the protective film, the solid electrolyte membrane, the electrode sheet, the solid electrolyte membrane and the protective film are distributed in sequence between the shaping roller assemblies. The protective film departs upstream of the shaping roller assembly and is transported to reach the shaping roller assembly, passes through the gap between the shaping roller assembly and the solid electrolyte membrane and is rolled, and then continues to run downstream of the shaping roller assembly until being recovered. Therefore, the protective film of the present application can be reused repeatedly, reducing production and manufacturing costs while reducing harm to the environment, and facilitating improved production efficiency.

In some implementations, the elastic member is an adhesive layer 81 that covers around the outside of the shaping roller assembly.

In some implementations, solid electrolyte membranes located at two sides of the electrode sheet, respectively, are roll composited on the electrode sheet by the shaping roller assembly, to obtain the composite electrode sheet.

It can be appreciated that in the rolled composite electrode sheet, solid electrolyte layers are composited on the electrode sheet. The solid electrolyte membranes being located at two sides of the electrode sheet means that solid electrolyte membranes are composited on both sides of the electrode sheet by rollers.

In some implementations, the electrode sheet and the solid electrolyte membrane are each preheated several times, and temperatures of the several preheatings progressively increase. The temperatures of the several preheatings gradually increase, so that heating is more uniform across the electrode sheet and the solid electrolyte membrane, and subsequent roll compositing is tighter. For example, the electrode sheet and the solid electrolyte membrane are preheated three times, by the first heating roller 71, the second heating roller and the third heating roller.

In some implementations, preheating time of the heating roller is greater than or equal to 2 s.

In some implementations, a substrate is coated on the side of the solid electrolyte membrane distant from the electrode sheet, and the preparation method for a composite electrode sheet further comprises the following step: separating the substrate from the composite electrode sheet.

In some implementations, the substrate may be wound and recovered downstream of the shaping roller assembly by separating the substrate from the composite electrode sheet by means of the substrate winding mechanism 22.

In some implementations, the preparation method for a composite electrode sheet further comprises the following step: performing cooling treatment on the composite electrode sheet.

In some implementations, the cooling roller is provided to cool the composite electrode sheet, so as to reduce the temperature of the composite electrode sheet, achieving higher production efficiency compared to natural air cooling. Furthermore, the cooling roller further provides shaping treatment for the composite electrode sheet.

In some implementations, the preparation method for a composite electrode sheet comprises the following steps:
conveying an electrode sheet by means of the electrode sheet unwinding mechanism 11, so that the electrode sheet passes through a guide roller, the heating mechanism, and the gap in the middle of the shaping roller assembly;
conveying a solid electrolyte membrane by means of the solid electrolyte membrane unwinding mechanism 21 located at the side of the electrode sheet unwinding mechanism 11, so that the solid electrolyte membrane passes through the guide roller, the heating mechanism, and the gap between the shaping roller assembly and the electrode sheet;
controlling the electrode sheet and the solid electrolyte membrane to adhere on the guide roller, to prepare a laminated sheet;
preheating the laminated sheet by means of the heating mechanism;
performing roll compositing on the preheated laminated sheet by means of the shaping roller assembly, to prepare the composite electrode sheet.

In some implementations, an elastic member is provided between the shaping roller assembly and the solid electrolyte membrane.

In some implementations, the preparation method for a composite electrode sheet further comprises:
downstream of the shaping roller assembly, receiving the composite electrode sheet by means of a composite electrode sheet winding mechanism 12;
receiving the substrate by means of a substrate winding mechanism 22 between the shaping roller assembly and the composite electrode sheet winding mechanism 12, wherein
the substrate winding mechanism 22 and the solid electrolyte membrane unwinding mechanism 21 are located at the same side of the electrode sheet unwinding mechanism 11.

In some implementations, the preparation method for a composite electrode sheet further comprises:
conveying the elastic member by means of the protective film unwinding mechanism 41, wherein the protective film unwinding mechanism 41 is located between the solid electrolyte membrane unwinding mechanism 21 and the shaping roller assembly; and
between the shaping roller assembly and the substrate winding mechanism 22, receiving the elastic member by means of the protective film winding mechanism 42.

In the preparation method for a composite electrode sheet of the present application, the electrode sheet and the solid electrolyte membrane are simultaneously subjected to preheating treatment before the roll compositing step. The simultaneous preheating ensures even heating throughout the electrode sheet and the solid electrolyte membrane, and maintains a uniform preheating temperature. This improves the flexibility of the electrode sheet and the solid electrolyte membrane, helping to achieve tight compositing effects in the subsequent roll compositing process, and improving the compositing degree between the electrode sheet, the solid electrolyte membrane and the protective film.

Conventional shaping roller assemblies have high strength but poor deformation resistance, and in order to facilitate smoothness of a rolling process, the electrode sheet is thinned at the edges, to form a structure that is thick in the middle and thin at two ends. Due to a non-uniform lateral thickness of the electrode sheet, when a solid electrolyte membrane is laminated on the electrode sheet, an edge region of the electrode sheet is still separated from the solid electrolyte membrane. When a rolling apparatus performs roll compositing on the electrode sheet and the solid electrolyte membrane, rolling forces of a steel roller are different in a middle region and the edge region of the electrode sheet, making it difficult for the electrode sheet and the solid electrolyte membrane to be tightly composited, i.e., ineffective compositing, which will cause the lateral compaction density of the composite electrode sheet to be non-uniform, and the uniformity of the composite electrode sheet is poor. In severe cases, the electrode sheet may crush, consequently producing a huge impact on the safety performance and quality of a lithium-ion battery.

In the preparation method for a composite electrode sheet of the present application, the stress on the electrode sheet and the solid electrolyte membrane during the rolling process is adjusted by means of cushioning provided by the elastic member, so that the solid electrolyte membrane can better coat the electrode sheet. Furthermore, the stress on the electrode sheet and the solid electrolyte membrane is uniform during the rolling process, so that the lateral thickness of the electrode sheet tends to be uniform after rolling, avoiding an adverse impact on the roll compositing process due to the phenomenon of an electrode sheet being thick in the middle and thin at two ends, and preventing the electrode sheet from being crushed. This improves the degree of compositing between the electrode sheet, the solid electrolyte membrane and the protective film, and improves the uniformity of the lateral thickness of the composite electrode sheet. Additionally, when the composite electrode sheet prepared using the method of the present application is applied to a battery, the composite electrode sheet can effectively prevent powder shedding that may occur during a charge and discharge cycle from affecting the cycle performance of the battery, helping to improve the overall safety performance of the battery.

The compositing process of the present application is carried out under dry conditions. The dry conditions in the present application are different from those of a conventional wet electrode preparation method. Conventional wet preparation of composite electrodes involves first preparing a solid electrolyte slurry and then coating the solid electrolyte slurry onto an electrode sheet, or vice versa, preparing an electrode slurry and then coating the electrode slurry onto a solid electrolyte membrane. The preparation process of the present application does not use solvents, eliminating the need for cumbersome subsequent drying steps, and effectively reducing production costs.

It can be appreciated that the dry process refers to preparation of related electrode sheets and electrolyte membranes without the addition of solvents. Technical solutions involving trace amounts of liquid lubricants or other liquid additives that may be used during a rolling process should still be within the scope of protection of the present application.

In some implementations, both the electrode sheet and the solid electrolyte membrane are prepared by means of a dry process.

In some implementations, at least one of the electrode sheet and the solid electrolyte membrane is prepared by means of a dry process.

In some implementations, both the electrode sheet and the solid electrolyte membrane are prepared by means of a wet process.

It can be appreciated that electrode sheet and the solid electrolyte membrane are preferably prepared under dry conditions, so that solvents are no longer needed in the entire electrode preparation process.

It can be appreciated that the preparation processes of the electrode sheet and the solid electrolyte membrane are independent of the preparation process of the composite electrode. That is, if a wet process is used, the electrode sheet undergoes coating, drying, and rolling processes.

In some implementations, the electrode sheet is a positive electrode sheet. Positive electrode materials, especially high-nickel ternary materials with high energy density, are prone to undesirable side reactions with electrolytes, especially non-aqueous electrolytes. These side reactions cause a decline in battery performance, and may pose potential safety hazards. Compositing a solid electrolyte layer on a positive electrode surface helps to improve battery safety.

In some implementations, the electrode sheet is a negative electrode sheet. In some implementations, the solid electrolyte membrane is composited on one or both sides of the positive electrode sheet or the negative electrode sheet. Material compositions, preparation methods and related performance parameters of the positive electrode sheet, the negative electrode sheet and the solid electrolyte membrane have been described in detail in the above embodiments of the present application, and will not be repeated here.

Applying a solid electrolyte coating to a surface of an electrode, especially a surface of a high-capacity positive electrode, can effectively improve the safety performance of a battery. However, due to limitations in energy density, the thickness of a solid electrolyte membrane is usually quite small. Compared to an electrode sheet prepared by a dry process, the thickness of the solid electrolyte membrane is an order of magnitude smaller, which renders the solid electrolyte membrane prone to cracking during preparation a composite conductive electrode sheet by a dry process.

In some implementations, the solid electrolyte membrane is formed independently, meaning that the solid electrolyte membrane may be formed without the aid of a substrate and maintain the integrity of the membrane.

In some implementations, the side of the solid electrolyte membrane distant from the electrode sheet is covered by a substrate, and a bonding force between the substrate and the solid electrolyte membrane is less than a bonding force between the solid electrolyte membrane and the electrode sheet. After rolling, at least part of the solid electrolyte is transferred to the electrode sheet and separated from the substrate.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

In some implementations, an electrode sheet and a solid electrolyte membrane may also be procured.

The present application further provides a composite electrode sheet, which is prepared according to the preparation method for a composite electrode sheet provided above.

The present application further provides a lithium-ion battery, which comprises the composite electrode sheet provided above.

One embodiment of the present application comprises the following steps. Using the preparation apparatus for a composite electrode sheet as shown in FIG. 38, a positive electrode sheet was composited with two solid electrolyte membranes, so that the solid electrolyte membranes were simultaneously composited on positive electrode active material layers on two sides of the positive electrode sheet. The solid electrolyte membrane was covered by a substrate. A protective film was a PE-based non-woven fabric.

The electrode sheet departed from the electrode sheet unwinding mechanism 11, and was guided by the first guide roller 51 and the second guide roller 52, and then reached the first heating roller 71. The solid electrolyte membranes located on two sides of the electrode sheet unwinding mechanism 11 were guided by the second guide roller 52, and then reached the first heating roller 71. The solid electrolyte membrane, the electrode sheet and the solid electrolyte membrane were laminated at the second guide roller 52; then preheated by the first heating roller 71, the second heating roller 72 and the third heating roller 73, and guided by the third guide roller 53, and then reached the shaping roller assembly. The protective films located at two sides of the electrode sheet unwinding mechanism 11 were guided by a fourth guide roller 54, and then reached the shaping roller assembly. Subsequently, the electrode sheet, the solid electrolyte membranes, and the protective films pass through the gap between the first shaping roller 31 and the second shaping roller 32. Under rolling of the first shaping roller 31 and the second shaping roller 32, roll compositing of the protective film, the solid electrolyte membrane, the electrode sheet, the solid electrolyte membrane and the protective film is completed. Next, after being guided by the fifth guide roller 55, the protective film and the substrate reached the protective film winding mechanism 42 and the substrate winding mechanism 22, respectively, and the protective film and the substrate were separated from the composite electrode sheet, to obtain a composite electrode sheet. After being guided by the sixth guide roller 56, the composite electrode sheet reached the cooling roller, and was further guided by the seventh guide roller 57 and then reached the composite electrode sheet winding mechanism 12, to complete winding of the composite electrode sheet.

The prepared composite electrode sheet had no cracks on the surface.

One embodiment of the present application comprises the following steps. The only difference between this embodiment and the previous embodiment is that a method of separating a substrate from a composite electrode sheet downstream of the shaping roller assembly is different.

As shown in FIG. 39, downstream of the shaping roller assembly, a protective film was guided by the fifth guide roller 55 and then reached the protective film winding mechanism 42. The protective film winding mechanism 42 separated the protective film from the composite membrane sheet and completed winding. After being guided by an eighth guide roller 58 and a ninth guide roller 59, the substrate reaches the substrate winding mechanism 22, a movement path between the eighth guide roller 58 and the ninth guide roller 59 being a straight line. The substrate winding mechanism 22 separated the substrate from the composite membrane sheet and completed winding.

The prepared composite electrode sheet had no cracks on the surface.

One embodiment of the present application comprises the following steps. The only difference between this embodiment and the previous embodiment is that a method of separating a substrate from a composite electrode sheet downstream of the shaping roller assembly is different.

As shown in FIG. 40, downstream of the shaping roller assembly, a protective film was guided by the fifth guide roller 55 and then reached the protective film winding mechanism 42. The protective film winding mechanism 42 separated the protective film from the composite membrane sheet and completed winding. After being guided by the eighth guide roller 58 and the ninth guide roller 59, the substrate reached the substrate winding mechanism 22, a movement path between the eighth guide roller 58 and the ninth guide roller 59 being an S-shaped curve. The substrate winding mechanism 22 separated the substrate from the composite membrane sheet and completed winding.

The prepared composite electrode sheet had no cracks on the surface.

One embodiment of the present application comprises the following steps. The only difference between this embodiment and the previous embodiment is that an elastic member is an adhesive layer 81 instead of the protective film, and the adhesive layer 81 covers the outside of the first shaping roller 31 and the second shaping roller 32.

As shown in FIG. 41, an electrode sheet departed from the electrode sheet unwinding mechanism 11, was guided by the first guide roller 51 and the second guide roller 52, and then reached the first heating roller 71. The solid electrolyte membranes located at two sides of the electrode sheet unwinding mechanism 11 are guided by the first guide roller 52 and then reach the first heating roller 71. The solid electrolyte membrane, the electrode sheet and the solid electrolyte membrane were laminated at the second guide roller 52; then preheated by the first heating roller 71, the second heating roller 72 and the third heating roller 73, and guided by the third guide roller 53, and reached the shaping roller assembly. Subsequently, the solid electrolyte membranes passed through the gap between the first shaping roller 31 and the second shaping roller 32. Under rolling of the first shaping roller 31 and the second shaping roller 32, roll compositing of the solid electrolyte membrane, the electrode sheet and the solid electrolyte membrane was completed. Next, after being guided by the fifth guide roller 55, a substrate reached the substrate winding mechanism 22, and the substrate was separated from the composite electrode sheet to obtain a composite electrode sheet. After being guided by the sixth guide roller 56, the composite electrode sheet reached the cooling roller, and was further guided by the seventh guide roller 57 and then reached the composite electrode sheet winding mechanism 12, to complete winding of the composite electrode sheet.

The prepared composite electrode sheet had no cracks on the surface.

In a comparative embodiment of the present application, a difference between this comparative embodiment and the previous embodiment is that the preparation apparatus for a composite electrode sheet is not provided with a heating roller.

As shown in FIG. 36, an electrode sheet departed from the electrode sheet unwinding mechanism 11 and was transported to reach the shaping roller assembly. Solid electrolyte membranes located at two sides of the electrode sheet unwinding mechanism 11 were guided by the fourth guide roller 54 and the ninth guide roller 59, respectively, and then reached the shaping roller assembly. The protective films located at two sides of the electrode sheet unwinding mechanism 11 were guided by a fourth guide roller 54, and then reached the shaping roller assembly. Subsequently, the protective films passed through the gap between the first shaping roller 31 and the second shaping roller 32. Under rolling of the first shaping roller 31 and the second shaping roller 32, roll compositing of the protective film, the solid electrolyte membrane, the electrode sheet, the solid electrolyte membrane, and the protective film was completed. Next, after being guided by the fifth guide roller 55, the protective film and the substrate reached the protective film winding mechanism 42 and the substrate winding mechanism 22, respectively, and the protective film and the substrate were separated from the composite electrode sheet, to obtain a composite electrode sheet. After being guided by the sixth guide roller 56, the composite electrode sheet reached the cooling roller, and was further guided by the seventh guide roller 57 and then reached the composite electrode sheet winding mechanism 12, to complete winding of the composite electrode sheet.

There was an interlayer separation phenomenon at edges of the composite electrode sheet, and there were fine cracks at the edges.

In a comparative embodiment of the present application, a difference between this comparative embodiment and the previous embodiment is that the preparation apparatus for a composite electrode sheet is not provided with a heating roller.

As shown in FIG. 39, an electrode sheet departed from the electrode sheet unwinding mechanism 11 and was transported to reach the shaping roller assembly. Solid electrolyte membranes located at two sides of the electrode sheet unwinding mechanism 11 were guided by the fourth guide roller 54 and the ninth guide roller 59, respectively, and then reached the shaping roller assembly. Subsequently, the solid electrolyte membranes passed through the gap between the first shaping roller 31 and the second shaping roller 32. Under rolling of the first shaping roller 31 and the second shaping roller 32, roll compositing of the solid electrolyte membrane, the electrode sheet and the solid electrolyte membrane was completed. Next, after being guided by the fifth guide roller 55, a substrate reached the substrate winding mechanism 22, and the substrate was separated from the composite electrode sheet to obtain a composite electrode sheet. After being guided by the sixth guide roller 56, the composite electrode sheet reached the cooling roller, and was further guided by the seventh guide roller 57 and then reached the composite electrode sheet winding mechanism 12, to complete winding of the composite electrode sheet.

There was an interlayer separation phenomenon at edges of the composite electrode sheet, and there were fine cracks at the edges.

In a comparative embodiment of the present application, a difference between this comparative embodiment and the previous embodiment is that the preparation device for a composite electrode sheet is not provided with a heating roller or an elastic member.

As shown in FIG. 30, an electrode sheet departed from the electrode sheet unwinding mechanism 11 and was transported to reach the shaping roller assembly. Solid electrolyte membranes located at two sides of the electrode sheet unwinding mechanism 11 were guided by the fourth guide roller 54 and the ninth guide roller 59, respectively, and then reached the shaping roller assembly. Subsequently, the solid electrolyte membranes passed through the gap between the first shaping roller 31 and the second shaping roller 32. Under rolling of the first shaping roller 31 and the second shaping roller 32, compositing of the solid electrolyte membrane, the electrode sheet, and the solid electrolyte membrane was completed. Next, after being guided by the fifth guide roller 55, a substrate reached the substrate winding mechanism 22, and the substrate winding mechanism 22 separated the substrate from the composite electrode sheet to obtain a composite electrode sheet. After being guided by the sixth guide roller 56, the composite electrode sheet reached the cooling roller, and was further guided by the seventh guide roller 57 and then reached the composite electrode sheet winding mechanism 12, to complete winding of the composite electrode sheet.

There was an interlayer separation phenomenon at edges of the composite electrode sheet, and there were fine cracks at the edges.

The present application provides a preparation method for a composite electrode sheet to improve compositing effects of a composite electrode sheet and a solid electrolyte membrane by a dry process. A preparation apparatus for a composite electrode sheet comprises a shaping roller assembly, an electrode sheet unwinding mechanism, a solid electrolyte membrane unwinding mechanism, and a composite electrode sheet winding mechanism. The shaping roller assembly comprises a first shaping roller and a second shaping roller symmetrically disposed at two sides of the electrode sheet. At least one of the first shaping roller and the second shaping roller is provided with a heating mechanism, and a connecting line between axes of the first shaping roller and the second shaping roller is perpendicular to a conveying direction of the electrode sheet. That is, the conveying direction of the electrode sheet is perpendicular to a plane where the axes of the first shaping roller and the second shaping roller are located. However, this is not a limitation, and the conveying direction of the electrode sheet may be adjusted according to actual needs.

In some implementations, a temperature range of the shaping roller assembly provided with the heating mechanism is 100-300°C, including but not limited to 100°C, 150°C, 200°C, 250°C, or 300°C, preferably 150-200°C.

It can be appreciated that the present application does not impose particular limitations on the heating mechanism. The heating mechanism may be located inside the shaping roller assembly or on an outer surface of the shaping roller assembly. A heating form of the heating mechanism may be contact heating, forced air heating or radiation heating. Specifically, a heating component such as a heating plate, a heating wire or a hot air blower may be used for heating.

It can be appreciated that the preparation apparatus for a composite electrode sheet further comprises an electrode sheet unwinding mechanism, a composite electrode sheet winding mechanism and a solid electrolyte membrane unwinding mechanism.

The electrode sheet unwinding mechanism is located upstream of the shaping roller assembly, and is used to unwind the electrode sheet and then convey the electrode sheet so that the electrode sheet passes through a gap between the first shaping roller and the second shaping roller.

The composite electrode sheet winding mechanism is located downstream of the shaping roller assembly, and is used to provide tension to the electrode sheet in the movement direction of the electrode sheet, and to receive the composite electrode sheet obtained after rolling by the shaping roller assembly to complete a winding action.

The solid electrolyte membrane unwinding mechanism is located upstream of the shaping roller assembly, and more specifically between the electrode sheet unwinding mechanism and the shaping roller assembly. The solid electrolyte membrane unwinding mechanism is used to unwind a solid electrolyte membrane and then convey the solid electrolyte membrane so that the solid electrolyte membrane passes through the gap between the first shaping roller and the second shaping roller. More specifically, the solid electrolyte membrane unwinding mechanism causes the solid electrolyte membrane to pass between the electrode sheet and the shaping roller assembly.

The present application does not have special requirements for specific structures and forms of the winding structure and the unwinding mechanism. Any known winding and unwinding structures may be used in the present application without departing from the inventive concept of the present application.

In some implementations, there are two solid electrolyte membrane unwinding mechanisms located at two sides of the electrode sheet unwinding mechanism, respectively, and solid electrolyte membranes are then conveyed so that the two solid electrolyte membranes pass through the gap between the first shaping roller and the second shaping roller, and the electrode sheet is located between the two solid electrolyte membranes.

Optionally, the two solid electrolyte membrane unwinding mechanisms are symmetrically disposed at two sides of the electrode sheet unwinding mechanism.

In some implementations, the preparation apparatus for a composite electrode sheet further comprises a substrate winding mechanism.

When a substrate is provided on the solid electrolyte membrane, the substrate covers the side of the solid electrolyte membrane distant from the electrode sheet. After the electrode sheet and the solid electrolyte membrane are rolled by means of the shaping roller assembly to obtain the composite electrode sheet, the substrate needs to be separated. The substrate and the composite electrode sheet are separated by means of the substrate winding mechanism disposed downstream of the shaping roller assembly. During the separation process, the substrate winding mechanism applies tension to the substrate of the solid electrolyte membrane, so that the substrate is separated from the composite electrode sheet, and performs a substrate winding action when necessary.

The number of substrate winding mechanisms corresponds to the number of solid electrolyte membrane unwinding mechanisms.

In some implementations, the preparation apparatus for a composite electrode sheet further comprises a guide roller. The guide roller ensures that residence time of the solid electrolyte membrane on the shaping roller is greater than residence time of the electrode sheet on the shaping roller.

It can be appreciated that the guide roller is used to provide guidance for the solid electrolyte membrane. The guide roller may also be provided between the shaping roller assembly and the substrate winding mechanism. This guide roller is used to provide guidance for the substrate of the solid electrolyte membrane separated from the composite electrode sheet.

It can be appreciated that the residence of the solid electrolyte membrane and the electrode sheet on the shaping roller assembly may be on the first shaping roller or the second shaping roller.

In conjunction with the structure of the preparation apparatus for a composite electrode sheet, the preparation method for a composite electrode sheet of the present application comprises the following steps: unwinding an electrode sheet by means of the electrode sheet unwinding mechanism and conveying the electrode sheet to the composite electrode sheet winding mechanism, so that the electrode sheet passes through the gap between the first shaping roller and the second shaping roller; conveying the solid electrolyte membrane by means of the solid electrolyte membrane unwinding mechanism located at the side of the electrode sheet unwinding mechanism, so that the solid electrolyte membrane reaches the shaping roller assembly to undergo preheating, and passes through the gap between the shaping roller assembly and the electrode sheet; then performing heating and roll compositing on the electrode sheet and the preheated solid electrolyte membrane by means of the first shaping roller and the second shaping roller, wherein, during the roll compositing, an elastic member is provided between the shaping roller assembly and the solid electrolyte membrane; and finally, downstream of the shaping roller assembly, receiving a composite electrode sheet by means of the composite electrode sheet winding mechanism.

In some implementations, at least one of the first shaping roller and the second shaping roller is provided with a heating mechanism. After the solid electrolyte membrane reaches the shaping roller assembly provided with the heating mechanism and is heated, the solid electrolyte membrane rotates with the shaping roller assembly by a specific angle, and enters the gap between the shaping roller assembly and the electrode sheet.

In some implementations, after the electrode sheet is laminated with the solid electrolyte membrane, the laminated sheet reaches the shaping roller assembly provided with the heating mechanism and is heated, and then rotates with the shaping roller assembly by a specific angle before entering the gap between the first shaping roller and the second shaping roller to receive rolling. Contact time between the electrode sheet and the shaping roller assembly is shorter than contact time between the solid electrolyte membrane and the shaping roller assembly. Therefore, the temperature of the electrode sheet is lower than the temperature of the solid electrolyte membrane during the compositing process.

Or optionally, after the electrode sheet reaches the shaping roller assembly surrounded by the solid electrolyte membrane on the outside, the electrode sheet simultaneously undergoes heating and roll compositing processes of the shaping roller assembly. Therefore, contact time between the electrode sheet and the shaping roller assembly is shorter than contact time between the solid electrolyte membrane and the shaping roller assembly, and the temperature of the electrode sheet is lower than the temperature of the solid electrolyte membrane during the compositing process.

In some implementations, the composite electrode sheet includes the electrode sheet and one solid electrolyte membrane, and the first shaping roller or the second shaping roller in the shaping roller assembly located on the same side of the electrode sheet as the solid electrolyte membrane is provided with the heating mechanism.

In some implementations, the composite electrode sheet comprises the electrode sheet, and solid electrolyte membranes located at two sides of the electrode sheet, respectively. After the electrode sheet is transported, the solid electrolyte membranes are unwound by means of two solid electrolyte membrane unwinding mechanisms located at two sides of the electrode sheet unwinding mechanism, and conveyed to the shaping roller assembly, so that the two solid electrolyte membranes reach the first shaping roller and the second shaping roller, respectively, and are heated and pass through the gap between the first shaping roller and the second shaping roller. Both the first shaping roller and the second shaping roller herein are provided with a heating mechanism. In the gap between the first shaping roller and the second shaping roller, the two solid electrolyte membranes, the electrode sheet located between the two solid electrolyte membranes, and the elastic members located on outer sides of the two solid electrolyte membranes are laminated to one another, and the solid electrolyte membranes are composited on two sides of the electrode sheet under the rolling action of the shaping roller assembly, so as to obtain the composite electrode sheet.

In some implementations, the solid electrolyte membrane is formed independently, that is, the solid electrolyte membrane can be formed without the aid of a substrate and maintain integrity of the membrane. In this case, after the electrode sheet and the solid electrolyte membrane enter the gap of the shaping roller assembly, the composite electrode sheet is obtained under the pressure of the shaping roller assembly. The composite electrode sheet may then be wound by means of the electrode sheet winding mechanism.

In some implementations, the solid electrolyte membrane is covered by a substrate, to provide support for the solid electrolyte membrane. When the solid electrolyte membrane unwinding mechanism conveys the solid electrolyte membrane, the substrate is located on the side of the solid electrolyte membrane away from the electrode sheet. After compositing of the solid electrolyte membrane and the electrode sheet is completed, the substrate is separated from the composite electrode sheet. Specifically, substrates may be separately received by means of substrate winding mechanisms located at two sides of the composite electrode sheet winding mechanism, the substrate winding mechanisms being located between the shaping roller assembly and the composite electrode sheet winding mechanism.

In some implementations, the elastic member is an adhesive layer that covers around the outside of the first shaping roller and the second shaping roller. When the shaping roller assembly rotates, the adhesive layer rotates with the shaping roller assembly. Furthermore, when the shaping roller assembly rolls the solid electrolyte membrane and/or the electrode sheet, the adhesive layer provides a cushioning function for the solid electrolyte membrane and/or the electrode sheet, enabling the solid electrolyte membrane to better coat one or two sides of the electrode sheet, and improving uniformity of the lateral thickness of the electrode sheet after rolling.

By means of providing one or more guide rollers between the solid electrolyte membrane unwinding mechanism and the shaping roller assembly, the solid electrolyte membrane first reaches the shaping roller assembly provided with the heating mechanism to undergo preheating, and then enters the gap between the shaping roller assembly and the electrode sheet to undergo the roll compositing process.

In some implementations, the elastic member is a protective film. Protective films may be unwound by means of two protective film unwinding mechanisms located at the side of the solid electrolyte membrane unwinding mechanisms distant from the electrode sheet, and the protective film unwinding mechanisms convey the protective films to the shaping roller assembly so that the two protective films separately pass through the gap between the first shaping roller and the second shaping roller. In the gap between the first shaping roller and the second shaping roller, the sequentially distributed protective film, solid electrolyte membrane, electrode sheet, solid electrolyte membrane and protective film are laminated on one another, and the solid electrolyte membranes are composited on two sides of the electrode sheet under the rolling action of the shaping roller assembly, so as to obtain the composite electrode sheet.

Before rolling, the solid electrolyte membrane is first preheated, so that the solid electrolyte membrane softens to a certain extent, improving the ductility thereof. Heating time of the electrode sheet is shorter than that of the solid electrolyte membrane, so that the ductility of the electrode sheet is relatively restricted, helping to maintain the longitudinal width of the electrode sheet. During rolling, the shaping roller assembly applies tension to the electrode sheet and the solid electrolyte membrane, and the two protective films are located between the shaping roller assembly and the solid electrolyte membrane, achieving a cushioning function. This ensures that forces received at points of the electrode sheet and the solid electrolyte membrane are uniform, and the solid electrolyte membrane in the finally resulting composite electrode sheet almost completely coats the electrode sheet. The bonding between the electrode sheet and the solid electrolyte membrane is better, the uniformity of the lateral thickness of the composite electrode sheet is improved, and the compaction density is also increased.

It can be appreciated that each guide roller may provide guidance separately, or two or more guide rollers may be combined to provide guidance.

In the present application, the width, diameter, tonnage, etc. of the shaping roller assembly have been described in detail in the embodiments described above, and will not be repeated herein.

In some implementations, the mechanical speed of the first shaping roller and the second shaping roller is 10-60 m/min, including but not limited to 10 m/min, 20 m/min, 30 m/min, 40 m/min, 45 m/min, 50 m/min, or 60 m/min.

It can be appreciated that the higher the belt speed of the entire preparation apparatus for a composite electrode sheet, the higher production efficiency is. However, excessively high speeds can easily cause problems such as breakage in the belt-carried electrode sheet and solid electrolyte membrane. The present application does not have particular requirements for residence time of the electrode sheet and the solid electrolyte membrane in the gap of the shaping roller assembly. Without departing from the inventive concept of the present application, any adjustments to the residence time that do not require the exercise of creative effort should be construed as falling within the scope of protection of the present application.

In some implementations, linear speeds of the first shaping roller and the second shaping roller are kept consistent, and an unwinding linear speed of the electrode sheet unwinding mechanism and a winding linear speed of the composite electrode sheet winding mechanism are also kept consistent, thereby improving action consistency of the entire rolling preparation process of the composite electrode sheet and enhancing uniformity of the composite electrode sheet.

A method for preparing a composite electrode sheet using the foregoing preparation device for a composite electrode sheet comprises:
S10: Preheating a solid electrolyte membrane by means of the shaping roller assembly.
S20: Performing heating and roll compositing on an electrode sheet and the preheated solid electrolyte membrane by means of the shaping roller assembly, to obtain the composite electrode sheet,
wherein an elastic member is provided between the shaping roller assembly and the solid electrolyte membrane rolled on the electrode sheet.

The preparation method of the present application utilizes the elastic member to provide cushioning for the rolling process. This, in one aspect, avoids the problem of low compositing efficiency caused by poor deformation resistance of rigid rollers, and in another aspect, avoids an adverse impact on the roll compositing process due to the phenomenon of an electrode sheet being thick in the middle and thin at two ends. Heating time of the solid electrolyte membrane by the shaping roller assembly is longer than heating time of the electrode sheet by the shaping roller assembly, so that the temperature of the electrode sheet is lower than that of the solid electrolyte membrane during rolling. This further enables the solid electrolyte membrane to have better ductility than the electrode sheet. In this case, after rolling, the solid electrolyte membrane can better coat the surface of the electrode sheet, so that an active material layer in the electrode sheet can be better bonded to the solid electrolyte membrane, and the uniformity of the lateral thickness of the composite electrode sheet can also be effectively improved.

The compositing process of the present application is carried out under dry conditions. The dry conditions in the present application are different from those of a conventional wet electrode preparation method. Conventional wet preparation of composite electrodes involves first preparing a solid electrolyte slurry and then coating the solid electrolyte slurry onto an electrode sheet, or vice versa, preparing an electrode slurry and then coating the electrode slurry onto a solid electrolyte membrane. The preparation process of the present application does not use solvents, eliminating the need for cumbersome subsequent drying steps, and effectively reducing production costs.

It can be appreciated that the dry process refers to preparation of related electrode sheets and electrolyte membranes without the addition of solvents. Technical solutions involving trace amounts of liquid lubricants or other liquid additives that may be used during a rolling process should still be within the scope of protection of the present application.

In some implementations, both the electrode sheet and the solid electrolyte membrane are prepared by means of a dry process.

In some implementations, at least one of the electrode sheet and the solid electrolyte membrane is prepared by means of a dry process.

In some implementations, both the electrode sheet and the solid electrolyte membrane are prepared by means of a wet process.

It can be appreciated that electrode sheet and the solid electrolyte membrane are preferably prepared under dry conditions, so that solvents are no longer needed in the entire electrode preparation process.

It can be appreciated that the preparation processes of the electrode sheet and the solid electrolyte membrane are independent of the preparation process of the composite electrode. That is, if a wet process is used, the electrode sheet undergoes coating, drying, and rolling processes.

In some implementations, the electrode sheet is a positive electrode sheet. Positive electrode materials, especially high-nickel ternary materials with high energy density, are prone to undesirable side reactions with electrolytes, especially non-aqueous electrolytes. These side reactions cause a decline in battery performance, and may pose potential safety hazards. Compositing a solid electrolyte layer on a positive electrode surface helps to improve battery safety.

In some implementations, the electrode sheet is a negative electrode sheet. In some implementations, the solid electrolyte membrane is composited on one or both sides of the positive electrode sheet or the negative electrode sheet. Material compositions, preparation methods and related performance parameters of the positive electrode sheet, the negative electrode sheet and the solid electrolyte membrane have been described in detail in the above embodiments of the present application, and will not be repeated here.

Applying a solid electrolyte coating to a surface of an electrode, especially a surface of a high-capacity positive electrode, can effectively improve the safety performance of a battery. However, due to limitations in energy density, the thickness of a solid electrolyte membrane is usually quite small. Compared to an electrode sheet prepared by a dry process, the thickness of the solid electrolyte membrane is an order of magnitude smaller, which renders the solid electrolyte membrane prone to cracking during preparation a composite conductive electrode sheet by a dry process.

In some implementations, the solid electrolyte membrane is formed independently, meaning that the solid electrolyte membrane may be formed without the aid of a substrate and maintain the integrity of the membrane.

In some implementations, the side of the solid electrolyte membrane distant from the electrode sheet is covered by a substrate, and a bonding force between the substrate and the solid electrolyte membrane is less than a bonding force between the solid electrolyte membrane and the electrode sheet. After rolling, at least part of the solid electrolyte is transferred to the electrode sheet and separated from the substrate.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film.

The present application further provides a composite electrode sheet, which is prepared according to the preparation method for a composite electrode sheet provided above.

The present application further provides a solid-state battery, which comprises the composite electrode sheet provided above.

In some implementations, an electrode sheet and a solid electrolyte membrane may also be procured.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

LGPS was selected as a solid electrolyte, and polytetrafluoroethylene was selected as a binder. The substances were mixed and then stirred using a high-speed stirrer, to obtain a solid electrolyte mixture. The mixture was then subjected to fiberization treatment by means of air jet milling to obtain a fiberized solid electrolyte mixture, and the fiberized solid electrolyte mixture was then rolled to obtain a solid electrolyte membrane.

### 3. Preparation of composite positive electrode sheet

A positive electrode sheet was composited with two solid electrolyte membranes, so that the solid electrolyte membranes were simultaneously composited on positive electrode active material layers on two sides of the positive electrode sheet.

The solid electrolyte membrane departed from the solid electrolyte membrane unwinding mechanism, passed through the first guide roller, and then met and was laminated on the protective film at the second guide roller. The protective film departed from the protective film unwinding mechanism, and after being laminated together with the solid electrolyte membrane, advanced together to the first shaping roller or the second shaping roller. After rotating with the shaping roller assembly by a specific angle, the solid electrolyte membrane and the protective film formed contact with the positive electrode sheet and passed through the gap between the first shaping roller and the second shaping roller, or more specifically, through the gap between the shaping roller assembly and the positive electrode sheet. The solid electrolyte membrane and the protective film were heated while rotating with the shaping roller assembly.

Subsequently, under the rolling of the first shaping roller and the second shaping roller, compositing of the positive electrode sheet with the two solid electrolyte membranes was completed. The electrode sheet, the solid electrolyte membrane, and the protective film were all heated in the movement process between the first shaping roller and the second shaping roller. The composite electrode sheet advanced toward the composite electrode sheet winding mechanism under the action of the composite electrode sheet winding mechanism, and was received and wound by the composite electrode sheet winding mechanism, to obtain a composite electrode sheet having solid electrolyte membranes composited on both sides of the positive electrode sheet.

After leaving the gap between the first shaping roller and the second shaping roller, the protective film and the substrate were separated from the composite electrode sheet and rotated with the first shaping roller or the second shaping roller by a specific angle. Subsequently, under the action of the protective film winding mechanism and the solid electrolyte membrane winding mechanism, the protective film and the substrate moved toward the third guide roller, and after rotating around the third guide roller by a specific angle, the protective film and the substrate were separated. The protective film was received and wound by the protective film winding mechanism, and the substrate was received and wound by the substrate winding mechanism.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

LATP was selected as a solid electrolyte, polytetrafluoroethylene was selected as a binder, and LiPF₆ was selected as a lithium salt. The substances were mixed and then stirred using a high-speed stirrer, to obtain a solid electrolyte mixture. The mixture was then subjected to fiberization treatment by means of air jet milling to obtain a fiberized solid electrolyte mixture, and the fiberized solid electrolyte mixture was then rolled to obtain a solid electrolyte membrane.

### 3. Preparation of composite positive electrode sheet

Using the preparation apparatus for a composite electrode sheet provided with a protective film, the positive electrode sheet was composited with two solid electrolyte membranes, so that the solid electrolyte membranes were simultaneously composited on the positive electrode active material layers on both sides of the positive electrode sheet. A protective film was a PE-based non-woven fabric. A difference from the previous embodiment is that the substrate is separated after advancing with the composite electrode sheet by a specific distance.

The solid electrolyte membrane departed from the solid electrolyte membrane unwinding mechanism, passed through the first guide roller, and then met and was laminated on the protective film at the second guide roller. The protective film departed from the protective film unwinding mechanism, and after being laminated together with the solid electrolyte membrane, advanced together to the first shaping roller or the second shaping roller. After rotating with the shaping roller assembly by a specific angle, the solid electrolyte membrane and the protective film formed contact with the positive electrode sheet and passed through the gap between the first shaping roller and the second shaping roller, or more specifically, through the gap between the shaping roller assembly and the positive electrode sheet. The solid electrolyte membrane and the protective film were heated while rotating with the shaping roller assembly.

Subsequently, under the rolling of the first shaping roller and the second shaping roller, compositing of the positive electrode sheet with the two solid electrolyte membranes was completed. The electrode sheet, the solid electrolyte membrane, and the protective film were all heated in the movement process between the first shaping roller and the second shaping roller. The composite electrode sheet advanced toward the composite electrode sheet winding mechanism under the action of the composite electrode sheet winding mechanism, and was received and wound by the composite electrode sheet winding mechanism, to obtain a composite electrode sheet having solid electrolyte membranes composited on both sides of the positive electrode sheet.

After leaving the gap between the first shaping roller and the second shaping roller, the protective film was separated from the composite electrode sheet and rotated with the first shaping roller or the second shaping roller by a specific angle, and was then received and wound by the protective film winding mechanism. The substrate moved together with the composite electrode sheet by a specific distance toward the composite electrode sheet winding mechanism until reaching the fifth guide roller. The substrate received a force transmitted by the substrate winding mechanism via the fourth guide roller and the fifth guide roller. At the fifth guide roller, the substrate was separated from the composite electrode sheet, and was finally received and wound by the substrate winding mechanism, the substrate moving on the side of the fourth guide roller and the fifth guide roller away from the electrode sheet.

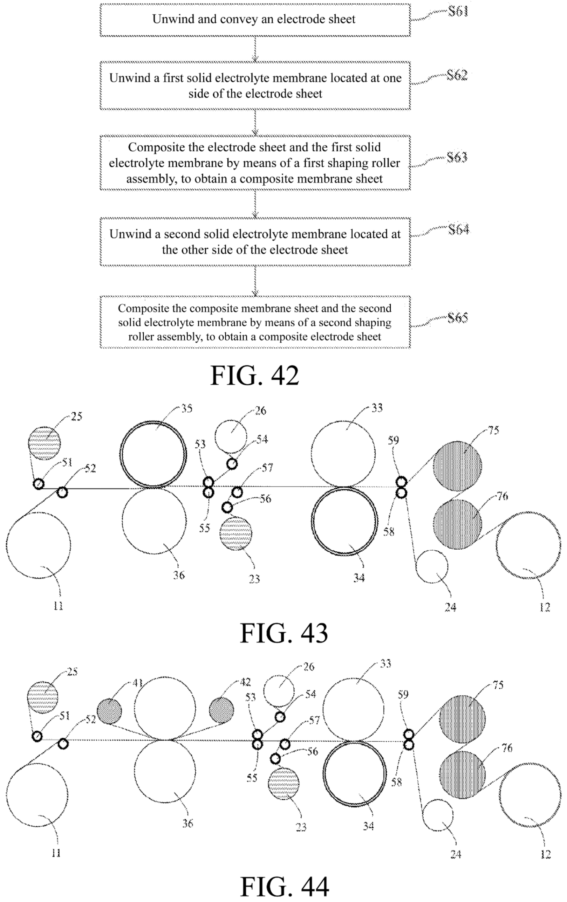

Another aspect of the present application provides a preparation method for a composite electrode sheet, to improve compositing effects of a composite electrode sheet and a solid electrolyte membrane by a dry process. Referring to FIGs. 43-44, a preparation apparatus for a composite electrode sheet for preparing the composite electrode sheet of the present application comprises an electrode sheet unwinding mechanism, a first solid electrolyte membrane unwinding mechanism, a second solid electrolyte membrane unwinding mechanism, a first shaping roller assembly, a second shaping roller assembly and a composite electrode sheet winding mechanism. The first shaping roller assembly is located upstream of the second shaping roller assembly, and at least one of the first shaping roller assembly and the second shaping roller assembly is configured as an elastic rolling assembly.

In one embodiment, the elastic rolling assembly includes a shaping rigid roller and an elastic roller with a lower hardness than that of the shaping rigid roller. A connecting line between axes of the shaping roller and the elastic roller is perpendicular to a conveying direction of the electrode sheet.

In some implementations, both the first shaping roller assembly and the second shaping roller assembly include two rollers symmetrically disposed at two sides of the electrode sheet, and a connecting line between axes of the two rollers is perpendicular to the conveying direction of the electrode sheet.

Optionally, the first shaping roller assembly comprises a shaping rigid roller and an elastic roller; the second shaping roller assembly comprises two shaping rigid rollers.

Or, both the first shaping roller assembly and the second shaping roller assembly comprise a shaping rigid roller and an elastic roller.

Or, the first shaping roller assembly comprises two rigid rollers; the second shaping roller assembly comprises a shaping steel roller and an elastic roller.

In a preferred embodiment, the elastic rolling assembly comprises an elastic roller, the elastic roller being used to contact and roll the first solid electrolyte membrane, and/or the elastic roller being used to contact and roll the first solid electrolyte membrane. The first solid electrolyte membrane and the second solid electrolyte membrane may each include a base membrane or not include a base membrane.

Preferably, both the first shaping roller assembly and the second shaping roller assembly comprise a shaping rigid roller and an elastic roller. Exemplarily, as shown in FIG. 43, the first shaping roller assembly comprises a first rigid roller, 36 and a first elastic roller 35 arranged opposite to the first rigid roller 36, the first elastic roller 35 being used to contact and roll the first solid electrolyte membrane. The second shaping roller assembly comprises a second shaping rigid roller 33, and a second elastic roller 34 arranged opposite to the second shaping rigid roller 33, the second elastic roller 34 being used to contact and roll the second solid electrolyte membrane.

Preferably, when a substrate is provided on the solid electrolyte membrane, the substrate covers the side of the solid electrolyte membrane distant from the electrode sheet.

As one implementation, a first substrate is separated after the electrode sheet and the first solid electrolyte membrane are rolled by means of the first shaping roller assembly, to obtain the composite membrane sheet.

Preferably, the first substrate is separated from the composite membrane sheet by means of a first substrate winding mechanism disposed between the first shaping roller assembly and the second shaping roller assembly. The first substrate winding mechanism and the first solid electrolyte membrane unwinding mechanism are located at the same side of the electrode sheet unwinding mechanism. More specifically, the first substrate winding mechanism and the first solid electrolyte membrane unwinding mechanism are located at the same side of a transfer surface of the electrode sheet, and are used to receive the substrate covering the side of the first solid electrolyte distant from the electrode sheet.

When a second substrate needs to be separated after the composite membrane sheet and the second solid electrolyte membrane are rolled by means of the second shaping roller assembly to obtain the composite electrode sheet, the second substrate is separated from the composite electrode sheet by means of a second substrate winding mechanism disposed downstream of the second shaping roller assembly. The second substrate winding mechanism and the first substrate winding mechanism are located at two sides of the electrode sheet unwinding mechanism. More specifically, the first substrate winding mechanism and the second substrate winding mechanism are located at two sides of a transmission surface of the electrode sheet, and are used to receive the substrate covering the side of the second solid electrolyte distant from the electrode sheet. During the separation process, the first substrate winding mechanism and the second substrate winding mechanism will provide tension to the first substrate and the second substrate, respectively, so that the first substrate and the second substrate are separated from the composite membrane sheet or the composite electrode sheet, and complete an action of winding a substrate when necessary.

Optionally, the first substrate winding mechanism is located between the first shaping roller assembly and the second shaping roller assembly.

Or, both the first substrate winding mechanism and the second substrate winding mechanism are located downstream of the second shaping roller assembly, and are symmetrically disposed at two sides of the composite electrode sheet winding mechanism.

In some implementations, the elastic roller is configured to have the elastic member as a body, or to be surrounded and coated by the elastic member around the outside of the rigid roller. When the elastic roller rotates, the elastic member rotates together with the elastic roller. Furthermore, when the shaping roller assembly rolls the first solid electrolyte membrane, the electrode sheet and the second solid electrolyte membrane, the elastic member provides a cushioning function, so that the first electrolyte membrane and the second solid electrolyte membrane can better coat both sides of the electrode sheet, and uniformity of the lateral thickness of the electrode sheet after rolling is improved.

It can be appreciated that, during the production process of the electrode sheet, edges of the electrode sheet are usually thinned in order to ensure smooth progress of a subsequent rolling process. However, the existence of a thinned region in the electrode sheet can affect lamination between the solid electrolyte membrane and the electrode sheet. If a region is thinned, the resulting composite electrode sheet is prone to cracking at edges, and the electrode sheet and the solid electrolyte membrane cannot form effective compositing.

Surprisingly, the preparation apparatus for a composite electrode sheet of the present application utilizes a cushioning function provided by the elastic rolling assembly during rolling, to enable the solid electrolyte membrane to better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling.

Furthermore, in the preparation method for a composite electrode sheet of the present application, the elastic member is arranged at the side close to the first solid electrolyte membrane and/or the second solid electrolyte membrane. In this way, the solid electrolyte can better coat the electrode sheet, and the thickness of the electrode sheet in the middle and at the edges can be more uniform. In another aspect, the rigidity of the shaping roller can provide better inter-membrane bonding and shaping effects for the composite membrane sheet or the composite electrode sheet. Therefore, the composite electrode sheet prepared by the method of the present application takes into account overall compositing effects of the composite electrode sheet, and can obtain a composite electrode sheet having better performance.

In one embodiment, the elastic member is made of a flexible material. Under pressure, the flexible material undergoes elastic deformation. The slight elastic deformation makes the thicknesses of the middle region and the thinned region of the electrode sheet tend to be consistent under pressure, allowing better lamination with the solid electrolyte membrane.

A yield limit of the elastic member satisfies: when the solid electrolyte membrane and the electrode sheet pass through the gap between the shaping rollers, the solid electrolyte membrane and the electrode sheet undergo plastic deformation, and the elastic member undergoes elastic deformation.

Elastic deformation refers to a change in relative positions of points in a solid caused by an external force. When the external force is removed, the solid returns to an original shape, which is called elastic deformation.

When an object is subjected to a large force beyond an elastic limit, the object may break or deform, and fail to return to an original shape. This phenomenon is called plastic deformation.

In some implementations, the width of the elastic member is greater than or equal to a minimum value of the width of the solid electrolyte membrane or the electrode sheet.

In some implementations of the present application, the flexible material is a polymer. The present application does not impose special limitations on the material of the polymer. Exemplarily, the polymer may be a plastic such as polytetrafluoroethylene, polyethylene terephthalate, polypropylene or polyacrylonitrile, or a rubber such as Hypalon rubber, silicone rubber or fluororubber, or an elastic material such as silicone, that can undergo a certain degree of deformation. Highly thermally resistant hard plastics are preferred.

The present application does not impose particular limitations on the thickness of the elastic member. Any necessary adjustments to the thickness of the elastic member without departing from the inventive concept of the present application can be construed as being within the scope of protection of the present application.

In some implementations, the elastic roller comprises a rigid roller and a protective film, wherein the rigid roller acts on the protective film during rolling of the elastic roller, so that the protective film provides a cushioning function.

Specifically, the elastic roller may be configured to partially cover the protective film around the outside of the rigid roller, so that the protective film is located between the first or second solid electrolyte membrane and the rigid roller during roll compositing of the shaping roller assembly, to provide a cushioning function. As exemplarily shown in FIG. 44, the first elastic roller 35 may be replaced by a rigid roller in combination with a protective film made of a flexible material. Specifically, the protective film may be unwound through the gap in the middle of the first shaping roller assembly by means of a protective film unwinding mechanism 41 located in front of the first elastic roller 35, and a protective film unwinding mechanism 42 is provided behind the first elastic roller 35 to wind the protective film. The rigid roller, the protective film, the first solid electrolyte membrane, the electrode sheet, and the rigid roller are distributed in sequence from top to bottom in the first shaping roller assembly. During rolling, the protective film, rather than the elastic member in the first elastic roller, provides a cushioning function.

In some implementations, when the first shaping roller assembly composites the electrode sheet and the first solid electrolyte membrane, the method further comprises: heating the first shaping roller assembly; and/or when the second shaping roller assembly composites the composite membrane sheet and the second solid electrolyte membrane, the method further comprises: heating the second shaping roller assembly.

Specifically, the first shaping roller and the second shaping roller in the first shaping roller assembly and the second shaping roller assembly may be provided with a heating device inside, and/or the elastic roller may be optionally provided with a heating device inside. In this way, heating can improve bonding strength between the first solid electrolyte membrane and the electrode sheet, and between the second solid electrolyte membrane and the composite membrane sheet, thereby improving compositing effects of the composite electrode sheet.

In some implementations, the first shaping roller, the second shaping roller and the elastic roller further comprise a sensor for measuring a surface temperature of the composite membrane sheet or the composite electrode sheet, so as to set an appropriate heating temperature.

Preferably, heating temperatures of the first shaping roller, the second shaping roller and the elastic roller are higher than softening temperatures of the electrode sheet and the solid electrolyte membrane. It can be appreciated that the aforementioned softening temperatures of the electrode sheet and the solid electrolyte membrane refer to temperatures above which a surface hardness of the electrode sheet or the solid electrolyte changes, and the electrode sheet and the solid electrolyte membrane form a complete composite structure under the action of a rolling pressure.

The electrode sheet unwinding mechanism is located upstream of the first shaping roller assembly, and is used to unwind the electrode sheet and then convey the electrode sheet to the gap in the middle of the first shaping roller assembly.

The first solid electrolyte membrane unwinding mechanism is located upstream of the first shaping roller assembly, and more specifically between the electrode sheet unwinding mechanism and the first shaping roller assembly. The first solid electrolyte membrane unwinding mechanism is used to unwind the first solid electrolyte membrane, and then convey the first solid electrolyte membrane to the gap in the middle of the first shaping roller assembly.

The second solid electrolyte membrane unwinding mechanism is located downstream of the first shaping roller assembly. The second solid electrolyte membrane unwinding mechanism is used to unwind the second solid electrolyte membrane, and then convey the second solid electrolyte membrane to the gap in the middle of the second shaping roller assembly.

The composite electrode sheet winding mechanism is located downstream of the second shaping roller assembly, and is used to provide tension to the electrode sheet in the movement direction of the electrode sheet and to receive the composite electrode sheet obtained after rolling by the second shaping roller assembly to complete a winding action.

In some implementations, the preparation apparatus for a composite electrode sheet further comprises a first substrate winding mechanism and a second substrate winding mechanism.

In some implementations, the preparation apparatus for a composite electrode sheet further comprises a cooling roller located downstream of the second shaping roller assembly, which is used to cool the composite electrode sheet. The present application provides the cooling roller to reduce the temperature of the composite electrode sheet, so that the composite electrode sheet can be continuously wound, improving production efficiency. Furthermore, the cooling roller also provides a shaping effect for the composite electrode sheet.

The number of cooling rollers may be one or more, preferably two.

Preferably, the cooling roller of the present application is a contact cooling roller, which has a better cooling effect.

In some implementations, the cooling roller further comprises a sensor for measuring a surface temperature of the composite electrode sheet.

In some implementations, the preparation apparatus for a composite electrode sheet further comprises a guide roller.

Optionally, the guide roller is located between the first solid electrolyte membrane unwinding mechanism and the first shaping roller assembly, and is used to provide guidance for the first solid electrolyte membrane and/or the electrode sheet. As shown in FIG. 43, the first solid electrolyte membrane departs from the first solid electrolyte membrane unwinding mechanism 25, passes through a first guide roller 51, and then at a second guide roller 52 meets and is laminated on the electrode sheet departing from the electrode sheet unwinding mechanism 11. The electrode sheet and the first solid electrolyte membrane together reach the first shaping roller assembly to undergo first compositing.

Optionally, the guide roller is located between the first shaping roller assembly and the first substrate winding mechanism 26, to provide guidance for the first substrate of the first solid electrolyte membrane separated from the composite electrode sheet. As shown in FIG. 43, after the electrode sheet and the first solid electrolyte membrane are composited at the first shaping roller assembly to form the composite membrane sheet, the composite membrane sheet continues to move toward the second shaping roller assembly. The first substrate is subjected to a force transmitted by the first substrate winding mechanism 26 via a third guide roller 53 and a fourth guide roller 54, causing the first substrate to separate from the composite membrane sheet at the third guide roller 53, and the first substrate winding mechanism 26 completes a winding action.

Optionally, the guide roller is located between the second solid electrolyte membrane unwinding mechanism 23 and the second shaping roller assembly, and is used to provide guidance for the second solid electrolyte membrane and/or the composite membrane sheet. As shown in FIG. 43, the second solid electrolyte membrane departs from the second solid electrolyte membrane unwinding mechanism 23, passes through a sixth guide roller 56, and then at a seventh guide roller 57, meets and is laminated on the composite membrane. After passing through the fifth guide roller 55, the sixth guide roller 56 and the seventh guide roller 57, the composite membrane sheet and the second solid electrolyte membrane together reach the second shaping roller assembly to undergo second compositing.

Optionally, the guide roller is located between the second shaping roller assembly and the second substrate winding mechanism 24, to provide guidance for the second substrate of the second solid electrolyte membrane separated from the composite electrode sheet. As shown in FIG. 43, after the composite membrane and the second solid electrolyte membrane are composited at the second shaping roller assembly to form the composite electrode sheet, the composite electrode sheet continues to move toward the composite electrode sheet winding mechanism 12. The second substrate is separated from the composite electrode sheet at a roller pair formed by an eighth guide roller 58 and a ninth guide roller 59. The second substrate is moved toward the second substrate winding mechanism 24 by a force of the second substrate winding mechanism 24, and the second substrate winding mechanism completes a winding action.

Optionally, the guide roller is located between the second shaping roller assembly and the composite electrode sheet winding mechanism 12 to provide guidance for the composite electrode sheet. As shown in FIG. 43, after the composite membrane sheet and the second solid electrolyte membrane are composited at the second shaping roller assembly to form the composite electrode sheet, the composite electrode sheet continues to move toward the composite electrode sheet winding mechanism 12. The composite electrode sheet is separated from the second substrate at the roller pair formed by the eighth guide roller 68 and the ninth guide roller 59, and then reaches a first cooling roller 75. After rotating around the first cooling roller 75 by a specific angle, the composite electrode sheet reaches the second cooling roller 76, rotates around the second cooling roller 76 by a specific angle, and then advances to the composite electrode sheet winding mechanism 12, to complete a winding action of the composite electrode sheet. If necessary, an additional guide roller may further be provided between the second cooling roller 76 and the composite electrode sheet winding mechanism 12 to adjust the moving direction of the composite electrode sheet.

In some implementations, the preparation apparatus for a composite electrode sheet further comprises a tension control apparatus, an unwinding correction assembly and an electrode sheet static elimination assembly, arranged in sequence along an unwinding path of the preparation device. The tension control apparatus comprises a plurality of tension control elements disposed upstream of the rolling device, which are used to separately control unwinding tension of the positive electrode sheet and the solid electrolyte membrane. Optionally, the tension control apparatus comprises a plurality of tension control elements disposed downstream of the rolling apparatus, which are used to separately control winding tension of the composite positive electrode sheet and the substrate. The unwinding correction assembly can correct unwinding and running paths of the electrode sheet, the solid electrolyte membrane, etc., so that initial feed lines are kept at the same level. A winding and unwinding mechanism for a main material employs single-station correction, and winding and unwinding mechanisms for the remaining materials employ a cantilever type, all of which are provided with correction. The static elimination assembly performs static elimination treatment on both sides of the electrode sheet, and can reduce friction between the electrode sheet and the conveyor roller. It can be appreciated that, without departing from the inventive concept of the present application, known functional assemblies or structures may be used in the present application throughout the entire process from winding, to rolling, and unwinding.

In some implementations, the width of the first shaping roller assembly and the second shaping roller assembly is 500-800 mm, including but not limited to 500 mm, 550 mm, 600 mm, 650 mm, 700 mm, 750 mm, or 800 mm, preferably 550-650 mm.

In some implementations, the diameter of the first shaping roller assembly and the second shaping roller assembly is 300-500 mm, including but not limited to 300 mm, 350 mm, 400 mm, 450 mm, or 500 mm, preferably 350-450 mm.

In some implementations, a mechanical speed of the shaping roller assembly is 5-60 m/min, including but not limited to 5 m/min, 10 m/min, 20 m/min, 30 m/min, 40 m/min, 45 m/min, 50 m/min, or 60 m/min.

It can be appreciated that the higher the belt speed of the entire preparation apparatus for a composite electrode sheet, the higher production efficiency is. However, excessively high speeds can easily cause problems such as breakage in the belt-carried electrode sheet and solid electrolyte membrane. The present application does not have particular requirements for residence time of the electrode sheet and the solid electrolyte membrane in the gap of the shaping roller assembly. Without departing from the inventive concept of the present application, any adjustments to the residence time that do not require the exercise of creative effort should be construed as falling within the scope of protection of the present application.

In some implementations, linear speeds of the first shaping roller assembly and the second shaping roller assembly are kept consistent, and an unwinding linear speed of the electrode sheet unwinding mechanism 11 and a winding linear speed of the composite electrode sheet winding mechanism 12 are also kept consistent, thereby improving action consistency of the entire rolling preparation process of the composite electrode sheet and enhancing uniformity of the composite electrode sheet.

Referring to FIGs. 43-44, in conjunction with the structure of the preparation apparatus for a composite electrode sheet, the preparation method for a composite electrode sheet of the present application comprises the following steps: An electrode sheet is unwound by means of the electrode sheet unwinding mechanism 11 and conveyed to the composite electrode sheet winding mechanism 12, and at the same time, a first solid electrolyte membrane is unwound by means of the first solid electrolyte membrane unwinding mechanism 25. The electrode sheet and the first solid electrolyte membrane first reach the first shaping roller assembly, and then the electrode sheet and the first solid electrolyte membrane continue to advance to the first shaping roller assembly, and a composite membrane sheet is formed under a rolling action of the first shaping roller assembly. The composite membrane sheet moves toward the second shaping roller assembly, and at the same time, the second solid electrolyte membrane unwinding mechanism unwinds the second solid electrolyte membrane. The composite membrane sheet and the second solid electrolyte membrane reach the second heating roller assembly. Under the action of the second shaping roller assembly, a composite electrode sheet is formed, which is wound by the composite electrode sheet winding mechanism, at least one of the first shaping roller assembly and the second shaping roller assembly being configured as an elastic rolling assembly. The elastic rolling assembly comprises a rigid roller, and an elastic roller having a lower hardness than that of the rigid roller. A connecting line between axes of the rigid roller and the elastic roller is perpendicular to the conveying direction of the electrode sheet.

The present application configures at least one of the first shaping roller assembly and the second shaping roller assembly as an elastic roller assembly. In the compositing process of the electrode sheet and the solid electrolyte membrane, the combination of a shaping roller and an elastic roller is beneficial for improving the compositing effects of the composite electrode sheet. When the electrode sheet needs to be laminated with solid electrolyte membranes on both sides, the process of lamination on the two sides separately in the present application can help to improve the quality of the electrode sheet.

In some implementations, the solid electrolyte membrane is formed independently, that is, the solid electrolyte membrane can be formed without the aid of a substrate and maintain integrity of the membrane. In this case, after the electrode sheet and the first solid electrolyte membrane enter the gap of the first shaping roller assembly, a composite membrane sheet is obtained under the pressure of the first shaping roller assembly. After the composite membrane sheet and the second solid electrolyte membrane advance into the gap of the second shaping roller assembly, a composite electrode sheet is obtained under the rolling action of the second shaping roller assembly. Finally, the composite electrode sheet is wound by the electrode sheet winding mechanism 12.

In some implementations, the solid electrolyte membrane is covered by a substrate, to provide support for the solid electrolyte membrane. When the first solid electrolyte membrane unwinding mechanism 25 conveys the first solid electrolyte membrane, a first substrate is located at the side of the first solid electrolyte membrane distant from the electrode sheet. When the second solid electrolyte membrane unwinding mechanism 23 conveys the second solid electrolyte membrane, a second substrate is located at the side of the second solid electrolyte membrane distant from the electrode sheet. After lamination of the first solid electrolyte membrane and the electrode sheet is completed, the first substrate is separated from the composite membrane sheet. After lamination of the second solid electrolyte membrane and the composite membrane sheet is completed, the second substrate is separated from the composite electrode sheet. Specifically, the first substrate may be received by means of the first substrate winding mechanism 26 located at the same side of the electrode sheet as the first solid electrolyte membrane unwinding mechanism 25, the first substrate winding mechanism 26 being located between the first shaping roller assembly and the second shaping roller assembly. The second substrate is received by means of the second substrate winding mechanism 24 located at the same side of the electrode sheet as the second solid electrolyte membrane unwinding mechanism 23, the second substrate winding mechanism 24 being located between the second shaping roller assembly and the composite electrode sheet winding mechanism 12.

In some implementations, after the second shaping roller assembly has finished rolling and before the composite electrode sheet winding mechanism has started winding, a thickness measuring mechanism is used to inspect the composite electrode sheet, which, after passing the inspection, is then wound by the composite electrode sheet winding mechanism.

Referring to FIG. 42, FIG. 42 shows a flowchart of a method for preparing a composite electrode sheet using the preparation apparatus for a composite electrode sheet in one of the above embodiments of the present application. First, an electrode sheet and a first solid electrolyte membrane are unwound, and then, under dry conditions, the electrode sheet and the first solid electrolyte membrane are composited by means of the first shaping roller assembly, to obtain a composite membrane sheet; a second solid electrolyte membrane is then unwound; and the second solid electrolyte membrane and the composite membrane sheet are composited by means of the second shaping roller assembly under dry conditions, to obtain the composite electrode sheet. At least one of the first shaping roller assembly and the second shaping roller assembly is configured as an elastic rolling assembly. The elastic rolling assembly comprises a rigid roller, and an elastic roller having a lower hardness than that of the rigid roller, the elastic roller making contact with the first solid electrolyte membrane or the second solid electrolyte membrane to perform compositing. During the rolling process, the elastic roller can adjust stress on the electrode sheet and the solid electrolyte membrane, so that the solid electrolyte membrane can better cover the electrode sheet in the composite electrode sheet after rolling. Furthermore, the lateral thickness of the electrode sheet tends to be uniform after rolling.

It can be appreciated that in the rolled composite electrode sheet, solid electrolyte layers are composited on the electrode sheet. The solid electrolyte membranes being located at two sides of the electrode sheet means that solid electrolyte membranes are composited on both sides of the electrode sheet by rollers.

The compositing process of the present application is carried out under dry conditions. The dry conditions in the present application are different from those of a conventional wet electrode preparation method. Conventional wet preparation of composite electrodes involves first preparing a solid electrolyte slurry and then coating the solid electrolyte slurry onto an electrode sheet, or vice versa, preparing an electrode slurry and then coating the electrode slurry onto a solid electrolyte membrane. The preparation process of the present application does not use solvents, eliminating the need for cumbersome subsequent drying steps, and effectively reducing production costs.

It can be appreciated that the dry process refers to preparation of related electrode sheets and electrolyte membranes without the addition of solvents. Technical solutions involving trace amounts of liquid lubricants or other liquid additives that may be used during a rolling process should still be within the scope of protection of the present application.

In some implementations, both the electrode sheet and the solid electrolyte membrane are prepared by means of a dry process.

In some implementations, at least one of the electrode sheet and the solid electrolyte membrane is prepared by means of a dry process.

In some implementations, both the electrode sheet and the solid electrolyte membrane are prepared by means of a wet process.

It can be appreciated that electrode sheet and the solid electrolyte membrane are preferably prepared under dry conditions, so that solvents are no longer needed in the entire electrode preparation process.

It can be appreciated that the preparation processes of the electrode sheet and the solid electrolyte membrane are independent of the preparation process of the composite electrode. That is, if a wet process is used, the electrode sheet undergoes coating, drying, and rolling processes.

In some implementations, the electrode sheet is a positive electrode sheet. Positive electrode materials, especially high-nickel ternary materials with high energy density, are prone to undesirable side reactions with electrolytes, especially non-aqueous electrolytes. These side reactions cause a decline in battery performance, and may pose potential safety hazards. Compositing a solid electrolyte layer on a positive electrode surface helps to improve battery safety.

In some implementations, the electrode sheet is a negative electrode sheet. In some implementations, the solid electrolyte membrane is composited on one or both sides of the positive electrode sheet or the negative electrode sheet. Material compositions, preparation methods and related performance parameters of the positive electrode sheet, the negative electrode sheet and the solid electrolyte membrane have been described in detail in the above embodiments of the present application, and will not be repeated here.

Applying a solid electrolyte coating to a surface of an electrode, especially a surface of a high-capacity positive electrode, can effectively improve the safety performance of a battery. However, due to limitations in energy density, the thickness of a solid electrolyte membrane is usually quite small. Compared to an electrode sheet prepared by a dry process, the thickness of the solid electrolyte membrane is an order of magnitude smaller, which renders the solid electrolyte membrane prone to cracking during preparation a composite conductive electrode sheet by a dry process.

In some implementations, the solid electrolyte membrane is formed independently, meaning that the solid electrolyte membrane may be formed without the aid of a substrate and maintain the integrity of the membrane.

In some implementations, the side of the solid electrolyte membrane distant from the electrode sheet is covered by a substrate, and a bonding force between the substrate and the solid electrolyte membrane is less than a bonding force between the solid electrolyte membrane and the electrode sheet. After rolling, at least part of the solid electrolyte is transferred to the electrode sheet and separated from the substrate.

The present application does not impose particular limitations on the type of the substrate. Without departing from the inventive concept of the present application, any known material that has a supporting function, can be more conducive to membrane formation of an electrolyte material, and can be separated from the solid electrolyte membrane after rolling can be used in the present application. As an illustrative example only, rather than any limitation on the scope of protection, the substrate is selected from one or more of a silicone release film, a fluorine release film, a PET film, a PP film, a PE film, a PE/PP film, a PP/PE/PP film, a PE/PP/PE film, and a non-silicone release film. The present application further provides a composite electrode sheet, which is prepared according to the preparation method for a composite electrode sheet provided above.

In one implementation, the first solid electrolyte membrane and the second solid electrolyte membrane have different compositions.

It can be appreciated that the compositions of the first solid electrolyte membrane and the second solid electrolyte membrane being different may be understood as the material systems or structural compositions of the solid electrolyte membranes being different. This difference leads to different compositing processes for the first solid electrolyte membrane and the second solid electrolyte membrane. By means of using two compositing processes one after another, the present application can configure different compositing processes for different compositing performances of the first solid electrolyte membrane and the second solid electrolyte membrane with the positive electrode sheet.

In some implementations, the elastic roller is configured to cover the elastic member around the outside the rigid roller. When the elastic roller rotates, the elastic member rotates together with the elastic roller. Furthermore, when the shaping roller assembly rolls the first solid electrolyte membrane, the electrode sheet and the second solid electrolyte membrane, the elastic member provides a cushioning function, so that the first electrolyte membrane and the second solid electrolyte membrane can better coat both sides of the electrode sheet, and uniformity of the lateral thickness of the electrode sheet after rolling is improved.

It can be appreciated that, during the production process of the electrode sheet, edges of the electrode sheet are usually thinned in order to ensure smooth progress of a subsequent rolling process. However, the existence of a thinned region in the electrode sheet can affect lamination between the solid electrolyte membrane and the electrode sheet. If the electrode sheet and the solid electrolyte membrane cannot form effective compositing in the thinned region, the resulting composite electrode sheet is prone to cracking at the edge region.

Surprisingly, the preparation apparatus for a composite electrode sheet of the present application utilizes cushioning provided by the elastic member during rolling, to enable the solid electrolyte membrane to better coat the electrode sheet. Furthermore, during the rolling process of the shaping roller assembly, the electrode sheet is thick in the middle, resulting in greater stress in a middle region than in an edge region. The lateral thickness of the electrode sheet tends to be uniform after rolling. In another aspect, the rigidity of the shaping roller can provide better inter-membrane bonding and shaping effects for the composite membrane sheet or the composite electrode sheet. Therefore, the composite electrode sheet prepared by the method of the present application takes into account overall compositing effects of the composite electrode sheet, and can obtain a composite electrode sheet having better performance.

The elastic member is made of a flexible material. Under pressure, the flexible material undergoes elastic deformation. The slight elastic deformation makes the thicknesses of the middle region and the thinned region of the electrode sheet tend to be consistent under pressure, allowing better lamination with the solid electrolyte membrane.

Furthermore, the elastic member abuts against the first solid electrolyte membrane and is located at the side of the first solid electrolyte membrane distant from the electrode sheet, and/or the elastic member abuts against the second solid electrolyte membrane and is located at the side of the second solid electrolyte membrane distant from the composite membrane sheet.

A yield limit of the elastic member satisfies: when the solid electrolyte membrane and the electrode sheet pass through the gap between the shaping rollers, the solid electrolyte membrane and the electrode sheet undergo plastic deformation, and the elastic member undergoes elastic deformation.

Elastic deformation refers to a change in relative positions of points in a solid caused by an external force. When the external force is removed, the solid returns to an original shape, which is called elastic deformation.

When an object is subjected to a large force beyond an elastic limit, the object may break or deform, and fail to return to an original shape. This phenomenon is called plastic deformation.

In some implementations, the width of the elastic member is greater than or equal to a minimum value of the width of the solid electrolyte membrane or the electrode sheet.

In some implementations of the present application, the flexible material is a polymer. The present application does not impose special limitations on the material of the polymer. Exemplarily, the polymer may be a plastic such as polytetrafluoroethylene, polyethylene terephthalate, polypropylene or polyacrylonitrile, or a rubber such as Hypalon rubber, silicone rubber or fluororubber, or an elastic material such as silicone, that can undergo a certain degree of deformation. Highly thermally resistant hard plastics are preferred.

The present application does not impose particular limitations on the thickness of the elastic member. Any necessary adjustments to the thickness of the elastic member without departing from the inventive concept of the present application can be construed as being within the scope of protection of the present application.

In some implementations, the elastic roller comprises a rigid roller and a protective film, wherein the rigid roller acts on the protective film during rolling of the elastic roller, so that the protective film provides a cushioning function.

Specifically, the elastic roller may be configured to partially cover the elastic member around the outside of the rigid roller, so that the elastic member is located between the first or second solid electrolyte membrane and the shaping roller assembly during roll compositing of the shaping roller assembly. For example, the first elastic roller 35 may be replaced by a rigid roller in combination with a protective film made of a flexible material. Specifically, the protective film may be unwound by means of a protective film unwinding mechanism in front of the first elastic roller 35 through the gap in the middle of the first shaping roller assembly. In the first shaping roller assembly, the rigid roller, the protective film, the first solid electrolyte membrane, the electrode sheet and the first shaping rigid roller are distributed in sequence from top to bottom. During rolling, the protective film, rather than the elastic member in the first elastic roller, provides a cushioning function.

The present application further provides a lithium-ion battery, which comprises the composite electrode sheet provided above.

In some implementations, an electrode sheet and a solid electrolyte membrane may also be procured.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

LLZO was selected as a solid electrolyte, polytetrafluoroethylene was selected as a binder, and LiPF₆ was selected as a lithium salt. The substances were mixed and then stirred using a high-speed stirrer, to obtain a solid electrolyte mixture. The mixture was then subjected to fiberization treatment by means of air jet milling to obtain a fiberized solid electrolyte mixture, and the fiberized solid electrolyte mixture was then rolled to obtain a solid electrolyte membrane.

### 3. Preparation of composite positive electrode sheet

Using the preparation apparatus for a composite electrode sheet having a protective film as shown in FIG. 43, the positive electrode sheet was composited with the first and second solid electrolyte membranes. The elastic member was Hypalon rubber.

The first solid electrolyte membrane departed from the first solid electrolyte membrane unwinding mechanism 25, passed through the first guide roller 51, and then at the second guide roller 52 met and was laminated on the electrode sheet departing from the electrode sheet unwinding mechanism 11. The electrode sheet and the first solid electrolyte membrane together reached the first shaping roller assembly to undergo first compositing, the electrode sheet being farther away from the first elastic roller 35 than the first solid electrolyte membrane. After completion of compositing, the first substrate was subjected to a force transmitted by the first substrate winding mechanism 26 via the third guide roller 53 and the fourth guide roller 54, causing the first substrate to separate from the composite membrane sheet between the third guide roller 53 and the fifth guide roller 55, and the first substrate winding mechanism 26 completed a winding action.

The second solid electrolyte membrane departed from the second solid electrolyte membrane unwinding mechanism 23, passed through the sixth guide roller 56, and then, at the seventh guide roller 57, met and was laminated on the composite membrane sheet. The composite membrane sheet departed from the first shaping roller assembly, separated from the first substrate, and was then laminated on the second solid electrolyte membrane at the seventh guide roller 57. The electrode sheet and the second solid electrolyte membrane together reached the second shaping roller assembly to undergo a second compositing, wherein the composite membrane was farther away from the second elastic roller 34 than the second solid electrolyte membrane. After completion of compositing, the second substrate was subjected to a force transmitted by the second substrate winding mechanism 24 via the ninth guide roller 59 and the eighth guide roller 58, separated from the composite electrode sheet at the eighth guide roller 58, and finally wound by the second substrate winding mechanism 24. As shown in FIG. 43, the eighth guide roller 58 and the ninth guide roller 59 were located close to the traveling route of the composite electrode sheet. The composite electrode sheet was cooled by the first cooling roller 75 and the second cooling roller 76, and finally wound by the composite electrode sheet winding mechanism 12. The temperature of the first shaping roller assembly was 160°C, and the temperature of the second shaping roller assembly was 180°C.

The prepared composite electrode sheet had no cracks on the surface, and the overall thickness of the electrode sheet was 160 µm.

One embodiment of the present application comprises the following steps.

### 1. Preparation of positive electrode sheet

Lithium manganate was selected as a positive electrode active material, Ketjenblack was selected as an electric conductive agent, and PTFE was selected as a binder. The substances were mixed and then stirred using a high-speed stirrer, to obtain a positive electrode mixture. The mixture was then subjected to fiberization treatment by means of air jet milling to obtain a fiberized positive electrode mixture, i.e., a positive electrode active material layer. The positive active material layer was subjected to roll compositing with a current collector, to prepare a positive electrode sheet.

### 2. Preparation of solid electrolyte membrane

A pre-selected solid electrolyte material was selected, and polytetrafluoroethylene was used as a binder. The substances were mixed and then stirred using a high-speed stirrer, to obtain a solid electrolyte mixture. The mixture was then subjected to fiberization treatment by means of mechanical stirring to obtain a fiberized solid electrolyte mixture, and the fiberized solid electrolyte mixture was then rolled to obtain a solid electrolyte membrane.

Raw materials for the first solid electrolyte membrane were LLZO and PTFE particles, a stirring speed for the fiberization process was 12000 rpm, and a preset thickness was 15 µm.

Raw materials for the second solid electrolyte membrane were LLZO and PTFE fiber membranes, a stirring speed for the fiberization process was 8000 rpm, and a preset thickness was 17 µm.

### 3. Preparation of composite positive electrode sheet

Using the preparation apparatus for a composite electrode sheet having a protective film as shown in FIG. 44, the positive electrode sheet was composited with the first and second solid electrolyte membranes. The elastic member was Hypalon rubber. Differences from the previous embodiment lie in a separation angle not being controlled when the first substrate was separated from the composite membrane sheet and when the second substrate was separated from the composite electrode sheet.

The first solid electrolyte membrane departed from the first solid electrolyte membrane unwinding mechanism 25, passed through the first guide roller 51, and then at the second guide roller 52 met and was laminated on the electrode sheet departing from the electrode sheet unwinding mechanism 11. The electrode sheet and the first solid electrolyte membrane together reached the first shaping roller assembly to undergo first compositing, the electrode sheet being farther away from the first elastic roller 35 than the first solid electrolyte membrane. After completion of compositing, the first substrate was subjected to a force transmitted by the first substrate winding mechanism 26 via the third guide roller 53 and the fourth guide roller 54, causing the first substrate to separate from the composite membrane sheet between the third guide roller 53 and the fifth guide roller 55, and the first substrate winding mechanism 26 completed a winding action.

The second solid electrolyte membrane departed from the second solid electrolyte membrane unwinding mechanism 23, passed through the sixth guide roller 56, and then at the seventh guide roller 57, met and was laminated on the composite membrane. The composite membrane sheet departed from the first shaping roller assembly, separated from the first substrate, and was then laminated on the second solid electrolyte membrane at the seventh guide roller 57. The electrode sheet and the second solid electrolyte membrane together reached the second shaping roller assembly to undergo a second compositing, wherein the composite membrane was farther away from the second elastic roller 34 than the second solid electrolyte membrane. The temperature of the first shaping roller assembly was 160°C, and the temperature of the second shaping roller assembly was 180°C.

After completion of the compositing, the second substrate moved together with the composite electrode sheet toward the composite electrode sheet winding mechanism 12. At the same time, the second substrate was subjected to a force transmitted by the second substrate winding mechanism 24 via the ninth guide roller 59 and the eighth guide roller 58, and was separated from the composite electrode sheet at the eighth guide roller 58. After the second substrate passed around the same side of the eighth guide roller 58, the second substrate was ultimately wound by the second substrate winding mechanism 24. The eighth guide roller 58 and the ninth guide roller 59 were arranged along the traveling route of the composite electrode sheet. The composite electrode sheet was cooled by the first cooling roller 75 and the second cooling roller 76, and then wound by the composite electrode sheet winding mechanism 12.

The prepared composite electrode sheet had no cracks on the surface, and the overall thickness of the electrode sheet was 165 µm.

The technical features of the above embodiments may be combined in any way. For the sake of brevity, not all possible combinations of the technical features in the above embodiments are described. However, provided that there is no contradiction in combinations of these technical features, the combinations should be considered to be within the scope of disclosure of the specification.

The embodiments described above merely illustrate some implementations of the present application. The embodiments are described in a relatively specific and detailed manner, but should not be construed as limiting the scope of the patent application. It should be noted that, for those skilled in the art, numerous modifications and improvements can be made without departing from the concept of the present application, and these all fall within the scope of protection of the present application. Therefore, the scope of protection of the present patent application shall be subject to the appended claims.

## Claims

1. A preparation method for a composite electrode sheet, comprising:
conveying an electrode sheet by means of an electrode sheet unwinding mechanism, so that the electrode sheet passes through a gap in the middle of a shaping roller assembly;
conveying a solid electrolyte membrane by means of a solid electrolyte membrane unwinding mechanism located at a side of the electrode sheet unwinding mechanism, so that the solid electrolyte membrane passes through a gap between the shaping roller assembly and the electrode sheet; and
compositing the electrode sheet and the solid electrolyte membrane by means of the shaping roller assembly, to obtain a composite electrode sheet,
wherein an elastic member is provided between the shaping roller assembly and the solid electrolyte membrane rolled on the electrode sheet.

2. The preparation method according to claim 1, further comprising: heating the electrode sheet, or the solid electrolyte membrane, or the electrode sheet and the solid electrolyte membrane by means of a heating mechanism,
wherein the heating mechanism is located between the electrode sheet unwinding mechanism and the shaping roller assembly, and/or the heating mechanism is located inside the shaping roller assembly.

3. The preparation method according to claim 1, wherein the solid electrolyte membrane comprises a first solid electrolyte membrane and a second solid electrolyte membrane, and the first solid electrolyte membrane and the second solid electrolyte membrane are roll-composited on two sides of the electrode sheet by the shaping roller assembly.

4. The preparation method according to claim 1, wherein the elastic member is a protective film or an adhesive layer, and the protective film is transported through a gap between the shaping roller assembly and the solid electrolyte membrane; the adhesive layer covers around the outside of the shaping roller assembly.

5. The preparation method according to claim 4, wherein the adhesive layer is a plastic, a rubber, or silicone; the protective film is a polymer film or a non-woven fabric.

6. The preparation method according to claim 1, wherein the shaping roller assembly comprises a first shaping roller assembly and a second shaping roller assembly, and the elastic member is disposed between at least one of the first shaping roller assembly and the second shaping roller assembly, and the solid electrolyte membrane rolled on the electrode sheet.

7. The preparation method according to claim 1, wherein the shaping roller assembly comprises a first shaping roller assembly and a second shaping roller assembly, and at least one of the first shaping roller assembly and the second shaping roller assembly constitutes an elastic rolling assembly with the elastic member.

8. The preparation method according to claim 7, wherein the elastic rolling assembly comprises an elastic roller, the elastic roller is used to contact and roll the solid electrolyte membrane, the elastic roller comprises a rigid roller and an elastic member, and the elastic member covers the outside of the rigid roller.

9. The preparation method according to claim 8, wherein the elastic rolling assembly comprises a shaping rigid roller, and an elastic roller having a hardness lower than that of the shaping rigid roller.

10. The preparation method according to claim 2, comprising:
conveying the electrode sheet by means of the electrode sheet unwinding mechanism, so that the electrode sheet passes through a gap between the heating mechanism and the shaping roller assembly;
preheating the electrode sheet by means of the heating mechanism, to obtain a preheated sheet; and
performing roll compositing on the preheated sheet and the solid electrolyte membrane by means of the shaping roller assembly, to prepare the composite electrode sheet.

11. The preparation method according to claim 2, wherein
the heating mechanism comprises a first heating mechanism and a second heating mechanism;
the shaping roller assembly comprises a first shaping roller assembly and a second shaping roller assembly;
the first heating mechanism is located between the electrode sheet unwinding mechanism and the first shaping roller assembly, and the second heating mechanism is located between the first shaping roller assembly and the second shaping roller assembly.

12. The preparation method according to claim 11, comprising:
conveying the electrode sheet by means of the electrode sheet unwinding mechanism, so that the electrode sheet passes through the first heating mechanism;
conveying a first solid electrolyte membrane by means of a first solid electrolyte membrane unwinding mechanism located at one side of the electrode sheet unwinding mechanism, so that the first solid electrolyte membrane passes through the first heating mechanism;
heating the electrode sheet and the first solid electrolyte membrane by means of the first heating mechanism;
compositing the heated electrode sheet and first solid electrolyte membrane by means of the first shaping roller assembly, to obtain a composite membrane sheet;
conveying a second solid electrolyte membrane by means of a second solid electrolyte membrane unwinding mechanism located at the other side of the electrode sheet unwinding mechanism, so that the second solid electrolyte membrane passes through the second heating mechanism;
heating the composite membrane sheet and the second solid electrolyte membrane by means of the second heating mechanism; and
compositing the heated composite membrane sheet and second solid electrolyte membrane by means of the second shaping roller assembly, to obtain the composite electrode sheet.

13. The preparation method according to claim 2, wherein the heating mechanism comprises a first heating mechanism and a second heating mechanism; the preparation method comprises:
conveying the electrode sheet by means of the electrode sheet unwinding mechanism, so that the electrode sheet passes through a gap between the first heating mechanism and the shaping roller assembly;
conveying the solid electrolyte membrane by means of the solid electrolyte membrane unwinding mechanism located at the side of the electrode sheet unwinding mechanism, so that the solid electrolyte membrane passes through the second heating mechanism and the gap between the shaping roller assembly and the electrode sheet;
preheating the electrode sheet by means of the first heating mechanism;
preheating the solid electrolyte membrane by means of the second heating mechanism; and
performing roll compositing on the preheated electrode sheet and solid electrolyte membrane by means of the shaping roller assembly, to prepare the composite electrode sheet.

14. The preparation method according to any one of claims 11 to 13, wherein the first heating mechanism and the second heating mechanism are separately selected from a heater and/or a heating roller assembly.

15. The preparation method according to claim 14, wherein the heating roller assembly comprises one or more sets of heating rollers, and each set of heating rollers comprises at least one heating roller.

16. The preparation method according to claim 15, wherein heating temperatures of the plurality of heating rollers are the same or different, and/or heating times of the plurality of heating rollers are the same or different.

17. The preparation method according to claim 16, wherein the heating time of the plurality of heating rollers is 2 seconds or more.

18. The preparation method according to any one of claims 11 to 13, wherein heating temperatures of the first heating mechanism and the second heating mechanism are the same or different, and/or heating times of the first heating mechanism and the second heating mechanism are the same or different.

19. The preparation method according to claim 18, wherein the heating time of the first heating mechanism and the second heating mechanism is 2 seconds or more.

20. The preparation method according to claim 2, wherein the heating mechanism is located between the electrode sheet unwinding mechanism and the shaping roller assembly, and is used to preheat the electrode sheet, the solid electrolyte membrane and the elastic member, wherein the elastic member is a protective film, and the protective film is transported through a gap between the shaping roller assembly and the solid electrolyte membrane.

21. The preparation method according to claim 2, comprising:
conveying the electrode sheet by means of the electrode sheet unwinding mechanism, so that the electrode sheet passes through a guide roller, the heating mechanism, and the gap in the middle of the shaping roller assembly;
conveying the solid electrolyte membrane by means of the solid electrolyte membrane unwinding mechanism located at the side of the electrode sheet unwinding mechanism, so that the solid electrolyte membrane passes through a guide roller, the heating mechanism, and the gap between the shaping roller assembly and the electrode sheet;
controlling the electrode sheet and the solid electrolyte membrane to adhere on the guide roller, to prepare a laminated sheet;
preheating the laminated sheet by means of the heating mechanism; and
performing roll compositing on the preheated laminated sheet by means of the shaping roller assembly, to prepare the composite electrode sheet.

22. The preparation method according to claim 2, comprising:
preheating the solid electrolyte membrane by means of the shaping roller assembly, wherein the heating mechanism is disposed inside the shaping roller assembly, for preheating the solid electrolyte membrane; and
performing heating and roll compositing on the electrode sheet and the preheated solid electrolyte membrane by means of the shaping roller assembly, to obtain the composite electrode sheet.

23. The preparation method according to claim 22, comprising:
conveying the electrode sheet by means of the electrode sheet unwinding mechanism, so that the electrode sheet passes through the gap in the middle of the shaping roller assembly;
conveying the solid electrolyte membrane by means of the solid electrolyte membrane unwinding mechanism located at the side of the electrode sheet unwinding mechanism, so that the solid electrolyte membrane reaches the shaping roller assembly to undergo preheating, and passes through the gap between the shaping roller assembly and the electrode sheet; and
performing heating and roll compositing on the electrode sheet and the preheated solid electrolyte membrane by means of the shaping roller assembly, to obtain the composite electrode sheet,
wherein a temperature of the solid electrolyte membrane is higher than that of the electrode sheet during rolling.

24. The preparation method according to claim 2, wherein a temperature of the solid electrolyte membrane is higher than that of the electrode sheet during rolling.

25. The preparation method according to claim 2, further comprising:
guiding the electrode sheet, or the solid electrolyte membrane, or the electrode sheet and the solid electrolyte membrane by means of a guide roller assembly, so as to adjust preheating time,
wherein the guide roller assembly is located between the electrode sheet unwinding mechanism and/or the solid electrolyte unwinding mechanism, and the shaping roller assembly.

26. The preparation method according to claim 2, further comprising: cooling the composite electrode sheet by means of a cooling roller, wherein the cooling roller is located downstream of the shaping roller assembly.

27. The preparation method according to any one of claims 1 to 26, further comprising: separating a substrate covering the solid electrolyte membrane from the composite electrode sheet.

28. The preparation method according to claim 27, further comprising:
receiving the substrate by means of a substrate winding mechanism between the shaping roller assembly and the composite electrode sheet winding mechanism, wherein
the substrate winding mechanism and the solid electrolyte membrane unwinding mechanism are located at the same side of the electrode sheet unwinding mechanism.

29. The preparation method according to claim 28, wherein the shaping roller assembly comprises a first shaping roller assembly and a second shaping roller assembly; the solid electrolyte membrane comprises a first solid electrolyte membrane and a second solid electrolyte membrane, and the first solid electrolyte membrane and the second solid electrolyte membrane are located at two sides of the electrode sheet, respectively;
between the first shaping roller assembly and the second shaping roller assembly, a first substrate located at the side of the first solid electrolyte membrane distant from the electrode sheet is received by means of a first substrate winding mechanism;
downstream of the second shaping roller assembly, a second substrate located at the side of the second solid electrolyte membrane distant from the electrode sheet is received by means of a second substrate winding mechanism.

30. The preparation method according to claim 1, wherein a yield limit of the elastic member satisfies: when the solid electrolyte membrane and the electrode sheet pass through the gap in the middle of the shaping roller assembly, the solid electrolyte membrane and the electrode sheet undergo plastic deformation, and the elastic member undergoes elastic deformation;
the electrode sheet comprises a positive electrode sheet and/or a negative electrode sheet.

31. The preparation method according to claim 30, wherein the electrode sheet has a structure that is thick in the middle and thin at two sides, and during the rolling process, a middle region of the electrode sheet is subjected to a greater force than an edge region.

32. The preparation method according to claim 31, wherein the electrode sheet is prepared by means of a dry process.

33. The preparation method according to claim 1, wherein the width of the elastic member is greater than or equal to a minimum value of the width of the solid electrolyte membrane or the electrode sheet.

34. The preparation method according to claim 4, wherein the elastic member is conveyed by means of a protective film unwinding mechanism; the protective film unwinding mechanism is located between the solid electrolyte membrane unwinding mechanism and the shaping roller assembly; and
the elastic member is received by means of the protective film winding mechanism between the shaping roller assembly and the substrate winding mechanism.

35. The preparation method according to claim 10, wherein the electrode sheet is preheated several times, and temperatures of the several preheatings progressively increase.

36. The preparation method according to claim 22, wherein the shaping roller assembly comprises a first shaping roller assembly and a second shaping roller assembly, and both the first shaping roller assembly and the second shaping roller assembly are provided with a heating mechanism.

37. The preparation method according to claim 7, wherein
the solid electrolyte membrane comprises a first solid electrolyte membrane and a second solid electrolyte membrane, and the first solid electrolyte membrane and the second solid electrolyte membrane are located at two sides of the electrode sheet, respectively;
the first shaping roller assembly comprises a first shaping rigid roller and a first elastic roller, wherein the first elastic roller is used to contact and roll the first solid electrolyte membrane; and/or
the second shaping roller assembly comprises a second shaping rigid roller and a second elastic roller, wherein the second elastic roller is used to contact and roll the second solid electrolyte membrane.

38. A composite electrode sheet, prepared by using the preparation method according to any one of claims 1 to 37.

39. A lithium-ion battery, comprising a composite electrode sheet prepared by the preparation method according to any one of claims 1 to 37.

40. A preparation apparatus for a composite electrode sheet, configured to execute the preparation method according to any one of claims 1 to 37, the preparation apparatus comprising:
a shaping roller assembly, comprising a first shaping roller and a second shaping roller;
an electrode sheet unwinding mechanism located upstream of the shaping roller assembly, used to convey an electrode sheet so that the electrode sheet passes through a gap between the first shaping roller and the second shaping roller; and
a solid electrolyte membrane unwinding mechanism located at a side of the electrode sheet unwinding mechanism, used to convey a solid electrolyte membrane so that the solid electrolyte membrane passes through the gap between the first shaping roller and the second shaping roller,
wherein an elastic member is provided between the shaping roller assembly and the solid electrolyte membrane.

41. The preparation apparatus according to claim 40, further comprising:
a protective film unwinding mechanism located between the solid electrolyte membrane unwinding mechanism and the shaping roller assembly, used to convey the elastic member; and
a protective film winding mechanism located between the shaping roller assembly and the substrate winding mechanism, used to receive the elastic member, wherein
the elastic member is a protective film.

42. The preparation apparatus according to claim 40, wherein the elastic member is an adhesive layer that covers around the outside of the shaping roller assembly.

43. The preparation apparatus according to any one of claims 40 to 42, further comprising:
a heating mechanism located between the electrode sheet unwinding mechanism and the shaping roller assembly, used to preheat the electrode sheet, or the solid electrolyte membrane, or the electrode sheet and the solid electrolyte membrane.

44. The preparation apparatus according to claim 43, further comprising:
a guide roller located between the electrode sheet unwinding mechanism and the shaping roller assembly, used to guide the electrode sheet, or the solid electrolyte membrane, or the electrode sheet and the solid electrolyte membrane so as to adjust preheating time.
